(19) Europäisches Patentamt / European Patent Office / Office européen des brevets

(11) EP 2 997 613 B1

(12) **EUROPÄISCHE PATENTSCHRIFT**

(45) Veröffentlichungstag und Bekanntmachung des Hinweises auf die Patenterteilung:
**22.11.2017 Patentblatt 2017/47**

(21) Anmeldenummer: **15705198.8**

(22) Anmeldetag: **07.02.2015**

(51) Int Cl.:
***H01M 4/36*** $^{(2006.01)}$ ***H01M 4/60*** $^{(2006.01)}$
***H01M 8/18*** $^{(2006.01)}$

(86) Internationale Anmeldenummer:
**PCT/EP2015/000261**

(87) Internationale Veröffentlichungsnummer:
**WO 2015/120971 (20.08.2015 Gazette 2015/33)**

(54) **REDOX-FLOW-ZELLE ZUR SPEICHERUNG ELEKTRISCHER ENERGIE UND DEREN VERWENDUNG**

REDOX FLOW CELL FOR STORING ELECTRICAL ENERGY AND USE THEREOF

PILE À FLUX REDOX POUR STOCKER DE L'ÉNERGIE ÉLECTRIQUE ET SON UTILISATION

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **13.02.2014 DE 102014001816**

(43) Veröffentlichungstag der Anmeldung:
**23.03.2016 Patentblatt 2016/12**

(73) Patentinhaber: **Jenabatteries GmbH**
**07743 Jena (DE)**

(72) Erfinder:
- **HAGER, Martin**
**07774 Dornburg-Camburg (DE)**
- **JANOSCHKA, Tobias**
**07743 Jena (DE)**
- **SCHUBERT, Ulrich S.**
**07743 Jena (DE)**

(74) Vertreter: **Ackermann, Joachim**
**Antoniterstraße 9**
**65929 Frankfurt am Main (DE)**

(56) Entgegenhaltungen:
**EP-A1- 2 650 947** **EP-A1- 2 785 442**
**WO-A1-83/02368** **DE-T2- 69 328 788**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

EP 2 997 613 B1

## Beschreibung

Die Erfindung betrifft eine Redox-Flow-Zelle, im allgemeinen Sprachgebrauch auch als Redox-Flow-Batterie oder als Redox-Fluss-Batterie bezeichnet, zur Speicherung elektrischer Energie. Die Redox-Flow-Zelle enthält zwei Elektrodenkammern, in denen jeweils flüssige Elektrolyte enthaltend oder bestehend aus ausgewählte(n) redoxaktive(n) chemische(n) Verbindungen vorliegen, und die mit Flüssigkeitsspeichern in Verbindung stehen. Auf diese Weise werden zwei unabhängige Kreisläufe für die beispielsweise in Wasser oder organischem Lösungsmittel gelösten redoxaktiven Verbindungen gebildet, welche durch eine Membran zwischen den polaritätsspezifischen Kammern getrennt sind. Über diese Membran erfolgt ein Ionenaustausch zwischen den beiden Kammern.

In den erfindungsgemäßen Redox-Flow-Zellen sind die Anoden- und Kathodenräume durch ausgewählte Membranen voneinander getrennt.

Anoden- und Kathodenraum im Sinne dieser Erfindung werden wie folgt definiert: Der Kathodenraum enthält den Katholyten als Elektrolyt und ist begrenzt durch die Kathode und diejenige Membranfäche, welche der Kathode zugewandt ist. Der Anodenraum enthält den Anolyten als Elektrolyt und ist begrenzt durch die Anode und diejenige Membranfäche, welche der Anode zugewandt ist.

An der Kathode findet beim Entladen die Reduktion und beim Laden die Oxidation der redoxaktiven Komponente statt. An der Anode findet beim Entladen die Oxidation und beim Laden die Reduktion der redoxaktiven Komponente statt (vergl. Figur 2).

Beispielhafte Beschreibungen der Reaktionen in einer Redox-Flow-Zelle während des Ladevorganges:

Anode

$$A + e^- \rightarrow A^- \text{ oder } A^- + e^- \rightarrow A^{2-} \text{ oder } A^{n+} + x\,e^- \rightarrow A^{(n-x)+} \text{ oder } A^{n-} + x\,e^- \rightarrow A^{(n+x)-}$$

Hierbei ist A die redoxaktive Komponente und n und x kann eine natürliche Zahl >= eins annehmen. Elektronen werden durch $e^-$ symobolisiert.

Kathode

$$K \rightarrow K^+ + e^- \text{ oder } K^- \rightarrow K + e^- \text{ oder } K^{n+} \rightarrow K^{(n+y)+} + y\,e^- \text{ oder } K^{n-} \rightarrow K^{(n-y)-} + y\,e^-$$

Hierbei ist K die redoxaktive Komponente sein und n und y kann eine natürliche Zahl >=eins annehmen. Elektronen werden durch $e^-$ symobolisiert.

Beim Entladen der Zelle kehren sich die vorstehenden Reaktionen um.

Die beim Laden oder Entladen entstehenden ionischen Ladungen werden durch entsprechende Gegenionen ausgeglichen. Mögliche Gegenionen sind anorganische Anionen, wie Halogenidionen (Fluoridion, Chloridion, Bromidion, Iodidion), Hydroxidionen oder Anionen anorganischer Säuren (z. B. Phosphationen, Sulfationen, Nitrationen, Hexafluorophosphationen, Tetrafluoroborationen, Perchlorationen, Chlorationen, Hexafluoroantimonationen, Hexafluoroarsenationen, Cyanidionen) oder organische Anionen, wie Anionen organischer Säuren (z. B. Acetationen, Formiationen, Trifluoroessigsäureionen, Trifluormethansulfonation, Pentafluorethansulfonationen, Nonofluorbutansulfonationen, Butyrationen, Citrationen, Fumarationen, Glutarationen, Lactationen, Malationen, Malonationen, Oxalationen, Pyruvationen, Tartrationen). Weiterhin kommen als anorganische Kationen ein- oder mehrwertige Metallionen oder organische Kationen wie Ammonium, Imidazolium, Pyridinium, Guanidinium, Uronium, Thiouronium, Piperidinium, Morpholinium oder Phosphonium in Frage

Bevorzugt werden in den Zellen Verbindungen eingesetzt, die Halogenidionen, Hydroxidionen, Phosphationen, Sulfationen, Perchlorationen, Hexafluorophosphationen oder Tetrafluoroborationen enthalten sowie vorzugsweise Kationen ausgewählt aus der Gruppe der Wasserstoffionen ($H^+$), Alkali- oder Erdalkalimetallkationen (z.B. Lithium, Natrium, Kalium, Magnesium, Calcium), sowie der substituierten oder unsubstituierten Ammoniumkationen (z.B. Tetrabutylammonium, Tetramethylammonium, Tetraethylammonium), wobei die Substituenten im Allgemeinen Alkylgruppen sein können.

Die Redox-Flow-Zellen eigenen sich besonders für stationäre Speicheranwendungen, zum Beispiel als Pufferbatterie für Windkraftanlagen beziehungsweise als Leistungs- und Regelreserven zum Lastausgleich in Stromnetzen, aber auch als mobiler Energiespeicher, zum Beispiel für den Betrieb von Elektroautos und elektronischen Geräten.

Bestehende Redox-Flow-Batterien (RFB) - gemäß dem Stand der Technik - sind elektrochemische Energiespeicher. Die zur Potentialeinstellung an den Elektroden nötigen Verbindungen sind gelöste, redoxaktive Spezies, die beim Lade- bzw. Entladevorgang in einem elektrochemischen Reaktor in ihre jeweils andere Redoxstufe überführt werden. Dazu werden die Elektrolytlösungen (Katholyt, Anolyt) aus einem Tank entnommen und aktiv an die Elektroden gepumpt. Anoden- und Kathodenraum sind im Reaktor durch eine ionenselektive Membran getrennt, welche eine hohe Selektivität für Protonen zeigt. Solange Elektrolytlösung gepumpt wird, kann Strom entnommen werden. Der Ladevorgang ist dann einfach die Umkehrung des Vorganges. Damit ist die Energiemenge, die in einer RFB gespeichert werden kann, direkt proportional zur Größe der Vorratstanks. Die entnehmbare Leistung dagegen ist eine Funktion der Größe des elektrochemischen Reaktors.

RFB haben eine komplexe Systemtechnik (BoP - Balance of Plant), die in etwa der einer Brennstoffzelle entspricht. Übliche Baugrößen der Einzel-Reaktoren bewegen sich im Bereich von circa 2 bis 50 kW. Die Reaktoren können sehr einfach modular kombiniert werden, ebenso kann die Tankgröße nahezu beliebig angepasst werden. Eine besondere Bedeutung kommt hierbei RFBs zu, welche mit Vanadiumverbindungen als Redoxpaar auf beiden Seiten arbeiten (VRFB). Dieses System wurde 1986 erstmals beschrieben (AU 575247 B) und stellt momentan den technischen Standard dar.

Weitere anorganische, niedermolekulare Redoxpaare wurden untersucht, unter anderem auf Basis von Cer (B. Fang, S. Iwasa, Y. Wei, T. Arai, M. Kumagai: "A study of the Ce(III)/Ce(IV) redox couple for redox flow battery application", Electrochimica Acta 47, 2002, 3971-3976), Ruthenium (M. H. Chakrabarti, E. Pelham, L. Roberts, C. Bae, M. Saleem: "Ruthenium based redox flow battery for solar energy storage", Energy Conv. Manag. 52, 2011, 2501-2508], Chrom (C-H. Bae, E. P. L. Roberts, R. A. W. Dryfe: "Chromium redox couples for application to redox flow batteries", Electrochimica Acta 48, 2002, 279-87), Uran (T. Yamamura, Y. Shiokawa, H. Yamana, H. Moriyama: "Electrochemical investigation of uranium β-diketonates for all-uranium redox flow battery", Electrochimica Acta 48, 2002, 43-50), Mangan (F. Xue, Y. Wang, W. Hong Wang, X. Wang: "Investigation on the electrode process of the Mn(II)/Mn(III) couple in redox flow battery", Electrochimica Acta 53, 2008, 6636-6642) und Eisen (Y. Xu, Y. Wen, J. Cheng, G. Cao, Y. Yang: "A study of iron in aqueous solutions for redox flow battery application", Electrochimica Acta 55, 2010, 715-720). Allerdings basieren diese Systeme auf metallhaltigen Elektrolyten, welche giftig bzw. umweltschädlich sind.

VRFB-Reaktoren sind derzeit in Blöcken von 1 bis 20 kW erhältlich. Durch modulare Zusammenschaltung werden höhere Leistungen erzielt. Jeder einzelne Block enthält mehrere planare Zellen, die zur Erzielung einer höheren Spannung in Reihe geschaltet sind. Diese so genannte Bipolarbauweise entspricht weitgehend der Bauweise einer PEM-Brennstoffzelle. Als Membran wird ein perfluoriertes Polymer mit Sulfonsäuregruppen genutzt, zumeist DuPont Nafion® 117. Andere Polymere wurden beschrieben, wie beispielsweise auf Basis von SPEEK (Q. Luo, H. Zhang, J. Chen, D. You, C. Sun, Y. Zhang: "Nafion/SPEEK composite: Preparation and characterization of Nafion/SPEEK layered composite membrane and its application in vanadium redox flow battery", J. Memb. Sci. 325, 2008, 553-558), PVDF (J. Qiu, J. Zhang, J. Chen, J. Peng, L. Xu, M. Zhai, J. Li, G. Wei: "Amphoteric ion exchange membrane synthesized by radiation-induced graft copolymerization of styrene and dimethylaminoethyl methacrylate into PVDF film for vanadium redox flow battery applications", J. Memb. Sci. 334, 2009, 9-15), QPPEK (S. Zhang, C. Yin, D. Xing, D. Yang, X. Jian: "Preparation of chloromethylated/ quaternized poly(phthalazinone ether ketone) anion exchange membrane materials for vanadium redox flow battery applications", J. Memb. Sci. 363, 2010, 243-249), fluorfreien sulfonierten Polyarylen (D. Chen, S. Wang, M. Xiao, Y. Meng: "Synthesis and properties of novel sulfonated poly(arylene ether sulfone) ionomers for vanadium redox flow battery", Energy Conv. Manag. 51, 2010, 2816-2824) oder anorganisch-organische Komposit-Materialien mit $SiO_2$ (J. Xi, Z. Wu, X. Qiu, L. Chen: "Nafion/SiO2 hybrid membrane for vanadium redox flow battery", J. Pow. Sour. 166, 2007, 531-536), sind aber im Gegensatz zu Nafionmembranen noch nicht praxistauglich und kommerziell verfügbar. Das gleiche gilt auch für Nanofiltrations-Membranen, welche die Protonen des sauren Elektrolyten passieren lassen und die Vanadiumsalze zurückhalten (Hongzhang Zhang, Huamin Zhang, Xianfeng Li, Zhensheng Mai, Jianlu Zhang: "Nanofiltration (NF) membranes: the next generation separators for all vanadium redox flow batteries (VRBs)", Energy & Environmental Science, 2011, 4, 1676-1679). Dessen ungeachtet würden auch hier dieselben Nachteile, wie hoher Aufwand und Umweltbelastung in Havariefall sowie geringe Lebensdauer der Zelle, gelten.

Beim derzeitigen Stand der Technik limitiert der Einsatz von ionenleitenden Membranen die weitere Kommerzialisierung, da Standard-Nafion®-Membranen teuer, fluorhaltig und mechanisch nicht stabil sind; weiterhin quellen diese sehr stark und sind anfällig für einen elektrochemischen Kurzschluss durch Eindiffusion von Vanadium-Ionen.

Rein organische Redoxverbindungen wurden bisher kaum in RFB eingesetzt. So wurde niedermolekulares 2,2,6,6-Tetramethylpiperidinyloxyl (TEMPO) und N-Methylphthalimid in einer RFB mit einer ionenleitenden Membran eingesetzt (Z. Li, S. Li, S. Q. Liu, K. L. Huang, D. Fang, F. C. Wang, S. Peng: "Electrochemical properties of an all-organic redox flow battery using 2,2,6,6-tetramethyl-1-piperidinyloxy and N-methyl-phthalimide", Electrochem. Solid State Lett. 14, 2011, A171-A173). Weiterhin scheidet Rubren aufgrund der hohen Kosten und sehr geringen Löslichkeit,

trotz guter elektro-chemischer Eigenschaften, aus (vergl. H. Charkrabarthi, R. A. W. Dryfe, E. P. L. Roberts, Jour. Chem. Soc. Pak. 2007, 29, 294-300 "Organic Electrolytes for Redox Flow Batteries"). Desweiteren wurde eine metallfreie RFB auf Basis von eines nieder-molekularen Anthrachinonderivats (9,10-Anthrachinon-2,7-disulphonsäure - AQDS) und Brom entwickelt (B. Huskinson, M. P. Marshak, C. Suh, S. Er, M. R. Gerhardt, C. J. Galvin, X. Chen, A. Aspuru-Guzik, R. G. Gordon, M. J. Aziz: "A metal-free organic-inorganic aqueous flow battery", Nature 2013, 505, 195-198), Allerdings muss dieses System auch weiterhin auf konventionelle ionenleitende Membranen zurückgreifen. Darüber hinaus ist der Brom/Bromwasserstoff-Elektrolyt sehr korrosiv.

Auch auf 2,3,6-Trimethylquinoxalin basierte Batterien nutzen teure ionenselektive Nafion®-Membranen (F. R. Brushett, J. T. Vaughey, A. N. Jansen: "An All-Organic Non-aqueous Lithium-Ion Redox Flow Battery", Adv. Energy Mater. 2012, 2, 1390-1396).

Pyrazin-basierte Cyanoazacarbone (US 8,080,327 B1) wurden sowohl als Anolyt und als Katholyt eingesetzt, wobei die Elektrodenräume trennende ionenleitende Membranen auf Basis von Kationenaustauschern und Anionenaustauschern zum Einsatz kommen. Diese Membranen sind teuer und jeweils nur für eine bestimmte Klasse von Ionen durchlässig. Dies zeigt sich insbesondere in einem nachteiligen Systemaufbau, der zwischen dem Anolyt- und Katholytkreislauf noch ein Elektroyltreservoir nutzen muss. Dieses ist nötig, um den Ladungsausgleich/Vermischen der Anionen, welche über die Anionenaustauscher-Membran in das Reservoir diffundieren, und der Kationen, welche über die Kationenaustauscher-Membran in das Reservoir diffundieren, zu gewährleisten.

Neben den organischen Redoxverbindungen sind niedermolekulare metallorganische Verbindungen beschrieben (M.H. Chakrabartia, R.A.W. Dryfe, E.P.L. Roberts: "Evaluation of electrolytes for redox flow battery applications", Electrochimica Acta, 52, 2007, 2189-2195). Hierbei kommen organische Liganden zum Einsatz, die anorganische Metallsalze komplexieren. Solche Liganden sind zum Beispiel Dipyridyl, Terpyridyl, Phenantrolin, oder Imidazole (US 2012/0171541 A1). Auch für diese Systeme müssen teure ionenleitende Membranen, wie Nafion® oder amin-funktionalisierte Polystyrol-derivate eingesetzt werden. Das gleiche gilt für Redox-Flow-Batterien auf Basis von niedermolekularem Ruthenium-Bipyridinkomplexen, welche zum Beispiel die Anionenaustauschermembranen Neocepta® nutzen. Andere Membranen hingegen sind für diese Komplexe durchlässig und führen einen geringen Wirkungsgrad der Batterie herbei (Y. Matsuda, K. Tanaka, M. Okada, Y. Takasu, M. Morita, T. Matsumura-Inoue: "A rechargeable redox battery utilizing ruthenium complexes with non-aqueous organic electrolyte", J. Applied Electrochem. 18, 1988, 909-914).

EP 2 650 947 A1 beschreibt eine Redox-Flow-Zelle zur Speicherung elektrischer Energie, bei der eine poröse Membran aus mindestens einem hochmolekularen organischen Kunststoff zum Einsatz kommt. Als redoxaktive Komponenten werden Vanadiumverbindungen offenbart.

Aus der älteren, nicht vorveröffentlichten Anmeldung PCT/EP2013/002206 , veröffentlicht als EP 2 785 442 dem Stand der Technik gemäß 54(3) EPÜ zugehörend, sind Redox-Flow-Zellen zur Speicherung elektrischer Energie bekannt, die eine Reaktionszelle mit zwei polaritätsspezifischen Kammern für Katholyt und Anolyt enthalten, die jeweils mit einem Flüssigkeitsspeicher in Verbindung stehen und die durch eine Membran für den Ionenaustausch getrennt sind, wobei die Kammern jeweils mit redoxaktiven Komponenten gefüllt sind, die in Substanz, gelöst oder dispergiert in einem Elektrolytlösungsmittel vorliegen, sowie darin gelösten Leitsalzen und eventuellen weiteren Additiven. Diese Redox-Flow-Zellen sind dadurch gekennzeichnet, dass als redoxaktive Komponenten hochmolekulare Verbindungen und als Membran eine Größenausschlussmembran zur Trennung der in Substanz, in gelöster oder in dispergierter Form vorliegenden hochmolekularen redoxaktiven Komponenten vorgesehen sind.

Der Erfindung liegt die Aufgabe zugrunde, durch die Verwendung neuer, insbesondere polymerbasierter Elektrolyte möglichst aufwandgering eine kostengünstige und langlebige Redox-Flow-Zelle zu schaffen, welche auch im eventuellen Havariefall mit ihren redoxaktiven Verbindungen wenig umweltbelastend wirkt.

Diese Aufgabe wird durch die Bereitstellung einer Redox-Flow-Zelle zur Speicherung elektrischer Energie gemäß Anspruch 1 gelöst. Diese enthält eine Reaktionszelle mit zwei Elektrodenkammern (1, 2) für Katholyt und Anolyt, die jeweils mit mindestens einem Flüssigkeitsspeicher in Verbindung stehen, die durch eine Membran für den Ionenaustausch getrennt sind, und die mit Elektroden (10, 11) ausgerüstet sind, wobei die Kammern (1, 2) jeweils mit redoxaktiven Komponenten gemäß Anspruch 1 gefüllt sind oder dieselben enthalten, die in Substanz, gelöst oder dispergiert in einem Elektrolytlösungsmittel vorliegen, sowie gegebenenfalls darin gelösten Leitsalzen und eventuellen weiteren Additiven, wobei die Membran eine Größenausschlussmembran (3) mit einer Selektivität von mindestens 400 g/mol ist, beide redoxaktiven Komponenten eine Molmasse von mindestens 400 g/mol, bevorzugt mindestens 500 g/mol, besonders bevorzugt mindestens 600 g/mol, ganz besonders bevorzugt von 600 - 25000 g/mol und insbesondere bevorzugt von 600-15000 g/mol aufweisen und eine der unten definierten Struktureinheiten der Formel I und der Formel II oder der Formel I, der Formel II und der Formel III oder der Formel IV enthalten, mit der Maßgabe, dass Poly(4,4'-bipyridin-co-poly(ethylenglykol) als redoxaktive Komponente im Anolyten ausgeschlossen ist.

Im Allgemeinen liegt das Redoxpotential der im Katholyten enthaltenen redoxaktiven Komponente im Bereich von 0,0 V bis +3,0 V; vorzugsweise von 0,3 V bis +2,0 V, und der im Anolyten enthaltenen redoxaktiven Komponente im Bereich von +0,5 V bis -3,1 V, vorzugsweise von +0,3 V bis -2,5 V, jeweils gegen die die Standardwasserstoffelektrode.

In der erfindungsgemäßen Redox-Flow-Zelle kommen in beiden Kammern (1, 2) ausgewählte redoxaktive

Komponenten mit einer Molmasse der oben genannten Werte zum Einsatz, die durch eine Größenausschlussmembran voneinander getrennt sind und die in den Kammern in Substanz, in gelöster oder in emulgierter bzw. in dispergierter Form, als Nano- oder Mikrogel vorliegen. Mikrogele sind typischerweise vernetzte mikrometergroße Polymerpartikel, die im Lösungsmittel gequollen sind (S. Seiffert: "Functional Microgels Tailored by Droplet-Based Microfluidics",Macromol. Rapid Commun. 2011, 32, 1600-1609).

Der Elektrolyt enthält das redoxaktive Polymer oder Oligomer mit einer Molmasse $M_N$ von > 400 g/mol. Weiterhin kann ein organisches Lösungsmittel und/oder Wasser verwendet werden. Darüberhinaus kann der Elektrolyt mindestens ein Leitsalz enthalten. Auf dieses kann verzichtet werden, wenn das redoxaktive Oligomer oder Polymer ein Polyelektrolyt ist. In diesem Fall übernehmen die Gegenionen des Polyelektrolyts den notwendigen Ladungsausgleich. Zusätzlich können noch Additive verwendet werden. Beispiele dafür sind Tenside, Viskositätsmodifizierer, Pestizide, Puffer, Stabilisatoren, Katalysatoren, Leitadditive, Frostschutzmittel, Temperaturstabilisatoren.

Die Auswahl der redoxaktiven Komponenten erfolgt so, dass die redoxaktive Komponente im Katholyten ein anderes, bevorzugt höheres, positiveres Redoxpotential aufweist als das der redoxaktiven Komponente im Anolyten. Unter redoxaktiver Komponente sind hier alle zu dieser Komponente zugehörigen Redoxzustände bzw. alle ihre Reduktions-/Oxidationsstufen zu verstehen. Die redoxaktive Komponente kann >= 2 Oxidations- und/oder Reduktionszustände annehmen. Die Potentialdifferenz zwischen den jeweils im Anolyten und Katholyten ablaufenden Redoxreaktionen der redoxaktiven Komponenten liegt erfindungsgemäß zwischen größer als 0 V und 4,0 V; bevorzugt zwischen 0,5 und 2,5 V; besonders bevorzugt zwischen 0,9 und 1,5 V. In Abhängigkeit von den jeweils ausgewählten Komponenten kann eine Verbindung in einem Fall als Katholyt eingesetzt werden und in einem anderen Fall als Anolyt oder eine Verbindung kann gleichzeitig sowohl als Katholyt und als Anolyt eingesetzt werden.

Das Redoxpotential der redoxaktiven Komponente kann zum Beispiel mittels Cyclovoltammetrie bestimmt werden. Dieses Verfahren ist dem Fachmann bekannt (vergleiche Allen J. Bard und Larry R. Faulkner, "Electrochemical Methods: Fundamentals and Applications", 2001, 2. Auflage, John Wiley & Sons; Richard G. Compton, Craig E. Banks, "Understanding Voltammetry", 2010, 2. Auflage, Imperial College Press).

Bevorzugt werden Redox-Flow-Zellen bei denen die Kammern (1, 2) jeweils mit redoxaktiven Komponenten gefüllt sind, die in Substanz oder gelöst in Wasser bzw. einem organischen Lösungsmittel vorliegen.

Unter dem Begriff "Größenausschlussmembran" im Rahmen dieser Beschreibung ist eine Membran zu verstehen, die mindestens folgende Merkmale aufweist

- Trennung von Anoden- und Kathodenraum
- Zurückhalten beider redoxaktiver Komponenten
- Durchlässigkeit für die Leitsalze des Elektrolyten, die zum Ladungsausgleich dienen, also für Anionen und Kationen des Leitsalzes bzw. für die im Elektrolyten enthaltenen Ladungsträger allgemein.

Gemäß einer weiteren Ausführungsform kann die Membran für niedermolekulare organische Moleküle durchlässig sein.

Das Rückhalteprinzip der erfindungsgemäß eingesetzten Membran beruht auf dem Prinzip des geometrischen Größenausschlusses, d.h. die Membran unterscheidet zwischen den geometrisch "großen" redoxaktiven Komponenten und den geometrisch "kleinen" Ionen des Leitsalzes aufgrund deren Größe, welche z. B. durch die Molmasse (Zahlenmittel), Zahl der Wiederholungseinheiten, Ionenradius und/oder Trägheitsradius beschrieben werden kann.

Unter Selektivität wird im Rahmen dieser Beschreibung die Trenngrenze verstanden, bei der die Moleküle die Membran nicht mehr effizient passieren können. Das bedeutet, dass bei einer vorgegebenen Molmasse des Moleküls mindestens 90% der Moleküle von der Membran zurückgehalten werden.

Die vorgeschlagene Größenausschlussmembran, beispielsweise eine semipermeable Membran oder eine Dialysemembran, trennt diese hochmolekularen redoxaktiven Komponenten in den beiden Kammern vorzugsweise mit einer Selektivität von mindestens 400 g/mol, wobei als hochmolekulare Komponenten redoxaktive organische beziehungsweise metallorganische Stoffe mit einer Molmasse von größer als 400 g/mol Verwendung finden, die dementsprechend eine Molmasse von mindestens der Selektivität der Größenausschlussmembran aufweisen.

Die Werkstoffe der Größenausschlussmembran können je nach Anwendungsfall aus Kunststoffen, Keramiken, Gläsern, Metallen oder textilen Flächengebilden bestehen. Beispiele für Werkstoffe sind organische Polymere, wie Cellulose oder modifizierte Cellulose, beispielsweise Celluloseether oder Celluloseester, Polyethersulfon, Polysulfon, Polyvinylidenfluorid, Polyester, Polyurethane, Polyamide, Polypropylen, Polyvinylchlorid, Polyacrylnitril, Polystyrol, Polyvinylalkohol, Polyphenylenoxid, Polyimide, Polytetrafluorethylen und deren Derivate, oder weiterhin Keramiken, Gläser oder Filze. Auch aus mehreren Materialien bestehende Größenausschlussmembranen (Komposite) sind möglich.

Die Membran kann erfindungsgemäß folgende, weitere Substanzen oder Stoffgruppen enthalten:

- anorganische Materialien, z. B. Aluminiumoxid, Siliziumoxid, Zirkoniumoxid, Zirkoniumphosphat, Titanoxid, Wolframtrioxid, Bleidioxid, Zeolithe (Alumosilikate) oder Kombinationen derselben,

- anorganisch-organische Composite, enthaltend mindestens eines der vorgenannten Bestandteile, z. B. um mechanisch flexible Membranen zu ermöglichen,

- bevorzugt modifizierte Zellulose, wie Zelluloseacetat (CA), regenerierte Zellulose (RC) oder Nitrozellulose

- bevorzugt Polyethersulfone

- Silikone oder Silikongruppen enthaltende Verbindungen, wie Silikonpolyamid PA 6, Silikonpolyamid PA 6.6, Silikonpolyamid PA 6.10, Silikonpolyamid PA 6.12, Silikonpolyamid PA 11, Siliconpolyamid PA 12, Siliconkarbonat, Silikonpropylen, Silikonesulfon, oder

- filmbildende Polymere, wie Nylon, Polypiperazinamid (EP-A-451353) oder Dünnfilmmembran enthaltend eine Zelluloseacetatstützschicht und einen Polyamidfilterüberzug (DE60212637).

Eine umfassende Aufstellung möglicher und verwendbarer Membranmaterialien findet sich unter http://www.polyquick.de/DE/unternehmen/.

Als Membran können auch Umkehrosmose-, Nano- oder Ultrafiltrationsmembranen, die z. B. in der Wasseraufbereitung bereits bekannt sind und die organische und/oder anorganische Bestandteile enthalten können, zur Anwendung kommen.

Als Membran im Sinne der vorliegenden Erfindung kann weiterhin das mechanisch flexible, keramische Produkt -bekannt unter dem Handelsnamen SEPARION®, welches in Lithiumionenbatterien Anwendung findet, verwendet werden (s. http://nano.evonik.de/sites/nanotechnology/de/technologie/anwendung/separion/pag es/default.aspx http://www.membrane-guide.com/firmenlisten/produkte/membrane-battery-separator_europe.htm).

Die Größenausschlussmembranen und die daraus resultierenden Redox-Flow-Zellen können in verschiedenen Erscheinungsformen eingesetzt werden. Beispiele dafür sind Flachmembranen, Taschenfilterbauweise, gewickelte Module und Hohlfasermodulbauweise. Diese Ausführungsformen sind dem Fachmann bekannt. Bevorzugt werden Flachmembranen eingesetzt.

Die erfindungsgemäß eingesetzte Größenausschlussmembran kann zur besseren Stabilität, z. B. durch ein siebförmiges oder perforiertes Kunststoffmaterial oder - gewebe, geträgert sein.

Die Dicke der erfindungsgemäßen eingesetzten Größenausschlussmembran kann in weiten Bereichen schwanken. Typische Dicken liegen im Bereich zwischen 1 $\mu$m und 5 mm, insbesondere bevorzugt zwischen 10 $\mu$m und 200 $\mu$m.

Erfindungsgemäß wird die Trenngrenze der Membran so gewählt, dass die redoxaktiven Substanzen, welche sich im Elektrolyten der beiden Räume für die positive und negative Elektrode befinden, sich so wenig wie möglich vermischen. Die Trenngrenze der Membran, welche weitestgehend dem Porendurchmesser enspricht, liegt typischerweise zwischen 0,0001 $\mu$m bis 10,0 $\mu$m; bevorzugt zwischen 0,0005 $\mu$m bis 0,1 $\mu$m. Die Trenngrenze der Membran kann vorab so gezielt eingestellt werden, dass die Rückhaltung von Ionen oder im Elektrolyten befindlichen Teilchen - jeweils bestimmter Größe- gelingt. Andererseits wird denjenigen Teilchen, deren Wanderung durch die Membran tatsächlich erwünscht ist, die Passage durch die Membran ermöglicht. Die Membran kann somit wie in PCT/EP2013/002206 sowie in der vorliegenden Anmeldung beschrieben als Größenausschlussmembran wirken.

Die erfindungsgemäß eingesetzten redoxaktiven Komponenten weisen eine Struktureinheit der nachstehend beschriebenen Formel I und der Formel II oder der Formel I, der Formel II und der Formel III oder der Formel IV auf, die in mindestens zwei unterschiedlichen stabilen Oxidationsstufen vorliegen können. Die erfindungsgemäß eingesetzten redoxaktiven Komponenten weisen eine Molmasse von mindestens 400 g/mol auf, so dass sie die erfindungsgemäß eingesetzte Größenausschlussmembran nicht passieren können.

Beispiele für redoxaktive Komponenten sind Verbindungen gemäß Anspruch 1 mit einem Molekulargewicht von mindestens 400 g/mol, welche als aktive Einheit folgende Reste aufweisen: Verbindungen, die Nitroxid-Radikale oder, 2,2-Diphenyl-1-picrylhydrazyl-Radikale bilden, Wurster-Salze, Chinone, Verbindungen, die Galvinoxyl-Radikale, Phenoxyl-Radikale, Triarylmethyl-Radikale, Polychlorotriphenylmethyl-Radikale, Phenalenyl-Radikale, Cyclopentadienyl-Radikale, Iminoxyl-Radikale, Verdazyl-Radikale, Nitronylnitroxid-Radikale oder Thiazyl-Radikale bilden können, Indigo, Disulfide, Thiafulvalene, Thioether, Thiolane, Thiophene, Viologen, Tetraketopiperazin, Chinoxalin, Triarylamin, Calix[4]aren, Anthrachinonylsulfid, Phthalazin, Cinnolin, , Ferrocen, Carbazol, Polyindol, Polypyrrol, Polyanilin, Polythiophen, Poly-N,N'-diallyl-2,3,5,6-tetraketopiperazin, 2,5-Di-tert-butyl-4-methoxy-phenoxy-propylester, Poly-2-phenyl-1,3-dithiolan, Poly[methan-tetryltetrathio-methylen], Poly-2,4-dithio-pentanylen, Polyethen-1,1,2,2-tetrathiol, Poly-3,4-ethylen-dioxythiophen, 5,5-Bismethylthio-2,2-bithiophen, Poly-1,2,4,5-tetrakis-propylthiobenzol, Poly-5-amino-1,4-dihydrobenzo[d]-1',2'-dithiadien-co-anilin, Poly-5,8-dihydro-1H,4H-2,3,6,7-tetrathia-anthracen, Polyanthra[1',9',8'-b,c,d,e][4',10',5'-b',c',d',e']bis-[1,6,6a6a-SIV-trithia]-pentalen, Polyenoligosulfid, Poly-1,2-bisthiophen-3-ylmethyldisulfan, Poly-3-thienyl-methyl disulfid-co-benzyl disulfid, Polytetrathio-naphthalin, Polynaphtho[1,8-cd] [1,2]-dithiol, Poly-2,5-dimercapto-1,3,4-thiadiazol, Polysulfid, Polythiocyanogen, Polyazulen, Polyfluoren, Polynaphthalin, Polyanthracen,

Polyfuran, Tetrathiafulvalen oder Polyoxyphenazin und deren Isomere und Derivate.

Die erfindungsgemäß eingesetzten redoxaktiven Komponenten können Polymere oder Oligomere sein, wobei unter Oligomeren Verbindungen mit einer Molmasse von 400 bis 5000 g/mol (Zahlenmittel) verstanden werden und unter Polymeren Verbindungen mit einer Molmasse von mehr als 5000 g/mol (Zahlenmittel) verstanden werden.

Die mittlere Molmasse (Zahlenmittel) der redoxaktiven Komponenten ist typischerweise mindestens 400 g/mol, vorzugsweise mindestens 500 g/mol, besonders bevorzugt mindestens 600 g/mol, und beträgt besonders bevorzugt 600 bis 50000 g/mol, noch mehr bevorzugt 600 - 25000 g/mol und noch mehr bevorzugt 600 bis 15000 g/mol.

In einer bevorzugten Ausführungsform werden Oligomere bzw. Polymere mit einer mittleren Molmasse von 600-800 g/mol und/oder mit einer mittleren Molmasse von 800-1500 g/mol und/oder mit einer mittleren Molmasse von 1500-3500 g/mol und/oder mit einer mittleren Molmasse von 3500-8000 g/mol und/oder mit einer mittleren Molmasse von 8000-15000 g/mol und/oder mit einer mittleren Molmasse von 15000-25000 g/mol eingesetzt.

In einer weiteren bevorzugten Ausführungsform werden im Katholyten und Anolyten Oligomere bzw.Polymere eingesetzt, die jeweils den gleichen der oben beschriebenen Molekulargewichtsbereiche aufweisen oder die aus unterschiedlichen der oben beschriebenen Molekulargewichtsbereiche stammen.

Bei einer Gruppe der in der erfindungsgemäßen Redox-Flow-Zelle eingesetzten redoxaktiven Komponenten handelt es sich um Oligomere oder Polymere mit einem Molekulargewicht von mindestens 400 g/mol, die mindestens eine Struktureinheit der Formel I und der Formel II oder der Formel I, der Formel II und der Formel III enthalten

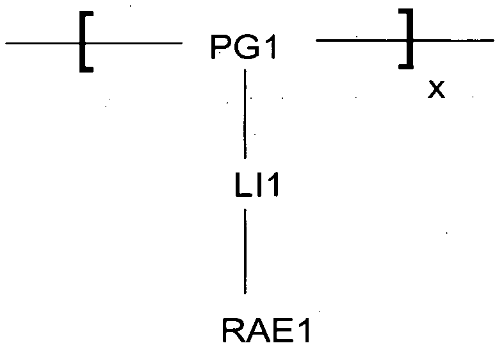

(I),

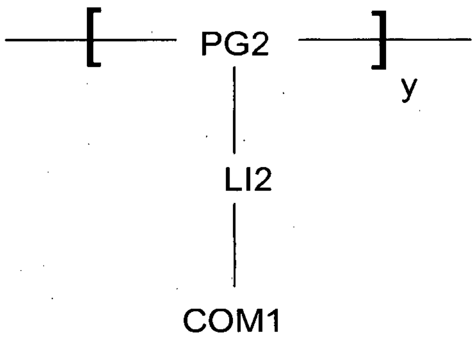

(II),

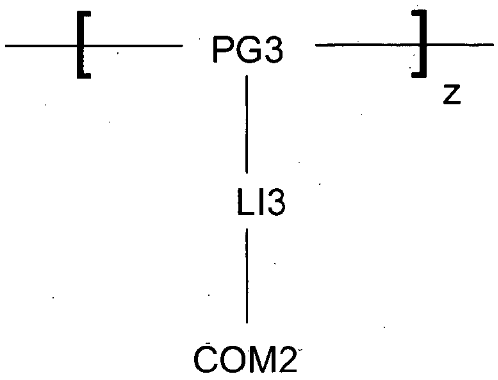

(III),

worin PG1, PG2 und PG3 unabhängig voneinander Gerüste organischer Polymere gemäß Anspruch 1 darstellen (hierbei kommen sowohl lineare, verzweigte, dendritische, hochverzeigte und vernetzte Polymere in Frage),
RAE1 eine einwertige redoxaktive Gruppe bedeutet,
LI1, LI2 und LI3 unabhängig voneinander kovalente Bindungen zwischen Atomen von PG1 und RAE1 oder PG2 und COM1 oder PG3 und COM2 bedeuten oder zweiwertige organische Brückengruppen ausgewählt aus den nachstehend definierten Strukturen L1 bis L26 sind,
COM1 und COM2 unabhängig voneinander unterschiedliche einwertige Reste nach Anspruch 1 sind,
x eine ganze Zahl von >=1, insbesondere mindestens 2 und besonders bevorzugt von 2 bis 10000 ist,
y eine ganze Zahl von >=0, insbesondere mindestens 1 und besonders bevorzugt von 1 bis 10000 ist, und
z eine ganze Zahl von >=0, insbesondere mindestens 1 und besonders bevorzugt von 1 bis 10000 ist.

Redoxaktive Komponenten enthaltend die Struktureinheiten der Formeln I und II oder der Formeln I, II und III bilden die folgenden allgemeinen Strukturen aus:

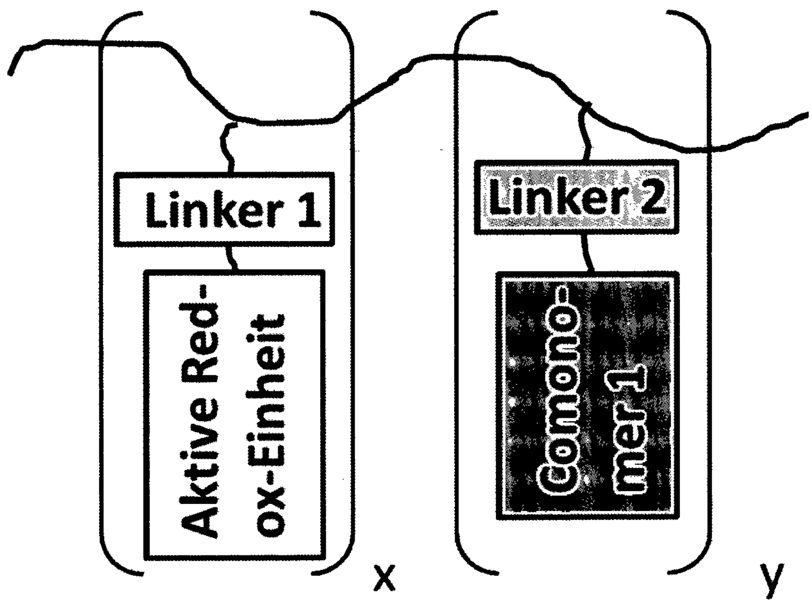


Diese Oligomere oder Polymere weisen allgemein mindestens eine Art einer redoxaktiven Einheit in der Seitenkette auf und tragen ein oder mehrere Typen von löslichkeitsvermittelnden Seitenketten - bzw. funktionalitäten abgeleitet von Comonomer 1 und gegebenenfalls von Comonomer 2. In den obigen Abbildungen sind exemplarisch Bi- und Terpolymere gezeigt.

Für die Anordnung der Wiederholungseinheiten kommen sowohl statistische Copolymere, Blockcopolymere, streng alternierende Polymere sowie Gradientencopolymere in Betracht.

Die als PG1, PG2 und PG3 bezeichneten Einheiten bilden das Polymerrückgrat oder Teile davon.

Zu den bevorzugten Struktureinheiten PG1, PG2 und PG3 zählen solche, die abgeleitet sind von von Monomeren für die Ringöffnungspolymerisation, von Monomeren für die oxidative Kupplung, von Monomeren für die Polykondensation oder von Monomeren für die Ringöffnungsmetathese-Polymerisation, für radikalische Polymerisation oder ionische Polymerisationen.

Monomere für die Ringöffnungsmetathesepolymerisation sind solche der nachstehend aufgezählten Formeln M1 bis M5, für radikalische und ionische Polymerisationen M6 bis M20:

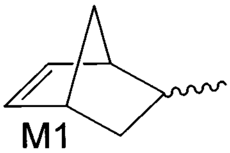
M1
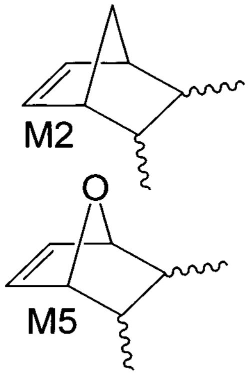
M2
M5
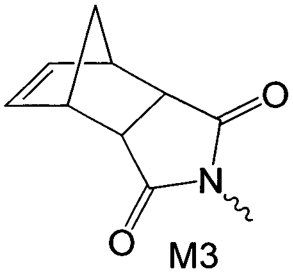
M3
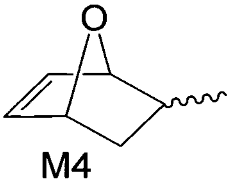
M4

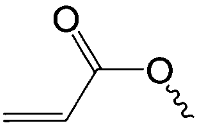
M6
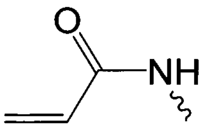
M8
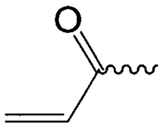
M10
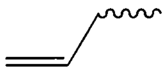
M12

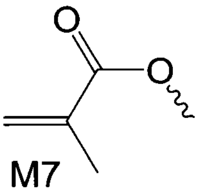
M7
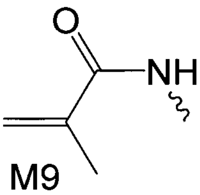
M9
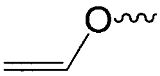
M11
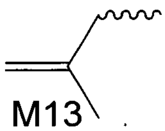
M13

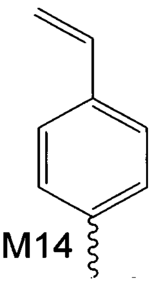
M14
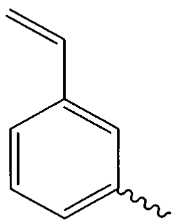
M15
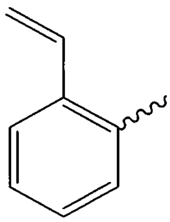
M16
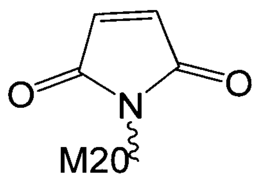
M20

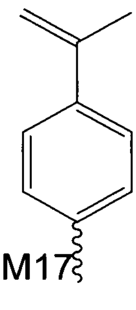
M17
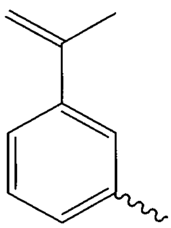
M18
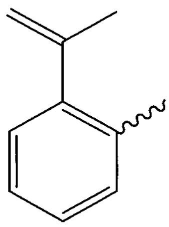
M19

Monomere für die Ringöffnungspolymerisation sind solche der nachstehend aufgezählten Formeln M21 bis M33:

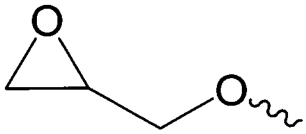
M21

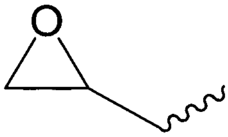
M22

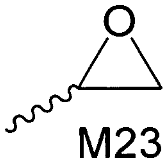
M23

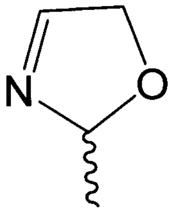
M24

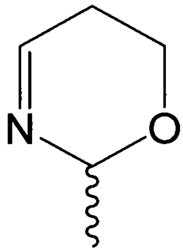
M25

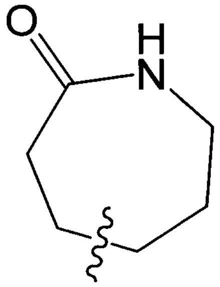
M26

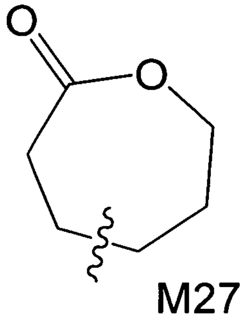
M27

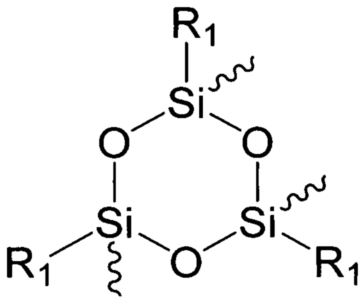
M28

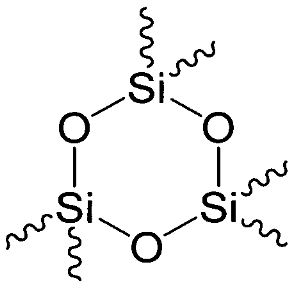
M29

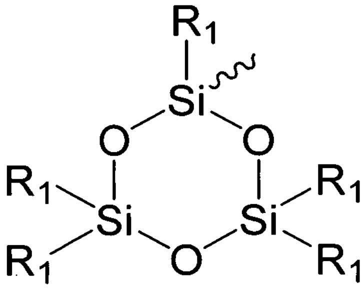
M30

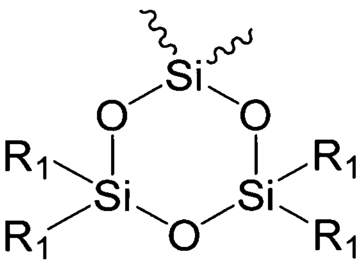
M31

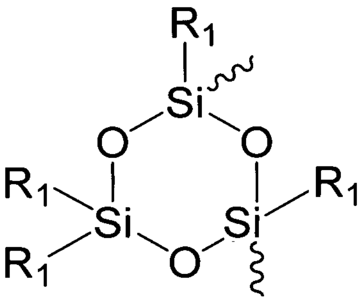
M32

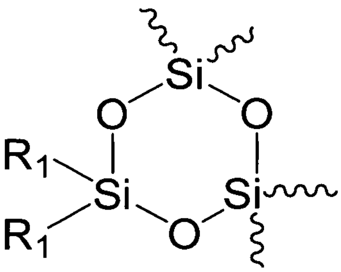
M33

$R_1$ = Methyl, Ethyl, Phenyl

Monomere für die oxidative Kupplung sind solche der nachstehend aufgezählten Formeln M34 bis M44:

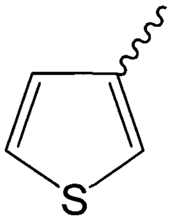 M34

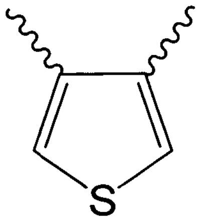 M35

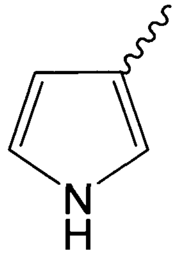 M36

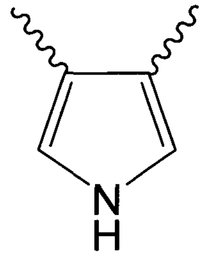 M37

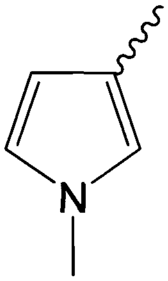 M38

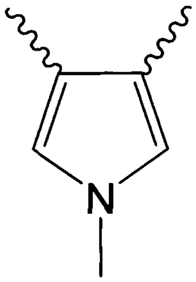 M39

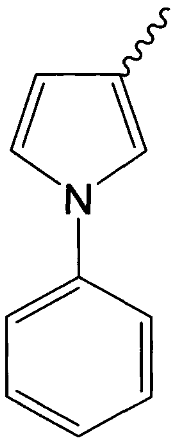 M42

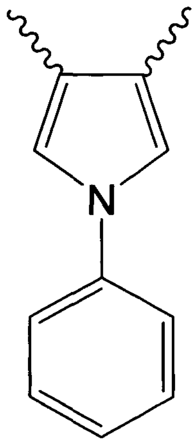 M43

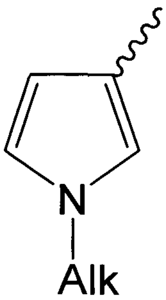

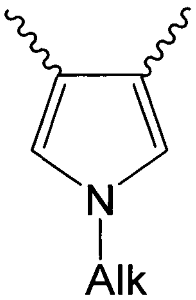

Alk: Alkylketten bis $C_{10}$

M40

M41

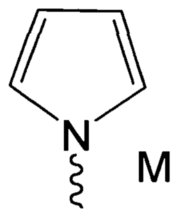 M44

Monomere für die Polykondensation sind solche der nachstehend aufgezählten Formeln M45 bis M59, wovon insbesondere die Monomeren M50 bis M59 ganz besonders bevorzugt sind:

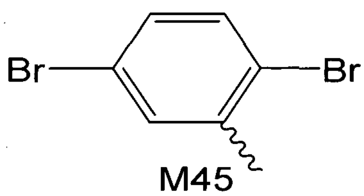 M45

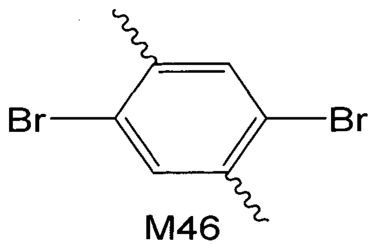 M46

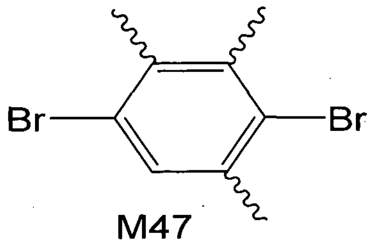 M47

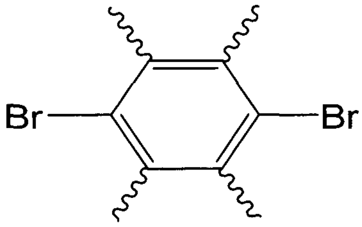
M48

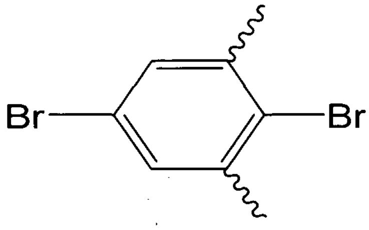
M49

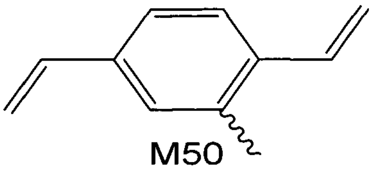
M50

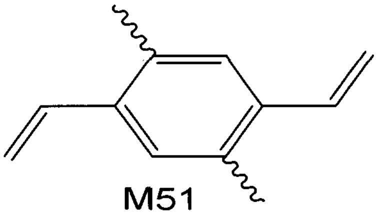
M51

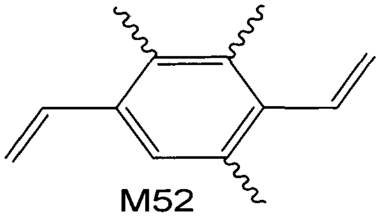
M52

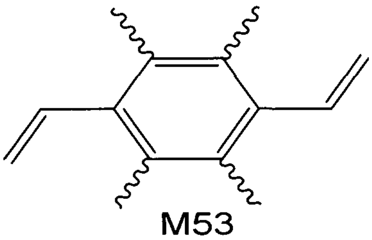
M53

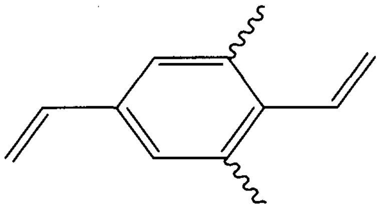
M54

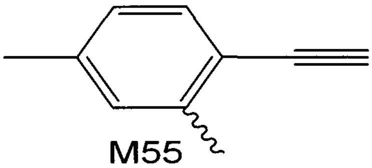
M55

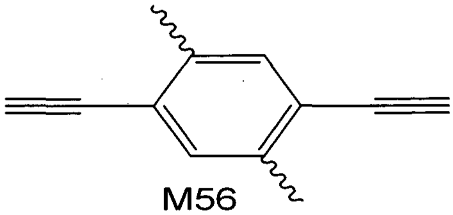
M56

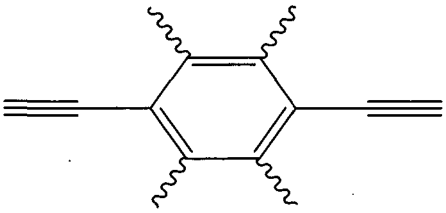
M57

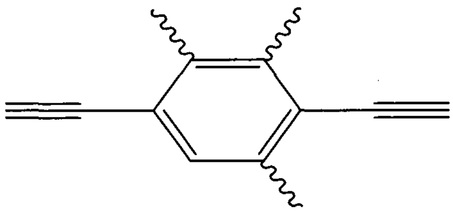
M58

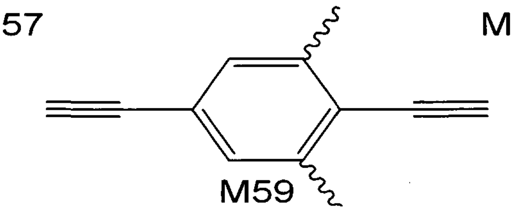
M59

Das Polymerrückgrad PG1 ist mit der redoxaktiven Einheit RAE1 über einen Linker LI1 verbunden. Dabei kann es sich um eine kovalente Bindung zwischen zwei Atomen handeln oder um eine zweiwertige organische Brückengruppe der nachstehend genannten Gruppen L1 bis L26.

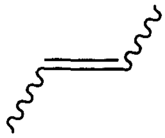
L1

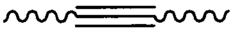
L2

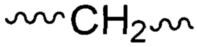
L3

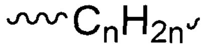
(Alkylketten bis $C_{20}$) L4

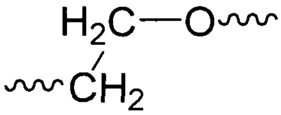
L5

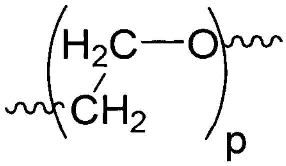
p = 2-10

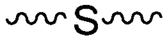
L7

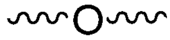
L8

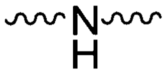
L9

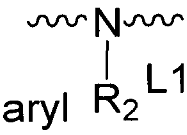
L10

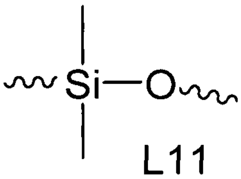
L11

$R_2$ = alkyl bis $C_{10}$ und aryl

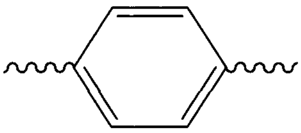
L12

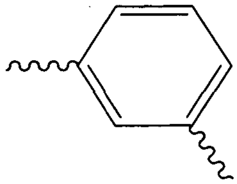
L13

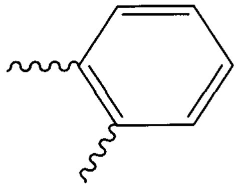
L14

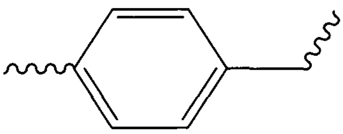
L15

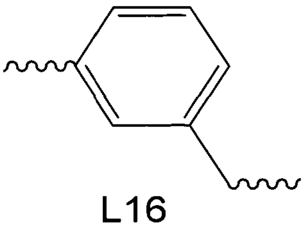
L16

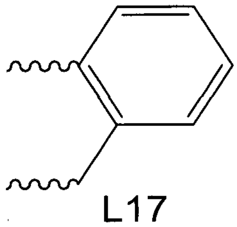
L17

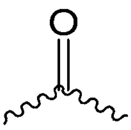
L18

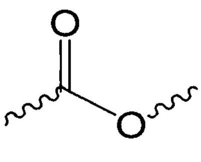
L19

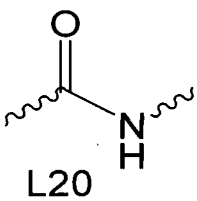
L20

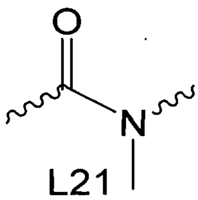
L21

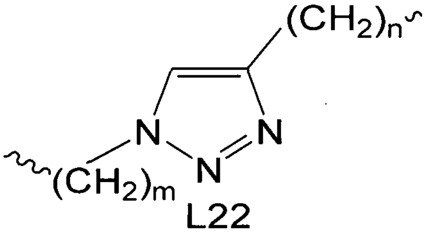

L22
n, m = 0-15 (Alkylketten)

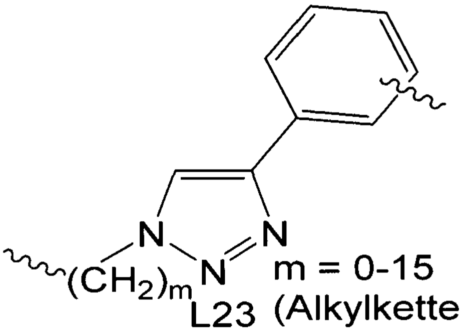

ortho, meta, para
m = 0-15
L23 (Alkylketten)

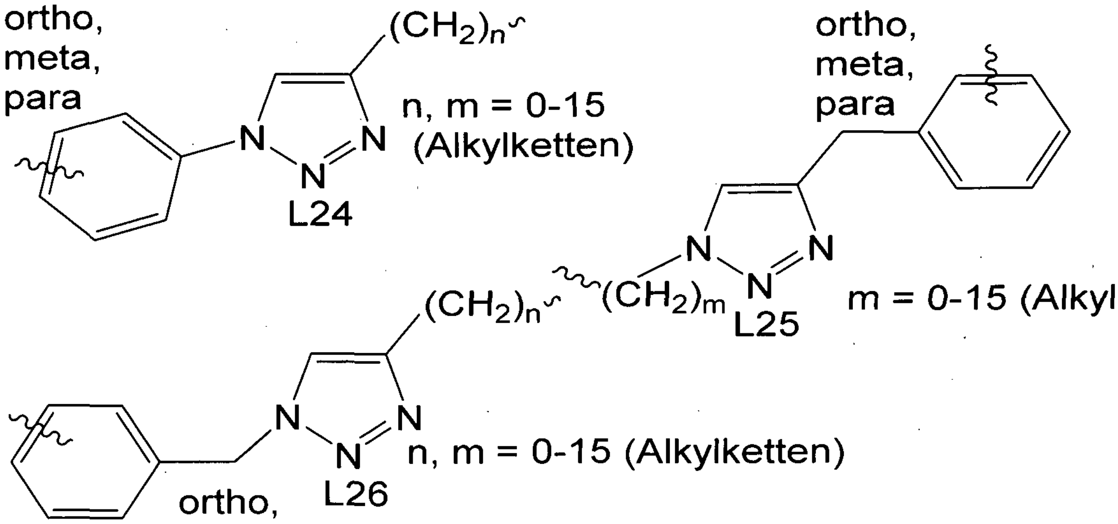

ortho, meta, para
n, m = 0-15 (Alkylketten)
L24

ortho, meta, para
L25 m = 0-15 (Alkylketten)

n, m = 0-15 (Alkylketten)
ortho, meta, para L26

Beispiele für besonders bevorzugte redoxaktive Einheiten RAE1 sind die weiter unten beschriebenen Gruppen RE1 bis RE6.

Ganz besonderes bevorzugt in der Redox-Flow-Zelle der vorliegenden Erfindung eingesetzte redoxaktive Oligomere oder Polymere enthalten Struktureinheiten der Formel I mit den in der nachfolgenden Tabelle aufgeführen Monomereinheiten zur Herstellung des Polymerrückgrads RG1 und den Einheiten Linker LI1 und redoxaktiver Einheit RAE1.

| | Linker LI1 | | | | | | | | | | | | | | | | | | | | | redoxaktive Einheit RAE | | | | | |
|---|---|---|---|---|---|---|---|---|---|---|---|---|---|---|---|---|---|---|---|---|---|---|---|---|---|---|---|
| Polymerisierbare Gruppe PG1 abgeleitet von | 1 | 2 | 3 | 4 | 5 | 6 | 7 | 8 | 9 | 10 | 11 | 12 Bis 14 | 15 | 16 | 17 | 18 | 19 | 20 | 21 | 22 bis 26 | | 1 | 2 | 3 | 4 | 5 | 6 |
| M1, M2, M4, M5 | x | X | x | X | X | x | | x | | | X | x | x | X | x | x | x | x | x | x | | x | x | x | x | x | x |
| M3 | | | x | X | X | x | | | | | | x | x | X | x | | | | | x | | x | x | x | x | x | x |
| M6, M7 | | | x | X | X | x | | | | | | x | x | X | x | | | | | x | | x | x | x | x | x | x |
| M8, M9 | | | x | X | X | x | | | | | | x | x | X | x | | | | | x | | x | x | x | x | x | x |
| M10 | | | x | X | X | x | | | | | | x | x | X | x | | | | | x | | x | x | x | x | x | x |
| M11 | | | x | X | X | x | | | | | | x | x | X | x | | | | | x | | x | x | x | x | x | x |
| M12, M13 | | | x | X | | | | | | | | x | x | X | x | | | | | x | | x | x | x | x | x | x |
| M14 - M19 | x | X | x | X | X | x | x | x | x | X | x | x | x | X | x | x | x | x | x | x | | x | x | x | x | x | x |
| M20 | | | x | X | X | x | | | | | | x | x | X | x | | | | | x | | x | x | x | x | x | x |
| M21 | | | x | X | X | x | | | | | x | x | x | X | x | | | | | x | | x | x | x | x | x | x |
| M22 | | | x | X | | | | | | | | x | x | X | x | | | | | x | | x | x | x | x | x | x |
| M23 | | | x | X | | | | | | | | x | x | x | x | | | | | x | | x | x | x | x | x | x |
| M24, M25 | | | x | X | | | | | | | | x | x | x | x | | | | | x | | x | x | x | x | x | x |
| M26, M27 | | | x | X | | | | | | | | | | | | | | | | | | x | x | x | x | x | x |

| | | | | | | | | | | | | | | | | | | | | | | | | | | | |
|---|---|---|---|---|---|---|---|---|---|---|---|---|---|---|---|---|---|---|---|---|---|---|---|---|---|---|---|
| M28-M33 | | | x | x | | | | | | | x | x | x | x | x | | | | | | | x | x | x | x | x | x |
| M34, M35 | | | x | x | x | x | | x | | x | | x | x | x | x | x | x | x | x | x | | x | x | x | x | x | x |
| M36-M43 | | | x | x | x | x | | x | | x | | x | x | x | x | x | x | x | x | x | | x | x | x | x | x | x |
| M44 | | | x | x | x | x | | | | | | x | x | x | x | | | | | x | | x | x | x | x | x | x |
| M45-M49 | x | x | x | x | x | x | | x | | x | | x | x | x | x | | x | x | x | x | | x | x | x | x | x | x |
| M50-M59 | | | x | x | | | | x | x | x | | x | x | x | x | | x | x | x | x | | x | x | x | x | x | x |

Erfindungsgemäß eingesetzte redoxaktive Oligomere und Polymere enthalten zusätzlich zur Struktureinheit der Formel I weitere Struktureinheiten der Formel II und gegebenenfalls der Formel III mit löslichkeitsvermittelnden Seitenketten bzw. Funktionalitäten.

Die in Formel II mit PG2 bezeichneten Einheiten bilden Teile des Polymerrückgrats neben den Einheiten PG1, welche aus den Einheiten der Formel I stammen.

Beispiele für bevorzugte Einheiten PG2 sind weiter oben bei der Beschreibung der Einheiten PG1 aufgezählt.

Beispiele für bevorzugte in den Struktureinheiten der Formel II auftretende Linker LI2 sind weiter oben bei der Beschreibung der Linker LI1 aufgezählt.

Beispiele für besonders bevorzugte solubilisiertende Seitengruppen COM1, die in den Struktureinheiten der Formel II auftreten, sind die nachstehend genannten Gruppen CM1 bis CM9 und CM15 bis CM27.

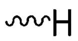
CM1

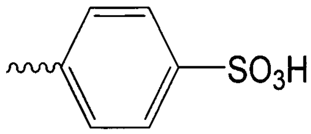
CM5

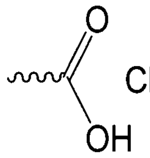
CM8

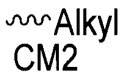
CM2

Alkyl bis $C_{20}$

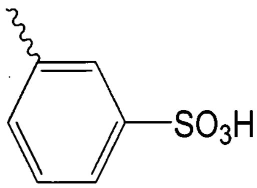
CM6

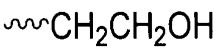
CM3

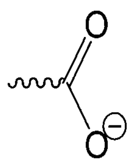
CM9

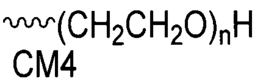
CM4

n = 2-20

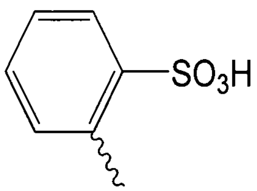
CM7

(mit Gegenion, wie z.B. Na+, K+, Ammoniumsalze, Alkylammoniumsalze)

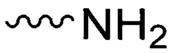
CM15

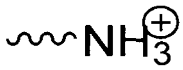
CM16

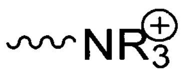
CM17

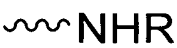
CM18

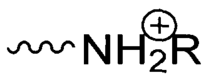
CM19

R= Alkyl bis $C_{20}$

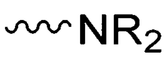
CM20

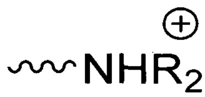
CM21

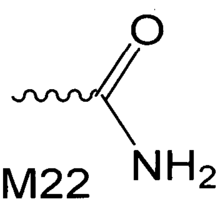
CM22

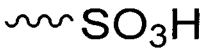
CM25

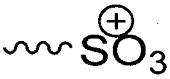
CM26

(mit Gegenion, wie z.B. Na+, K+, Ammoniumsalze, Alkylammoniumsalze)

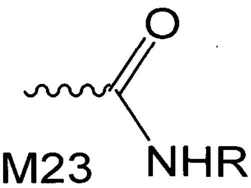
CM23

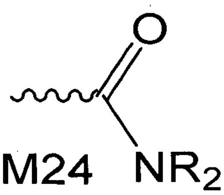
CM24

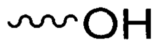
CM27

Ganz besonderes bevorzugt in der Redox-Flow-Zelle der vorliegenden Erfindung eingesetzte redoxaktive Oligomere oder Polymere enthalten neben den oben genannten Einheiten der Formel I die Einheiten der Formel II mit den in der nachfolgenden Tabelle aufgeführten Monomereinheiten (M) zur Herstellung des Polymerrückgrats RG2 und den Einheiten Linker LI2 (L) und Comonomereinheit COM1 (CM).

Struktureinheit der Formel II: (L0 kovalente Bindung)

| | | |
|---|---|---|
| M1, M2, M3, M5 | L0, L3, L4 | CM1, CM2, CM3, CM4, CM15 bis CM17 |
| | L19, L20, L21 | CM1, CM2, CM3, CM4, CM15 bis CM17 |
| M1, M2, M3, M5 | L0 | CM8, CM9, CM22 bis CM 24 |
| M3 | L0, L3 bis L6 | CM1 bis CM4, CM5 bis CM7, CM8 bis CM9, CM15 bis CM24 |
| M3 | L12 bis L14 | CM8 bis CM9, CM15 bis CM24 |
| M6, M7 | L0 | CM1 bis CM4 |
| M6, M7 | L3, L4 | CM1 bis CM4, CM8 bis CM9, CM15 bis CM24 |
| M8, M9 | L0 | CM1 bis CM4 |
| M8, M9 | L3, L4 | CM1 bis CM4, CM8 bis CM9, CM15 bis CM24 |
| M6 bis M9 | L22 bis 26 | CM1 bis CM4, CM8 bis CM9, CM15 bis CM27 |
| M10 | L0 | CM1 bis CM4 |
| M10 | L3, L4 | CM1 bis CM4 |
| M11 | L3, L4 | CM1 bis CM4 |
| M12, M13 | L0 | CM1 |
| M12, M13 | L3, L4 | CM1 bis CM4 |
| M12, M13 | L0 | CM1 |
| M14, M17 | L0 | CM1 |
| M14 bis M19 | L0 | CM8 bis CM9, CM15 bis CM26 |
| M14 bis M19 | L3 | CM15 bis CM21, CM27 |
| M14 bis M19 | L22 | CM1 bis CM4, CM8 bis CM9, CM15 bis CM27 |
| M20 | L0, L3, L4 | CM1, CM2, CM3, CM4 |
| M20 | L12 bis L14 | CM1, CM2, CM8 bis CM9, CM15 bis CM27 |
| M21 | L0 | CM1, CM2, CM3, CM4 |
| M21 | L12 | CM1 |

(fortgesetzt)

| | | |
|---|---|---|
| M22 | L0 | CM1 bis CM4 |
| M22 | L12 | CM1 |
| M23 | L0 | CM1 |
| M23 | L12 bis L17 | CM1 bis CM4 |
| M23 | L12 bis L17 | CM15 bis CM21 |
| M24, M25 | L0 | CM2 |
| M24, M25 | L12, L15 bis L17 | CM1, CM2 |
| M26, M27 | L0 | CM1 |
| M28 bis M33 | L3 | CM1 |
| M28 bis M33 | L12 | CM1 |
| M34 | L0 | CM1 |
| M34 bis M44 | L0 | CM2 |
| M34 bis M44 | L0, L3, L4 | CM15 bis CM21 |
| M44 | L0 | CM5 bis CM7 |
| M45 bis M49 | L0 | CM1 |
| M45 bis M49 | L0 | CM2 |
| M50 bis M59 | L0 | CM2 |

Weitere ganz besonderes bevorzugt in der Redox-Flow-Zelle der vorliegenden Erfindung eingesetzte redoxaktive Oligomere oder Polymere enthalten neben den oben genannten Struktureinheiten der Formeln I und II weitere Struktureinheiten der Formel III mit löslichkeitsvermittelnden Seitenketten - bzw. funktionalitäten.

Struktureinheiten der Formel III bestehen wie Struktureinheiten der Formel II aus Polymerrückgrat PG3, Linker LI3 und solubilisierenden Seitengruppen COM2.

Bevorzugt werden die Gruppen PG3 der Formel III aus den Definitionen für die oben genannten Gruppen PG2 der Formel II ausgewählt.

Bevorzugt werden die Linker LI3 der Formel III aus den Definitionen für die oben genannten Linker L12 der Formel II ausgewählt.

Bevorzugt werden die solubilisierenden Seitengruppen COM2 der Formel III aus den Definitionen für die oben genannten solubilisierenden Seitengruppen COM1 der Formel II ausgewählt.

Besonders bevorzugte solubilisierende Seitengruppen COM1 und COM2 leiten sich ab von Acrylsäure, Methacrylsäure, Alkylacrylaten, Alkylmethacrylaten, Oligoethylenglycolacrylaten und -methacrylaten, Styrol, Styrolsulfonat und dessen Salzen, (Vinylbenzyl)trimethylammoniumchlorid und vergleichbaren Salzen, Butadien, Isopren, Ethylenoxid, Propylenoxid, Vinylmethylether, Vinylethylether, Thiophen, 3-Hexylthiophen, 3,4-Ethylendioxythiophen und Pyrrol.

Bei einer weiteren Gruppe der in der erfindungsgemäßen Redox-Flow-Zelle eingesetzten redoxaktiven Komponenten handelt es sich um hyperverzweigte Oligomere oder Polymere gemäß Anspruch 1 mit einer Molmasse von mindestens 400 g/mol.

Besonders bevorzugt kommen hyperverzweigte Oligomere oder Polymere zum Einsatz, die redoxaktive Einheiten mit den weiter unten beschriebenen Strukturen RE1 bis RE6 enthalten.

Besonders bevorzugt kommen hyperverzweigte Oligomere oder Polymere gemäß Anspruch 1 zum Einsatz, die Linker mit den oben beschriebenen Strukturen L1 bis L26 enthalten.

Besonders bevorzugt kommen hyperverzweigte Oligomere oder Polymere zum Einsatz, die polymere Grundgerüste mit den folgenden Strukturen P1 bis P9 enthalten:

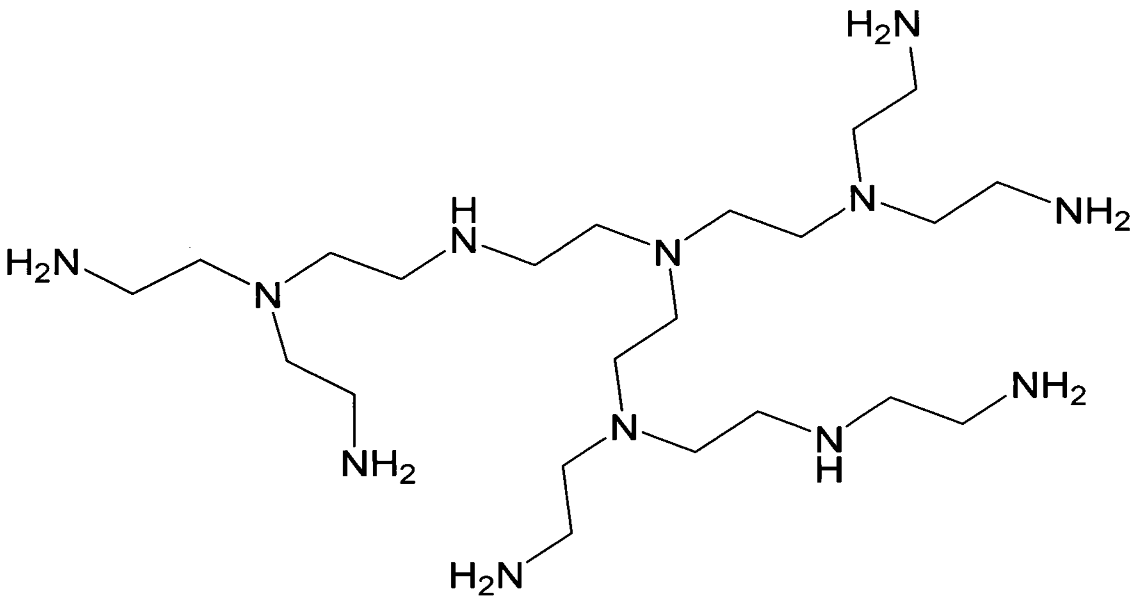

P1: hyperverzweigtes Polyethylenimin

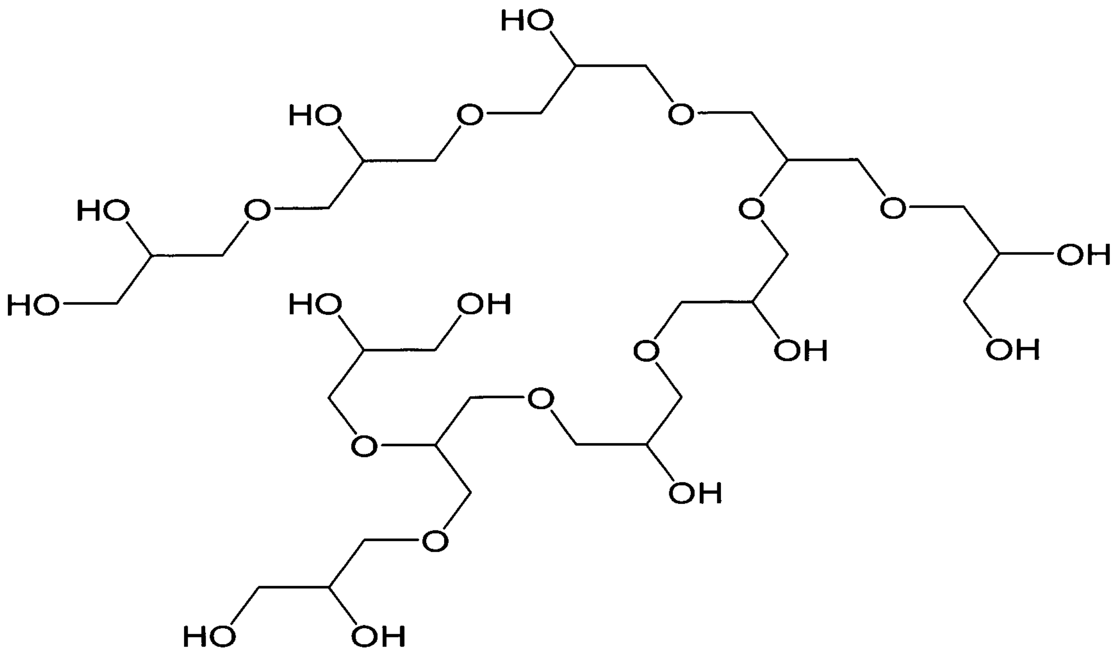

P2: hyperverzweigtes Polyglycerol

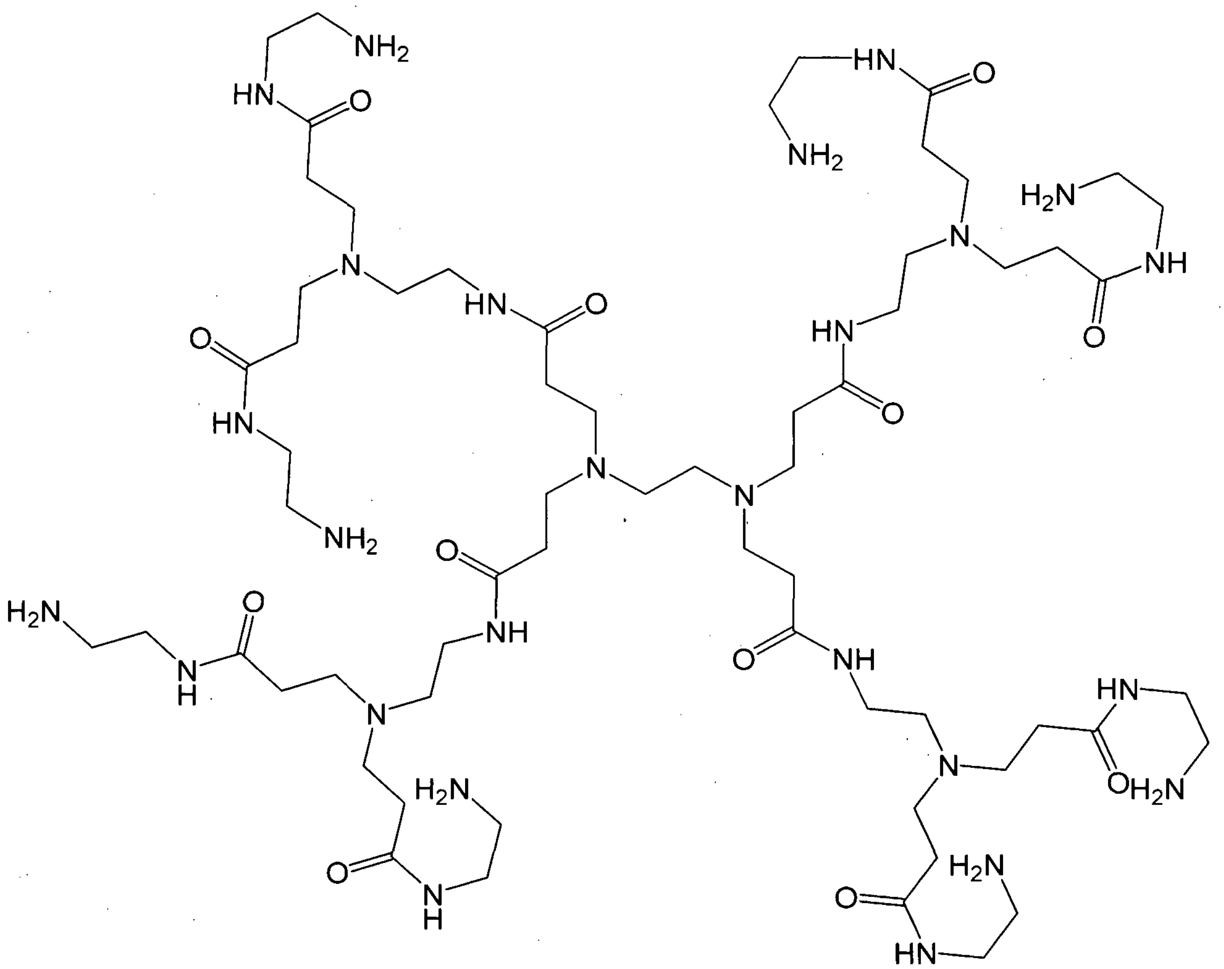

P3: PANAM Dendrimere (Polyamidoamine)

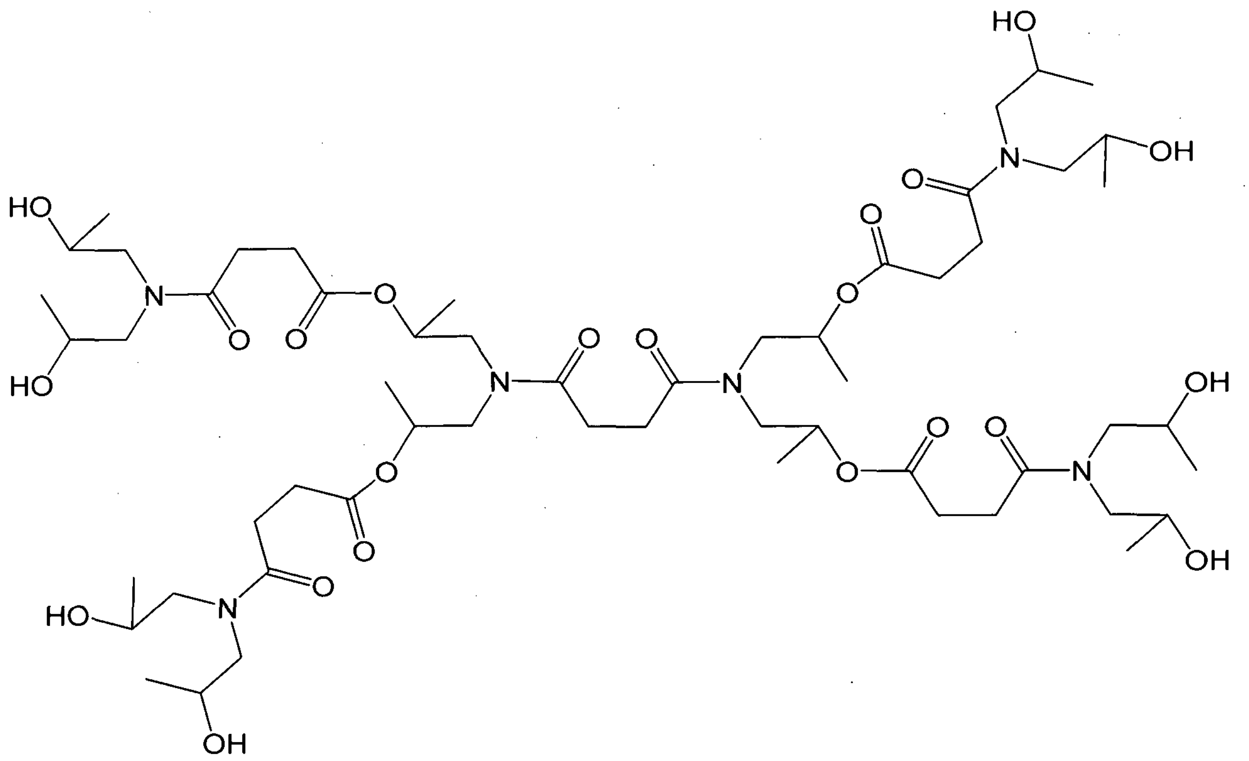

P4

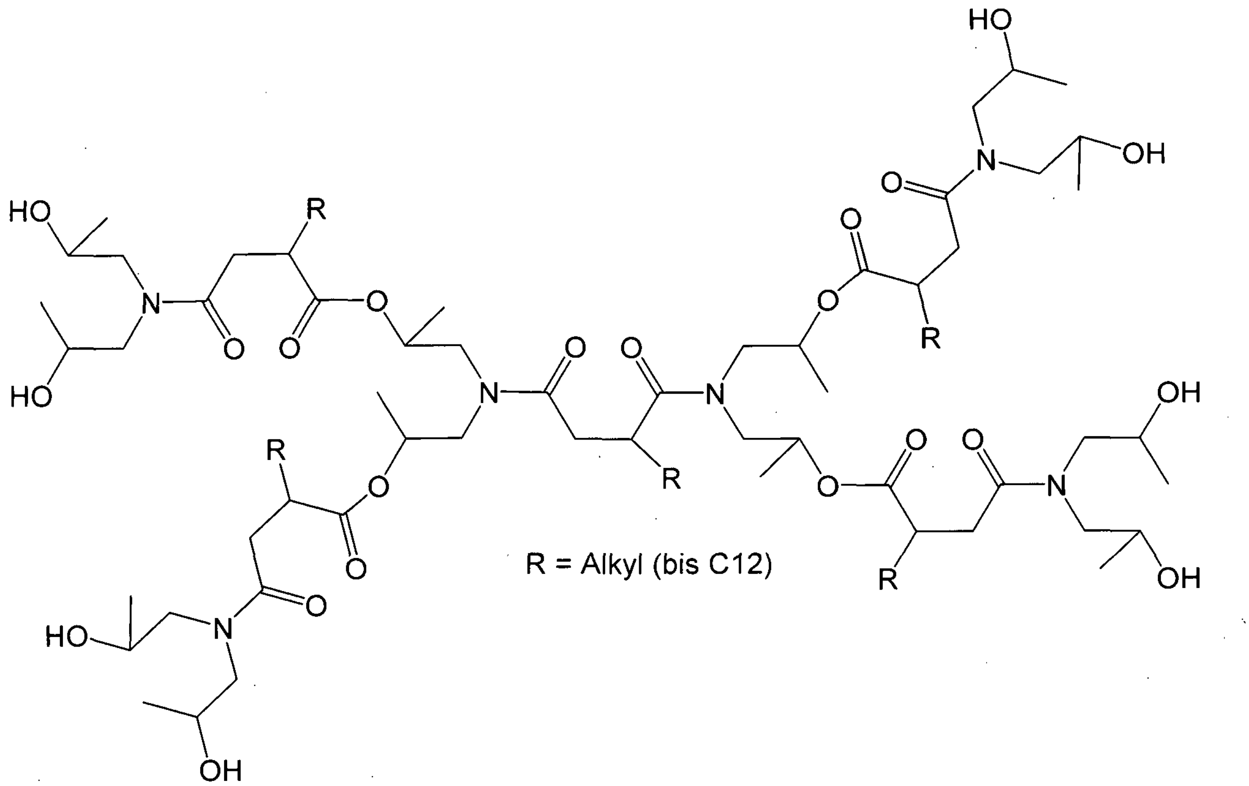

P5

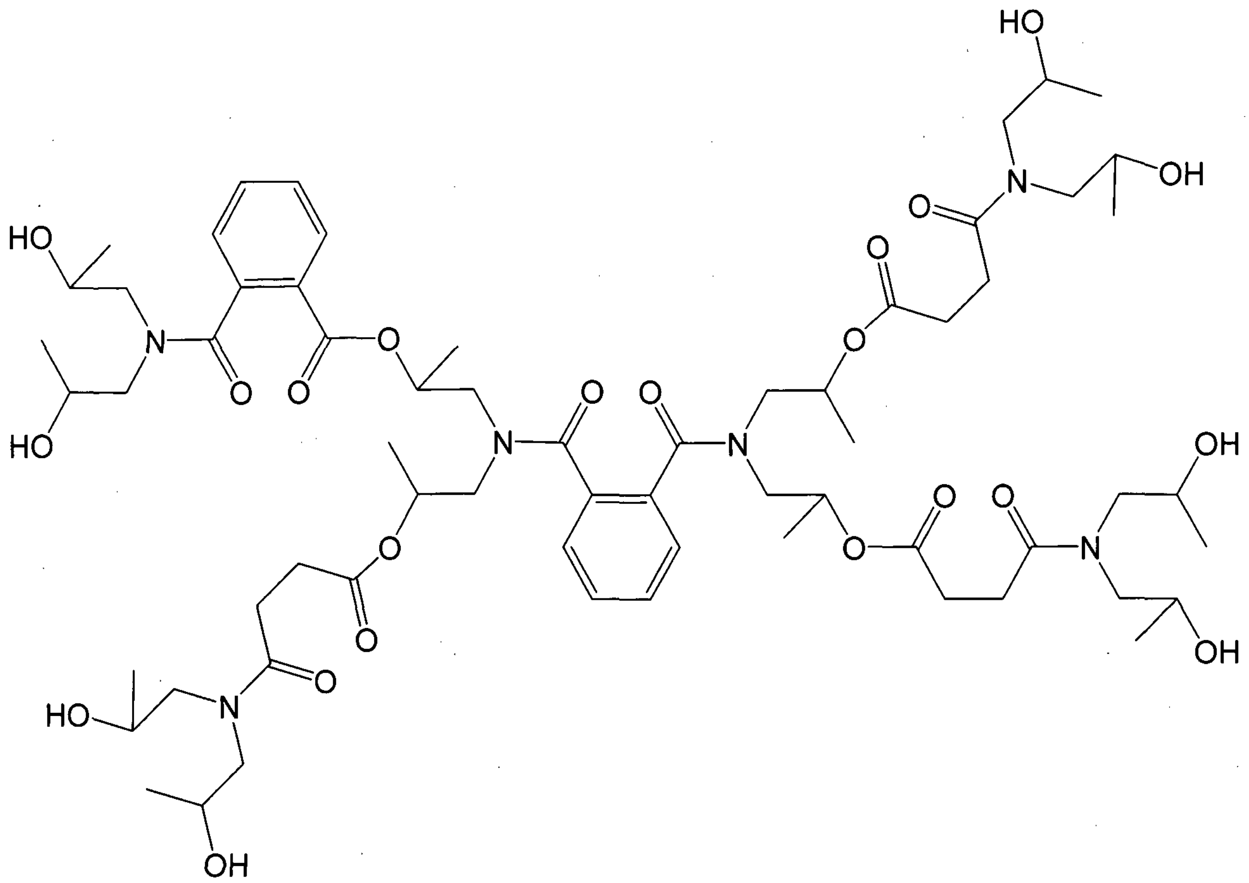

P6
(Monomerverhältnis der Säurekomponenten: Phthalsäure zu Succinsäure = von 10:90 bis 30:70, besonders bevorzugt 20:80)

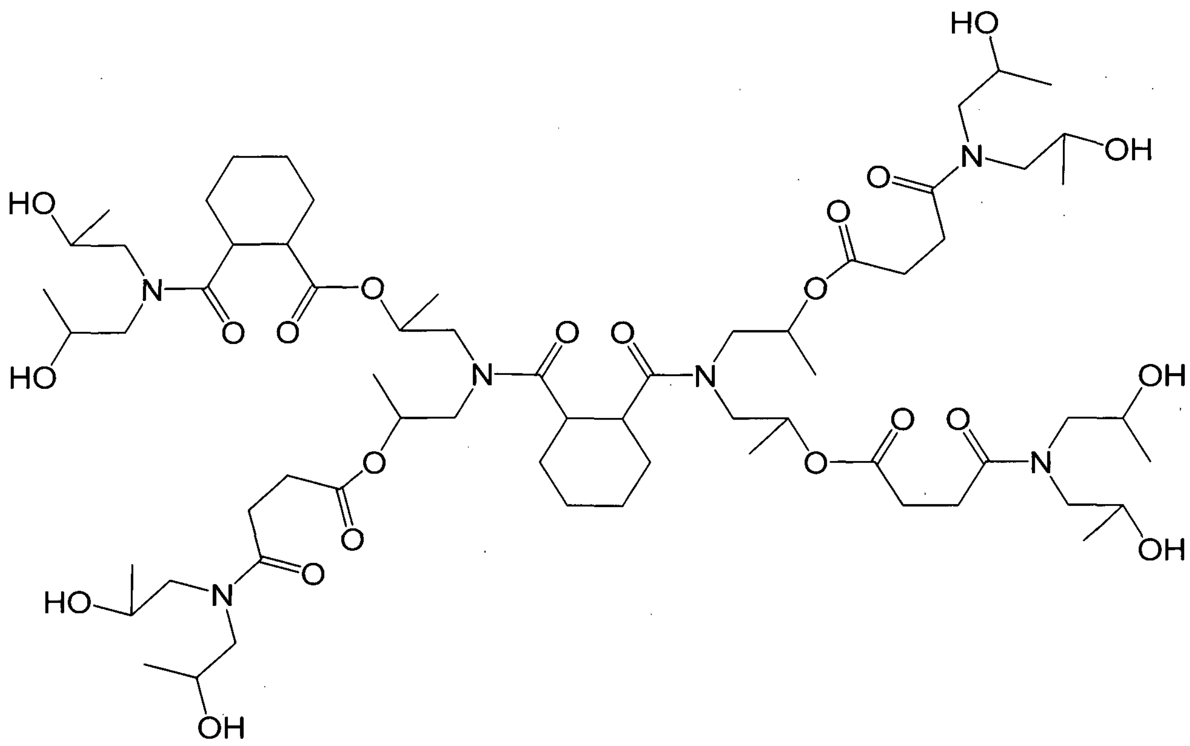

P7
(Monomerverhältnis der Säurekomponenten: Hexahydrophthalsäure zu Succinsäure = von 10:90 bis 30:70, besonders bevorzugt 20:80)

P4 bis P7 : Beispiele für Polyesteramide (hyperverzweigt und Dendrimer) (z.B. Hybrane von DSM)

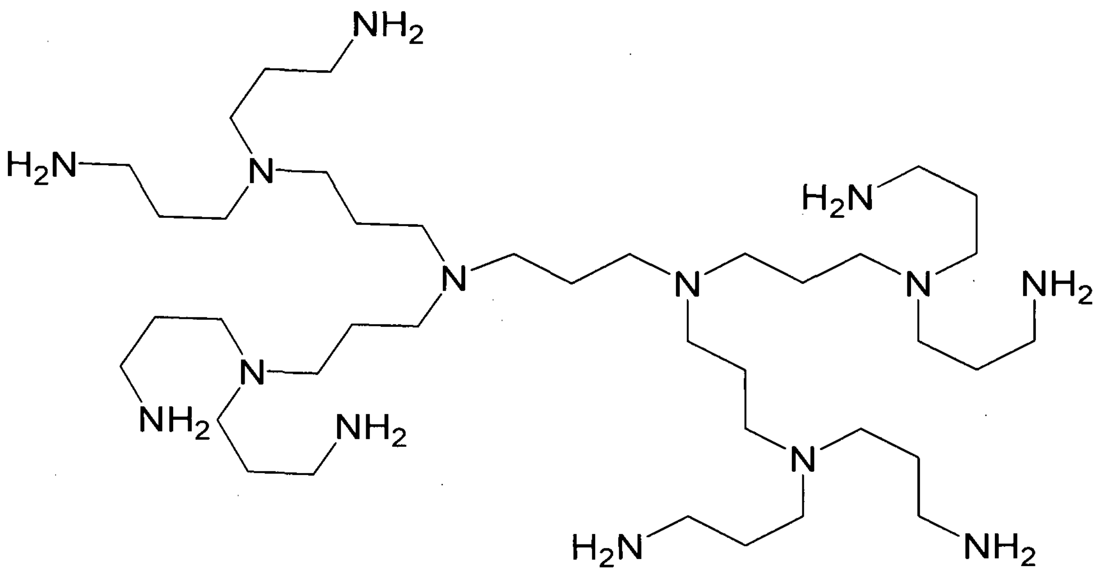

P8: hyperverzweigte Polypropylenimin- oder Polypropylenimindendrimere (z.B. Astramol von DSM)

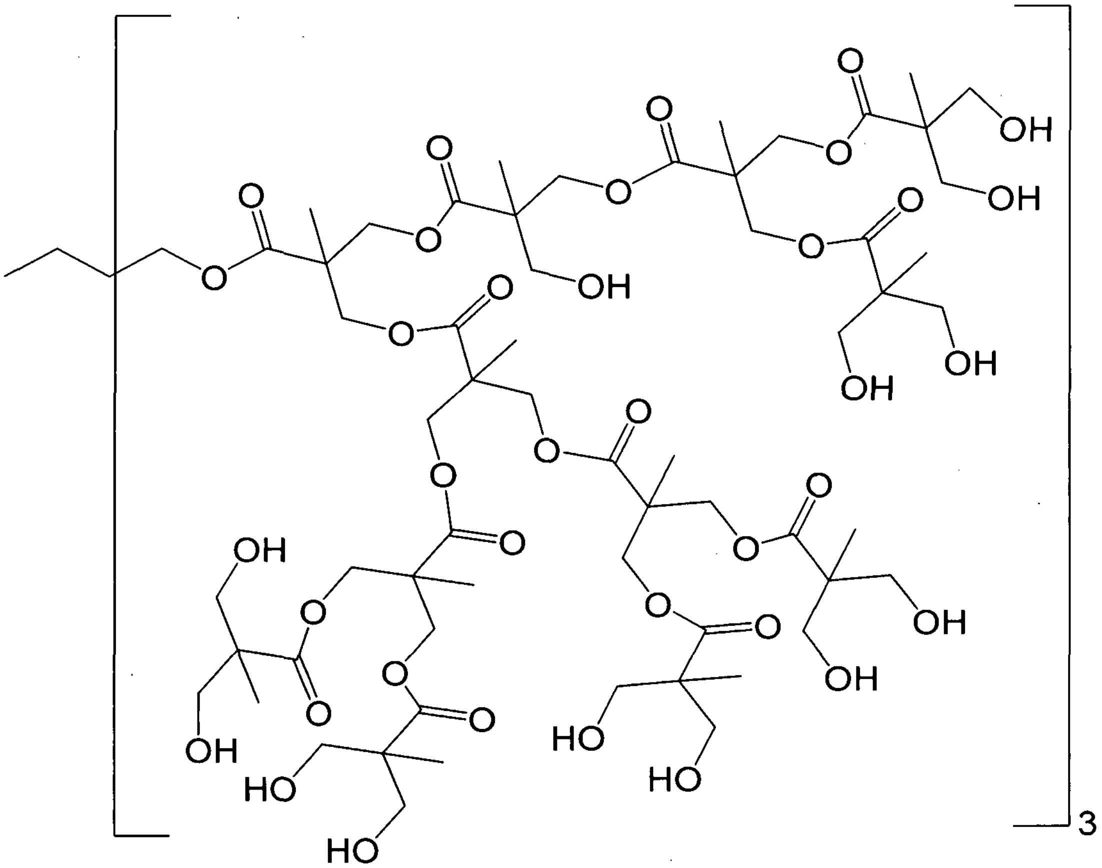

P9: hyperverzweigte Polyester (z.B. kommerzielle Systeme von Boltorn)

Ganz besonderes bevorzugt in der Redox-Flow-Zelle der vorliegenden Erfindung eingesetzte redoxaktive Oligomere oder Polymere enthalten die in der nachfolgenden Tabelle aufgeführten Kombinationen von polymeren Grundgerüsten, Linkern und redoxaktiven Einheiten.

| | | |
|---|---|---|
| P1 | L0, L3, L4, L5, L6, L12 bis L20 | RE1 bis RE6 |
| P2 | L0, L3, L4, L5, L6, L12 bis L18, L20 | RE1 bis RE6 |
| P3 | L0, L3, L4, L5, L6, L12 bis L20 | RE1 bis RE6 |
| P4 bis P7 | L0, L3, L4, L5, L6, L12 bis L18, L20 | RE1 bis RE6 |
| P8 | L0, L3, L4, L5, L6, L12 bis L18, L20 | RE1 bis RE6 |
| P9 | L0, L3, L4, L5, L6, L12 bis L18, L20 | RE1 bis RE6 |

Bei einer weiteren Gruppe der in der erfindungsgemäßen Redox-Flow-Zelle eingesetzten redoxaktiven Komponenten handelt es sich um Oligomere oder Polymere gemäß Anspruch 1 mit einer Molmasse von mindestens 400 g/mol, welche die Struktureinheiten der Formel I enthalten und die durch Funktionalisierung gemäß dem nachfolgenden Schema hergestellt worden sind:

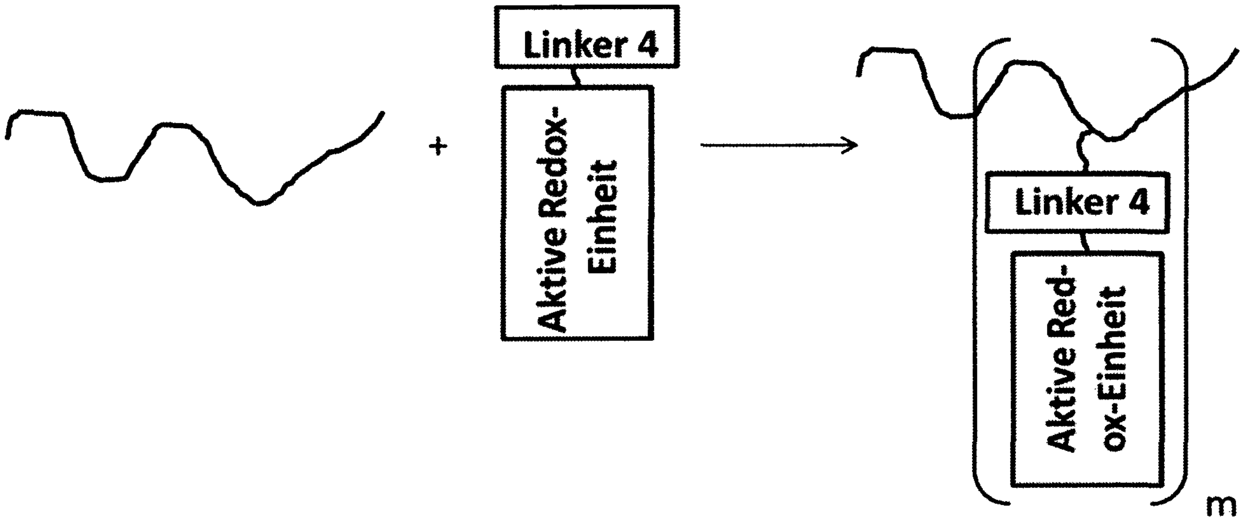


Dabei wird eine Polymergrundstruktur mit einer Funktionseinheit aufgebaut aus Linker 4 und redoxaktiver Einheit zum einem Seitenkettenoligomer oder -polymer umgesetzt.

Bevorzugte Polymergrundstrukturen weisen die nachfolgend aufgelisteten Strukturen P10 bis P21 auf, wobei in Polymergrundstruktur P12 und P15 die Summe der Indizes n+m = 1 beträgt und der Anteil der mit $-[]_n-$ bezeichneten Struktureinheiten, bezogen auf die mit $-[]_n-[]_m-$ bezeichneten Struktureinheiten, 0 bis 100 Gew.% beträgt.

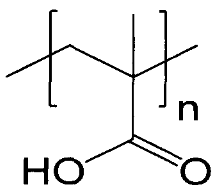

P10

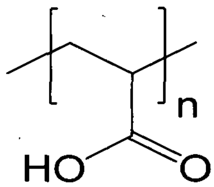

P11

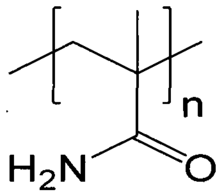

P13

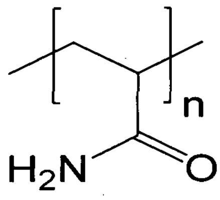

P14

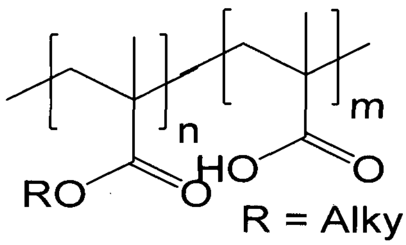

R = Alkyl bis $C_{20}$

P12

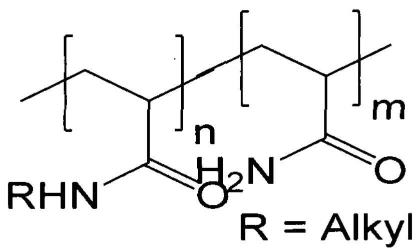

R = Alkyl bis $C_{20}$

P15

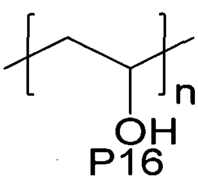

P16

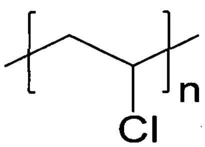

P17

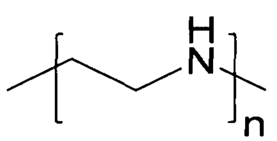

P18

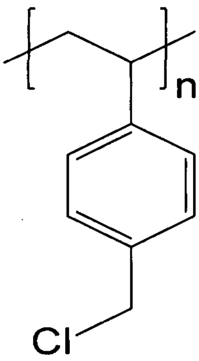

P19

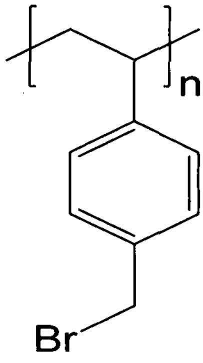

P20

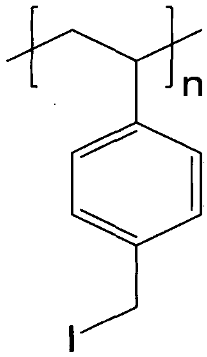

P21

Bevorzugte Seitenkettenoligomere oder -polymere weisen Linker auf, die durch Anknüpfung über die nachfolgend beschriebenen reaktiven Linkergruppen RG1 bis RG12 an die oben beschriebenen Polymergrundstrukturen P10 bis P21 erzeugt worden sind:

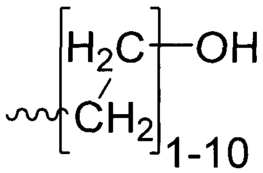

RG1

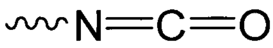

RG2

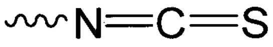

RG3

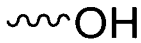

RG4

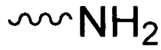

RG5

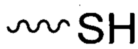

RG6

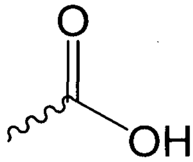

RG13

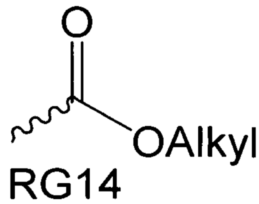

RG14

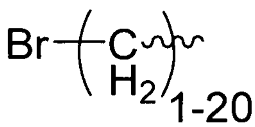

RG7

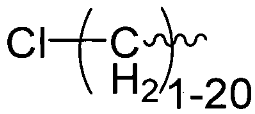

RG8

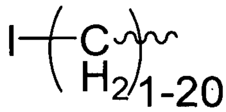

RG9

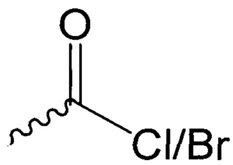

RG15

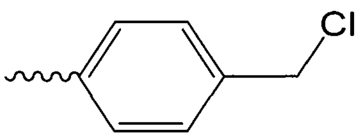

RG10 (p,m,o)

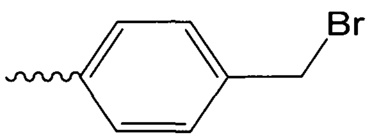

RG11 (p,m,o)

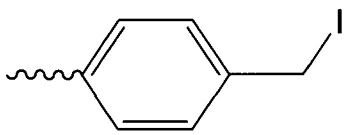

RG12 (p,m,o)

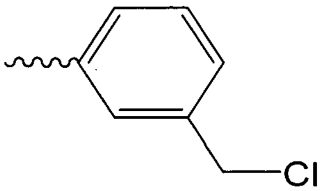

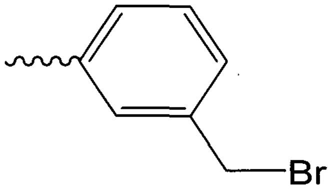

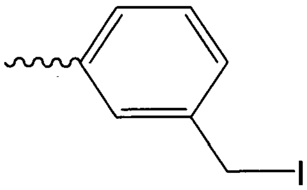

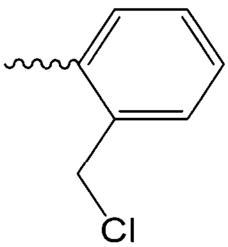

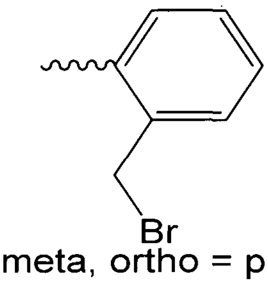

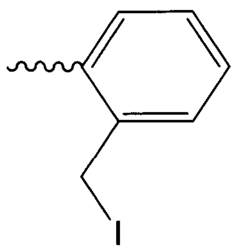

(para, meta, ortho = p,m,o)

Bevorzugte Seitenkettenoligomere oder -polymere weisen die weiter unten beschriebenen redoxaktiven Einheiten RE1 bis RE6 auf, die kovalent mit den reaktiven Linkergruppen RG1 bis'RG12 verbunden sind.

Ganz besonderes bevorzugt in der Redox-Flow-Zelle der vorliegenden Erfindung eingesetzte redoxaktive Oligomere oder Polymere enthalten die in der nachfolgenden Tabelle aufgeführten Kombinationen von Polymergrundstrukturen P, die mit reaktiven Linkergruppen RG funktionalisiert worden sind

| | | |
|---|---|---|
| P10 bis P12 | RG1, RG4, RG5, RG7 bis RG12 | RE1 bis RE6 |
| P13 bis P15 | RG7 bis RG12 | RE1 bis RE6 |
| P16 | RG2, RG7 bis RG15 | RE1 bis RE6 |
| P17 | RG1, RG4, RG5, RG6, RG13 | RE1 bis RE6 |
| P18 | RG2, RG3, RG7 bis RG13, RG15 | RE1 bis RE6 |
| P19 bis P20 | RG1, RG4 bis RG6, RG13 | RE1 bis RE6 |

Bei einer weiteren Gruppe der in der erfindungsgemäßen Redox-Flow-Zelle eingesetzten redoxaktiven Komponenten handelt es sich um Oligomere oder Polymere mit einem Molekulargewicht von mindestens 400 g/mol und mit mindestens einer Struktureinheit der Formel IV, bei der sich die redoxaktiven Einheiten in der Hauptkette befinden:

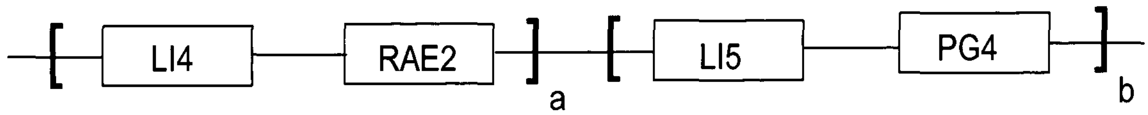

(IV),

worin PG4 das Gerüst eines organischen Polymers gemäß Anspruch 1 darstellt, RAE2 eine zweiwertige redoxaktive Gruppe bedeutet,
LI4 eine kovalente Bindung zwischen Atomen zweier RAE2 Gruppen oder zwischen Atomen von RAE2 und PG4 bedeutet oder eine zweiwertige organische Brückengruppe ausgewählt aus den vorstehend definierten Resten L1 bis L26 ist, LI5 eine kovalente Bindung zwischen Atomen zweier PG4 Gruppen oder zwischen Atomen von RAE2 und PG4 bedeutet oder eine zweiwertige organische Brückengruppe ausgewählt aus den vorstehend definierten Resten L1 bis L26 ist,
a eine ganze Zahl von >= 1, bevorzugt bis 10000 ist, und
b eine ganze Zahl von >= 0, bevorzugt bis 10000 ist.

Bei den redoxaktiven Komponenten mit der Struktureinheit der Formel IV handelt es sich typischerweise um Polymere mit der in Figur 8 dargestellten Struktur.

Bevorzugt eingesetzte Oligomere oder Polymere mit redoxaktiven Einheiten auf in der Hauptkette enthalten

die nachfolgend beschriebenen redoxaktiven Einheiten RE1-RE6.

Zur Gruppe der redoxaktiven Einheit RE1 gehören substituierte 4,4'-Bipyridine (Viologene) und deren Derivate entsprechend folgender Struktur:

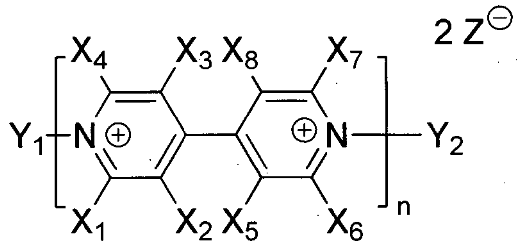

worin die Substituenten $X_1$, $X_2$, $X_3$, $X_4$, $X_5$, $X_6$, $X_7$ und $X_8$ unabhängig voneinander Wasserstoffatome, Alkylgruppen, Alkenylgruppen, Alkinylgruppen, Alkylthiogruppen, Monoalkylaminogruppen, Dialkylaminogruppen, Haloalkylgruppen, Haloalkoxygruppen, Alkylcarbonylgruppen, Alkenylcarbonylgruppen, Alkinylcarbonylgruppen, Alkylcarbonsäureester-gruppen, Alkenylcarbonsäureester-gruppen, Alkinylcarbonsäureestergruppen, Alkoxygruppen, Cycloalkylgruppen, Cycloalkoxygruppen, Arylgruppen, Heteroarylgruppen, Aryloxylgruppen, Aralkylgruppen, Halogenatome, Cyanogruppen und/oder Nitrogruppen sind, mit der Massgabe, dass eine oder zwei der Bindungsstellen $X_1$, $X_2$, $X_3$, $X_4$, $X_5$, $X_6$, $X_7$ und $X_8$ an eine der vorstehend beschriebenen Linker oder polymerisierbaren Gruppen gebunden sind,
die Substituenten $Y_1$ und $Y_2$ können mehrere substituierte 4,4'-Bipyridin-Einheiten miteinander verbrücken, wobei n Werte zwischen eins und hunderttausend, bevorzugt zwischen eins und hundert, besonders bevorzugt zwischen eins und fünf, annimmt, oder die Substituenten $Y_1$ und $Y_2$ unabhängig voneinander Wasserstoff, Alkylgruppen, Alkenylgruppen, Alkinylgruppen, Alkylthiogruppen, Monoalkylaminogruppen, Dialkylaminogruppen, Haloalkylgruppen, Haloalkoxygruppen, Alkylcarbonylgruppen, Alkenylcarbonylgruppen, Alkinyl-carbonylgruppen, Alkylcarbonsäureestergruppen, Alkenylcarbonsäureestergruppen, Alkinylcarbonsäureestergruppen, Alkoxygruppen, Cycloalkylgruppen, Cycloalkoxygruppen, Arylgruppen, Heteroarylgruppen, Aryloxylgruppen und/oder Aralkylgruppen sind, besonders bevorzugt Alkylgruppen, Alkenylgruppen, Alkinylgruppen, Alkoxygruppen, Cycloalkoxygruppen, Arylgruppen, Heteroarylgruppen, Aryloxylgruppen und/oder Aralkylgruppen, und ganz besonders bevorzugt Alkylgruppen, Alkoxygruppen, Cycloalkoxygruppen, Arylgruppen, Heteroarylgruppen und/oder Aryloxylgruppen sind und die Anionen Z ein- oder zweifach negativ geladen sind und anorganische oder organische Anionen sind, welche in einer Anzahl von 2n im Falle von einfach negativ geladenen Anionen oder in einer Anzahl von n im Falle von zweifach negativ geladenen Anionen vorliegen, und vorzugsweise ausgewählt werden aus der Gruppe der Halogenidionen, wie Fluoridionen, Chloridionen, Bromidionen, Iodidionen, oder der Hydroxidionen, der Anionen anorganischer Säuren, insbesondere Phosphationen, Sulfationen, Nitrationen, Hexafluorophosphationen, Tetrafluoroborationen, Perchlorationen, Chlorationen, Hexafluoroantimonationen, Hexafluoroarsenationen oder Cyanidionen, oder der Anionen organischer Säuren, vorzugsweise der Acetationen, Formiationen, Trifluoroessigsäureionen, Trifluormethansulfonationen, Pentafluorethansulfonationen, Nonofluorbutansulfonationen, Butyrationen, Citrationen, Fumarationen, Glutarationen, Lactationen, Malationen, Malonationen, Oxalationen, Pyruvationen, Tartrationen, und besonders bevorzugt ausgewählt aus der Gruppe der Halogenidionen, Hydroxidionen, Phosphationen, Sulfationen, Perchlorationen, Hexafluorophosphationen und Tetrafluoroborationen.

Besonders bevorzugt sind die Substituenten $X_1$, $X_2$, $X_3$, $X_4$, $X_5$, $X_6$, $X_7$ und $X_8$ unabhängig voneinander Wasserstoffatome, Halogenatome, Alkylgruppen, Alkoxy-gruppen, Cyanogruppen und/oder Nitrogruppen und eine oder zwei der Bindungsstellen $X_1$, $X_2$, $X_3$, $X_4$, $X_5$, $X_6$, $X_7$ und $X_8$ sind an eine der vorstehend beschriebenen Linker oder polymerisierbaren Gruppen gebunden.

Ganz besonders bevorzugte redoxaktive Einheiten RE1 sind solche, in denen mindestens fünf der Substituenten $X_1$ bis $X_8$ Wasserstoffatome sind, 1-2 der Substituenten Y1 und Y2 sind Bindungsstellen, die an eine der vorstehend beschriebenen Linker oder polymerisierbaren Gruppen binden, und 0-2 der Substituenten $X_1$ bis $X_8$ sind Nicht-Wasserstoffatome, vorzugsweise Halogenatome, Alkylgruppen, Alkoxy-gruppen, Cyanogruppen und/oder Nitrogruppen.

Zur Gruppe der redoxaktiven Einheit RE2 gehören Verbindungen der Verbindungsklasse der Chinone. Hierzu gehören vorzugsweise

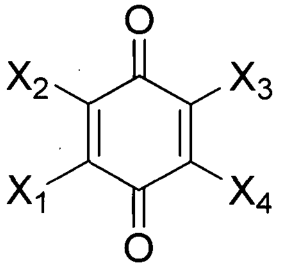

Benzochinone,

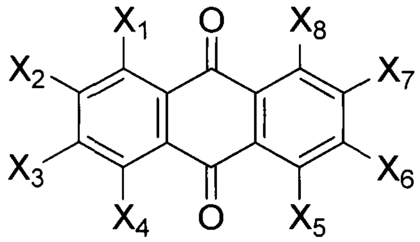

Anthrachinone oder

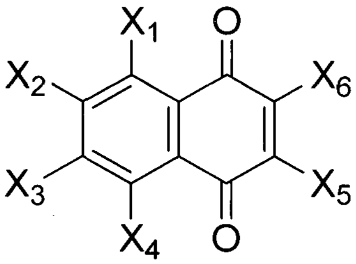

,

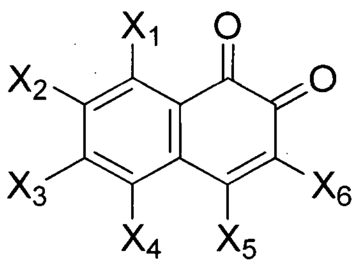

,

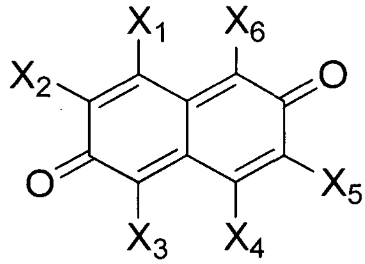

Naphthochinone

worin die Substituenten $X_1$, $X_2$, $X_3$, $X_4$, $X_5$, $X_6$, $X_7$ und $X_8$ unabhängig voneinander Wasserstoffatome, Alkylgruppen, Alkenylgruppen, Alkinylgruppen, Alkylthiogruppen, Monoalkylaminogruppen, Dialkylaminogruppen, Haloalkylgruppen, Haloalkoxygruppen, Alkylcarbonylgruppen, Alkenylcarbonylgruppen, Alkinylcarbonylgruppen, Alkylcarbonsäureester-gruppen, Alkenylcarbonsäureester-gruppen, Alkinylcarbonsäureestergruppen, Alkoxygruppen, Cycloalkylgruppen, Cycloalkoxygruppen, Arylgruppen, Heteroarylgruppen, Aryloxylgruppen, Aralkylgruppen, Halogenatome, Cyanogruppen und/oder Nitrogruppen bedeuten, besonders bevorzugt Wasserstoffatome, Halogenatome, Alkylgruppen, Alkoxygruppen, Cyanogruppen und/oder Nitrogruppen, mit der Massgabe, dass eine oder zwei der Bindungsstellen $X_1$, $X_2$, $X_3$, $X_4$, $X_5$, $X_6$, $X_7$ und $X_8$ an eine der vorstehend beschriebenen Linker oder polymerisierbaren Gruppen gebunden sind.

Besonders bevorzugt sind die Substituenten $X_1$, $X_2$, $X_3$, $X_4$, $X_5$, $X_6$, $X_7$ und $X_8$ unabhängig voneinander Wasserstoffatome, Halogenatome, Alkylgruppen, Alkoxy-gruppen, Cyanogruppen und/oder Nitrogruppen und eine oder zwei der Bindungsstellen $X_1$, $X_2$, $X_3$, $X_4$, $X_5$, $X_6$, $X_7$ und $X_8$ sind an eine der vorstehend beschriebenen Linker oder polymerisierbaren Gruppen gebunden.

Ganz besonders bevorzugte redoxaktive Einheiten RE2 sind solche, in denen mindestens zwei der Substituenten $X_1$ bis $X_8$ Wasserstoffatome sind, 1-2 der Substituenten sind Bindungsstellen, die an eine der vorstehend beschriebenen Linker oder polymerisierbaren Gruppen binden, und 0-2 der Substituenten $X_1$ bis $X_8$ sind Nicht-Wasserstoffatome, vorzugsweise Halogenatome, Alkylgruppen, Alkoxy-gruppen, Cyanogruppen und/oder Nitrogruppen.

Zur Gruppe der redoxaktiven Einheit RE3 gehören Verbindungen der Verbindungsklasse der Verdazyl-Radikale und deren Derivate entsprechend folgender Struktur:

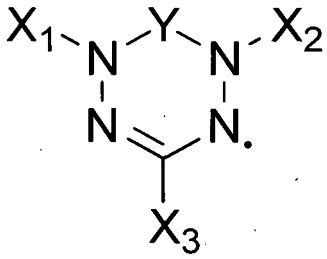

worin Y C=O, C=S oder $CH_2$ bedeutet,
die Substituenten $X_1$, $X_2$ und $X_3$ unabhängig voneinander Wasserstoffatome, Alkylgruppen, Alkenylgruppen, Alkinylgruppen, Alkylthiogruppen, Monoalkylaminogruppen, Dialkylaminogruppen, Haloalkylgruppen, Haloalkoxygruppen, Alkylcarbonylgruppen, Alkenylcarbonylgruppen, Alkinylcarbonylgruppen, Alkylcarbonsäureestergruppen, Alkenylcarbonsäureestergruppen, Alkinylcarbonsäureestergruppen, Alkoxygruppen, Cycloalkylgruppen, Cycloalkoxygruppen, Arylgruppen, Heteroarylgruppen, Aryloxylgruppen, Aralkylgruppen, Halogenatome, Cyanogruppen und/oder Nitrogruppen bedeuten, mit der Massgabe, dass eine oder zwei der Bindungsstellen $X_1$, $X_2$ und $X_3$ an eine der vorstehend beschriebenen Linker oder polymerisierbaren Gruppen gebunden sind.

Besonders bevorzugt sind die Substituenten $X_1$, $X_2$ und $X_3$ unabhängig voneinander Wasserstoffatome, Alkylgruppen, Arylgruppen, Heteroarylgruppen und/oder Cycloalkylgruppen und eine oder zwei der Bindungsstellen $X_1$, $X_2$ und $X_3$ sind an eine der vorstehend beschriebenen Linker oder polymerisierbaren Gruppen gebunden.

Ganz besonders bevorzugte redoxaktive Einheiten RE3 sind solche, in denen 0-2 der Substituenten $X_1$ bis $X_3$ Alkylgruppen oder Arylgruppensind, 1-2 der Substituenten sind Bindungsstellen, die an eine der vorstehend beschriebenen Linker oder polymerisierbaren Gruppen binden, und 0-2 der Substituenten $X_1$ bis $X_3$ sind Wasserstoffatome, Alkylgruppen, Arylgruppen, Heteroarylgruppen und/oder Cycloalkylgruppen.

Bevorzugt handelt es sich beim Rest Y um eine Methylen-Gruppe, eine Carbonylgruppe oder eine Thioketongruppe.

Zur Gruppe der redoxaktiven Einheit RE4 gehören Verbindungen der Verbindungsklasse der Nitrxylnitroxid-Radikale und deren Derivate entsprechend folgender Struktur:

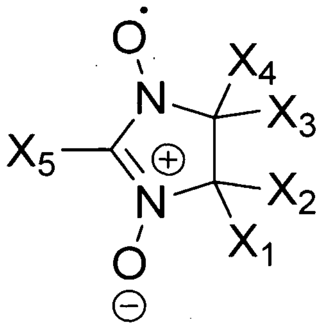

worin die Substituenten $X_1$, $X_2$, $X_3$, $X_4$ und $X_5$ unabhängig voneinander Wasserstoffatome, Alkylgruppen, Alkenylgruppen, Alkinylgruppen, Alkylthiogruppen, Monoalkylaminogruppen, Dialkylaminogruppen, Haloalkylgruppen, Haloalkoxygruppen, Alkylcarbonylgruppen, Alkenylcarbonylgruppen, Alkinylcarbonylgruppen, Alkylcarbonsäureestergruppen, Alkenylcarbonsäureestergruppen, Alkinylcarbonsäureestergruppen, Alkoxy-gruppen, Cycloalkylgruppen, Cycloalkoxygruppen, Arylgruppen, Heteroarylgruppen, Aryloxylgruppen, Aralkylgruppen, Halogenatome, Cyanogruppen und/oder Nitrogruppen bedeuten, bevorzugt Wasserstoffatome, Halogenatome, Alkylgruppen, Alkoxygruppen, Cyanogruppen und/oder Nitrogruppen mit der Massgabe, dass eine oder zwei der Bindungsstellen $X_1$, $X_2$, $X_3$, $X_4$ und $X_5$ an eine der vorstehend beschriebenen Linker oder polymerisierbaren Gruppen gebunden sind.

Besonders bevorzugt sind die Substituenten $X_1$, $X_2$, $X_3$, $X_4$ und $X_5$ unabhängig voneinander Wasserstoffatome, Alkylgruppen, Arylgruppen, Heteroarylgruppen, Aryloxylgruppen, Aralkylgruppen, und/oder Alkoxygruppen und eine oder zwei der Bindungsstellen $X_1$, $X_2$, $X_3$, $X_4$ und $X_5$ sind an eine der vorstehend beschriebenen Linker oder polymerisierbaren Gruppen gebunden.

Ganz besonders bevorzugt sind die Substituenten $X_1$, $X_2$, $X_3$ und $X_4$ unabhängig voneinander Wasserstoffatome, Alkylgruppen, Arylgruppen, und/oder Alkoxygruppen, $X_5$ steht für eine Arylgruppe oder für eine Heteroarylgruppe und eine oder zwei der Bindungsstellen $X_1$, $X_2$, $X_3$, $X_4$ und $X_5$ sind an eine der vorstehend beschriebenen Linker oder polymerisierbaren Gruppen gebunden.

Ganz besonders bevorzugte redoxaktive Einheiten RE4 sind solche, in denen mindestens zwei der Substituenten $X_1$ bis $X_5$ Alkylgruppen sind, 1-2 der Substituenten sind Bindungsstellen, die an eine der vorstehend beschriebenen Linker oder polymerisierbaren Gruppen binden, und 0-5 der Substituenten $X_1$ bis $X_5$ sind Wasserstoffatome oder Nicht-Wasserstoffatome, vorzugsweise Alkylgruppen, Arylgruppen, Heteroarylgruppen, Aryloxylgruppen, Aralkylgruppen, und/oder Alkoxygruppen.Ganz besonders bevorzugt sind die Substituenten X1 bis X4 Alkylgruppen und der Substituente X5 eine Arylgruppen, Aralkylgruppen und/oder eine Bindungsstelle, die an eine der vorstehend beschriebenen Linker oder polymerisierbaren Gruppen bindet.

Zur Gruppe der redoxaktiven Einheit RE5 gehören Verbindungen der Verbindungsklasse der Nitroxid-Radikale und deren Derivate, wie sie in DE60123145T2 (NEC Corp., Tokyo, 2007) beschrieben sind, entsprechend folgender Struktur:

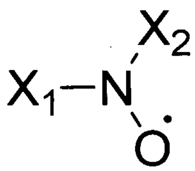

wobei $X_1$ und $X_2$ Substituenten sind, von denen mindestens einer aus einer aliphatischen Gruppe, einer aromatischen Gruppe, einem Hydroxy, einem Alkoxy, einem Aldehyd, einem Carboxyl, einem Alkoxycarbonyl, einem Zyan, einem Amino, einem Nitro, einem Nitroso, einem Halogen oder einem Wasserstoff ausgewählt wird, wobei wenn $X_1$ und $X_2$ eine aliphatische Gruppe aufweisen, die aliphatische Gruppe gesättigt und ungesättigt, substituiert oder nichtsubstituiert, gerade, zyklisch oder verzweigt ist, und diese aliphatische Gruppe mindestens ein Sauerstoff-, Stickstoff-, Schwefel-, Silizium-, Phosphor-, Bor- oder Halogenatom enthalten kann, wobei wenn $X_1$ und $X_2$ eine aromatische Gruppe aufweisen, die aromatische Gruppe substituiert oder nicht substituiert sein kann und diese aromatische Gruppe mindestens ein Sauerstoff-, Stickstoff-, Schwefel-, Silizium-, Phosphor-, Bor- oder Halogenatom enthalten kann, wobei wenn $X_1$ und $X_2$ ein Hydroxy aufweisen, das Hydroxy ein Salz mit einem Metallatom bilden kann, wobei wenn $X_1$ und $X_2$ Alkoxy, ein Aldehyd, ein Carboxyl, ein Alkoxylcarbonyl, ein Zyan, ein Amino, ein Nitro oder ein Nitroso ist, diese Substituenten substituiert oder nicht substituiert sein können und diese Substituenten mindestens ein Sauerstoff-, Stickstoff-, Silizium-, Phosphor-, Bor- oder Halogenatom aufweisen können, wobei $X_1$ und $X_2$ gleich oder verschieden sein können und wobei $X_1$ und $X_2$ zusammen einen Ring bilden können.

Die Verbindung kann einen substituierten oder einen nicht substituierten Heterozyklus bilden, welcher der folgenden allgemeinen Struktur entspricht:

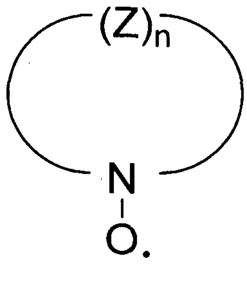

worin Z ausgewählt wird aus der Gruppe der Kohlenstoff-, Sauerstoff-, Stickstoff-, Schwefel-, Silizium-, Phosphor- oder Boratome, mehrere Gruppen Z gleich oder verschieden sein können und Z über eine gesättigte oder eine ungesättigte Bindung an eine der vorstehend beschriebenen Linker oder polymerisierbaren Gruppen gebunden ist.

Z kann eine Bindung mit jedem Substituenten bilden, wobei diese Verbindung ein Polymer sein kann, das gerade, zyklisch oder verzweigt sein kann.

Z kann beispielsweise an Wasserstoffatome, Alkylgruppen, Alkenylgruppen, Alkinylgruppen, Alkylthiogruppen, Monoalkylaminogruppen, Dialkylaminogruppen, Haloalkylgruppen, Haloalkoxygruppen, Alkylcarbonylgruppen, Alkenylcarbonylgruppen, Alkinylcarbonylgruppen, Alkylcarbonsäureestergruppen, Alkenylcarbonsäureestergruppen, Alkinylcarbonsäureestergruppen, Alkoxygruppen, Cycloalkylgruppen, Cycloalkoxy-gruppen, Arylgruppen, Heteroarylgruppen, Aryloxylgruppen, Aralkylgruppen, Halogenatome, Cyanogruppen oder Nitrogruppen gebunden sein. Index n ist eine ganze Zahl von einschließlich 2 bis einschließlich 10.

Insbesondere kann eine Verbindung, die zur Gruppe der redoxaktiven Einheit RE5 zählt, eine Piperidinoxyl-Ringstruktur entsprechend folgender allgemeiner Struktur aufweisen:

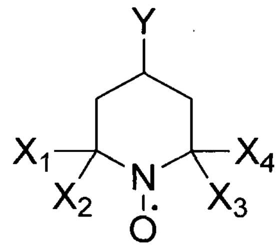

wobei die Substituenten $X_1$, $X_2$, $X_3$, $X_4$ und Y unabhängig voneinander Wasserstoffatome, Alkylgruppen, Alkenylgruppen, Alkinylgruppen, Alkylthiogruppen, Monoalkylaminogruppen, Dialkylaminogruppen, Haloalkylgruppen, Haloalkoxygruppen, Alkylcarbonylgruppen, Alkenylcarbonylgruppen, Alkinylcarbonylgruppen, Alkylcarbonsäureestergruppen, Alkenylcarbonsäureestergruppen, Alkinylcarbonsäureestergruppen, Alkoxy-gruppen, Cycloalkylgruppen, Cycloalkoxygruppen, Arylgruppen, Heteroarylgruppen, Aryloxylgruppen, Aralkylgruppen, Halogenatome, Cyanogruppen und/oder Nitrogruppen sind, bevorzugt Wasserstoffatome, Halogenatome, Alkylgruppen, Alkoxygruppen, Cyanogruppen und/oder Nitrogruppen, mit der Massgabe, dass eine oder zwei der Bindungsstellen $X_1$, $X_2$, $X_3$, $X_4$ und Y an eine der vorstehend beschriebenen Linker oder polymerisierbaren Gruppen gebunden sind.

Bevorzugte Substituenten $X_1$, $X_2$, $X_3$ und $X_4$ sind Wasserstoffatome, Alkylgruppen, Arylgruppen, Heteroarylgruppen, Aryloxylgruppen, Aralkylgruppen und/oder Alkoxygruppen, mit der Massgabe, dass eine oder zwei der Bindungsstellen $X_1$, $X_2$, $X_3$ und $X_4$ an eine der vorstehend beschriebenen Linker oder polymerisierbaren Gruppen gebunden sind.

Besonders bevorzugte dieser Verbindungen RE5 weisen als Substituenten $X_1$, $X_2$, $X_3$ und $X_4$ Arylgruppen, Alkylgruppen und/oder Alkoxygruppen auf und sind über Y an eine der vorstehend beschriebenen Linker oder polymerisierbaren Gruppen gebunden.

Insbesondere kann eine Verbindung, die zur Gruppe der redoxaktiven Einheit RE5 zählt, eine Pyrrolidinoxyl-Ringstruktur entsprechend folgender allgemeiner Struktur aufweisen:

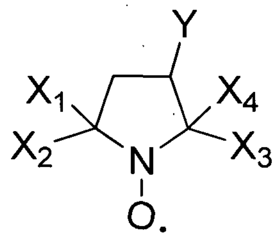

wobei die Substituenten $X_1$, $X_2$, $X_3$, $X_4$ und Y unabhängig voneinander Wasserstoffatome, Alkylgruppen, Alkenylgruppen, Alkinylgruppen, Alkylthiogruppen, Monoalkylaminogruppen, Dialkylaminogruppen, Haloalkylgruppen, Haloalkoxygruppen, Alkylcarbonylgruppen, Alkenylcarbonylgruppen, Alkinylcarbonylgruppen, Alkylcarbonsäureestergruppen, Alkenylcarbonsäureestergruppen, Alkinylcarbonsäureester-gruppen, Alkoxygruppen, Cycloalkylgruppen, Cycloalkoxygruppen, Arylgruppen, Heteroarylgruppen, Aryloxylgruppen, Aralkylgruppen, Halogenatome, Cyanogruppen und/oder Nitrogruppen sind, besonders bevorzugt Wasserstoffatome, Halogenatome, Alkylgruppen, Alkoxygruppen, Cyanogruppen und/oder Nitrogruppen, mit der Massgabe, dass eine oder zwei der Bindungsstellen $X_1$, $X_2$, $X_3$, $X_4$ und Y an eine der vorstehend beschriebenen Linker oder polymerisierbaren Gruppen gebunden sind.

Bevorzugte Substituenten $X_1$, $X_2$, $X_3$, $X_4$ und Y sind Wasserstoffatome, Alkylgruppen, Arylgruppen, Heteroarylgruppen, Aryloxylgruppen, Aralkylgruppen und/oder Alkoxygruppen, mit der Massgabe, dass eine oder zwei der Bindungsstellen $X_1$, $X_2$, $X_3$, $X_4$ und Y an eine der vorstehend beschriebenen Linker oder polymerisierbaren Gruppen gebunden sind.

Besonders bevorzugte dieser Verbindungen RE5 weisen als Substituenten $X_1$, $X_2$, $X_3$ und $X_4$ Arylgruppen, Alkylgruppen und/oder Alkoxygruppen auf und sind über Y an eine der vorstehend beschriebenen Linker oder polymerisierbaren Gruppen gebunden.

Insbesondere kann eine Verbindung, die zur Gruppe der redoxaktiven Einheit RE5 zählt, eine Pyrrolinoxyl-Ringstruktur entsprechend folgender allgemeiner Struktur aufweisen:

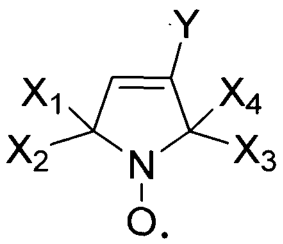

wobei die Substituenten $X_1$, $X_2$, $X_3$, $X_4$ und Y unabhängig voneinander Wasserstoffatome, Alkylgruppen, Alkenylgruppen, Alkinylgruppen, Alkylthiogruppen, Monoalkylaminogruppen, Dialkylaminogruppen, Haloalkylgruppen, Haloalkoxygruppen, Alkylcarbonylgruppen, Alkenylcarbonylgruppen, Alkinylcarbonylgruppen, Alkylcarbonsäureestergruppen, Alkenylcarbonsäureestergruppen, Alkinylcarbonsäureestergruppen, Alkoxygruppen, Cycloalkylgruppen, Cycloalkoxygruppen, Arylgruppen, Heteroarylgruppen, Aryloxylgruppen, Aralkylgruppen, Halogenatome, Cyanogruppen und/oder Nitrogruppen sind, besonders bevorzugt Wasserstoffatome, Halogenatome, Alkyl-gruppen, Alkoxygruppen, Cyanogruppen und/oder Nitrogruppen, mit der Massgabe, dass eine oder zwei der Bindungsstellen $X_1$, $X_2$, $X_3$, $X_4$ und Y an eine der vorstehend beschriebenen Linker oder polymerisierbaren Gruppen gebunden sind.

Bevorzugte Substituenten $X_1$, $X_2$, $X_3$, $X_4$ und Y sind Wasserstoffatome, Alkylgruppen, Arylgruppen, Heteroarylgruppen, Aryloxylgruppen, Aralkylgruppen und/oder Alkoxy-gruppen, mit der Massgabe, dass eine oder zwei der Bindungsstellen $X_1$, $X_2$, $X_3$, $X_4$ und Y an eine der vorstehend beschriebenen Linker oder polymerisierbaren Gruppen gebunden sind.

Besonders bevorzugte dieser Verbindungen RE5 weisen als Substituenten $X_1$, $X_2$, $X_3$ und $X_4$ Arylgruppen, Alkylgruppen und/oder Alkoxygruppen auf und sind über Y an eine der vorstehend beschriebenen Linker oder polymerisierbaren Gruppen gebunden.

Insbesondere kann eine Verbindung, die zur Gruppe der redoxaktiven Einheit RE5 zählt, ein unsymmetrisch substituiertes Nitroxid-Radikal entsprechend folgender allgemeiner Struktur aufweisen:

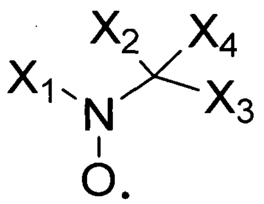

wobei die Substituenten $X_1$, $X_2$, $X_3$ und $X_4$ unabhängig voneinander Wasserstoffatome, Alkylgruppen, Alkenylgruppen, Alkinylgruppen, Alkylthiogruppen, Monoalkylaminogruppen, Dialkylaminogruppen, Haloalkylgruppen, Haloalkoxygruppen, Alkylcarbonylgruppen, Alkenylcarbonylgruppen, Alkinylcarbonylgruppen, Alkylcarbonsäureestergruppen, Alkenylcarbonsäureestergruppen, Alkinylcarbonsäureestergruppen, Alkoxygruppen, Cycloalkylgruppen, Cycloalkoxygruppen, Arylgruppen, Heteroarylgruppen, Aryloxylgruppen, Aralkylgruppen, Halogenatome, Cyanogruppen und/oder Nitrogruppen sind, bevorzugt Arylgruppen, Alkylgruppen, Cycloalkylgruppen, Cycloalkoxygruppen, Heteroarylgruppen, Aryloxylgruppen, Aralkylgruppen und/oder Alkoxygruppen, mit der Massgabe, dass eine oder zwei der Bindungsstellen $X_1$, $X_2$, $X_3$ und $X_4$ an eine der vorstehend beschriebenen Linker oder polymerisierbaren Gruppen gebunden sind.

Ganz besonders bevorzugte dieser unsymmetrisch substituierten Nitroxid-Radikale RE5 sind solche, in denen 1-2 der Substituenten $X_1$ bis $X_4$ Bindungsstellen, die an eine der vorstehend beschriebenen Linker oder polymerisierbaren Gruppen binden, und 1-4 der Substituenten $X_1$ bis $X_4$ Nicht-Wasserstoffatome, vorzugsweise Arylgruppen, Alkylgruppen, Cycloalkylgruppen, Cycloalkoxygruppen, Heteroarylgruppen, Aryloxylgruppen, Aralkylgruppen und/oder Alkoxygruppen sind.

Insbesondere kann eine Verbindung, die zur Gruppe der redoxaktiven Einheit RE5 zählt, ein unsymmetrisch substituiertes Nitroxid-Radikal entsprechend folgender allgemeiner Struktur aufweisen:

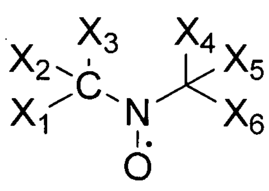

wobei die Substituenten $X_1$ bis $X_6$ unabhängig voneinander Wasserstoffatome, Alkylgruppen, Alkenylgruppen, Alkinylgruppen, Alkylthiogruppen, Monoalkylaminogruppen, Dialkylaminogruppen, Haloalkylgruppen, Haloalkoxygruppen, Alkylcarbonylgruppen, Alkenylcarbonylgruppen, Alkinylcarbonylgruppen, Alkylcarbonsäureestergruppen, Alkenylcarbonsäureestergruppen, Alkinylcarbonsäureestergruppen, Alkoxy-gruppen, Cycloalkylgruppen, Cycloalkoxygruppen, Arylgruppen, Heteroarylgruppen, Aryloxylgruppen, Aralkylgruppen, Halogenatome, Cyanogruppen und/oder Nitrogruppen sind, bevorzugt Arylgruppen, Alkylgruppen, Cycloalkylgruppen, Cycloalkoxygruppen, Heteroarylgruppen, Aryloxylgruppen, Aralkylgruppen und/oder Alkoxygruppen, mit der Massgabe, dass eine oder zwei der Bindungsstellen $X_1$ bis $X_6$ an eine der vorstehend beschriebenen Linker oder polymerisierbaren Gruppen gebunden sind.

Ganz besonders bevorzugte dieser unsymmetrisch substituierten Nitroxid-Radikale RE5 sind solche, in denen 1-2 der Substituenten $X_1$ bis $X_6$ Bindungsstellen, die an eine der vorstehend beschriebenen Linker oder polymerisierbaren Gruppen binden, und 1-6 der Substituenten $X_1$ bis $X_6$ sind Nicht-Wasserstoffatome, vorzugsweise Arylgruppen, Alkylgruppen, Cycloalkylgruppen, Cycloalkoxygruppen, Heteroarylgruppen, Aryloxylgruppen, Aralkylgruppen und/oder Alkoxygruppen sind.

Zur Gruppe der redoxaktiven Einheit RE6 gehören substituierte Bordipyrromethene (BODIPY) und deren Derivate entsprechend folgender Struktur (vergleiche DE102012015176, Technische Universität Braunschweig Carolo-Wilhelmina):

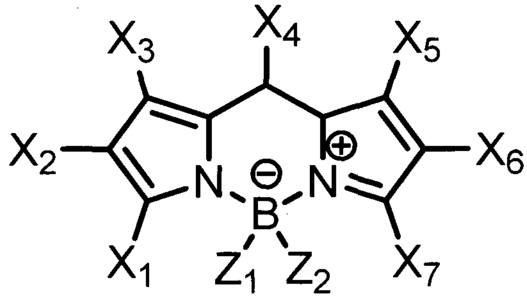

worin die Substituenten $X_1$, $X_2$, $X_3$, $X_4$, $X_5$, $X_6$, $X_7$, Z1 und Z2 unabhängig voneinander Wasserstoffatome, Alkylgruppen, Alkenylgruppen, Alkinylgruppen, Alkylthiogruppen, Monoalkylaminogruppen, Dialkylaminogruppen, Haloalkylgruppen, Haloalkoxygruppen, Alkylcarbonylgruppen, Alkenylcarbonylgruppen, Alkinylcarbonylgruppen, Alkylcarbonsäureestergruppen, Alkenylcarbonsäureestergruppen, Alkinylcarbonsäureestergruppen, Alkoxygruppen, Cycloalkylgruppen, Cycloalkoxygruppen, Arylgruppen, Heteroarylgruppen, Aryloxylgruppen, Aralkylgruppen, Halogenatome, Cyanogruppen, Sulfonatgruppen und/oder Nitrogruppen sind, mit der Massgabe, dass eine oder zwei der Bindungsstellen $X_1$, $X_2$, $X_3$, $X_4$, $X_5$, $X_6$ und $X_7$ an eine der vorstehend beschriebenen Linker oder polymerisierbaren Gruppen gebunden sind,

Besonders bevorzugt sind die Substituenten $X_1$, $X_2$, $X_3$, $X_4$, $X_5$, $X_6$ und $X_7$ unabhängig voneinander Wasserstoffatome, Alkylgruppen, Alkenylgruppen, Monoalkylaminogruppen, Dialkylaminogruppen, Haloalkylgruppen, Haloalkoxygruppen, Alkylcarbonylgruppen, Alkylcarbonsäureestergruppen, Alkenylcarbonsäureestergruppen, Alkoxygruppen, Cycloalkylgruppen, Cycloalkoxygruppen, Arylgruppen, Heteroarylgruppen, Aryloxylgruppen, Aralkylgruppen, Halogenatome, Cyanogruppen, Sulfonatgruppen und/oder Nitrogruppen und eine oder zwei der Bindungsstellen $X_1$, $X_2$, $X_3$, $X_4$, $X_5$, $X_6$ und $X_7$ sind an eine der vorstehend beschriebenen Linker oder polymerisierbaren Gruppen gebunden. Besonders bevorzugt sind die Substituenten $Z_1$ und $Z_2$ unabhängig voneinander Halogenatome, ganz besonders bevorzugt Fluor, oder bevorzugt Arylgruppen, Heteroarylgruppen, Aryloxylgruppen, Aralkylgruppen, Alkenylgruppen, Alkinylgruppen.

Ganz besonders bevorzugte dieser redoxaktiven Komponenten RE6 sind solche, in denen, 1-2 der Substituenten $X_1$ bis $X_7$ Bindungsstellen, die an eine der vorstehend beschriebenen Linker oder polymerisierbaren Gruppen binden, und 0-6, ganz besonders bevorzugt 0-2, der Substituenten $X_1$ bis $X_7$ Wasserstoffatome sind, und 1-7, ganz besonders bevorzugt 5-7, der Substituenten $X_1$ bis $X_7$ Nicht-Wasserstoffatome, vorzugsweise Alkylgruppen, Alkenylgruppen, Monoalkylaminogruppen, Dialkylaminogruppen, Haloalkylgruppen, Haloalkoxygruppen, Alkylcarbonylgruppen, Alkylcarbonsäureestergruppen, Alkenylcarbonsäureestergruppen, Alkoxygruppen, Cycloalkylgruppen, Cycloalkoxygruppen, Arylgruppen, Heteroarylgruppen, Aryloxylgruppen, Aralkylgruppen, Halogenatome, Cyanogruppen, Sulfonatgruppen und/oder Nitrogruppen sind, und in denen 0-2 der Substituenten $Z_1$ bis $Z_2$ Halogenatome sind und 0-2 der Substituenten $Z_1$ bis $Z_2$ sind Wasserstoffatome oder Nicht-Wasserstoffatome, vorzugsweise Arylgruppen, Heteroarylgruppen, Aryloxylgruppen, Aralkylgruppen, Alkenylgruppen oder Alkinylgruppen.

In der folgenden Beschreibung definiert sich n als normal, i als iso, s als sekundär, t als tertiär, c als cyclo, m als meta, p als para und o als ortho .

In dieser Beschreibung kann eine Alkylgruppe sowohl verzweigt als auch unverzweigt sein. Eine Alkylgruppe besteht typischerweise aus einem bis zu dreißig Kohlenstoffatomen, bevorzugt aus einem bis zu zwanzig Kohlenstoffatomen. Beispiele für eine Alkylgruppe sind: Methylgruppe, Ethylgruppe, Propylgruppe, Isopropylgruppe, n-Butylgruppe, sec-Butylgruppe, *tert*.-Butylgruppe, Pentylgruppe, n-Hexylgruppe, n-Heptylgruppe, 2-Ethylhexylgruppe, n-Octylgruppe, n-Nonylgruppe, n-Decylgruppe, n-Undecylgruppe, n-Dodecylgruppe, n-Tridecylgruppe, n-Tetradecylgruppe, n-Pentadecylgruppe, n-Hexadecylgruppe, n-Heptadecylgruppe, n-Octadecylgruppe, n-Nonadecylgruppe oder Eicosylgruppe. Besonders bevorzugt sind Alkylgruppen mit einem bis sechs Kohlenstoffatomen.

In dieser Beschreibung kann eine Alkenylgruppe sowohl verzweigt als auch unverzweigt sein. Eine Alkenylgruppe besteht typischerweise aus zwei bis zu dreißig Kohlenstoffatomen, bevorzugt aus zwei bis zwanzig Kohlenstoffatomen. Alkenylgruppen besitzen typischerweise eine ungesättigte ethenylische Doppelbindung, der restliche Anteil der Alkenylgruppe ist gesättigt. Zwei oder mehrere ethenylische ungesättigte Doppelbindungen sind möglich. Besonders bevorzugt ist die ungesättigte ethenylische Doppelbindung an der alpha-Position der Alkenylgruppe. Beispiele für Alkenylgruppen sind: Vinylgruppe, Allylgruppe, Propenylgruppe, Isopropenylgruppe, n-Butenylgruppe, sec.-Butenylgruppe, Pentenylgruppe, n-Hexenylgruppe, n-Heptenylgruppe, 2-Ethylhexenylgruppe, n-Octenylgruppe, n-Nonenylgruppe, n-Decenylgruppe, n-Undecenylgruppe, n-Dodecenylgruppe, n-Tridecenylgruppe, n-Tetradecenylgruppe, n-Pentadecenylgruppe, n-Hexadecenylgruppe, n-Heptadecenylgruppe, n-Octadecenylgruppe, n-Nonadecenylgruppe oder Eicosenylgruppe. Bevorzugt sind Alkenylgruppen mit zwei bis drei Kohlenstoffatomen; besonderes bevorzugt sind Vinylgruppen und Allylgruppen.

In dieser Beschreibung kann eine Alkinylgruppe sowohl verzweigt als auch unverzweigt sein. Eine Alkinylgruppe besteht typischerweise aus zwei bis zu dreißig Kohlenstoffatomen, bevorzugt aus zwei bis zwanzig Kohlenstoffatomen. Alkinylgruppen besitzen typischerweise eine ungesättigte ethinylische Dreifachbindung, der restliche Anteil der Alkinylgruppe ist gesättigt. Zwei oder mehrere ethinylische ungesättigte Dreifachbindungen sind möglich, aber nicht bevorzugt. Besonders bevorzugt ist die ungesättigte ethinylische Doppelbindung an der alpha-Position der Alkinylgruppe. Beispiele für Alkinylgruppen sind: Ethinylgruppe, Propinylgruppe, Butinylgruppe, Pentinylgruppe, n-Hexinylgruppe, n-Heptinylgruppe, 2-Ethylhexinylgruppe, n-Octyinlgruppe, n-Noninylgruppe, n-Decinylgruppe, n-Undecinylgruppe, n-Dodecinylgruppe, n-Tridecinylgruppe, n-Tetradecinylgruppe, n-Pentadecinylgruppe, n-Hexadecinylgruppe, n-Heptadecinylgruppe, n-Octadecinylgruppe, n-Nonadecinylgruppe oder Eicosinylgruppe. Bevorzugt sind Alkinylgruppen mit zwei Kohlenstoffatomen.

In dieser Beschreibung kann eine Alkylthiogruppe sowohl verzweigt als auch unverzweigt sein. Eine Alkylthiogruppe besteht typischerweise aus einem bis zu dreißig Kohlenstoffatomen und einem oder mehreren Schwefelatomen, die kovalent an zwei Kohlenstoffatomen der Kette gebunden sind, bevorzugt aus einem bis zwanzig Kohlenstoffatomen und einem Schwefelatom. Beispiele für Alkylthiogruppen sind: Methylthiogruppe, Ethylthiogruppe, n-Propylthiogruppe, i-Propylthiogruppe, n-Butylthiogruppe, s-Butylthiogruppe, t-Butylthiogruppe, n-Pentylthiogruppe, 1-Methylbutylthiogruppe, 2-Methylbutylthiogruppe, 3-Methylbutylthiogruppe, 1,1-Dimethylpropylthiogruppe, 2,2-Dimethylpropylthiogruppe, n-Hexylthiogruppe, 1-Methylpentylthiogruppe, 2-Methylpentylthiogruppe, 1,1-Dimethylbutylthiogruppe, 1-Ethylbutylthiogruppe, 1,1,2-Trimethylpropylthiogruppe, n-Heptylthiogruppe, n-Octylthiogruppe, 2-Ethylhexylthiogruppe, n-Nonylthiogruppe, n-Decylthiogruppe, n-Dodecylthiogruppe.

In dieser Beschreibung kann eine Monoalkylaminogruppe sowohl verzweigt als auch unverzweigt sein. Eine Monoalkylaminogruppe besteht typischerweise aus einem bis zu dreißig Kohlenstoffatomen und einem oder mehreren Stickstoffatomen, die kovalent an zwei Kohlenstoffatomen der Kette gebunden sind, bevorzugt aus einem bis zwanzig Kohlenstoffatomen und einem Stickstoffatom. Beispiele für Monoalkylaminogruppen sind: Methylaminogruppe, Ethylaminogruppe, n-Propylaminogruppe, i-Propylaminogruppe, c-Propylaminogruppe, n-Butylaminogruppe, i-Butylaminogruppe, s-Butylaminogruppe, t-Butylaminogruppe, c-Butylaminogruppe, 1-Methyl-c-propylaminogruppe, 2-Methyl-c-propylaminogruppe, n-Pentylaminogruppe, 1-Methyl-n-butylaminogruppe, 2-Methyl-n-butylaminogruppe, 3-Methyl-n-butylaminogruppe, 1,1-Dimethyl-n-propylaminogruppe, 1,2-Dimethyl-n-propylaminogruppe, 2,2-Dimethyl-n-propylaminogruppe, 1-Ethyl-n-propylaminogruppe, c-Pentylaminogruppe, 1-Methyl-c-butylaminogruppe, 2-Methyl-c-butylaminogruppe, 3-Methyl-c-butylaminogruppe, 1,2-Dimethyl-c-Propylaminogruppe, 2,3-Dimethyl-c-propylaminogruppe, 1-Ethyl-c-propylaminogruppe, 2-Ethyl-c-propylaminogruppe, n-Hexylaminogruppe, 1-Methyl-n-pentylaminogruppe, 2-Methyl-n-pentylaminogruppe, 3-Methyl-n-pentylaminogruppe, 4-Methyl-n-pentylaminogruppe, 1,1-Dimethyl-n-butylaminogruppe, 1,2-Dimethyl-n-butylaminogruppe, 1,3-Dimethyl- n-butylaminogruppe, 2,2-Dimethyl-n-butylaminogruppe, 2,3-Dimethyl-n-butylaminogruppe, 3,3-Dimethyl-n-butylaminogruppe, 1-Ethyl-n-butylaminogruppe, 2-Ethyl-n-butylaminogruppe, 1,1,2-Trimethyl-n-propylaminogruppe, 1,2,2-Trimethyl-n-propylaminogruppe, 1-Ethyl-1-methyl-n-propylaminogruppe, 1-Ethyl-2-methyl-n-propylaminogruppe, c-Hexylaminogruppe, 1-Methyl-c-pentylaminogruppe, 2-Methyl-c-pentylaminogruppe, 3-Methyl-c-pentylaminogruppe, 1-Ethyl-c-butylaminogruppe, 2-Ethyl-c-butylaminogruppe, 3-Ethyl-c-butylaminogruppe, 1,2-Dimethyl-c-butylaminogruppe, 1,3-Dimethyl-c-butylaminogruppe, 2,2-Dimethyl-c-butylaminogruppe, 2,3-Dimethyl-c-butylaminogruppe, 2,4-Dimethyl-c-butylaminogruppe, 3,3-Dimethyl-c-butylaminogruppe, 1-n-Propyl-c-propylaminogruppe, 2-n-Propyl-c-Propylaminogruppe, 1-i-Propyl-c-Propylaminogruppe, 2-i-Propyl-c-propylaminogruppe, 1,2,2-Trimethyl-c-propylaminogruppe, 1,2,3-Trimethyl-c-propylaminogruppe, 2,2,3-Trimethyl-c-propylaminogruppe, 1-Ethyl-2-methyl-c-propylaminogruppe, 2-Ethyl-1-methyl-c-propylaminogruppe, 2-Ethyl-2-methyl-c-propylaminogruppe, 2-Ethyl-3-methyl-c-propylaminogruppe.

In dieser Beschreibung kann eine Dialkylaminogruppe sowohl verzweigt als auch unverzweigt sein. Eine Dialkylaminogruppe besteht typischerweise aus einem bis zu dreißig Kohlenstoffatomen und einem oder mehreren Stickstoffatomen, die kovalent an drei Kohlenstoffatomen der Kette gebunden sind, bevorzugt aus einem bis zwanzig Kohlenstoffatomen und einem Stickstoffatom. Beispiele für Dialkylaminogruppen sind: Di-i-propylaminogruppe, Di-c-propylaminogruppe, Di-n-butylaminogruppe, Di-i-butylaminogruppe, Di-s-butylaminogruppe, Di-t-butylaminogruppe, Di-c-butylaminogruppe, Di-(1-methyl-c-propyl)aminogruppe, Di-(2-methyl-c-propyl)aminogruppe, Di-n-pentylaminogruppe, Di-(1-methyl-n-butyl)aminogruppe, Di-(2-methyl-n-butyl)aminogruppe, Di-(3-methyl-n-butyl)aminogruppe, Di-(1,1-dimethyl-n-propyl)aminogruppe, Di-(1,2-dimethyl-n-propyl)aminogruppe, Di-(2,2-dimethyl-n-propyl)aminogruppe, Di-(1-ethyl-n-propyl)aminogruppe, Di-c-pentylaminogruppe, Di-(1-methyl-c-butyl)aminogruppe, Di-(2-methyl-c-butyl)-aminogruppe, Di-(3-methyl-c-butyl)aminogruppe, Di-(1,2-dimethyl-c-propyl)aminogruppe, Di-(2,3-dimethyl-c-propyl)aminogruppe, Di-(1-ethyl-c-propyl) aminogruppe, Di-(2-ethyl-c-propyl)aminogruppe, Di-n-hexylaminogruppe, Di-(1-methyl-n-pentyl)aminogruppe, Di-(2-methyl-n-pentyl)aminogruppe, Di-(3-methyl-n-pentyl)amino gruppe, Di-(4-methyl-n-pentyl)aminogruppe, Di-(1,1-dimethyl-n-butyl)aminogruppe, Di-(1,2-dimethyl-n-butyl)aminogruppe, Di-(1,3-dimethyl-n-butyl)aminogruppe.

In dieser Beschreibung kann eine Haloalkylgruppe sowohl verzweigt als auch unverzweigt sein. Eine Haloalkylgruppe besteht typischerweise aus einem bis zu dreißig Kohlenstoffatomen, die wiederum unabhängig voneinander mit einem oder mehreren Halogenatomen substituiert sein können, bevorzugt aus einem bis zwanzig Kohlenstoffatomen. Beispiele für Halogenatome sind Fluoratom, Chloratom, Bromatom und Iodatom. Bevorzugt sind das Fluoratom und das Chloratom. Beispiele für Haloalkylgruppen sind: Trifluoromethylgruppe, Difluoromethoxygruppe, Trifluoromethoxy-gruppe, Bromodifluoromethoxygruppe, 2-Chloroethoxygruppe, 2-Bromoethoxygruppe, 1,1-Difluoroethoxygruppe, 2,2,2-Trifluoroethoxygruppe, 1,1,2,2-Tetrafluoroethoxygruppe, 2-Chloro-1,1,2-trifluoroethoxygruppe, Pentafluoroethoxygruppe, 3-Bromopropoxygruppe, 2,2,3,3-Tetrafluoropropoxygruppe, 1,1,2,3,3,3-Hexafluoropropoxygruppe, 1,1,1,3,3,3-Hexafluoropropoxygruppe, 3-Bromo-2-methylpropoxygruppe, 4-Bromobutoxygruppe, Perfluoropentyloxygruppe.

In dieser Beschreibung kann eine Haloalkoxygruppe sowohl verzweigt als auch unverzweigt sein. Eine Haloalkoxygruppe besteht typischerweise aus einem Sauerstoffatom, an dem eine Kette, bestehend aus einem bis zu dreißig Kohlenstoffatomen, kovalent gebunden ist und die sowohl verzweigt, als auch unverzweigt sein kann sowie deren Kohlenstoffatome wiederum unabhängig voneinander mit einem oder mehreren Halogenatomen substituiert sein können. Bevorzugt besteht diese Kette aus einem bis zwanzig Kohlenstoffatomen. Beispiele für Halogenatome sind Fluoratom, Chloratom, Bromatom und Iodatom. Bevorzugt sind das Fluoratom und das Chloratom. Beispiele für Haloalkoxylgruppen sind: Difluoromethoxylgruppe, Trifluoromethoxylgruppe, Bromodifluoromethoxylgruppe, 2-Chloroethoxylgruppe, 2-Bromoethoxylgruppe, 1,1-Difluoroethoxylgruppe, 2,2,2-Trifluoroethoxylgruppe, 1,1,2,2-Tetrafluoroethoxylgruppe, 2-Chloro-1,1,2-trifluoro-ethoxylgruppe, Pentafluoroethoxylgruppe, 3-Bromopropoxylgruppe, 2,2,3,3-Tetrafluoropropoxylgruppe, 1,1,2,3,3,3-Hexafluoropropoxylgruppe, 1,1,1,3,3,3-Hexafluoropropoxylgruppe, 3-Bromo-2-methylpropoxylgruppe, 4-Bromobutoxylgruppe, Perfluoropentoxylgruppe.

Eine Alkylcarbonylgruppe besteht in dieser Beschreibung typischerweise aus einem Karbonylkohlenstoff, an dem eine Alkylgruppe, bestehend aus einem bis zu dreißig Kohlenstoffatomen, kovalent gebunden ist und die sowohl verzweigt, als auch unverzweigt sein kann. Bevorzugt besteht diese Kette aus einem bis zwanzig Kohlenstoffatomen. Beispiele für Alkylkarbonylgruppen sind: Methylcarbonylgruppe, Ethylcarbonylgruppe, n-Propylcarbonylgruppe, i-Propylcarbonylgruppe, c-Propylcarbonylgruppe, n-Butylcarbonylgruppe, i-Butylcarbonylgruppe, s-Butylcarbonylgruppe, t-Butylcarbonylgruppe, c-Butylcarbonylgruppe, 1-Methyl-c-propylcarbonylgruppe, 2-Methyl-c-propylcarbonylgruppe, n-Pentylcarbonylgruppe, 1-Methyl-n-butylcarbonylgruppe, 2-Methyl-n-butylcarbonylgruppe, 3-Methyl-n-butylcarbonylgruppe, 1,1-Dimethyl-n-propylcarbonylgruppe, 1,2-Dimethyl- n-propylcarbonylgruppe, 2,2-Dimethyl-n-propylcarbonylgruppe, 1-Ethyl-n-propylcarbonylgruppe, c-Pentylcarbonylgruppe, 1-Methyl-c-butylcarbonylgruppe, 2-Methyl-c-butylcarbonylgruppe, 3-Methyl-c-butylcarbonylgruppe, 1,2-Dimethyl-c-propylcarbonylgruppe, 2,3-Dimethyl-c-propylcarbonylgruppe, 1-Ethyl-c-propylcarbonylgruppe, 2-Ethyl-c-propylcarbonylgruppe, n-Hexylcarbonylgruppe. 1-Methyl-n-pentylcarbonylgruppe, 2-Methyl-n-pentylcarbonylgruppe, 3-Methyl-n-pentylcarbonylgruppe, 4-Methyl-n-pentylcarbonylgruppe, 1,1-Dimethyl-n-butylcarbonylgruppe, 1,2-Dimethyl-n-butylcarbonylgruppe, 1,3-Dimethyl-n-butylcarbonylgruppe, 2,2-Dimethyl-n-butylcarbonylgruppe, 2,3-Dimethyl-n-butylcarbonylgruppe, 3,3-Dimethyl-n-butylcarbonylgruppe, 1-Ethyl-n-butylcarbonylgruppe, 2-Ethyl-n-butylcarbonylgruppe.

Eine Alkenylcarbonylgruppe in dieser Beschreibung besteht typischerweise aus einem Karbonylkohlenstoff, an dem eine Alkenylgruppe, bestehend aus zwei bis zu dreißig Kohlenstoffatomen, kovalent gebunden ist und die sowohl verzweigt, als auch unverzweigt sein kann. Bevorzugt besteht diese Kette aus zwei bis zwanzig Kohlenstoffatomen. Beispiele für Alkenylkarbonylgruppen sind: Ethenylcarbonylgruppe, 1-Propenylcarbonylgruppe, 2-Propenylcarbonylgruppe, 1-Methyl-1-ethenylcarbonylgruppe, 1-Butenylcarbonylgruppe, 2-Butenylcarbonylgruppe, 3-Butenylcarbonylgruppe, 2-Methyl-1-propenylcarbonylgruppe, 2-Methyl-2-propenylcarbonylgruppe, 1-Ethylethenylcarbonylgruppe, 1-Methyl-1-propenylcarbonylgruppe, 1-Methyl-2-propenylcarbonylgruppe, 1-Pentenylcarbonylgruppe, 2-Pentenylcarbonylgruppe, 3-Pentenylcarbonylgruppe, 4-Pentenylcarbonylgruppe, 1-n-Propylethenylcarbonylgruppe, 1-Methyl-1-butenylcarbonylgruppe, 1-Methyl-2-butenylcarbonylgruppe, 1-Methyl-3-butenylcarbonylgruppe, 2-Ethyl-2-propenylcarbonylgruppe, 2-Methyl-1-butenylcarbonylgruppe, 2-Methyl-2-Butenylcarbonylgruppe, 2-Methyl-3-butenylcarbonylgruppe, 3-Methyl-1-butenylcarbonylgruppe, 3-Methyl-2-butenylcarbonylgruppe, 3-Methyl-3-butenylcarbonylgruppe, 1,1-Dimethyl-2-propenylcarbonylgruppe, 1-i-Propylethenylcarbonylgruppe, 1,2-Dimethyl-1-propenylcarbonylgruppe, 1,2-Dimethyl-2-propenylcarbonylgruppe, 1-c-Pentenylcarbonylgruppe, 2-c-Pentenylcarbonylgruppe, 3-c-Pentenylcarbonylgruppe, 1-Hexenylcarbonylgruppe, 2-Hexenylcarbonylgruppe, 3-Hexenylcarbonylgruppe, 4-Hexenylcarbonylgruppe, 5-Hexenylcarbonylgruppe, 1-Methyl-1-pentenylcarbonylgruppe, 1-Methyl-2-Pentenylcarbonylgruppe, 1-Methyl-3-pentenylcarbonylgruppe, 1-Methyl-4-Pentenylcarbonylgruppe, 1-n-Butylethenylcarbonylgruppe, 2-Methyl-1-pentenylcarbonylgruppe, 2-Methyl-2-pentenylcarbonylgruppe, 2-Methyl-3-pentenylcarbonylgruppe, 2-Methyl-4-pentenylcarbonylgruppe, 2-n-Propyl-2-propenylcarbonylgruppe, 3-Methyl-1-pentenylcarbonylgruppe, 3-Methyl-2-pentenylcarbonylgruppe.

Eine Alkinylcarbonylgruppe besteht in dieser Beschreibung typischerweise aus einem Karbonylkohlenstoff, an dem eine Alkinylgruppe, bestehend aus zwei bis zu dreißig Kohlenstoffatomen, kovalent gebunden ist und die sowohl verzweigt, als auch unverzweigt sein kann. Bevorzugt besteht diese Kette aus zwei bis zwanzig Kohlenstoffatomen. Beispiele für Alkinylkarbonylgruppen sind: Ethinylcarbonylgruppe, 1-Propinylcarbonylgruppe, 2-Propinylcarbonylgruppe, 1-Butinylcarbonylgruppe, 2-Butinylcarbonylgruppe, 3-Butinylcarbonylgruppe, 1-Methyl-2-propinylcarbonylgruppe, 1-Pentinylcarbonylgruppe, 2-Pentinylcarbonylgruppe, 3-Pentinylcarbonylgruppe, 4-Pentinylcarbonylgruppe, 1-Methyl-2-butinylcarbonylgruppe, 1-Methyl-3-butinylcarbonylgruppe, 2-Methyl-3-butinylcarbonylgruppe, 3-Methyl-1-Butinylcarbonylgruppe, 1,1-Dimethyl- 2-propinylcarbonylgruppe, 2-Ethyl-2-propinylcarbonylgruppe, 1-Hexynilcarbonylgruppe, 2-Hexynilcarbonylgruppe, 3-Hexynilcarbonylgruppe, 4-Hexynilcarbonylgruppe, 5-Hexynilcarbonylgruppe, 1-Methyl-2-pentinylcarbonylgruppe, 1-Methyl-3-pentinylcarbonylgruppe, 1-Methyl-4-pentinylcarbonylgruppe, 2-Methyl-3-pentinylcarbonylgruppe, 2-Methyl-4-pentinylcarbonylgruppe, 3-Methyl-1-pentinylcarbonylgruppe, 3-Methyl-4-pentinylcarbonylgruppe, 4-Methyl-1-pentinylcarbonylgruppe, 4-Methyl-2-pentinylcarbonylgruppe, 1,1-Dimethyl-2-butinylcarbonylgruppe, 1,1-Dimethyl-3-butinylcarbonylgruppe, 1,2-Dimethyl- 3-butinylcarbonylgruppe, 2,2-Dimethyl-3-butinylcarbonylgruppe, 3,3-Dimethyl-1-butinylcarbonylgruppe, 1-Ethyl-2-butinylcarbonylgruppe, 1-Ethyl-3-butinylcarbonylgruppe.

Eine Alkylcarbonsäureestergruppe besteht in dieser Beschreibung typischerweise aus einem Carbonsäureester, an dem eine Alkylgruppe, bestehend aus einem bis zu dreißig Kohlenstoffatomen, kovalent gebunden ist und die sowohl verzweigt, als auch unverzweigt sein kann. Bevorzugt besteht diese Kette aus einem bis zwanzig Kohlenstoffatomen. Beispiele für Alkylcarbonsäureestergruppen sind: Methylcarbonsäureestergruppe, Ethylcarbonsäureestergruppe, n-Propylcarbonsäureestergruppe, i-Propylcarbonsäureestergruppe, c-Propylcarbonsäureestergruppe, n-Butylcarbonsäureestergruppe, i-Butylcarbonsäureestergruppe, s-Butylcarbonsäureestergruppe, t-Butylcarbonsäureestergruppe, c-Butylcarbonsäureestergruppe, 1-Methyl-c-propylcarbonsäureestergruppe, 2-Methyl-c-propylcarbonsäureestergruppe, n-Pentylcarbonsäureestergruppe, 1-Methyl-n-butylcarbonsäureestergruppe, 2-Methyl-n-butylcarbonsäureestergruppe, 3-Methyl-n-butylcarbonsäureestergruppe, 1,1-Dimethyl- n-propylcarbonsäureestergruppe, 1,2-Dimethyl-n-propylcarbonsäureestergruppe, 2,2-Dimethyl-n-propylcarbonsäureestergruppe, 1-Ethyl-n-propylcarbonsäureestergruppe, c-Pentylcarbonsäureestergruppe, 1-Methyl-c-butylcarbonsäureestergruppe, 2-Methyl-c-butylcarbonsäureestergruppe, 3-Methyl-c-butylcarbonsäureestergruppe, 1,2-Dimethyl-c-propylcarbonsäureestergruppe, 2,3-Dimethyl-c-propylcarbonsäureestergruppe, 1-Ethyl-c-propylcarbonsäureestergruppe, 2-Ethyl-c-propylcarbonsäureestergruppe, n-Hexylcarbonsäureestergruppe. 1-Methyl-n-pentylcarbonsäureestergruppe, 2-Methyl-n-pentylcarbonsäureestergruppe, 3-Methyl-n-pentylcarbonsäureestergruppe, 4-Methyl-n-pentylcarbonsäureestergruppe, 1,1-Dimethyl-n-butylcarbonsäureestergruppe, 1,2-Dimethyl-n-butylcarbonsäureestergruppe, 1,3-Dimethyl-n-butylcarbonsäureestergruppe, 2,2-Dimethyl-n-butylcarbonsäureestergruppe, 2,3-Dimethyl-n-butylcarbonsäureester-gruppe, 3,3-Dimethyl- n-butylcarbonsäureestergruppe, 1-Ethyl-n-butylcarbonsäureestergruppe, 2-Ethyl-n-butylcarbonsäureestergruppe.

Eine Alkenylcarbonsäureestergruppe besteht in dieser Beschreibung typischerweise aus einem Carbonsäureester, an dem eine Alkenylgruppe, bestehend aus zwei bis zu dreißig Kohlenstoffatomen, kovalent gebunden ist und die sowohl verzweigt, als auch unverzweigt sein kann. Bevorzugt besteht diese Kette aus zwei bis zwanzig Kohlenstoffatomen. Beispiele für Alkenylcarbonsäureestergruppen sind: Ethenylcarbonsäureestergruppe, 1-Propenylcarbonsäureestergruppe, 2-Propenylcarbonsäureestergruppe, 1-Methyl-1-ethenylcarbonsäureestergruppe, 1-Butenylcarbonsäureestergruppe, 2-Butenylcarbonsäureestergruppe, 3-Butenylcarbonsäureestergruppe, 2-Methyl-1-propenylcarbonsäureestergruppe, 2-Methyl-2-propenylcarbonsäureestergruppe, 1-Ethylethenylcarbonsäureestergruppe, 1-Methyl-1-propenylcarbonsäureestergruppe, 1-Methyl-2-propenylcarbonsäureestergruppe, 1-Pentenylcarbonsäureestergruppe, 2-Pentenylcarbonsäureestergruppe, 3-Pentenylcarbonsäureestergruppe, 4-Pentenylcarbonsäureestergruppe, 1-n-Propylethenylcarbonsäureestergruppe, 1-Methyl-1-butenylcarbonsäureestergruppe, 1-Methyl-2-butenylcarbonsäureestergruppe, 1-Methyl-3-butenylcarbonsäureestergruppe, 2-Ethyl-2-propenylcarbonsäureestergruppe, 2-Methyl-1-butenylcarbonsäureestergruppe, 2-Methyl-2-Butenylcarbonsäureestergruppe, 2-Methyl-3-butenylcarbonsäureestergruppe, 3-Methyl-1-butenylcarbonsäureestergruppe, 3-Methyl-2-butenylcarbonsäureestergruppe, 3-Methyl-3-butenylcarbonsäureestergruppe, 1,1-Dimethyl-2-propenylcarbonsäureestergruppe, 1-i-Propylethenylcarbonsäureestergruppe, 1,2-Dimethyl-1-propenylcarbonsäureestergruppe, 1,2-Dimethyl-2-propenylcarbonsäureestergruppe, 1-c-Pentenylcarbonsäureestergruppe, 2-c-Pentenylcarbonsäureestergruppe, 3-c-Pentenylcarbonsäureestergruppe, 1-Hexenylcarbonsäureestergruppe, 2-Hexenylcarbonsäureestergruppe, 3-Hexenylcarbonsäureestergruppe, 4-Hexenylcarbonsäureestergruppe, 5-Hexenylcarbonsäureestergruppe, 1-Methyl-1-pentenylcarbonsäureestergruppe, 1-Methyl-2-Pentenylcarbonsäureestergruppe, 1-Methyl-3-pentenylcarbonsäureestergruppe, 1-Methyl-4-Pentenylcarbonsäure-estergruppe, 1-n-Butylethenylcarbonsäureestergruppe, 2-Methyl-1-pentenylcarbonsäureestergruppe, 2-Methyl-2-pentenylcarbonsäureestergruppe, 2-Methyl-3-pentenylcarbonsäureestergruppe, 2-Methyl-4-pentenylcarbonsäureestergruppe, 2-n-Propyl-2-propenylcarbonsäureestergruppe, 3-Methyl-1-pentenylcarbonsäureestergruppe, 3-Methyl-2-pentenylcarbonsäureestergruppe.

Eine Alkinylcarbonsäureestergruppe besteht in dieser Beschreibung typischerweise aus einem Carbonsäureester, an dem eine Alkinylgruppe, bestehend aus zwei bis zu dreißig Kohlenstoffatomen, kovalent gebunden ist und die sowohl verzweigt, als auch unverzweigt sein kann. Bevorzugt besteht diese Kette aus zwei bis zwanzig Kohlenstoffatomen. Beispiele für eine Alkinylcarbonsäureestergruppen sind: Ethinylcarbonsäureestergruppe, 1-Propinylcarbonsäureestergruppe, 2-Propinylcarbonsäureestergruppe, 1-Butinylcarbonsäureestergruppe, 2-Butinylcarbonsäureestergruppe, 3-Butinylcarbonsäureestergruppe, 1-Methyl-2-propinylcarbonsäureestergruppe, 1-Pentinylcarbonsäureestergruppe, 2-Pentinylcarbonsäureestergruppe, 3-Pentinylcarbonsäureestergruppe, 4-Pentinylcarbonsäureestergruppe, 1-Methyl-2-butinylcarbonsäureestergruppe, 1-Methyl-3-butinylcarbonsäureestergruppe, 2-Methyl-3-butinylcarbonsäureestergruppe, 3-Methyl-1-Butinylcarbonsäureestergruppe, 1,1-Dimethyl- 2-propinylcarbonsäureestergruppe, 2-Ethyl-2-propinylcarbonsäureestergruppe, 1-Hexynilcarbonsäureestergruppe, 2-Hexynilcarbonsäureestergruppe, 3-Hexynilcarbonsäureestergruppe, 4-Hexynilcarbonsäureestergruppe, 5-Hexynilcarbonsäureestergruppe, 1-Methyl-2-pentinylcarbonsäureestergruppe, 1-Methyl-3-pentinylcarbonsäureestergruppe, 1-Methyl-4-pentinylcarbonsäureestergruppe, 2-Methyl-3-pentinylcarbonsäureestergruppe, 2-Methyl-4-pentinylcarbonsäureestergruppe, 3-Methyl-1-pentinylcarbonsäureestergruppe, 3-Methyl-4-pentinylcarbonsäureestergruppe, 4-Methyl-1-pentinylcarbonsäureestergruppe, 4-Methyl-2-pentinylcarbonsäureestergruppe, 1,1-Dimethyl-2-butinylcarbonsäureestergruppe, 1,1-Dimethyl-3-butinylcarbonsäureestergruppe, 1,2-Dimethyl-3-butinylcarbonsäureestergruppe, 2,2-Dimethyl-3-butinylcarbonsäureestergruppe, 3,3-Dimethyl-1-butinylcarbonsäureestergruppe, 1-Ethyl-2-butinylcarbonsäureestergruppe, 1-Ethyl-3-butinylcarbonsäureestergruppe.

In dieser Beschreibung kann eine Alkoxygruppe aus einer Alkyleinheit bestehen, die sowohl verzweigt als auch unverzweigt sein kann. Eine Alkoxygruppe besteht typischerweise aus einem bis zu tausend Kohlenstoffatomen, bevorzugt aus einem bis zehntausend Kohlenstoffatomen. Eine Alkoxygruppe besteht weiterhin typischerweise aus einem bis zu tausend Sauerstoffatomen, bevorzugt aus einem bis zweihundert Sauerstoffatomen. Beispiele für Alkoxygruppen sind: Methoxygruppe, Ethoxygruppe, Isopropoxygruppe, n-Butoxygruppe, sec.-Butoxygruppe, tert.-Butoxygruppe, Pentyloxygruppe, n-Hexyloxygruppe, n-Heptyloxygruppe, 2-Ethylhexyloxygruppe, n-Octyloxygruppe, n-Nonyloxygruppe, n-Decyloxygruppe, n-Tridecyloxygruppe, n-Tetradecyloxygruppe, n-Pentadecyloxygruppe, n-Hexadecyloxygruppe, n-Octadecyloxygruppe, Eicosyloxygruppe, Diethylenglycolgruppe, Triethylenglycolgruppe, Polyethyleneglykolgruppen oder Polyethylenoxidgruppen.

Bevorzugt sind Alkoxygruppen mit einem bis zu sechs Kohlenstoffatomen und einem bis zu vier Sauerstoffatomen in der Alkyleinheit sowie Polyethylenglykolgruppen und Polyethylenoxidgruppen, welche über fünfundzwanzig bis fünfhundert Kohlenstoffatome und fünfzehn bis zu vierhundert Sauerstoffatome in der Alkyleinheit aufweisen.

Eine Cycloalkylgruppe, wie in dieser Beschreibung beschrieben, ist typischerweise eine cyclische Gruppe, bestehend aus fünf, sechs oder sieben Kohlenstoffatomen, die jeweils unabhängig voneinander substituiert sein können. Beispiele hierzu sind Alkylgruppen oder zwei Alkylgruppen, die zusammen mit den Ringkohlenstoffen, an denen sie gebunden sind, einen weiteren Ring bilden. Ein Beispiel für eine Cycloalkylgruppe ist eine Cyclohexylgruppe.

Eine Cycloalkoxygruppe, wie in dieser Beschreibung beschrieben, ist typischerweise eine cyclische Gruppe, bestehend aus fünf, sechs oder sieben Kohlenstoffatomen von denen minderstens eines kovalent an einem Sauerstoffatom gebunden ist. Diese Ringkohlenstoffatome können jeweils unabhängig voneinander substituiert sein, beispielsweise mit Alkylgruppen oder zwei Alkylgruppen, die zusammen mit den Ringkohlenstoffen an denen sie gebunden sind, einen weiteren Ring bilden. Ein Beispiel für eine Cycloalkoxygruppe ist eine Cyclohexyloxygruppe.

Eine Arylgruppe, wie in dieser Beschreibung beschrieben, ist typischerweise eine cyclische aromatische Gruppe, bestehend aus fünf bis vierzehn Kohlenstoffatomen, die jeweils unabhängig voneinander substituiert sein können. Beispiele hierzu sind Alkylgruppen oder zwei Alkylgruppen, die zusammen mit den Ringkohlenstoffen, an denen sie gebunden sind, einen weiteren Ring bilden. Beispiele für eine Arylgruppe sind Phenylgruppe, o-Biphenylylgruppe, m-Biphenylylgruppe, p-Biphenylylgruppe, 1-Anthrylgruppe, 2-Anthrylgruppe, 9-Anthrylgruppe, 1-Phenantolylgruppe, 2-Phenantolylgruppe, 3-Phenantolylgruppe, 4-Phenantolylgruppe, 9-Phenantolylgruppe.

Eine Heteroarylgruppe, wie in dieser Beschreibung beschrieben, ist typischerweise eine cyclische aromatische Gruppe bestehend aus vier bis zehn Kohlenstoffatomen und mindestens einem Ringheteroatom, die jeweils unabhängig voneinander substituiert sein können. Beispiele hierzu sind Alkylgruppen, oder zwei Alkylgruppen die zusammen mit den Ringkohlenstoffen an denen sie gebunden sind einen weiteren Ring bilden. Beispiele für Heteroatome sind hierbei ein Sauerstoffatom, Stickstoffatom, Phosphoratom, Boratom, Selenatom oder ein Schwefelatom. Beispiele für eine Heteroarylgruppe sind Furylgruppe, Thienylgruppe, Pyrrolylgruppe oder Imidazolylgruppe.

Eine Aryloxylgruppe, wie in dieser Beschreibung beschrieben, ist typischerweise eine Arylgruppe, wobei Aryl

zuvor bereits definiert wurde, die kovalent an ein Sauerstoffatom gebunden ist. Beispiele für eine Aryloxylgruppe sind Phenyloxyl oder Naphthyloxyl.

Eine Aralkylgruppe, wie in dieser Beschreibung beschrieben, ist typischerweise eine Arylgruppe, wobei Aryl zuvor bereits definiert wurde, die kovalent an eine Alkylgruppe gebunden ist. Diese Gruppe kann beispielsweise mit Alkylgruppen oder Halogenatomen substituiert sein. Ein Beispiel für eine Aralylgruppe ist Benzyl.

In dieser Beschreibung kann ein Halogenatom ein kovalent gebundenes Fluor-, Chlor-, Brom- oder Iodatom sein.

Die redoxaktive Komponenten enthaltenden Polymeren können als lineare Polymere oder als verzweigte Polymere oder als hyperverzweigte Polymere vorliegen, beispiels-weise als Kamm- oder Sternpolymere, Dendrimere, Leiterpolymere, ringförmige Polymere, Polycatenane oder Polyrotaxane.

Vorzugsweise setzt man verzweigte und hochverzweigte Polymere ein, insbesondere Kamm- oder Sternpolymere, Dendrimere, Leiterpolymere, ringförmige Polymere, Polycatenane oder Polyrotaxane. Diese Typen zeichnen sich durch eine erhöhte Löslichkeit aus und die Viskosität der erhaltenen Lösungen ist in der Regel niedriger als bei entsprechenden linearen Polymeren.

Vorzugsweise setzt man die Polymere in gelöster Form ein. Sie können aber auch in Gelform vorliegen, insbesondere als Nano- oder Mikrogel (d.h. vernetzte gequollene Polymerpartikel), als Partikelsuspension, insbesondere Nanopartikel, als Mizellen, als Emulsion.

Die Viskosität des erfindungsgemäß eingesetzten Elektrolyten liegt typischerweise im Bereich von 1 mPas bis zu $10^6$ mPas, insbesondere bevorzugt $10^2$ bis $10^4$ mPas (gemessen bei 25 °C mit einem Rotationsviskosimeter, Platte/Platte).

Die Löslichkeit der erfindungsgemäß eingesetzen redoxaktive Komponenten enthaltenden Polymeren wird durch Co-Polymerisation bzw. Funktionalisierung, z.B. mit Polyethylenglycol, Polymethacrylsäure, Polyacrylsäure, Poly-2-methyloxazolin oder Polystyrolsulfonat, verbessert.

Die Herstellung der erfindungsgemäß eingesetzen redoxaktive Komponenten enthaltenden Polymeren kann mit den üblichen Polymerisationsverfahren erfolgen. Beispiele dafür sind die Polymerisation in Substanz, die Polymerisation in Lösung, die Fällungspolymerisation oder die Emulsions- bzw. Suspensionspolymerisation sowie auch polymeranaloge Funktionalisierungen. Dem Fachmann sind diese Vorgehensweisen bekannt.

Die erfindungsgemäße Redox-Flow-Zelle kann neben den oben beschriebenen Komponenten noch weitere für solche Zellen übliche Elemente oder Komponenten enthalten.

Beispiele für Komponenten im Elektrolyten sind

- redoxaktive Komponenten; dabei kann es sich um flüssige redoxaktive Polymere handeln oder um eine Lösung, Emulsion, Dispersion oder Suspension aus redoxaktiven Polymeren und Elektrolyt-Lösungsmitteln, weiterhin können die Polymere als Mikro- oder Nanogel eingesetzt werden.
- Elektrolyt-Lösungsmittel, wie zum Beipiel Wasser, Alkohole (z.B. Ethanol), Kohlensäureester (z.B. Propylencarbonat), Nitrile (z.B. Acetonitril), Amide (z.B. Dimethylformamid, Dimethylacetamid), Sulfoxide (z.B. Dimethylsulfoxid), Ketone (z.B. Aceton), Lactone (z.B. gamma-Butyrolacton), Lactame (z.B. N-Methyl-2-pyrrolidon), Nitroverbindungen (z.B. Nitromethan), Ether (z.B. Tetrahydrofuran), chlorierte Kohlenwasserstoffe (z.B. Dichlormethan), Carbonsäuren (z.B. Ameisensäure, Essigsäure), Mineralsäuren (z.B. Schwefelsäure, Halogenwasserstoffe bzw. Halogenwasserstoffsäuren) und deren Gemische zum Einsatz. Bevorzugt sind Wasser, Kohlensäureester (z.B. Propylencarbonat), Nitrile (z.B. Acetonitril) und deren Gemische.
- darin gelöste Leitsalze; Elektrolyt-Leitsalze sind Salze enthaltend Anionen ausgewählt aus der Gruppe Halogenidionen (Fluoridion, Chloridion, Bromidion, Iodidion), Hydroxidionen, Anionen anorganischer Säuren (z. B. Phosphationen, Sulfationen, Nitrationen, Hexafluorophosphationen, Tetrafluoroborationen, Perchlorationen, Chlorationen, Hexafluoro-antimonationen, Hexafluoroarsenationen, Cyanidionen) oder Anionen organischer Säuren (z.B. Acetationen, Formiationen, Trifluoroessigsäureionen, Trifluormethansulfonation, Pentafluorethansulfonationen, Nonofluorbutansulfonationen, Butyrationen, Citrationen, Fumarationen, Glutarationen, Lactationen, Malationen, Malonationen, Oxalationen, Pyruvationen, Tartrationen) sein. Besonders bevorzugt sind Halogenidionen, Hydroxidionen, Phosphationen, Sulfationen, Perchlorationen, Hexafluorophosphationen und Tetrafluoroborationen; sowie Kationen ausgewählt aus der Gruppe der Wasserstoffionen ($H^+$), Alkali- oder Erdalkalimetallkationen (z.B. Lithium, Natrium, Kalium, Magnesium, Calcium), sowie substituierten oder unsubstituierten Ammoniumkationen (z.B. Tetrabutylammonium, Tetramethylammonium, Tetraethylammonium), wobei die Substituenten im Allgemeinen Alkylgruppen sein können. Wasserstoffionen, Lithiumionen, Natriumionen, Kaliumionen, Tetrabutylammoniumionen und deren Gemische sind besonders bevorzugt. Insbesondere die Leitsalze: NaCl, KCl, $LiPF_6$, $LiBF_4$, $NaBF_4$, $NaPF_6$, $NaClO_4$, NaOH, KOH, $Na_3PO_4$, $K_3PO_4$, $Na_2SO_4$, $NaSO_3CF_3$, $LiSO_3CF_3$, $(CH_3)_4NOH$, n-$Bu_4NOH$, $(CH_3)_4NCl$, n-$Bu_4NCl$, $(CH_3)_4NBr$, n-$Bu_4NBr$, n-$Bu_4NPF_6$, h-$Bu_4NBF_4$, n-$Bu_4NClO_4$ und deren Gemische wobei n-Bu für die n-Butylgruppe steht.
- Elektrolyt-Additive; Elektrolyt-Additive sind Tenside, welche nichtionisch, anionisch, kationisch oder amphoter sein können, besonders bevorzugt sind nichtionische Tenside (z.B. Polyalkylenglycolether, Fettalkoholpropoxylate, Alkylglucoside, Alkylpolyglucoside, Oktylphenolethoxylate, Nonylphenolethoxylate, Saponine, Phospholipide); Puffer (z.B. Kohlensäure-Bicarbonat-Puffer, Kohlensäure-Silicat-Puffer, Essigsäure-Acetat-Puffer, Phosphatpuffer, Ammoniakpuffer, Citronensäure- oder Citratpuffer, Tris(hydroxymethyl)-aminomethan, 4-(2-Hydroxyethyl)-1-piperazinethanesulfonsäure, 4-(2-Hydroxyethyl)-piperazin-1-propansulfonsäure, 2-(N-Morpholino)ethansulfonsäure, Barbital-Acetat-Puffer), Viskositätsmodifizierer, Stabilisatoren, Katalysatoren, Pestizide, Leitadditive, Frostschutzmittel, Temperaturstabilisatoren, Schaumbrecher.

Vorgenannte Bestandteile des Elektrolyten (z.B. Leitsalze, Lösungsmittel, Additive) können in beliebiger Weise mit den vorgenannten redoxaktiven Komponenten kombiniert werden.

Bevorzugte erfindungsgemäße Redox-Flow-Zellen enthalten insbesondere Kohlensäureester (z.B. Propylencarbonat) als Elektrolyt-Lösungsmittel in Verbindung mit Elektrolyt-Leitsalzen, ganz besonders bevorzugt mit Elektrolyt-Leitsalzen

- enthaltend Anionen ausgewählt aus der Gruppe der Anionen anorganischer Säuren oder Anionen organischer Säuren, wobei Halogenidionen, Hydroxidionen, Phosphationen, Sulfationen, Perchlorationen, Hexafluorophosphationen und Tetrafluoroborationen besonders bevorzugt sind und

- enthaltend Kationen ausgewählt aus der Gruppe der Wasserstoffionen ($H^+$), Alkali- oder Erdalkalimetallkationen (z.B. Lithium, Natrium, Kalium, Magnesium, Calcium), sowie substituierten oder unsubstituierten Ammoniumkationen (z.B. Tetrabutylammonium, Tetramethylammonium, Tetraethylammonium), wobei die Substituenten im Allgemeinen Alkylgruppen sein können. Lithiumionen, Natriumionen, Kaliumionen, Tetrabutylammoniumionen sind besonders bevorzugt.

Insbesondere werden die folgenden Leitsalze eingesetzt: $LiPF_6$, $LiBF_4$, $NaBF_4$, $NaPF_6$, $NaClO_4$, $NaSO_3CF_3$, $LiSO_3CF_3$, $(CH_3)_4NOH$, n-$Bu_4NOH$, $(CH_3)_4NCl$, n-$Bu_4NCl$, n-$Bu_4NPF_6$, n-$Bu_4NBF_4$, n-$Bu_4NClO_4$.

Bevorzugte erfindungsgemäße Redox-Flow-Zellen enthalten insbesondere Wasser als Elektrolyt-Lösungsmittel in Verbindung mit Elektrolyt-Leitsalzen, ganz besonders bevorzugt mit Elektrolyt-Leitsalzen

- enthaltend Anionen ausgewählt aus der Gruppe der Anionen anorganischer Säuren oder Anionen organischer Säuren, wobei Halogenidionen, Hydroxidionen, Phosphationen, Nitrationen, Sulfationen, Acetationen, Trifluoressigsäureionen, Trifluormethansulfonation und Perchlorationen besonders bevorzugt sind, und
- enthaltend Kationen ausgewählt aus der Gruppe der Wasserstoffionen ($H^+$), Alkali- oder Erdalkalimetallkationen (z.B. Lithium, Natrium, Kalium, Magnesium, Calcium), wobei Wasserstoff-, Lithium-, Natrium-, Kaliumionen besonders bevorzugt sind.

Insbesondere werden die folgenden Leitsalze eingesetzt: NaCl, KCl, $NaClO_4$, NaOH, KOH, $Na_3PO_4$, $K_3PO_4$, $Na_2SO_4$, $K_2SO_4$,$NaSO_3CF_3$, $LiSO_3CF_3$.

Bevorzugte erfindungsgemäße Redox-Flow-Zellen enthalten insbesondere Kohlensäureester (z.B. Propylencarbonat) als Elektrolyt-Lösungsmittel in Verbindung mit Oligomeren oder Polymeren, die mindestens eine Art einer redoxaktiven Einheit in der Seitenkette aufweisen und die gegebenenfalls löslichkeitsvermittelnde Seitenketten bzw. -funktionalitäten tragen,

- wobei als redoxaktive Einheit N,N'-substituierte 4,4'-Bipyridine, Chinone, Anthrachinone, Verdazyl-Radikale, Bordipyrromethene, Nitroxylnitroxid-Radikale oder Nitroxid-Radikale, besonders bevorzugt das 2,2,6,6-Tetramethylpiperidine-1-oxyl-Radikal und N-Methyl-[4,4'-bipyridin]-1-iumchlorid zum Einsatz kommen oder
- wobei als Linker L1 bis L26, insbesondere L3, L4, L5, L6, L8, L12 und L19 zum Einsatz kommen oder
- wobei als polymerisierbare Gruppe M1 bis M59, insbesondere M1, M2, M6, M7, M8, M9, M11, M14, M21, M22, M23, M45 und M46 zum Einsatz kommen oder
- wobei als Comonomer CM1 bis CM9 oder CM15 bis CM27, insbesondere CM4, CM9, CM17 bis CM21 und CM 26 zum Einsatz kommen

Ganz besonders bevorzugte erfindungsgemäße Redox-Flow-Zellen enthalten insbesondere Kohlensäureester (z.B. Propylencarbonat) als Elektrolyt-Lösungsmittel in Verbindung mit Oligomeren oder Polymeren, die mindestens eine Art einer redoxaktiven Einheit in der Seitenkette aufweisen und die gegebenenfalls löslichkeitsvermittelnde Seitenketten bzw. -funktionalitäten tragen,

- wobei als Anolyt folgende redoxaktiven Komponenten zum Einsatz kommen:

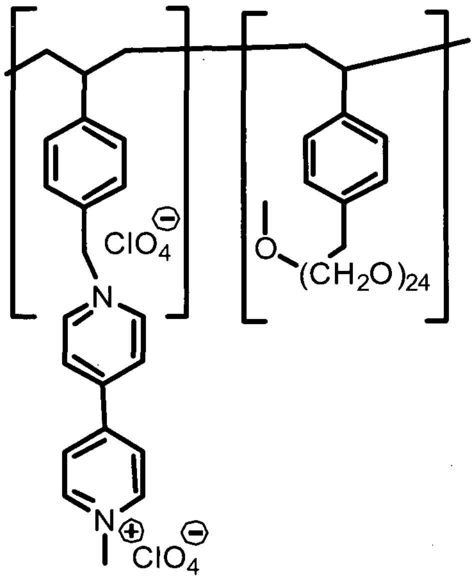

oder

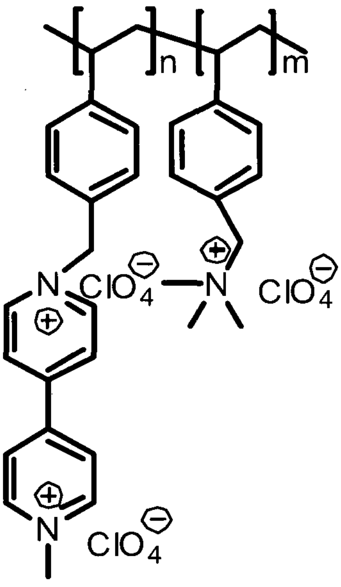

oder

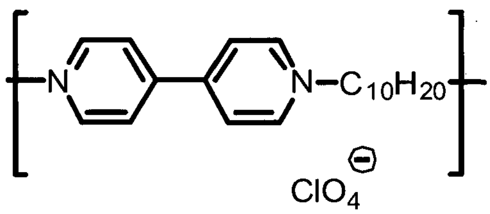

- und wobei als Katholyt folgende redoxaktiven Komponenten zum Einsatz kommen:

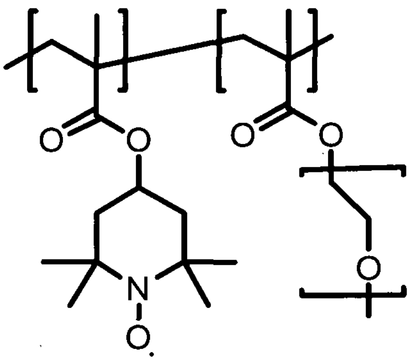

oder

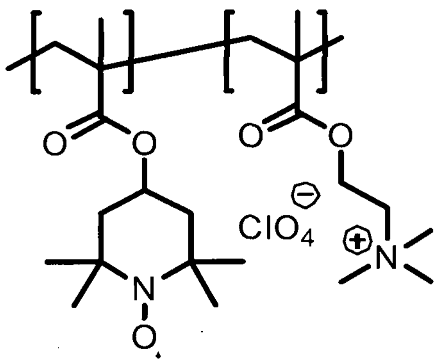

Bevorzugte erfindungsgemäße Redox-Flow-Zellen enthalten insbesondere Wasser als Elektrolyt-Lösungsmittel in Verbindung mit Oligomeren oder Polymeren, die mindestens eine Art einer redoxaktiven Einheit in der Seitenkette aufweisen und die gegebenenfalls löslichkeitsvermittelnde Seitenketten bzw. -funktionalitäten tragen,

- wobei als redoxaktive Einheit N,N'-substituierte 4,4'-Bipyridine, Chinone, Anthrachinone, Verdazyl-Radikale, Bordipyrromethene, Nitroxylnitroxid-Radikale oder Nitroxid-Radikale, besonders bevorzugt das 2,2,6,6-Tetramethylpiperidine-1-oxyl-Radikal, N-Methyl-[4,4'-bipyridin]-1-iumchlorid, 1-(2-(trimethylammonio)ethyl)-[4,4'-bipyridin]-1-iumchlorid zum Einsatz kommen oder

- wobei als Linker L1 bis L26, insbesondere L3, L4, L5, L6, L8, L12 und L19 zum Einsatz kommen oder

- wobei als polymerisierbare Gruppe M1 bis M59, insbesondere M1, M2, M6, M7, M8, M9, M11, M14, M21, M22, M23, M45 und M46 zum Einsatz kommen oder

- wobei als Comonomer CM1 bis CM9 oder CM15 bis CM27, insbesondere CM4, CM9, CM16 bis CM21 und CM 26 zum Einsatz kommen oder

- wobei als Anolyt folgende redoxaktiven Komponenten zum Einsatz kommen:

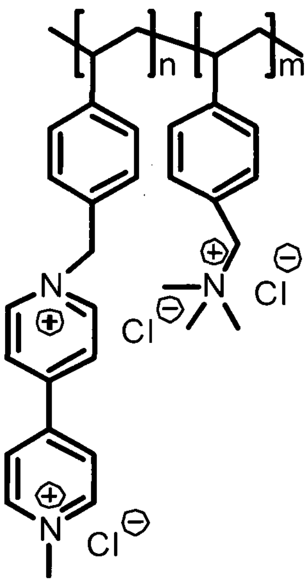

oder

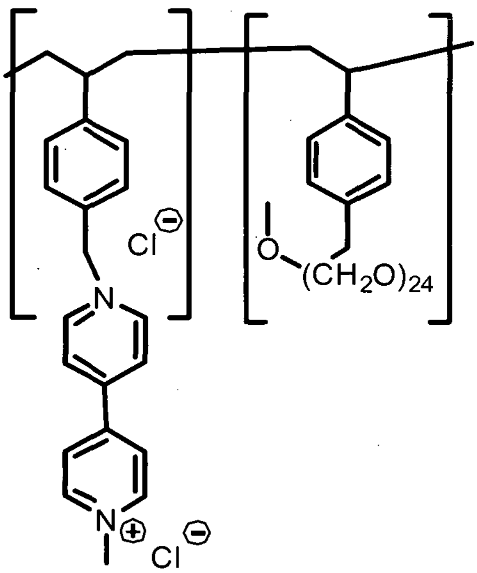

oder

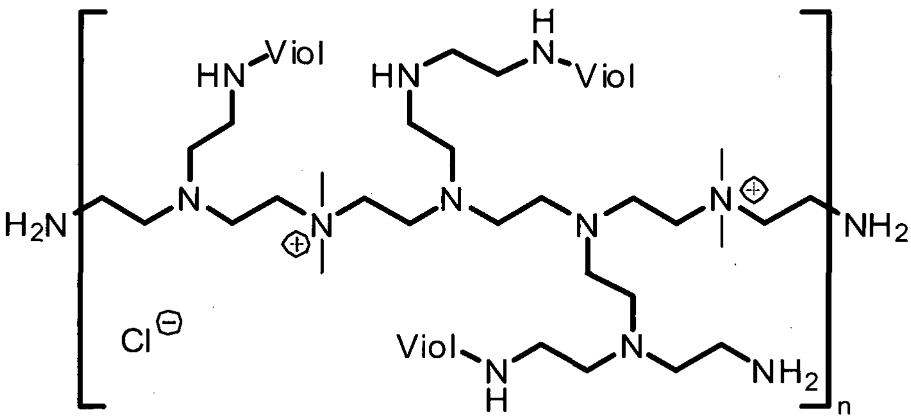

- wobei als Katholyt folgende redoxaktiven Komponenten zum Einsatz kommen:

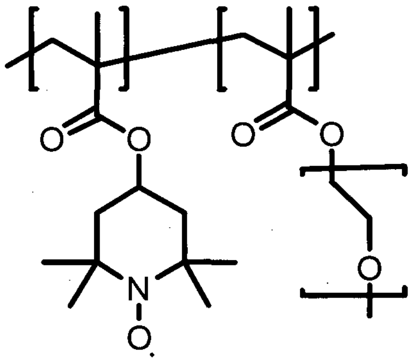

oder

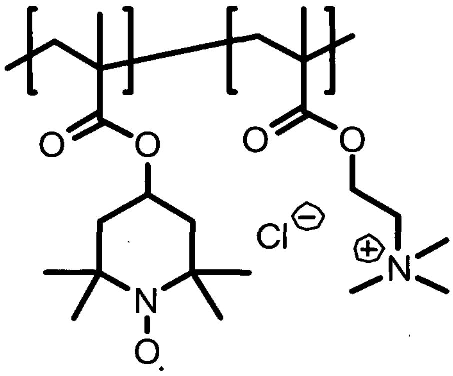

oder

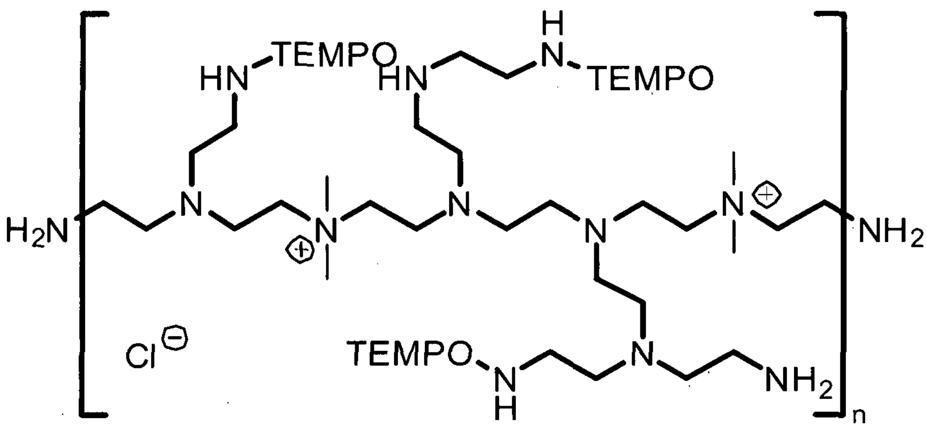

wobei Viol für

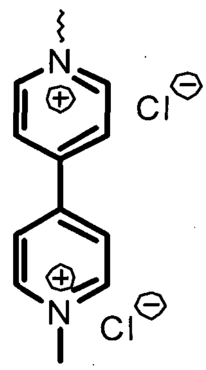

und TEMPO für

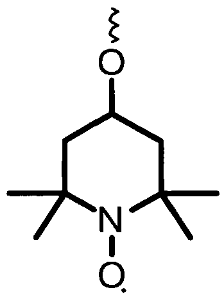

steht.

Durch die besagten in Substanz, in gelöster oder in dispergierter Form vorliegenden redoxaktiven Komponenten der beiden Kammern und die Trennung deren Flusskreisläufe mit der vorgenannten Selektivität wird eine Redox-Flow-Zelle geschaffen, die keine kostenintensiven und toxischen bzw. gefährdenden Elektrolyte enthält, die im Schadensfall austreten und die Umwelt belasten könnten.

Beispiele für zwingend vorhandene Komponenten der Redox-Flow-Zelle sind

- Elektrolyte
- Fördermittel, wie Pumpen, sowie Tanks und Rohre für den Transport und die Lagerung von redoxaktiven Komponenten
- Elektroden, bevorzugt bestehend aus oder enthaltend Graphit, Graphitvlies, Graphitpapier, Carbon-Nano-Tube-Teppichen, Aktivkohle, Russ oder Graphen
- Stromableiter, wie z.B. aus Graphit oder aus Metallen

Die positive Elektrode kann erfindungsgemäß folgende, weitere Materialien enthalten oder aus diesen bestehen:

Edelmetallbeschichtetes oder diamantbeschichtes Titan, Niob, Wolfram, Graphit, Siliziumkarbid oder Tantal, insbesondere Platin- und/oder Iridium- und/oder Rhuteniumoxid-beschichtetes Titan, Diamant bzw. mit elektrisch leitfähigen Bestandteilen, z. B. Bor, dotierter Diamant, Glaskohlenstoff (Lothar Dunsch: Elektrochemische Reaktionen an Glaskohlenstoff, Zeitschrift für Chemie, Volume 14, Issue 12, pages 463-468, Dezember 1974, Indium-Zinn-Oxid, Blei, Blei-Silber-Legierung, z. B. Blei-Silber-Legierung mit 1% Silber, Zinn, Zinnoxid, Ruß, Spinnelle (wie z. B. in EP 0042984 beschrieben), Perowskite (CaTiO3), Delafossite (enthaltend Kupfer- und/oder Eisenoxid), Antimon, Wismut, Kobalt, Platin und/oder Platinmohr, Palladium und/oder Palladiummohr, Mangan, Polypyrrol (wie z. B. in EP 0191726 A2, EP 0206133 A1 beschrieben), Edelstahl, Hastelloy oder Eisen-Chrom-Nickel-haltige Legierungen

Nickel enthaltende positive Elektroden werden bevorzugt dann eingesetzt, wenn der Elektrolyt einen alkalischen pH-Wert von >= 7-8 aufweist oder wenn der Elektrolyt ein wasserfreies organisches Lösungsmittel ist, bevorzugt ein organisches Lösungsmittel mit einem alkalischen pH-Wert von >= 7-8.

Bei beschichteten Elektrodenmaterialien können folgende bekannte Beschichtungsverfahren zur Anwendung kommen: chemische Dampfabscheidung (CVD), physikalische Dampfabscheidung (PVD), galvanische Abscheidung, stromlose Abscheidung aus einer flüssigen Lösung, welche das Metall in gelöster Form und ein Reduktionsmittel enthält

und wobei das Reduktionsmittel die Abscheidung des gewünschten Metalls auf einer Oberfläche bewirkt.

Die negative Elektrode kann folgende Materialien enthalten oder aus diesen bestehen:

Zink, Edelstahl, Hastelloy oder Eisen-Chrom-Nickel-haltige Legierungen, Graphit, Graphitvlies, Graphitpapier, Carbon-Nano-Tube-Teppichen, Aktivkohle, Russ oder Graphen.

Nickel enthaltende negative Elektroden werden bevorzugt dann eingesetzt, wenn der Elektrolyt einen alkalischen pH-Wert von >= 7-8 aufweist oder wenn der Elektrolyt ein wasserfreies organisches Lösungsmittel ist, bevorzugt ein organisches Lösungsmittel mit einem alkalischen pH-Wert von >= 7-8.

Die erfindungsgemäßen Redox-Flow-Zellen enthalten als weitere Komponente Stromableiter. Dieser hat die Aufgabe, einen möglichst guten elektrischen Kontakt zwischen Elektrodenmaterial und der externen Stromquelle bzw. Stromsenke herzustellen.

Als Stromableiter können in den erfindungsgemäßen Redox-Flow-Zellen Aluminium, Alumiumlegierungen, Edelstahl, Hastelloy, Eisen-Chrom-Nickel-Legierungen, edelmetallbeschichtetes Titan oder Tantal, insbesondere Platin- und/oder Iridium- und/oder Rhuteniunoxid-beschichtetes Titan, Niob, Tantal, Hafnium, Zirkonium verwendet werden.

Zur Herstellung beschichteter Stromableiter können u. a. folgende bekannte Beschichtungsverfahren zur Anwendung kommen: chemische Dampfabscheidung (CVD), physikalische Dampfabscheidung (PVD), galvanische Abscheidung, stromlose Abscheidung aus einer flüssigen Lösung, welche das Metall in gelöster Form und ein Reduktionsmittel enthält und wobei das Reduktionsmittel die Abscheidung des gewünschten Metalls auf einer Oberfläche bewirkt.

Bisherige Untersuchungen der erfindungsgemäßen Redox-Flow-Zelle, insbesondere vielfach wiederholte Lade-/Entladeexperimente, lassen bei ihrer Anwendung im Gegensatz zu den eingangs beschriebenen Systemen auf eine wesentlich erhöhte Lebensdauer und geringere Produktionskosten schließen.

Die erfindungsgemäße Redox-Flow-Zelle kann auf unterschiedlichsten Gebieten eingesetzt werden. Dabei kann es sich im weitesten Sinne um die Speicherung von elektrischer Energie für mobile und stationäre Anwendungen handeln. Die Erfindung betrifft auch die Verwendung der Redox-Flow-Zelle für diese Zwecke.

Beispiele für Anwendungen sind Einsätze auf dem Gebiet der Elektromobilität, wie als Speicher in Land-, Luft- und Wasserfahrzeugen, Einsätze als stationäre Speicher für die Notstromversorgung, den Spitzenlastausgleich, sowie für die Zwischenspeicherung elektrischer Energie aus erneuerbaren Energiequellen, insbesondere auf dem Sektor der Photovoltaik und der Windkraft, aus Gas-, Kohle-, Biomasse-, Gezeiten,- und Meereskraftwerken.

Die erfindungsgemäße Redox-Flow-Zelle wird bevorzugt als stationärer Speicher für elektrische Energie eingesetzt.

Die erfindungsgemäßen Redox-Flow-Zellen können in an sich bekannte Weise in serieller oder paralleler Weise miteinander verschaltet werden.

In Figur 1 wird eine erfindungsgemäße Redox-Flow-Zelle als Prinzipschaltung dargestellt.

Die Redox-Flow-Zelle besteht aus zwei baugleichen und als Teflon-Hohlkörper hergestellten Halbzellen (1) und (2), wobei die Halbzelle (1) als Anolyt-Kammer und die Halbzelle (2) als Katholyt-Kammer wirkt. Als Materialien für die Halbzellen (1) und (2) können auch weitere Kunststoffe (wie Polypropylen, Polyethylen und weitere z. B. unter http://www.polyquick.de/DE/unternehmen/ genannte Kunststoffe und Polymere) oder Metalle zur Anwendung kommen.

Die beiden Halbzellen (1, 2) (aus Übersichtsgründen in Explosivdarstellung gezeigt) stehen über eine Größenausschlussmembran (3) hier mit einer Ausschlussgrenze von 1000 g/mol in Verbindung.

Jede Halbzelle (1, 2) besitzt einen Zuläufstutzen (4) sowie einen Ablaufstutzen (5), über welche die Halbzellen (1, 2) mittels Schläuchen jeweils an ein Vorratsgefäß (Flüssigkeitsspeicher) angeschlossen werden, die den Anolyten bzw. den Katholyten für die korrespondierende Halbzelle (1) bzw. (2) enthalten (aus Übersichtsgründen in der Zeichnung nicht dargestellt).

Der Anolyt bzw. Katholyt wird (jeweils als separater Flüssigkeitskreislauf durch die Halbzellen (1) bzw. (2) der Redox-Flow-Zelle) durch eine (ebenfalls aus Übersichtsgründen nicht dargestellte) Pumpe aus dem jeweiligen Vorratsgefäß während des Lade-/Entladevorganges durch die entsprechende Halbzelle (1) bzw. (2) gepumpt (angedeutet durch Pfeildarstellungen an den Zulauf- und Ablaufstutzen (4, 5)).

Jede Halbzelle (1, 2) verfügt jeweils über eine interne Elektrode aus Graphit/Graphitfilz, an welchem jeweils in der Halbzelle (1, 2) eine an sich bekannte Elektrodenreaktion stattfindet. Diese internen Elektroden sind jeweils als polaritätsabhängiger Stromableiter (6) für den elektrischen Anschluss aus den Halbzellen (1, 2) herausgeführt.

**Ausführungsbeispiele:**

Beispiel 1:

Vorbereitend wurde eine Regeneratzellulose-Membran (Ausschlussgrenze MWCO=1000 g/mol) eine Stunde in destilliertem Wasser eingelegt. Danach wurde die Membran dreimal für jeweils zehn Minuten in Acetonitril und für

zwanzig Stunden in Propylencarbonat eingelegt. Die Membran wurde in der Redox-Flow-Zelle verbaut, sodass sie den Raum der Anode vom Raum der Kathode trennt. Der Anodenraum wurde mit einem Vorratstank verbunden, der mit einer Lösung von 200 mg Polymer A gelöst in einer Lösung von Tetrabutylammoniumhexafluorophosphat in Propylencarbonat (0,5 mol/L) befüllt war. Der Kathodenraum wurde mit einem Vorratstank verbunden, der mit einer Lösung von 200 mg Polymer B gelöst in einer Lösung von Tetrabutylammoniumhexafluorophosphat in Propylencarbonat (0,5 mol/L) befüllt war. Die Lösungen wurden mit Argon (Schutzgas) gespült, um Sauerstoff zu entfernen und ein leichter Argonstrom während des Betriebes der Zelle über die Lösungen geleitet. Die Lösungen wurden mittels einer Schlauchpumpe im Kreislauf zwischen den Vorratstanks und der Redox-Fluss-Zelle umgewälzt. Als Stromableiter wurden in der Redox-Fluss-Zelle Graphitelektroden und als Elektrodenmaterial Graphit-Vlies verwendet. Zum Laden wurde ein konstanter Strom von 10 mA angelegt, wobei eine Ladegrenzspannung von 1,6 V zum Einsatz kam. Zum Entladen wurde ein konstanter Strom von 2 mA angelegt, wobei eine Entladegrenzspannung von 0,5 V zum Einsatz kam.

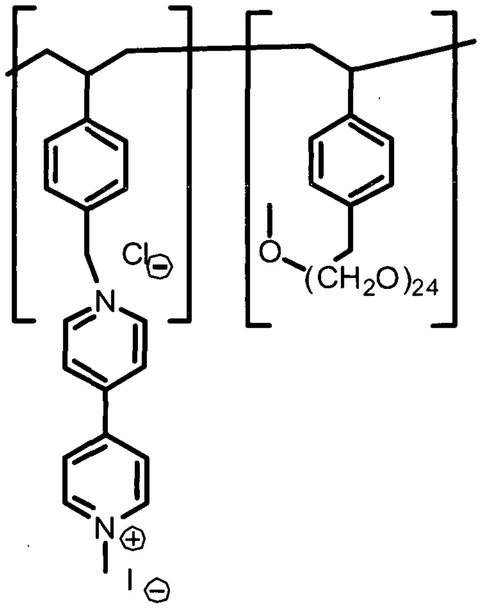

Polymer A

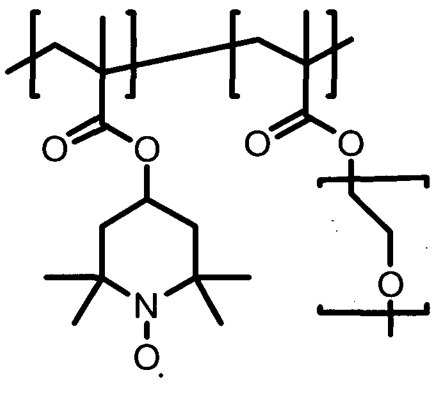

Polymer B

In Figur 3 sind beispielhafte Lade-/Entladekurven dieser Zelle dargestellt.

Beispiel 2:

Vorbereitend wurde eine Regeneratzellulose-Membran (Ausschlussgrenze MWCO=1000 g/mol) eine Stunde

in destilliertem Wasser eingelegt. Die Membran wurde in der Redox-Flow-Zelle verbaut, sodass sie den Raum der Anode vom Raum der Kathode trennt. Der Anodenraum wurde mit einem Vorratstank verbunden, der mit einer Lösung von 200 mg Polymer C gelöst in einer Lösung von Natriumchlorid in Wasser (0,5 mol/L) befüllt war. Der Kathodenraum wurde mit einem Vorratstank verbunden, der mit einer Lösung von 200 mg Polymer B gelöst in einer Lösung von Natriumchlorid in Wasser (0,5 mol/L) befüllt war. Die Lösungen wurden mit Argon (Schutzgas) gespült, um Sauerstoff zu entfernen und ein leichter Argonstrom während des Betriebes der Zelle über die Lösungen geleitet. Die Lösungen wurden mittels einer Schlauchpumpe im Kreislauf zwischen den Vorratstanks und der Redox-Fluss-Zelle umgewälzt. Als Stromableiter wurden in der Redox-Fluss-Zelle Graphitelektroden und als Elektrodenmaterial Graphit-Vlies verwendet. Zum Laden wurde ein konstanter Strom von 10 mA angelegt, wobei eine Ladegrenzspannung von 1,5 V zum Einsatz kam. Zum Entaden wurde ein konstanter Strom von 2 mA angelegt, wobei eine Entladegrenzspannung von 0,7 V zum Einsatz kam.

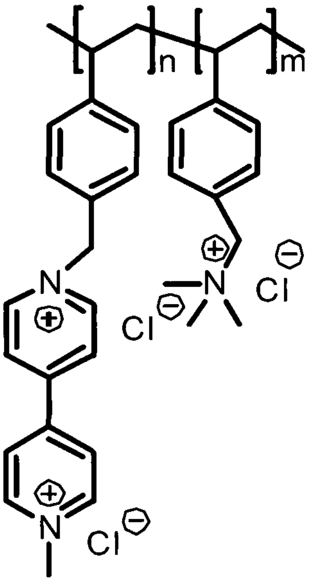

Polymer C

**Synthese der Polymere**

Polymer A

0,8 g para-Chlormethylstyren, 0,8 mg para-(Vinylbenzyl)trimethylammoniumchlorid und 80 mg 2,2'-Azobis(2-methylpropionitril) wurden in 5 mL Toluol gelöst, zwanzig Minuten mit Argon gespült um Sauerstoff zu entfernen und bei 75 °C für 40 Stunden unter Rühren erhitzt und anschließend das Lösungsmittel im Vakuum entfernt. Das Produktgemisch wurde in 30 mL Dimethylsulfoxid gelöst, mit 1,2 g N-Methyl-4,4'-bipyridiniumiodid versetzt und 17 Stunden bei 60 °C unter Rühren erhitzt. Danach wurde das Produktgemisch sequenziell gegen Dimethylsulfoxid und Acetonitril in einem Dialyseschlauch (Ausschlussgrenze MWCO=1000 g/mol) dialysiert. Das Lösungsmittel wurde im Vakuum entfernt. Das Produkt fällt als rötlicher Feststoff mit einer Molmasse von 15000 g/mol (Zahlenmittel bestimmt mittels Größenausschlusschromatographie, Polystyrol-Standard) an.

Polymer B

In 3 mL Ethanol/Wasser-Gemisch (4:1) wurden 1 g 4-Methacryloyloxy-2,2,6,6-tetramethylpiperidine, 0,2 g Poly(ethylenglycol)methylethermethacrylat (Molmasse (Zahlenmittel)=500 g/mol) und 4 mg 2,2'-Azobis(2-methyl-propionamidin)-dihydrochlorid gelöst, die Lösung zwanzig Minuten mit Argon gespült um Sauerstoff zu entfernen und bei 50 °C für zwanzig Stunden unter Rühren erhitzt. Das Produktgemisch wurde mit 5 mL Ethanol, 80 mg Natriumwolframat und 5 mL Wasserstoffperoxidlösung (30%) versetzt und fünf Stunden bei 25 °C gerührt. Das Produktgemisch wurde sequenziell gegen Wasser, und Acetonitril in einem Dialyseschlauch (Ausschlussgrenze MWCO=1000 g/mol) dialysiert und das Lösungsmittel im Vakuum entfernt. Das Produkt fällt als orange gefärbter Feststoff mit einer Molmasse von 18000 g/mol (Zahlenmittel bestimmt mittels Größenausschlusschromatographie, Polystyrol-Standard) an.

Polymer C

210 mg para-Chlormethylstyren, 290 mg para-(Vinylbenzyl)trimethylammoniumchlorid und 14 mg 2,2'-Azobis(2-methylpropionitril) wurden in 3,5 mL Dimethylsulfoxid gelöst, zwanzig Minuten mit Argon gespült um Sauerstoff zu entfernen und bei 80 °C für vier Stunden unter Rühren erhitzt. Das Produktgemisch wurde mit 420 mg N-Methyl-4,4'-bipyridiniumiodid versetzt und zwanzig Stunden bei 80 °C unter Rühren erhitzt. Danach wurde das Produktgemisch in Aceton gefällt und sequenziell gegen Wasser, verdünnte Natriumchloridlösung und Wasser in einem Dialyseschlauch (Ausschlussgrenze MWCO=1000 g/mol) dialysiert. Die Lösung wurde eingefroren und lyophilisiert. Das Produkt fällt als gut wasserlöslicher Feststoff mit einer Molmasse von 18000 g/mol (bestimmt mittels analytischer Ultrazentrifugation) an.

Aufstellung der verwendeten Bezugszeichen

1, 2 - Halbzelle
3 - Größenausschlussmembran
4 - Zuflussstutzen
5 - Abflussstutzen
6 - Stromableiter
7 - Pumpe
8 - Vorratstank Anolyt
9 - Vorratstank Katholyt
10 - positive Elektrode
11 - negative Elektrode
12 - externe Spannungsquelle/Stromsenke
13 - redoxaktiven Komponenten im Katholyt
14 - redoxaktiven Komponenten im Anolyt
15 - positiv geladenes Ion
16 - negativ geladenes Ion

**Patentansprüche**

1. Redox-Flow-Zelle zur Speicherung elektrischer Energie enthaltend eine Reaktionszelle mit zwei Elektrodenkammern (1, 2) für Katholyt und Anolyt, die jeweils mit mindestens einem Flüssigkeitsspeicher in Verbindung stehen, die durch eine Membran für den Ionenaustausch getrennt sind, und die mit Elektroden (10, 11) ausgerüstet sind, wobei die Kammern (1, 2) jeweils mit redoxaktiven Komponenten gefüllt sind oder dieselben enthalten, die in Substanz, gelöst, emulgiert oder dispergiert in einem Elektrolytlösungsmittel vorliegen, wobei die Membran eine Größenausschlussmembran (3) mit einer Selektivität von mindestens 400 g/mol ist, beide redoxaktiven Komponenten eine Molmasse von mindestens 400 g/mol aufweisen und eine Struktureinheit der Formel I und der Formel II oder der Formel I, der Formel II und der Formel III oder der Formel IV enthalten

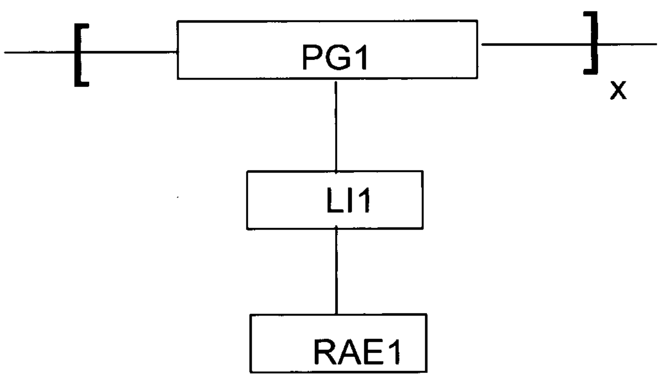

(I),

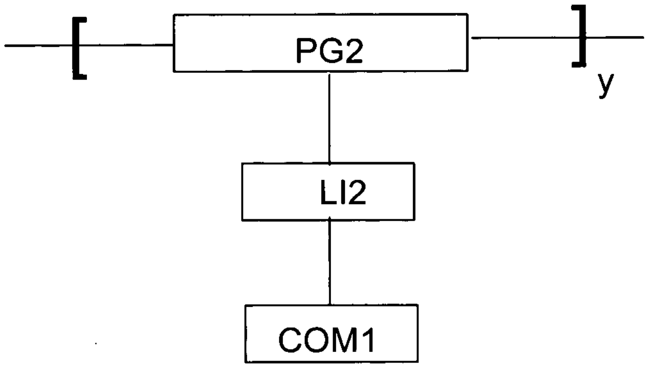


(II),

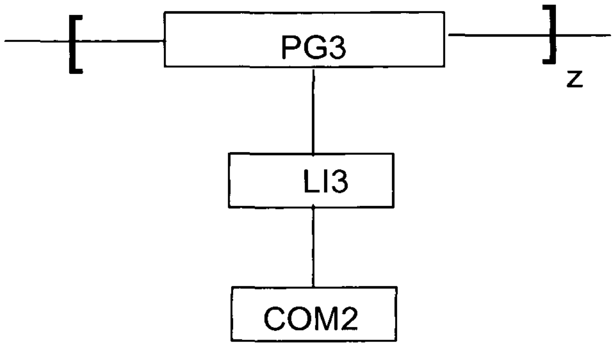


(III),

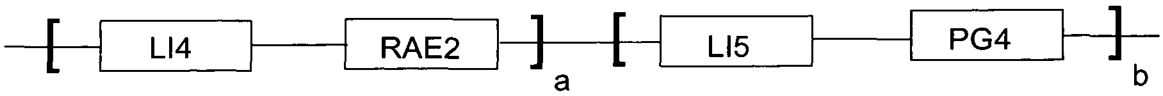


(IV),

worin PG1, PG2, PG3 und PG4 unabhängig voneinander Gerüste organischer Polymere darstellen, die unabhängig voneinander abgeleitet sind von Monomeren für die Ringöffnungspolymerisation, für die oxidative Kupplung, für die Polykondensation, für die Ringöffnungsmetathese-Polymerisation, für die radikalische Polymerisation oder für die ionische Polymerisation ausgewählt aus der Gruppe der Monomeren M1 bis M59

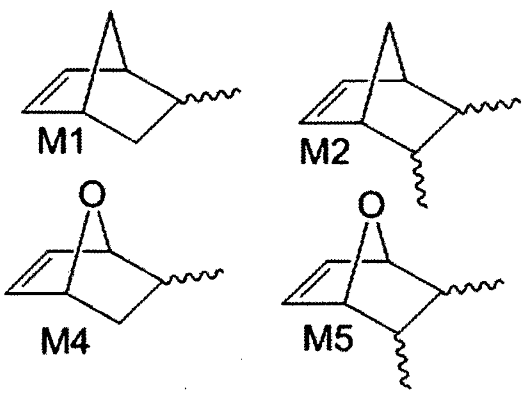

M1 M2 M4 M5

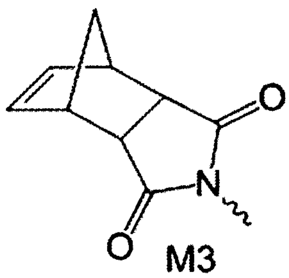

M3

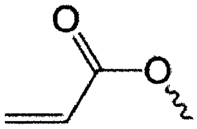
M6
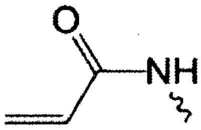
M8
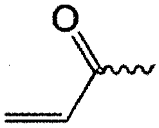
M10
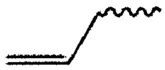
M12

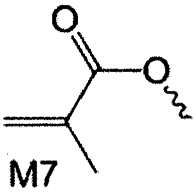
M7
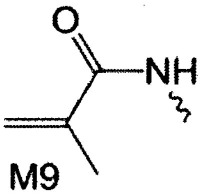
M9
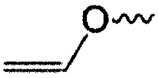
M11
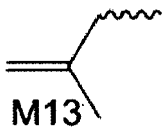
M13

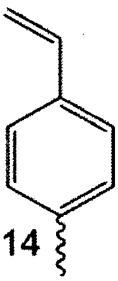
M14
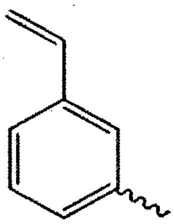
M15
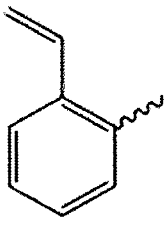
M16
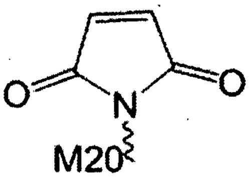
M20

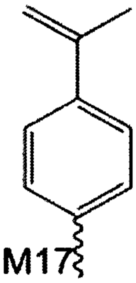
M17
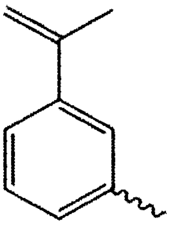
M18
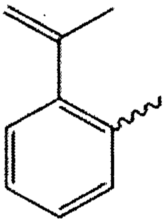
M19

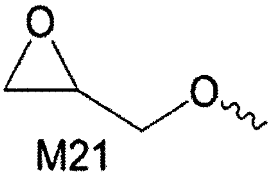
M21
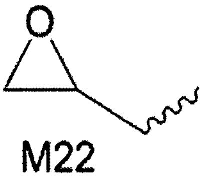
M22
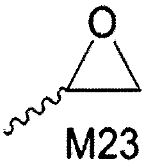
M23

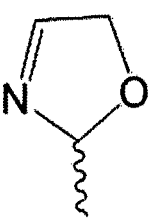
M24
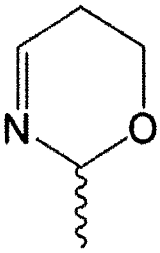
M25
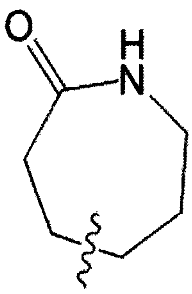
M26
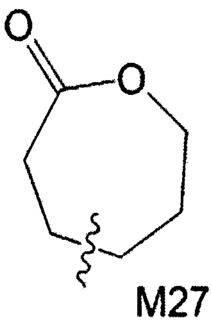
M27

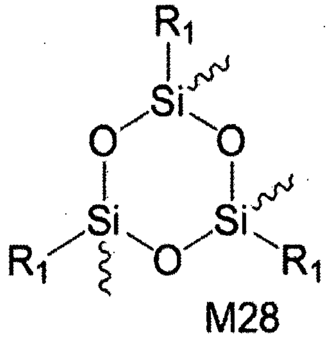
M28

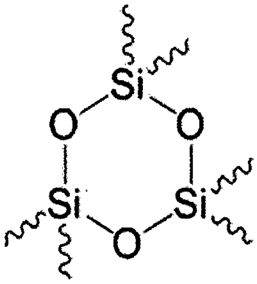
M29

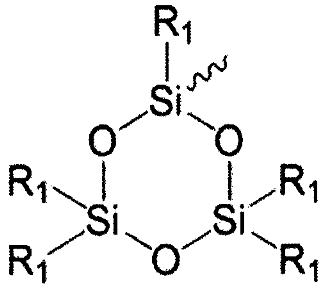
M30

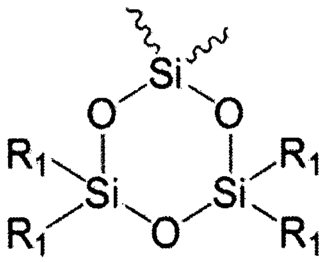
M31

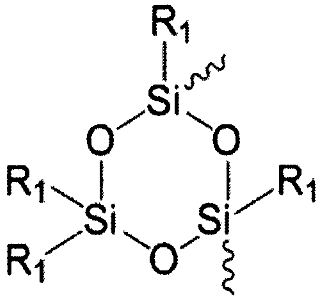
M32

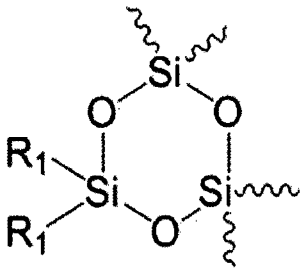
M33

R1 = Methyl, Ethyl, Phenyl

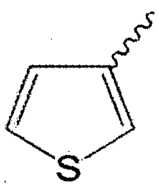
M34

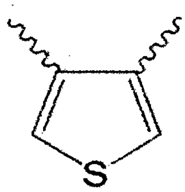
M35

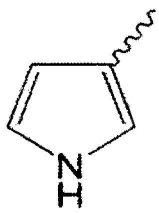
M36

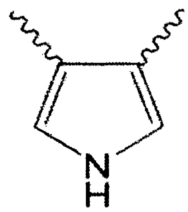
M37

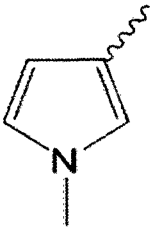

M38

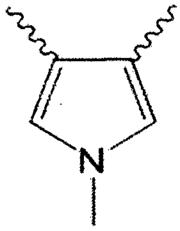

M39

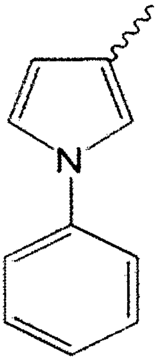

M42

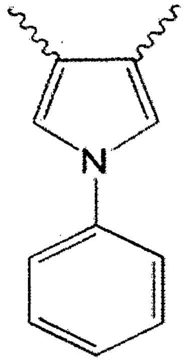

M43

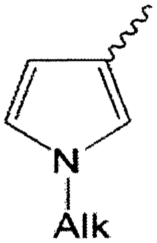

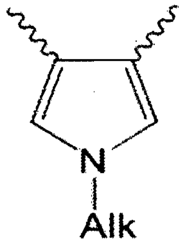

Alk: Alkylketten bis $C_{10}$

M40

M41

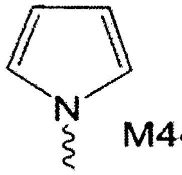

M44

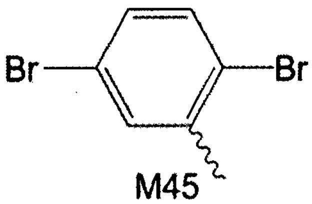

M45

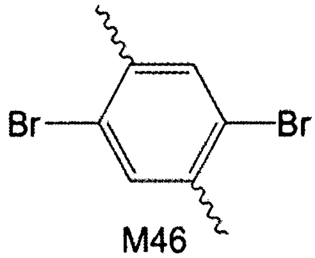

M46

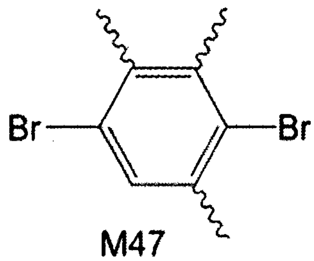

M47

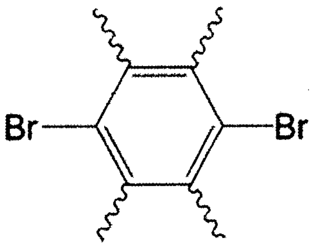

M48

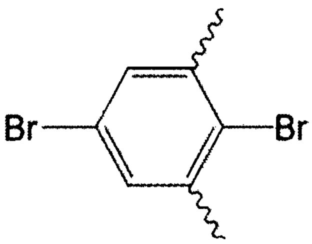

M49

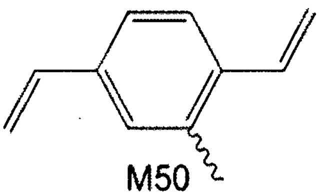

M50

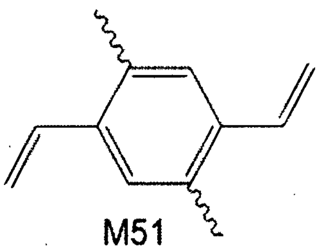

M51

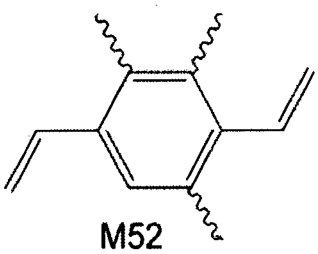

M52

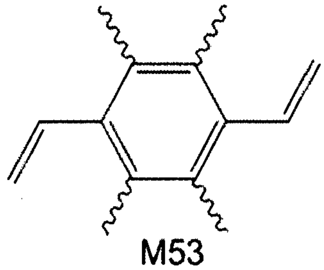

M53

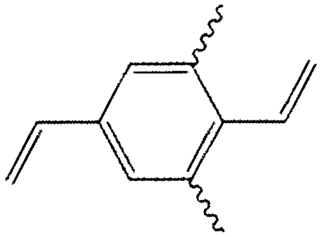

M54

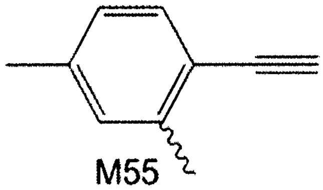

M55

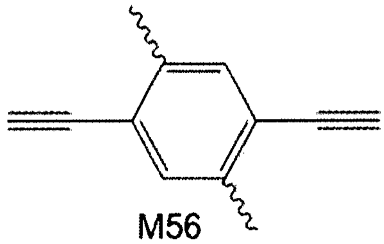

M56

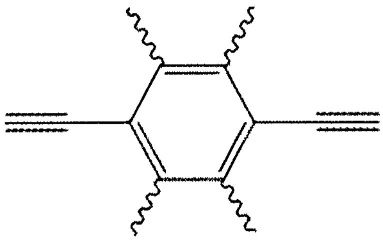

M57

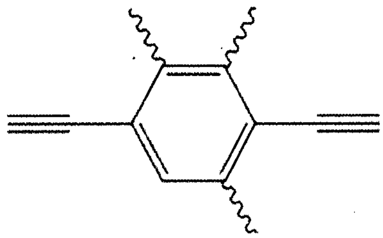

M58

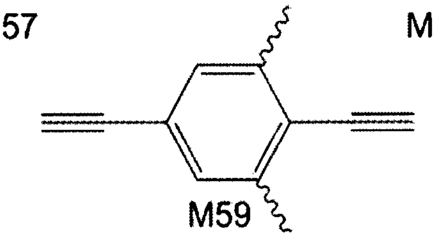

M59

worin die gewellten Bindungen die kovalenten Bindungen LI1 bis LI5 oder die Verbindungen zu den Brückengruppen LI1 bis LI5 bedeuten,

oder worin PG1 ein Gerüst eines hyperverzweigten organischen Polymers darstellt, das abgeleitet ist von den Strukturen P1 bis P9 und das Reste LI1 mit mindestens einer der nachstehend definierten Strukturen L1 bis L21 enthält oder in der LI1 eine kovalente Bindung bedeutet, wobei P1 ein hyperverzweigtes Polyethylenimin der nachfolgenden Struktur ist

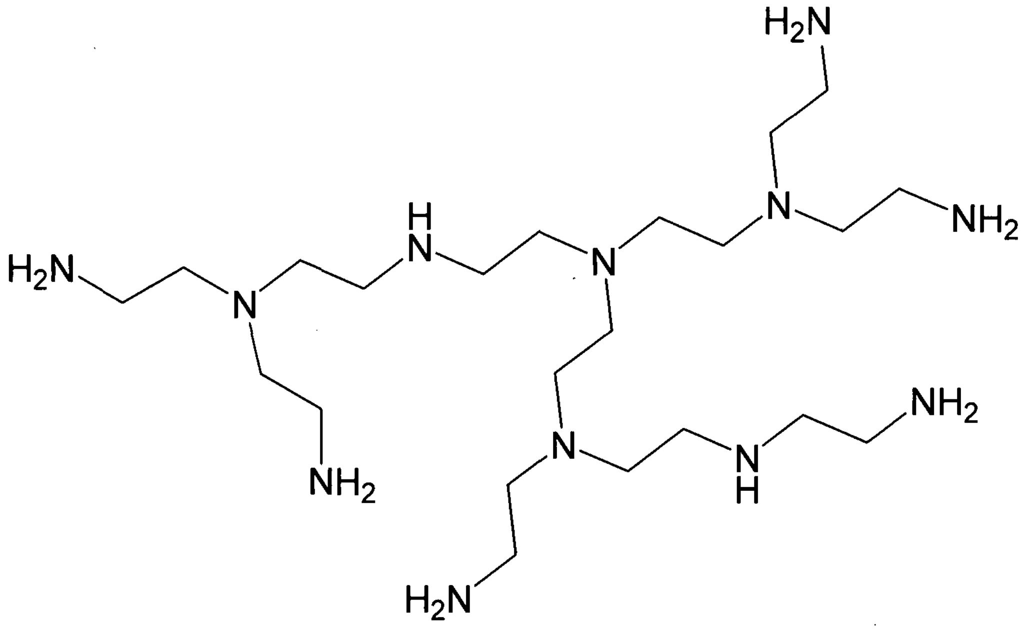

P2 ein hyperverzweigtes Polyglycerol der nachfolgenden Struktur ist

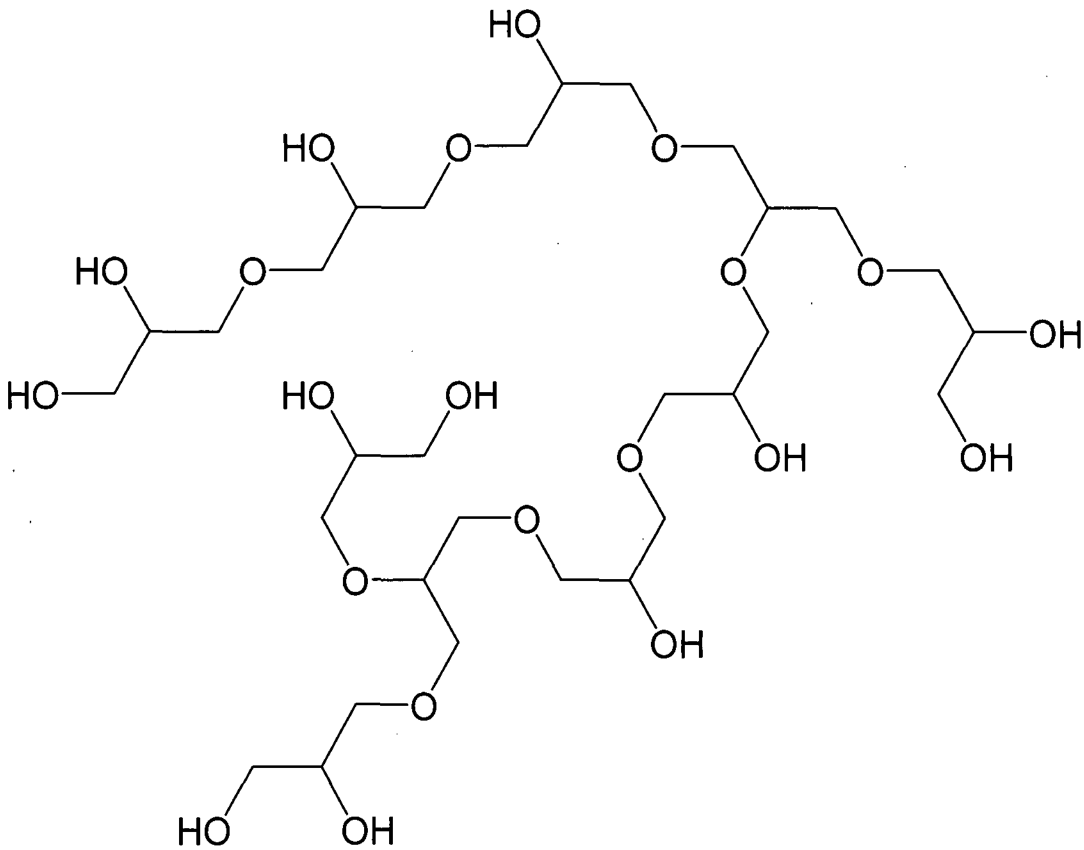

P3 bis P7 Dendrimere der nachfolgenden Strukturen sind

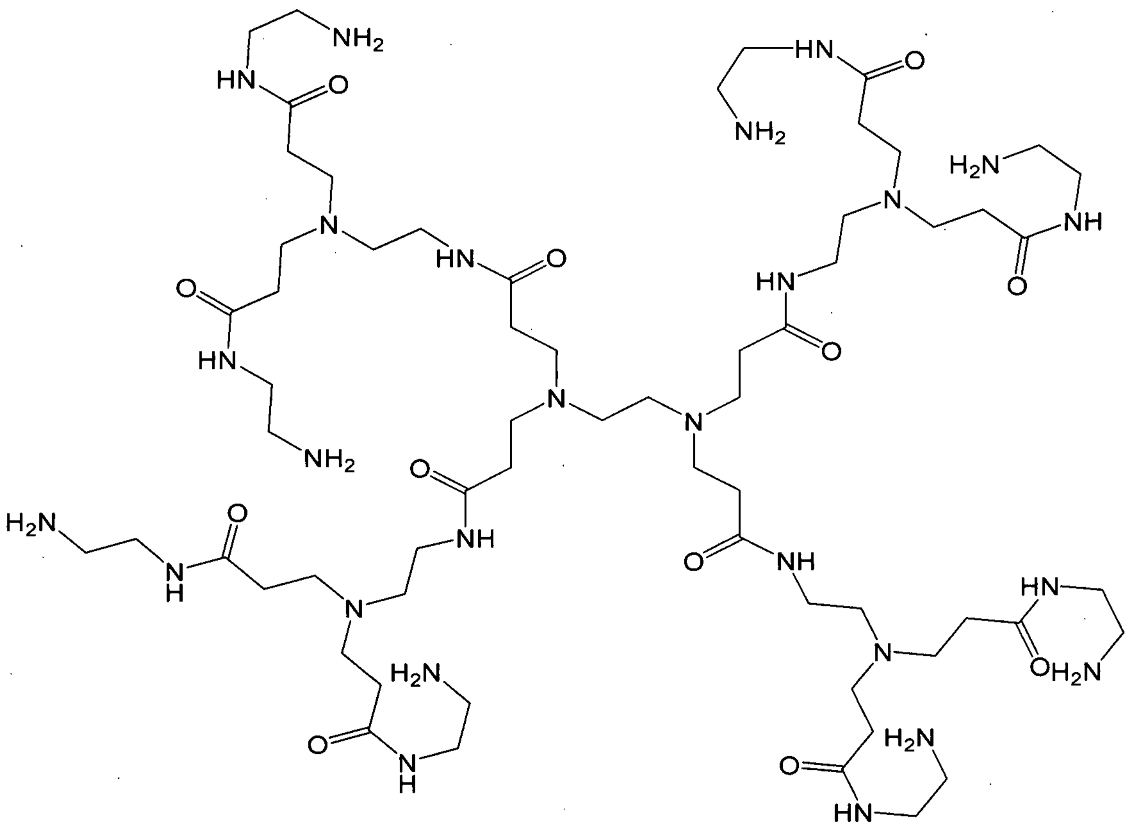

P3

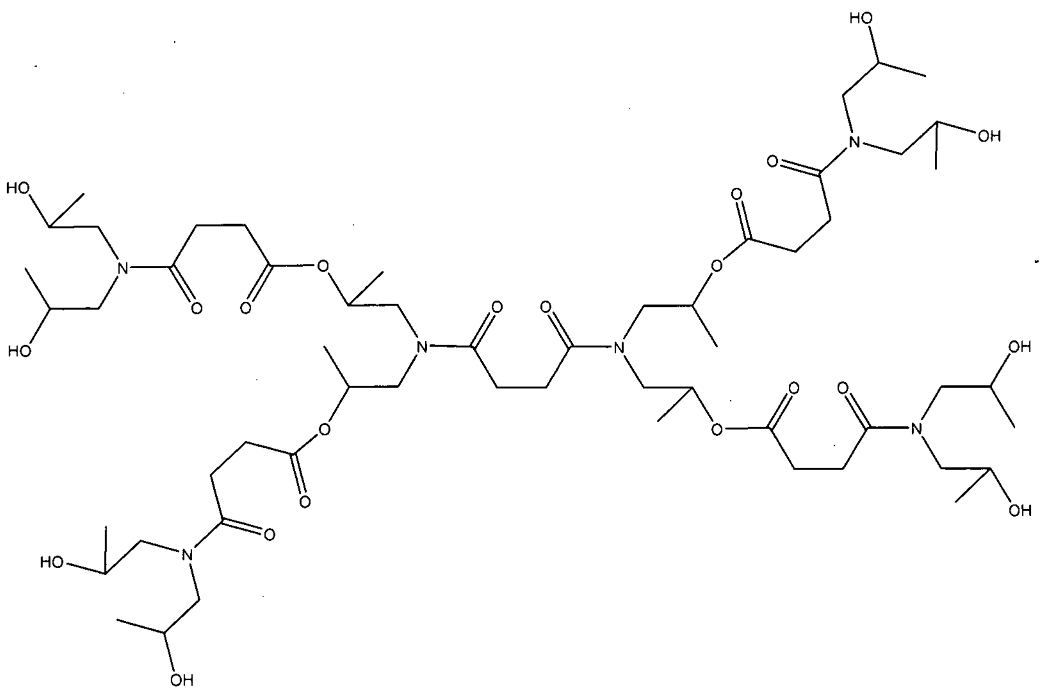

P4

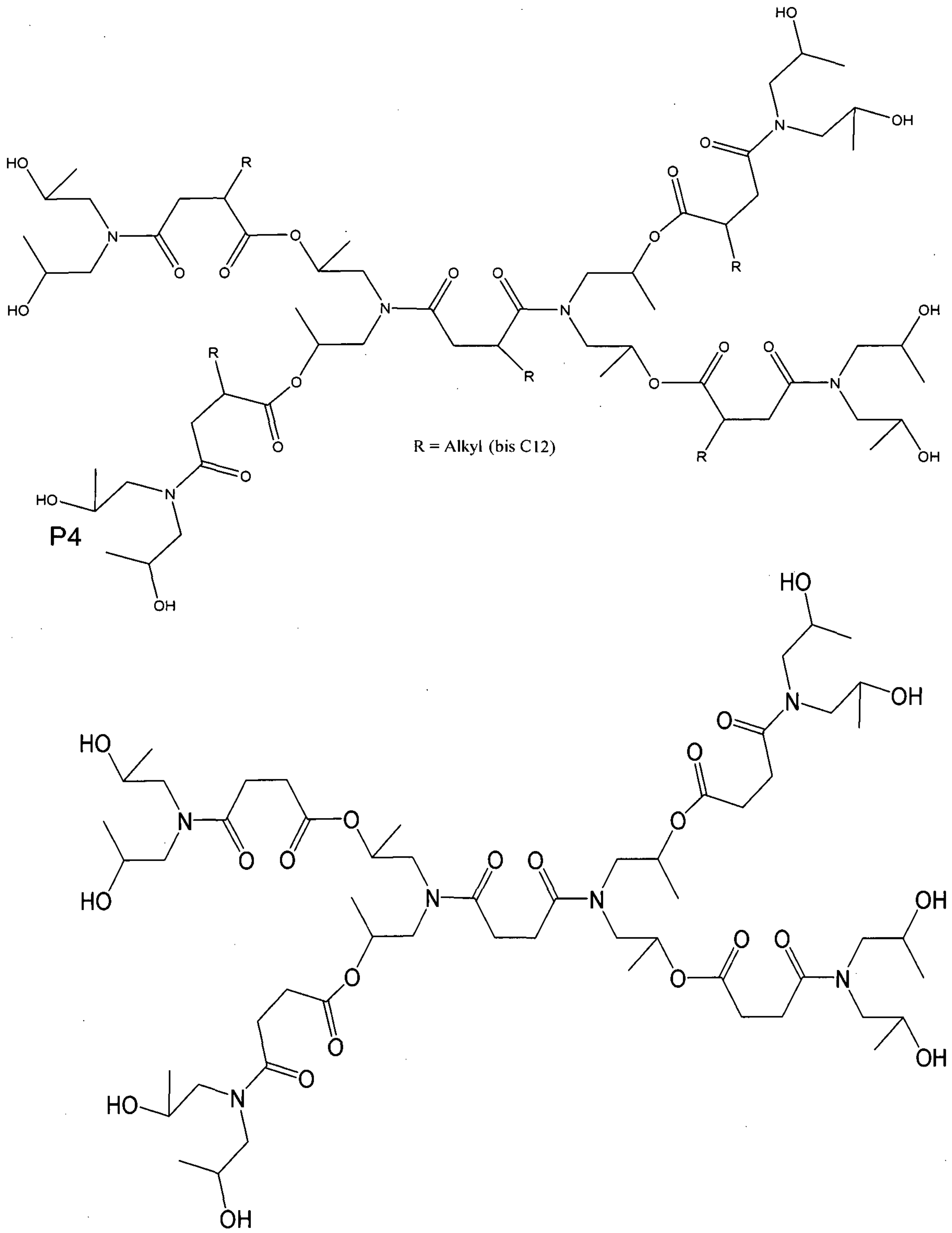

R = Alkyl (bis C12)

P4

P5

P6 mit einem molaren Verhältnis von Phthalsäure zu Succinsäure von 10:90 bis 30:70, besonders bevorzugt 20:80

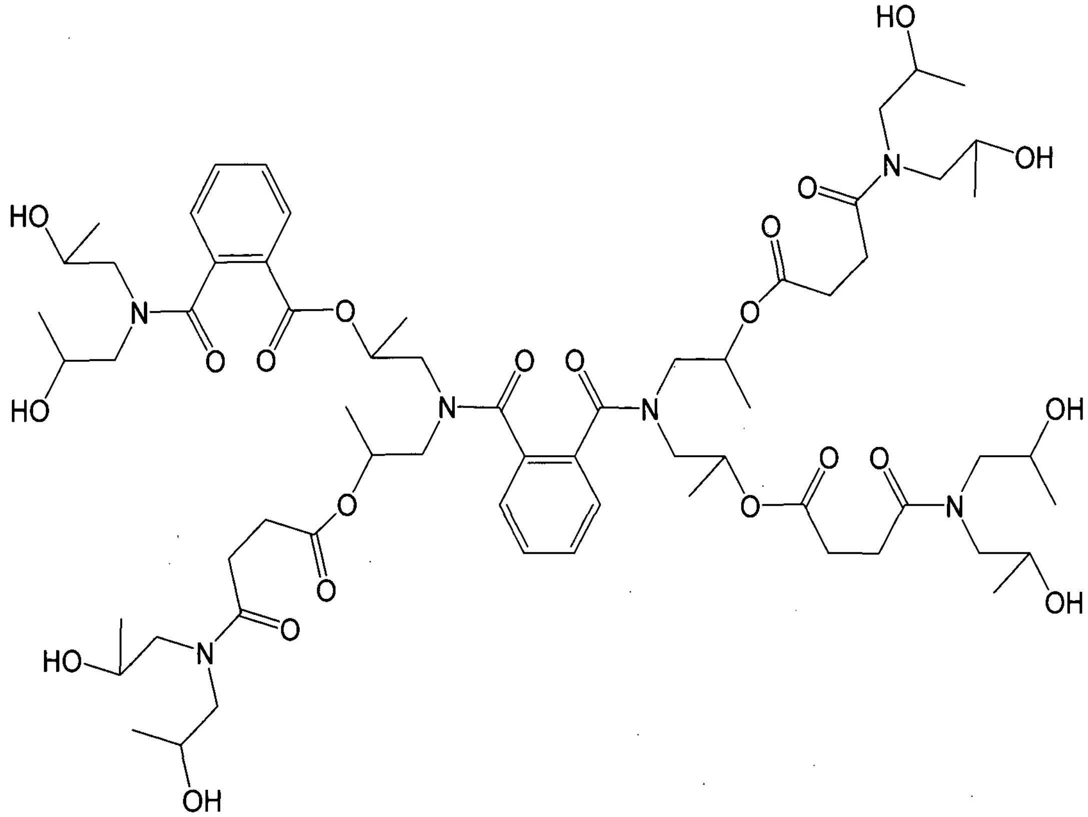

P7 eine hydrierte P6-Struktur mit einem molaren Verhältnis von Hexahydrophthalsäure zu Succinsäure von 10:90 bis 30:70, besonders bevorzugt 20:80 P8 ein hyperverzweigtes Polypropylenimin- oder Polypropylenimindendrimer Dendrimere der nachfolgenden Struktur ist

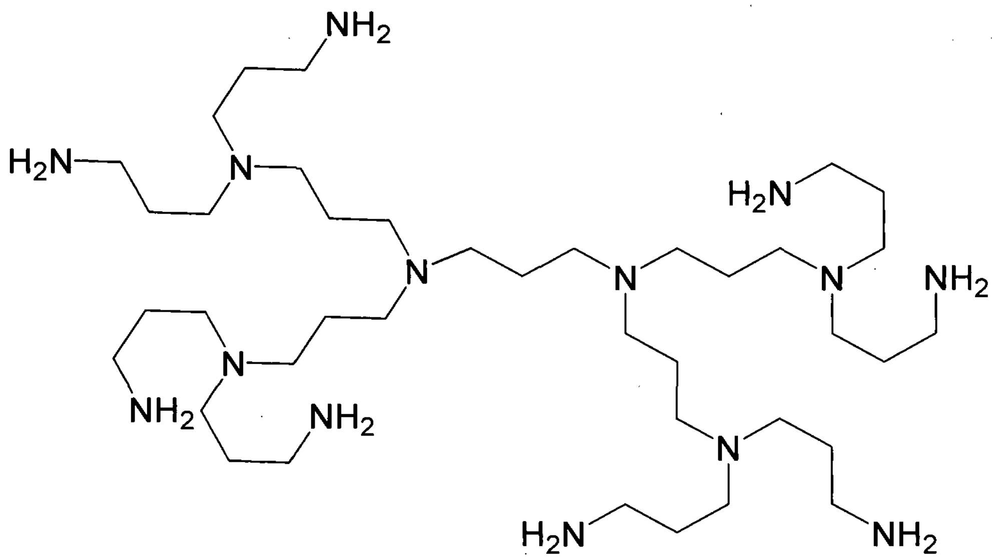

und P9 ein hyperverzweigter Polyester der nachfolgenden Struktur ist

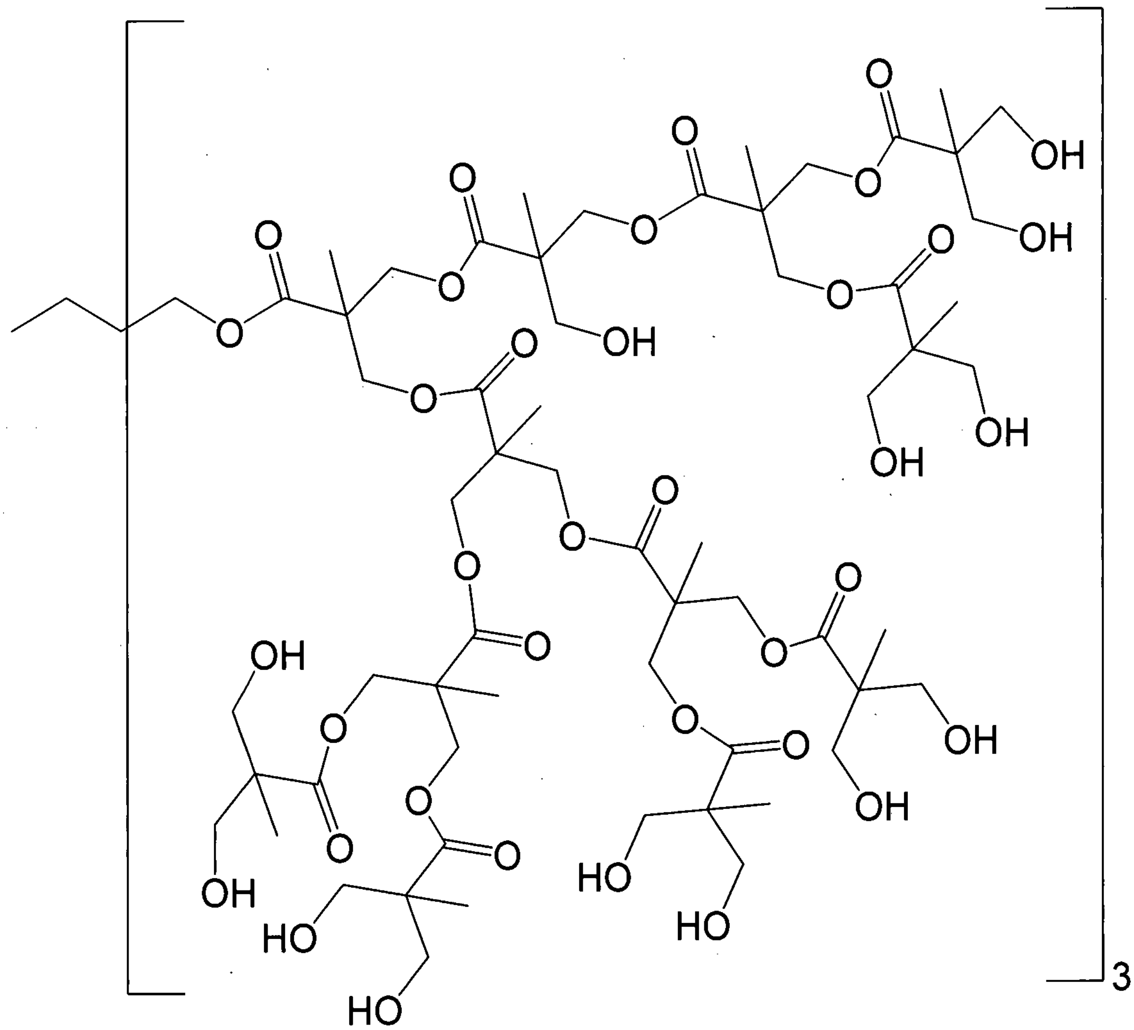

RAE1 eine einwertige redoxaktive Gruppe bedeutet,

LI1, LI2 und LI3 unabhängig voneinander kovalente Bindungen zwischen Atomen von PG1 und RAE1, PG2 und COM1 oder PG3 und COM2 bedeuten oder zweiwertige organische Brückengruppen ausgewählt aus den nachstehend definierten Resten L1 bis L26 sind,

COM1 und COM2 unabhängig voneinander Wasserstoff, Hydroxyl, eine Aminogruppe, eine Sulfonsäuregruppe oder unterschiedliche einwertige organische Seitengruppen sind, die ausgewählt sind aus den Resten der Alkylgruppe bis zu 20 Kohlenstoffatomen, der Carboxylgruppe, der Alkylaminogruppe mit bis zu 20 Kohlenstoffatomen im Alkylrest, der Dialkylaminogruppe mit bis zu 20 Kohlenstoffatomen in den Alkylresten, der Carbonsäureamidgruppe, der N-Alkylcarbonsäureamidgruppe mit bis zu 20 Kohlenstoffatomen im Alkylrest, der N,N-Dialkylcarbonsäureamidgruppe mit bis zu 20 Kohlenstoffatomen in den Alkylresten, oder die sich ableiten von Acrylsäure, Methacrylsäure, Alkylacrylaten, Alkylmethacrylaten, Oligoethylenglycolacrylaten und -methacrylaten, Styrol, Styrolsulfonat und dessen Salzen, (Vinylbenzyl)trimethylammoniumchlorid und vergleichbaren Salzen, Butadien, Isopren, Ethylenoxid, Propylenoxid, Vinylmethylether, Vinylethylether, Thiophen, 3-Hexylthiophen, 3,4-Ethylendioxythiophen und Pyrrol,

RAE2 eine zweiwertige redoxaktive Gruppe bedeutet,

LI4 eine kovalente Bindung zwischen Atomen zweier RAE2 Gruppen oder zwischen Atomen von RAE2 und PG4 bedeutet oder eine zweiwertige organische Brückengruppe ausgewählt aus den nachstehend definierten Resten L1 bis L26 ist,

LI5 eine kovalente Bindung zwischen Atomen zweiter PG4 Gruppen oder zwischen Atomen von RAE2 und PG4 bedeutet oder eine zweiwertige organische Brückengruppe ausgewählt aus den nachstehend definierten Resten L1 bis L26 ist

die Reste der Formeln L1 bis L26 folgende Bedeutung haben

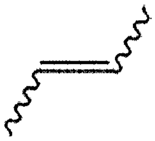
L1

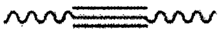
L2

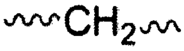
L3

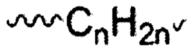
(Alkylketten bis $C_{20}$) L4

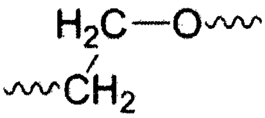
L5

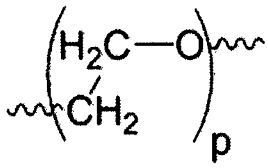
p = 2-10

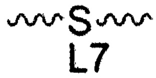
L7

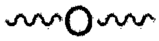
L8

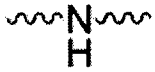
L9

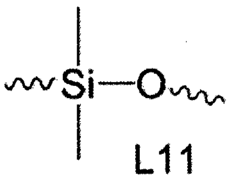
L11

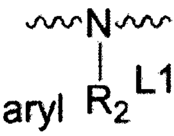
L10

$R_2$ = alkyl bis $C_{10}$ und aryl

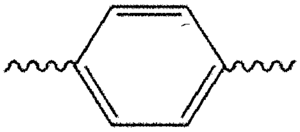
L12

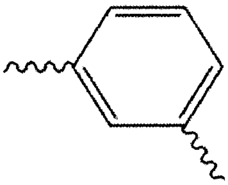
L13

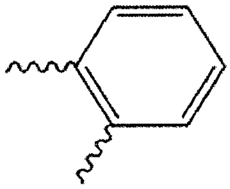
L14

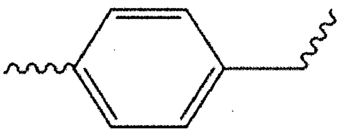
L15

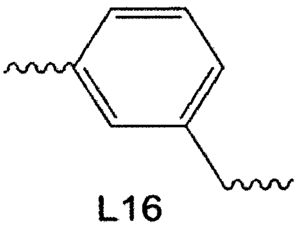
L16

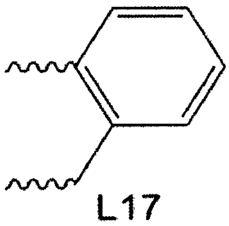
L17

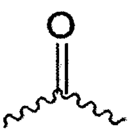
L18

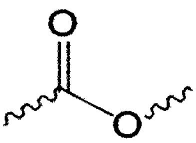
L19

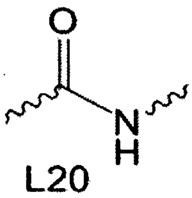
L20

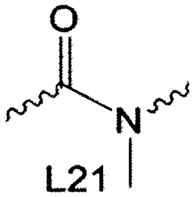
L21

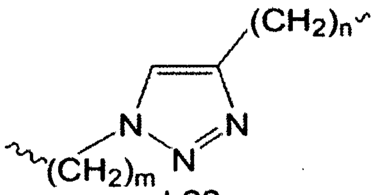

L22
n, m = 0-15 (Alkylketten)

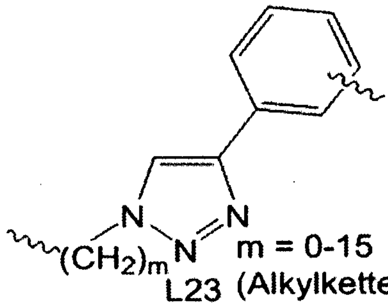

ortho, meta, para
m = 0-15
L23 (Alkylketten)

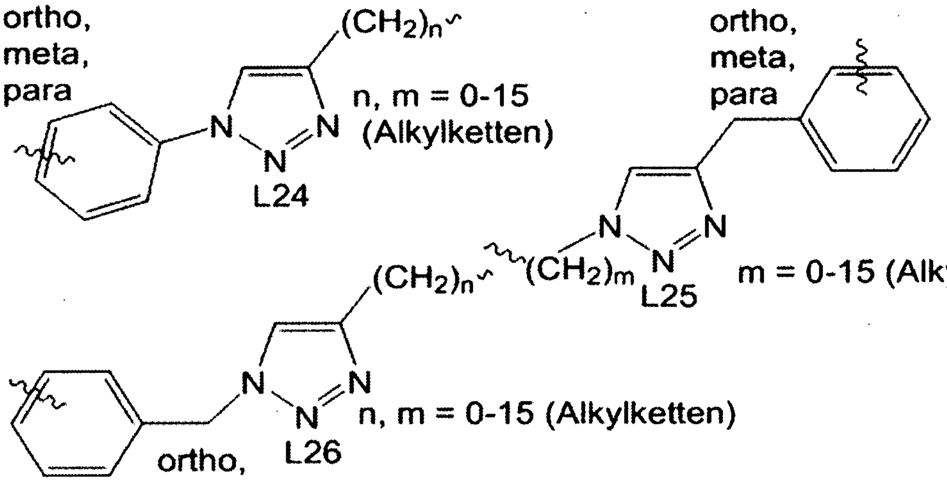

ortho, meta, para
n, m = 0-15 (Alkylketten)
L24

ortho, meta, para
L25 m = 0-15 (Alkylketten)

n, m = 0-15 (Alkylketten)
L26
ortho, meta, para

worin die gewellten Bindungen die Verbindungen zu den Gruppen PG1 und RAE1, PG2 und COM1, PG3 und COM2, PG4 und RAE2 und zwei RAE2 Gruppen bedeuten,
x eine ganze Zahl von >=1,
y eine ganze Zahl von >=0,
z eine ganze Zahl von >=0,
a eine ganze Zahl von >=1, und
b eine ganze Zahl von >= 0, und die Potentialdifferenz zwischen den jeweils im Anolyten und Katholyten ablaufenden Redoxreaktionen der redoxaktiven Komponenten zwischen größer als 0 und 4,0 V liegt, mit der Maßgabe, dass Poly(4, 4'-bipyridin-co-poly(ethylenglykol) als redoxaktive Komponente im Anolyten ausgeschlossen ist.

2. Redox-Flow Zelle nach Anspruch 1, **dadurch gekennzeichnet, dass** diese im Elektrolytlösungsmittel darin gelöste Leitsalze und/oder weitere Additive enthält.

3. Redox-Flow-Zelle nach Anspruch 1, **dadurch gekennzeichnet, dass** COM1 und COM2 unabhängig voneinander aufgebaut sind aus Monomeren der Formeln CM1 bis CM9 und/oder CM15 bis CM27

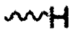
CM1

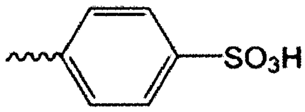
CM5

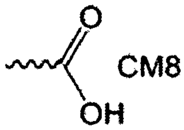
CM8

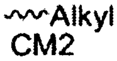
CM2

Alkyl bis $C_{20}$

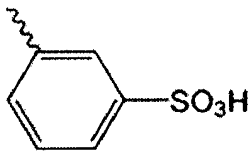
CM6

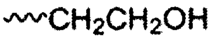
CM3

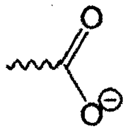
CM9

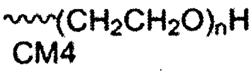
CM4

n = 2-20

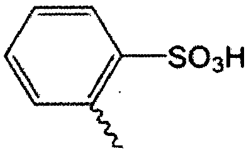
CM7

(mit Gegenion, wie z.B. Na+, K+, Ammoniumsalze, Alkylammoniumsalze)

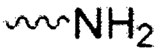
CM15

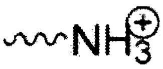
CM16

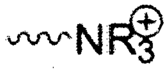
CM17

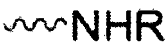
CM18

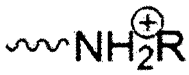
CM19

R= Alkyl bis $C_{20}$

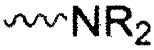
CM20

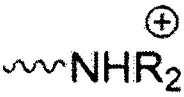
CM21

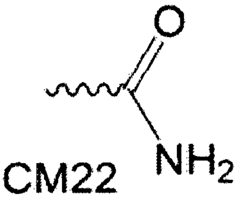
CM22

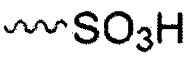
CM25

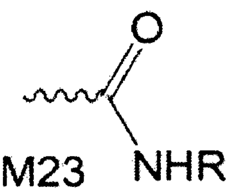
CM23

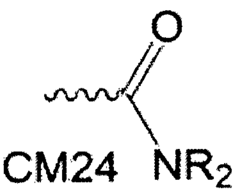
CM24

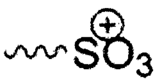
CM26

(mit Gegenion, wie z.B. Na+, K+, Ammoniumsalze, Alkylammoniumsalze)

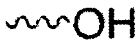
CM27

worin die gewellten Bindungen die Verbindungen zu den Gruppen LI1 oder LI2 bedeuten.

4. Redox-Flow-Zelle nach einem der Ansprüche 1 bis 3, **dadurch gekennzeichnet, dass** RAE1 und RAE2 unabhängig

voneinander ausgewählt sind aus den Resten der Formeln RE1 bis RE6, wobei
Reste der Formel RE1 substituierte 4,4'-Bipyridine oder deren Derivate entsprechend folgender Struktur bedeuten:

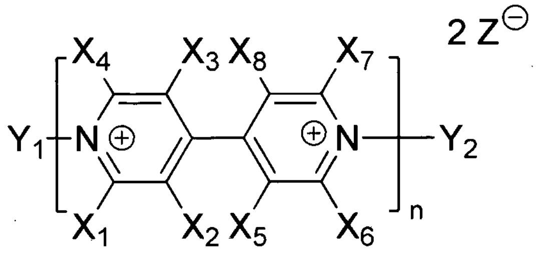

Reste der Formel RE2 Chinone oder deren Derivate entsprechend folgender Strukturen bedeuten:

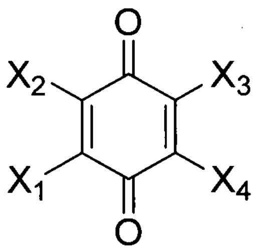

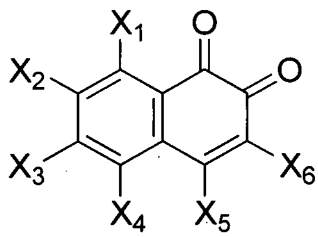

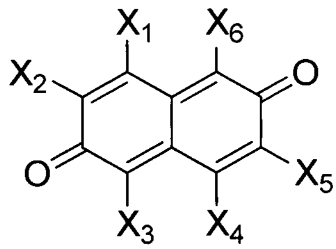

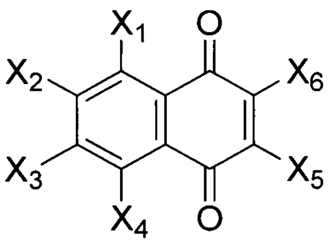

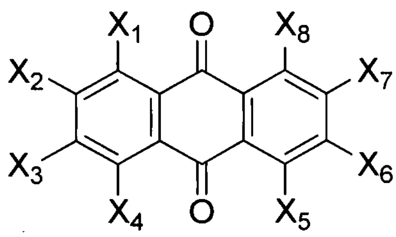

Reste der Formel RE3 Verdazyl-Radikale oder deren Derivate entsprechend folgender Struktur bedeuten:

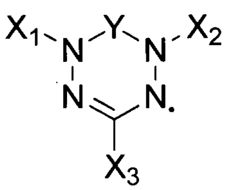

Reste der Formel RE4 Nitroxylnitroxid-Radikale oder deren Derivate entsprechend folgender Struktur bedeuten:

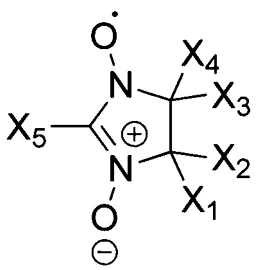

Reste der Formel RE5 Nitroxid-Radikale oder deren Derivate entsprechend folgender Struktur bedeuten:

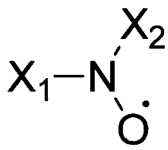

Reste der Formel RE6 Bordipyrromethene oder deren Derivate entsprechend folgender Struktur bedeuten:

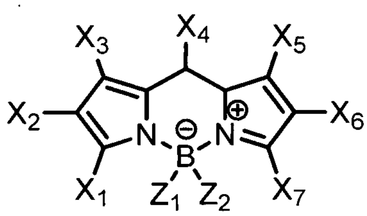

worin in diesen Resten RE1 bis RE6

$X_1$, $X_2$, $X_3$, $X_4$, $X_5$, $X_6$, $X_7$ und $X_8$ in den Resten RE1 und RE2 unabhängig voneinander Wasserstoffatome, Alkylgruppen, Alkenylgruppen, Alkinylgruppen, Alkylthiogruppen, Monoalkylaminogruppen, Dialkylaminogruppen, Haloalkylgruppen, Haloalkoxygruppen, Alkylcarbonylgruppen, Alkenylcarbonylgruppen, Alkinylcarbonylgruppen, Alkylcarbonsäureestergruppen, Alkenylcarbonsäureestergruppen, Alkinylcarbonsäureestergruppen, Alkoxygruppen, Cycloalkylgruppen, Cycloalkoxygruppen, Arylgruppen, Heteroarylgruppen, Aryloxylgruppen, Aralkylgruppen, Halogenatome, Cyanogruppen und/oder Nitrogruppen sind, mit der Massgabe, dass eine oder zwei der Bindungsstellen $X_1$, $X_2$, $X_3$, $X_4$, $X_5$, $X_6$, $X_7$ und $X_8$ an eine der Gruppen LI1, LI4, LI5 oder PG1 gebunden sind,
$X_1$, $X_2$ und $X_3$ im Rest RE3 eine der für $X_1$ bis $X_8$ im Rest RE1 oder RE2 definierten Bedeutungen annimmt,
$X_1$, $X_2$, $X_3$, $X_4$ und $X_5$ im Rest RE4 eine der für $X_1$ bis $X_8$ im Rest RE1 oder RE2 definierten Bedeutungen annimmt,
$X_1$ und $X_2$ im Rest RE5 unabhängig voneinander aliphatische Gruppen, aromatische Gruppen, Hydroxygruppen, Alkoxygruppen, Aldehydgruppen, Carboxylgruppen, Alkoxycarbonylgruppen, Cyanogruppen, Aminogruppen, Nitrogruppen, Nitrosogruppen, Halogenatomen oder Wasserstoff sind, wobei $X_1$ und $X_2$ als aliphatische Gruppe gesättigt und ungesättigt, substituiert oder nichtsubstituiert, gerade, zyklisch oder verzweigt ist, und diese aliphatische Gruppe mindestens ein Sauerstoff-, Stickstoff-, Schwefel-, Silizium-, Phosphor-, Bor- oder Halogenatom enthalten kann, wobei $X_1$ und $X_2$ als aromatische Gruppe substituiert oder nicht substituiert sein kann und diese aromatische Gruppe mindestens ein Sauerstoff-, Stickstoff-, Schwefel-, Silizium-, Phosphor-, Bor- oder Halogenatom enthalten kann, wobei $X_1$ und $X_2$ als Hydroxylgruppe ein Salz mit einem Metallatom bilden kann, wobei $X_1$ und $X_2$ als Alkoxy-, Aldehyd-, Carboxyl-, Alkoxylcarbonyl-, Cyano-, Amino-, Nitro- oder Nitrosogruppe diese Gruppen substituiert oder nicht substituiert sein können und diese Gruppen mindestens ein Sauerstoff-, Stickstoff-, Silizium-, Phosphor-, Bor- oder Halogenatom aufweisen können, wobei $X_1$ und $X_2$ gleich oder verschieden sein können und wobei $X_1$ und $X_2$ zusammen einen Ring bilden können $X_1$, $X_2$, $X_3$, $X_4$, $X_5$, $X_6$, $X_7$, Z1 und Z2 im Rest RE6 unabhängig voneinander Wasserstoffatome, Alkylgruppen, Alkenylgruppen, Alkinylgruppen, Alkylthiogruppen, Monoalkylaminogruppen, Dialkylaminogruppen, Haloalkylgruppen, Haloalkoxygruppen, Alkylcarbonylgruppen, Alkenylcarbonylgruppen, Alkinylcarbonylgruppen, Alkylcarbonsäureestergruppen, Alkenylcarbonsäureestergruppen, Alkinylcarbonsäureestergruppen, Alkoxygruppen, Cycloalkylgruppen, Cycloalkoxygruppen, Arylgruppen, Heteroarylgruppen, Aryloxylgruppen, Aralkylgruppen, Halogenatome, Cyanogruppen, Sulfonatgruppen und/oder Nitrogruppen sind, mit der Massgabe, dass eine oder zwei der Bindungsstellen $X_1$, $X_2$, $X_3$, $X_4$, $X_5$, $X_6$ und $X_7$ an eine der Gruppen LI1, LI4, LI5 oder PG1 gebunden sind,
$Y_1$ und $Y_2$ mehrere substituierte 4,4'-Bipyridin-Einheiten miteinander verbrücken können, wobei n Werte zwischen eins und hunderttausend, bevorzugt zwischen eins und hundert, besonders bevorzugt zwischen eins und fünf, annimmt, oder die Substituenten $Y_1$ und $Y_2$ unabhängig voneinander Wasserstoff, Alkylgruppen, Alkenylgruppen, Alkinylgruppen, Alkylthiogruppen, Monoalkylaminogruppen, Dialkylaminogruppen, Haloalkylgruppen, Haloalkoxygruppen, Alkylcarbonylgruppen, Alkenylcarbonylgruppen, Alkinylcarbonylgruppen, Alkylcarbonsäureestergruppen, Alkenylcarbonsäureestergruppen, Alkinylcarbonsäureestergruppen, Alkoxygruppen, Cycloalkylgruppen, Cycloalkoxygruppen, Arylgruppen, Heteroarylgruppen, Aryloxylgruppen und/oder Aralkylgruppen sind, besonders bevorzugt Alkylgruppen, Alkenylgruppen, Alkinylgruppen, Alkoxygruppen, Cycloalkoxygruppen, Arylgruppen, Heteroarylgruppen, Aryloxylgruppen und/oder Aralkylgruppen, und ganz besonders bevorzugt Alkylgruppen, Alkoxygruppen, Cycloalkoxygruppen, Arylgruppen, Heteroarylgruppen und/oder Aryloxylgruppen, und

die Anionen Z ein- oder zweifach negativ geladen sind und anorganische oder organische Anionen sind, welche in einer Anzahl von 2n im Falle von einfach negativ geladenen Anionen oder in einer Anzahl von n im Falle von zweifach negativ geladenen Anionen vorliegen, und vorzugsweise ausgewählt werden aus der Gruppe der Halogenidionen, wie Fluoridionen, Chloridionen, Bromidionen, Iodidionen, oder der Hydroxidionen, der Anionen anorganischer Säuren, insbesondere Phosphationen, Sulfationen, Nitrationen, Hexafluorophosphationen, Tetrafluoroborationen, Perchlorationen, Chlorationen, Hexafluoroantimonationen, Hexafluoroarsenationen oder Cyanidionen, oder der Anionen organischer Säuren, vorzugsweise der Acetationen, Formiationen, Trifluoroessigsäureionen, Trifluormethansulfonationen, Pentafluorethansulfonationen, Nonofluorbutan-sulfonationen, Butyrationen, Citrationen, Fumarationen, Glutarationen, Lactationen, Malationen, Malonationen, Oxalationen, Pyruvationen, Tartrationen, und besonders bevorzugt ausgewählt aus der Gruppe der Halogenidionen, Hydroxidionen, Phosphationen, Sulfationen, Perchlorationen, Hexafluorophosphationen und Tetrafluoroborationen.

5. Redox-Flow-Zelle nach Anspruch 4, **dadurch gekennzeichnet, dass** RE5 ausgewählt wird aus den Resten Piperidinoxyl-Ringstruktur entsprechend folgender Formel:

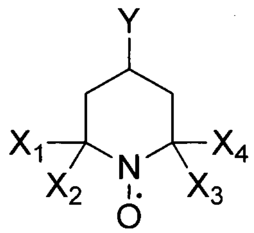

Pyrrolidinoxyl-Ringstruktur entsprechend folgender Formel:

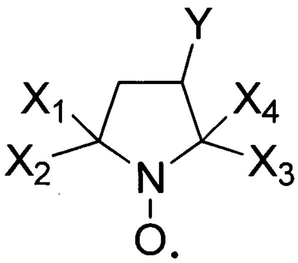

Pyrrolinoxyl-Ringstruktur entsprechend folgender Formel:

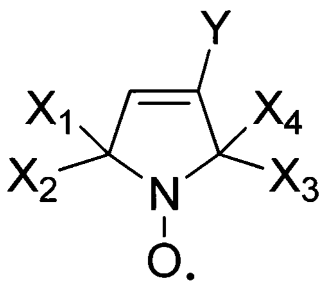

unsymmetrisch substituiertes Nitroxid-Radikal entsprechend folgender Formel:

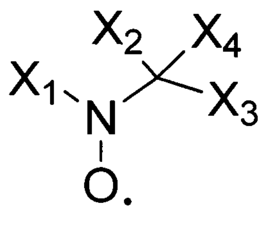

unsymmetrisch substituiertes Nitroxid-Radikal entsprechend folgender Formel:

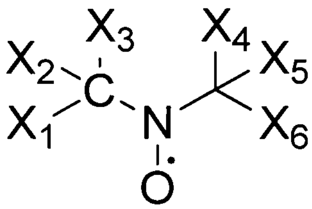

wobei $X_1$, $X_2$, $X_3$ und $X_4$ und Y unabhängig voneinander Wasserstoffatome, Alkylgruppen, Alkenylgruppen, Alkinylgruppen, Alkylthiogruppen, Monoalkylaminogruppen, Dialkylaminogruppen, Haloalkylgruppen, Haloalkoxygruppen, Alkylcarbonylgruppen, Alkenylcarbonylgruppen, Alkinylcarbonylgruppen, Alkylcarbonsäureestergruppen, Alkenylcarbonsäureestergruppen, Alkinylcarbonsäureestergruppen, Alkoxygruppen, Cycloalkylgruppen, Cycloalkoxygruppen, Arylgruppen, Heteroarylgruppen, Aryloxylgruppen, Aralkylgruppen, Halogenatome, Cyanogruppen und/oder Nitrogruppen sind, bevorzugt Wasserstoffatome, Halogenatome, Alkylgruppen, Alkoxygruppen, Cyanogruppen und/oder Nitrogruppen, mit der Massgabe, dass eine oder zwei der Bindungsstellen $X_1$, $X_2$, $X_3$, $X_4$ und Y an eine der Gruppen LI1, LI4, LI5 oder PG1 gebunden sind.

6. Redox-Flow-Zelle nach einem der Ansprüche 1 bis 5, **dadurch gekennzeichnet, dass** die redoxaktive Komponente die Struktureinheit der Formel I enthält, welche sich ableitet von folgenden Monomerkombinationen:

PG1 ist aufgebaut aus einer der Monomereinheiten M1, M2, M4 oder M5 gemäß Anspruch 1, LI1 ist eine der Gruppen L1 bis L6, L8 oder L11 bis L26 gemäß Anspruch 1 und RAE1 ist eine der Gruppen RE1 bis RE6 gemäß Anspruch 4; oder
PG1 ist aufgebaut aus der Monomereinheit M3 gemäß Anspruch 1, LI1 ist eine der Gruppen L3 bis L6, L12 bis L17 oder L22 bis L26 gemäß Anspruch 1 und RAE1 ist eine der Gruppen RE1 bis RE6 gemäß Anspruch 4; oder
PG1 ist aufgebaut aus einer der Monomereinheiten M6 oder M7 gemäß Anspruch 1, LI1 ist eine der Gruppen L3 bis L6, L12 bis L17 oder L22 bis L26 gemäß Anspruch 1 und RAE1 ist eine der Gruppen RE1 bis RE6 gemäß Anspruch 4; oder
PG1 ist aufgebaut aus einer der Monomereinheiten M8 oder M9 gemäß Anspruch 1, LI1 ist eine der Gruppen L3 bis L6, L12 bis L17 oder L22 bis L26 gemäß Anspruch 1 und RAE1 ist eine der Gruppen RE1 bis RE6 gemäß Anspruch 4; oder
PG1 ist aufgebaut aus der Monomereinheit M10 gemäß Anspruch 1, LI1 ist eine der Gruppen L3 bis L6, L12 bis L17 oder L22 bis L26 gemäß Anspruch 1 und RAE1 ist eine der Gruppen RE1 bis RE6 gemäß Anspruch 4; oder
PG1 ist aufgebaut aus der Monomereinheit M11 gemäß Anspruch 1, LI1 ist eine der Gruppen L3 bis L6, L12 bis L17 oder L22 bis L26 gemäß Anspruch 1 und RAE1 ist eine der Gruppen RE1 bis RE6 gemäß Anspruch 4; oder
PG1 ist aufgebaut aus einer der Monomereinheiten M12 oder M13 gemäß Anspruch 1, LI1 ist eine der Gruppen L2 bis L3, L12 bis L17 oder L22 bis L26 gemäß Anspruch 1 und RAE1 ist eine der Gruppen RE1 bis RE6 gemäß Anspruch 4; oder
PG1 ist aufgebaut aus einer der Monomereinheiten M14 bis M19 gemäß Anspruch 1, LI1 ist eine der Gruppen L1 bis L26 gemäß Anspruch 1 und
RAE1 ist eine der Gruppen RE1 bis RE6 gemäß Anspruch 4; oder
PG1 ist aufgebaut aus der Monomereinheit M20 gemäß Anspruch 1, LI1 ist eine der Gruppen L3 bis L6, L12 bis L17 oder L22 bis L26 gemäß Anspruch 1 und RAE1 ist eine der Gruppen RE1 bis RE6 gemäß Anspruch 4; oder
PG1 ist aufgebaut aus der Monomereinheit M21 gemäß Anspruch 1, LI1 ist eine der Gruppen L3 bis L6, L11 bis L17 oder L22 bis L26 gemäß Anspruch 1 und RAE1 ist eine der Gruppen RE1 bis RE6 gemäß Anspruch 4; oder
PG1 ist aufgebaut aus der Monomereinheit M22 gemäß Anspruch 1, LI1 ist eine der Gruppen L3 bis L4, L12 bis L17 oder L22 bis L26 gemäß Anspruch 1 und RAE1 ist eine der Gruppen RE1 bis RE6 gemäß Anspruch 4; oder
PG1 ist aufgebaut aus der Monomereinheit M23 gemäß Anspruch 1, LI1 ist eine der Gruppen L3 bis L4, L12 bis L17 oder L22 bis L26 gemäß Anspruch 1 und RAE1 ist eine der Gruppen RE1 bis RE5 gemäß Anspruch 4; oder
PG1 ist aufgebaut aus einer der Monomereinheiten M24 oder M25 gemäß Anspruch 1, LI1 ist eine der Gruppen L3 bis L4, L12 bis L17 oder L22 bis L26 gemäß Anspruch 1 und RAE1 ist eine der Gruppen RE1 bis RE6 gemäß Anspruch 4; oder
PG1 ist aufgebaut aus einer der Monomereinheiten M26 oder M27 gemäß Anspruch 1, LI1 ist eine der Gruppen L3 bis L4 gemäß Anspruch 1 und RAE1 ist eine der Gruppen RE1 bis RE6 gemäß Anspruch 4; oder
PG1 ist aufgebaut aus einer der Monomereinheiten M28 bis M33 gemäß Anspruch 1, LI1 ist eine der Gruppen L3 bis L4 oder L11 bis L17 gemäß Anspruch 1 und RAE1 ist eine der Gruppen RE1 bis RE6 gemäß Anspruch 4;

oder
PG1 ist aufgebaut aus einer der Monomereinheiten M34 oder M35 gemäß Anspruch 1, LI1 ist eine der Gruppen L3 bis L6, L8, L10 oder L12 bis L26 gemäß Anspruch 1 und RAE1 ist eine der Gruppen RE1 bis RE6 gemäß Anspruch 4; oder
PG1 ist aufgebaut aus einer der Monomereinheiten M36 bis M43 gemäß Anspruch 1, LI1 ist eine der Gruppen L3 bis L6, L8, L10 oder L12 bis L26 gemäß Anspruch 1 und RAE1 ist eine der Gruppen RE1 bis RE6 gemäß Anspruch 4; oder
PG1 ist aufgebaut aus der Monomereinheit M44 gemäß Anspruch 1, LI1 ist eine der Gruppen L3 bis L6, L12 bis L17 oder L22 bis L26 gemäß Anspruch 1 und RAE1 ist eine der Gruppen RE1 bis RE6 gemäß Anspruch 4; oder
PG1 ist aufgebaut aus einer der Monomereinheiten M45 bis M49 gemäß Anspruch 1, LI1 ist eine der Gruppen L1 bis L6, L8, L10, L12 bis L17 oder L19 bis L26 gemäß Anspruch 1 und RAE1 ist eine der Gruppen RE1 bis RE6 gemäß Anspruch 4; oder
PG1 ist aufgebaut aus einer der Monomereinheiten M50 bis M59 gemäß Anspruch 1, LI1 ist eine der Gruppen L3 bis L4, L8 bis L10, L12 bis L17 oder L19 bis L26 gemäß Anspruch 1 und RAE1 ist eine der Gruppen RE1 bis RE6 gemäß Anspruch 4.

**7.** Redox-Flow-Zelle nach einem der Ansprüche 1 bis 6, **dadurch gekennzeichnet, dass** die redoxaktive Komponente die Struktureinheiten der Formel I und II enthält, wobei die Struktureinheiten der Formel II sich ableiten von folgenden Monomerkombinationen:

PG2 ist aufgebaut aus einer der Monomereinheiten M1, M2, M3 oder M5 gemäß Anspruch 1, LI2 ist eine kovalente Bindung oder eine der Gruppen L3 oder L4 gemäß Anspruch 1 und COM1 ist einer der Reste CM1 bis CM4 gemäß Anspruch 3; oder
PG2 ist aufgebaut aus einer der Monomereinheiten M1, M2, M3 oder M5 gemäß Anspruch 1, LI2 ist eine der Gruppen L19 bis L21 gemäß Anspruch 1 und COM1 ist einer der Reste CM1 bis CM4 oder CM15 bis CM17 gemäß Anspruch 3; oder
PG2 ist aufgebaut aus einer der Monomereinheiten M1, M2, M3 oder M5 gemäß Anspruch 1, LI2 ist eine kovalente Bindung und COM1 ist einer der Reste CM8 bis CM9 oder CM22 bis CM24 gemäß Anspruch 3; oder
PG2 ist aufgebaut aus der Monomereinheit M3 gemäß Anspruch 1, LI2 ist eine kovalente Bindung oder eine der Gruppen L3 bis L6 gemäß Anspruch 1 und COM1 ist einer der Reste CM1 bis CM9 oder CM15 bis CM24 gemäß Anspruch 3; oder
PG2 ist aufgebaut aus der Monomereinheit M3 gemäß Anspruch 1, LI2 ist eine der Gruppen L12 bis L14 gemäß Anspruch 1 und COM1 ist einer der Reste CM8 bis CM9 oder CM15 bis CM24 gemäß Anspruch 3; oder
PG2 ist aufgebaut aus einer der Monomereinheiten M6 oder M7 gemäß Anspruch 1, LI2 ist eine kovalente Bindung und COM1 ist einer der Reste CM1 bis CM4 gemäß Anspruch 3; oder
PG2 ist aufgebaut aus einer der Monomereinheiten M6 oder M7 gemäß Anspruch 1, LI2 ist eine der Gruppen L3 oder L4 gemäß Anspruch 1 und COM1 ist einer der Reste CM1 bis CM4, CM8 bis CM9 oder CM15 bis CM24 gemäß Anspruch 3; oder
PG2 ist aufgebaut aus einer der Monomereinheiten M8 oder M9 gemäß Anspruch 1, LI2 ist eine kovalente Bindung und COM1 ist einer der Reste CM1 bis CM4 gemäß Anspruch 3; oder
PG2 ist aufgebaut aus einer der Monomereinheiten M8 oder M9 gemäß Anspruch 1, LI2 ist eine der Gruppen L3 oder L4 gemäß Anspruch 1 und COM1 ist einer der Reste CM1 bis CM4, CM8 bis CM9 oder CM15 bis CM24 gemäß Anspruch 3; oder
PG2 ist aufgebaut aus einer der Monomereinheiten M6 bis M9 gemäß Anspruch 1, LI2 ist eine der Gruppen L22 bis L26 gemäß Anspruch 1 und COM1 ist einer der Reste CM1 bis CM4, CM8 bis CM9 oder CM15 bis CM27 gemäß Anspruch 3; oder
PG2 ist aufgebaut aus der Monomereinheit M10 gemäß Anspruch 1, LI2 ist eine kovalente Bindung und COM1 ist einer der Reste CM1 bis CM4 gemäß Anspruch 3; oder
PG2 ist aufgebaut aus der Monomereinheit M10 gemäß Anspruch 1, LI2 ist eine der Gruppen L3 oder L4 gemäß Anspruch 1 und COM1 ist einer der Reste CM1 bis CM4 gemäß Anspruch 3; oder
PG2 ist aufgebaut aus der Monomereinheit M11 gemäß Anspruch 1, LI2 ist eine der Gruppen L3 oder L4 gemäß Anspruch 1 und COM1 ist einer der Reste CM1 bis CM4 gemäß Anspruch 3; oder
PG2 ist aufgebaut aus einer der Monomereinheiten M12 oder M13 gemäß Anspruch 1, LI2 ist eine kovalente Bindung und COM1 ist ein Rest CM1 gemäß Anspruch 3; oder
PG2 ist aufgebaut aus einer der Monomereinheiten M12 oder M13 gemäß Anspruch 1, LI2 ist eine der Gruppen L3 oder L4 gemäß Anspruch 1 und COM1 ist einer der Reste CM1 bis CM4 gemäß Anspruch 3; oder
PG2 ist aufgebaut aus einer der Monomereinheiten M12 oder M13 gemäß Anspruch 1, LI2 ist eine kovalente Bindung und COM1 ist ein Rest CM1 gemäß Anspruch 3; oder

PG2 ist aufgebaut aus einer der Monomereinheiten M14 oder M17 gemäß Anspruch 1, LI2 ist eine kovalente Bindung und COM1 ist ein Rest CM1 gemäß Anspruch 3; oder
PG2 ist aufgebaut aus einer der Monomereinheiten M14 bis M19 gemäß Anspruch 1, LI2 ist eine kovalente Bindung und COM1 ist einer der Reste CM8 bis CM9 oder CM15 bis CM26 gemäß Anspruch 3; oder
PG2 ist aufgebaut aus einer der Monomereinheiten M14 bis M19 gemäß Anspruch 1, LI2 ist die Gruppe L3 gemäß Anspruch 1 und COM1 ist einer der Reste CM15 bis CM21 oder CM27 gemäß Anspruch 3; oder
PG2 ist aufgebaut aus einer der Monomereinheiten M14 bis M19 gemäß Anspruch 1, LI2 ist die Gruppe L22 gemäß Anspruch 1 und COM1 ist einer der Reste CM1 bis CM4, CM8 bis CM9 oder CM15 bis CM27 gemäß Anspruch 3; oder
PG2 ist aufgebaut aus der Monomereinheit M20 gemäß Anspruch 1, LI2 ist eine kovalente Bindung oder eine der Gruppen L3 bis L4 gemäß Anspruch 1 und COM1 ist einer der Reste CM1 bis CM4 gemäß Anspruch 3; oder
PG2 ist aufgebaut aus der Monomereinheit M20 gemäß Anspruch 1, LI2 ist eine der Gruppen L12 bis L14 gemäß Anspruch 1 und COM1 ist einer der Reste CM1 bis CM2, CM8 bis CM9 oder CM15 bis CM27 gemäß Anspruch 3; oder
PG2 ist aufgebaut aus der Monomereinheit M21 gemäß Anspruch 1, LI2 ist eine kovalente Bindung und COM1 ist einer der Reste CM1 bis CM4 gemäß Anspruch 3; oder
PG2 ist aufgebaut aus der Monomereinheit M21 gemäß Anspruch 1, LI2 ist die Gruppe L12 gemäß Anspruch 1 und COM1 ist ein Rest CM1 gemäß Anspruch 3; oder
PG2 ist aufgebaut aus der Monomereinheit M22 gemäß Anspruch 1, LI2 ist eine kovalente Bindung und COM1 ist einer der Reste CM1 bis CM4 gemäß Anspruch 3; oder
PG2 ist aufgebaut aus der Monomereinheit M22 gemäß Anspruch 1, LI2 ist die Gruppen L12 gemäß Anspruch 1 und COM1 ist ein Rest CM1 gemäß Anspruch 3; oder
PG2 ist aufgebaut aus der Monomereinheit M23 gemäß Anspruch 1, LI2 ist eine kovalente Bindung und COM1 ist ein Rest CM1 gemäß Anspruch 3; oder
PG2 ist aufgebaut aus der Monomereinheit M23 gemäß Anspruch 1, LI2 ist eine der Gruppen L12 bis L17 gemäß Anspruch 1 und COM1 ist einer der Reste CM1 bis CM9 oder CM15 bis CM21 gemäß Anspruch 3; oder
PG2 ist aufgebaut aus einer der Monomereinheiten M24 oder M25 gemäß Anspruch 1, LI2 ist eine kovalente Bindung und COM1 ist ein Rest CM2 gemäß Anspruch 3; oder
PG2 ist aufgebaut aus einer der Monomereinheiten M24 oder M25 gemäß Anspruch 1, LI2 ist eine der Gruppen L12 oder L15 bis L17 gemäß Anspruch 1 und COM1 ist einer der Reste CM1 bis CM2 gemäß Anspruch 3; oder
PG2 ist aufgebaut aus einer der Monomereinheiten M26 oder M27 gemäß Anspruch 1, LI2 ist eine kovalente Bindung und COM1 ist ein Rest CM1 gemäß Anspruch 3; oder
PG2 ist aufgebaut aus einer der Monomereinheiten M28 bis M33 gemäß Anspruch 1, LI2 ist eine Gruppe L3 gemäß Anspruch 1 und COM1 ist ein Rest CM1 gemäß Anspruch 3; oder
PG2 ist aufgebaut aus einer der Monomereinheiten M28 bis M33 gemäß Anspruch 1, LI2 ist eine Gruppe L12 gemäß Anspruch 1 und COM1 ist ein Rest CM1 gemäß Anspruch 3; oder
PG2 ist aufgebaut aus der Monomereinheit M34 gemäß Anspruch 1, LI2 ist eine kovalente Bindung und COM1 ist ein Rest CM1 gemäß Anspruch 3; oder
PG2 ist aufgebaut aus einer der Monomereinheiten M34 bis M44 gemäß Anspruch 1, LI2 ist eine kovalente Bindung und COM1 ist ein Rest CM2 gemäß Anspruch 3; oder
PG2 ist aufgebaut aus einer der Monomereinheiten M34 bis M44 gemäß Anspruch 1, LI2 ist eine kovalente Bindung oder eine der Gruppen L3 bis L4 gemäß Anspruch 1 und COM1 ist einer der Reste CM15 bis CM21 gemäß Anspruch 3; oder
PG2 ist aufgebaut aus der Monomereinheit M44 gemäß Anspruch 1, LI2 ist eine kovalente Bindung und COM1 ist einer der Reste CM5 bis CM7 gemäß Anspruch 3; oder
PG2 ist aufgebaut aus einer der Monomereinheiten M45 bis M49 gemäß Anspruch 1, LI2 ist eine kovalente Bindung und COM1 ist ein Rest CM1 gemäß Anspruch 3; oder
PG2 ist aufgebaut aus einer der Monomereinheiten M45 bis M49 gemäß Anspruch 1, LI2 ist eine kovalente Bindung und COM1 ist ein Rest CM2 gemäß Anspruch 3; oder
PG2 ist aufgebaut aus einer der Monomereinheiten M50 bis M59 gemäß Anspruch 1, LI2 ist eine kovalente Bindung und COM1 ist ein Rest CM2 gemäß Anspruch 3.

**8.** Redox-Flow-Zelle nach einem der Ansprüche 1 bis 7, **dadurch gekennzeichnet, dass** die redoxaktive Komponente mindestens eine Struktureinheit der Formel I enthält, die durch Umsetzung einer funktionalisierten Polymergrundstruktur mit einer Funktionseinheit aufgebaut aus einem funktionalisierten Rest LI1, der kovalent mit einem Rest RAE1 verbunden ist, erhalten wird, wobei die Polymergrundstrukturen die Strukturen P10 bis P21 aufweisen, wobei in Polymergrundstruktur P12 und P15 die Summe der Indizes n+m 1 beträgt und der Anteil der mit $-[]_n-$ bezeichneten Struktureinheiten, bezogen auf die mit $-[]_n-[]_m-$ bezeichneten Struktureinheiten, 0 bis 100 Gew.% beträgt

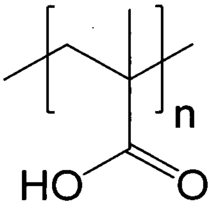
P10

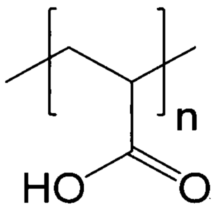
P11

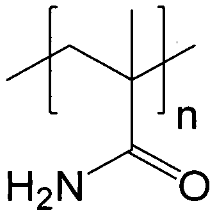
P13

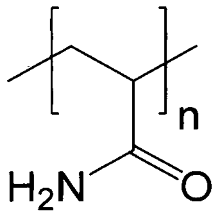
P14

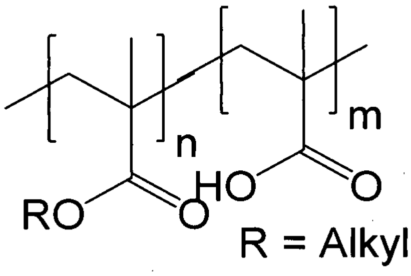
R = Alkyl bis $C_{20}$

P12

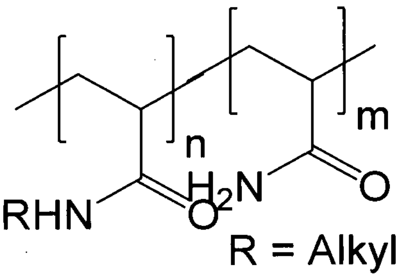
R = Alkyl bis $C_{20}$

P15

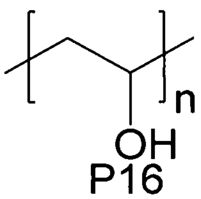
P16

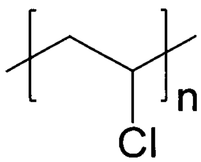
P17

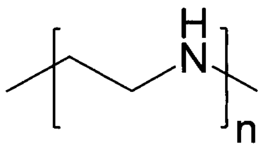
P18

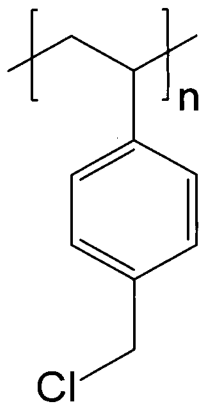
P19

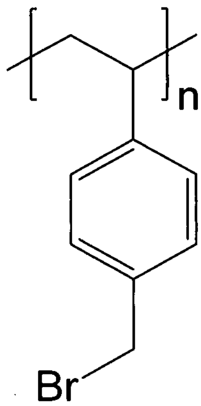
P20

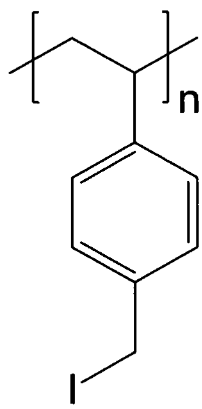
P21

und wobei die Struktur der Formel I Reste LI1 aufweist, die durch Umsetzung der funktionalisierten Reste RG1 bis RG12 an die Polymergrundstrukturen P10 bis P21 erzeugt worden sind

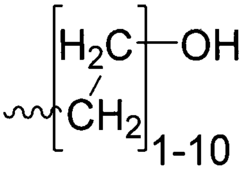
RG1

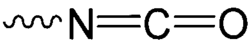
RG2

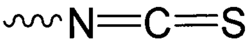
RG3

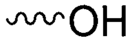
RG4

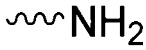
RG5

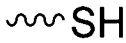
RG6

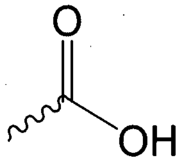
RG13

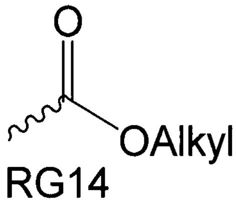
RG14

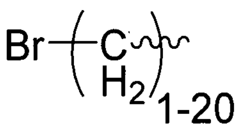
RG7

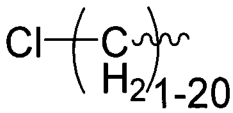
RG8

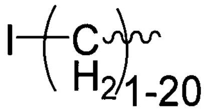
RG9

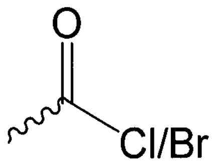
RG15

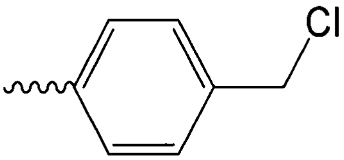
RG10 (p,m,o)

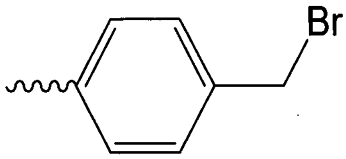
RG11 (p,m,o)

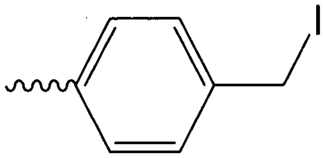
RG12 (p,m,o)

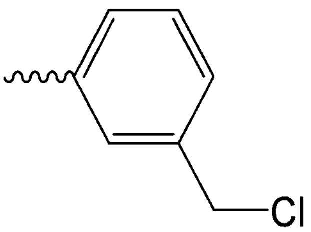

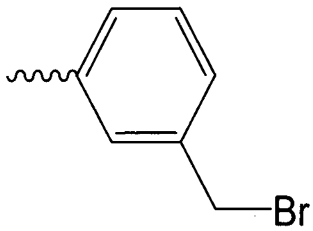

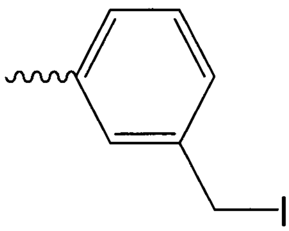

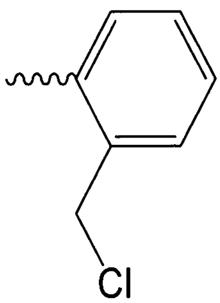

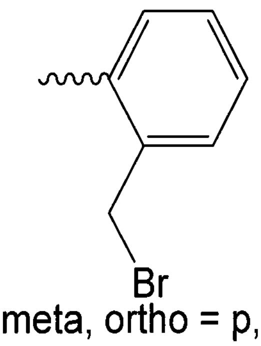

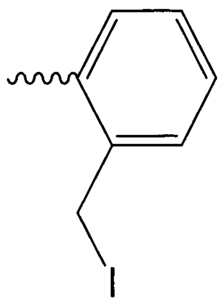

(para, meta, ortho = p,m,o)

wobei die gewellten Bindungen die kovalenten Bindungen zum Rest RAE1 bedeuten.

**9.** Redox-Flow-Zelle nach einem der Ansprüche 1 bis 8, **dadurch gekennzeichnet, dass** diese Kohlensäureester als

Elektrolyt-Lösungsmittel in Verbindung mit Oligomeren oder Polymeren enthält, die mindestens eine Art einer redoxaktiven Einheit in der Seitenkette aufweisen und die löslichkeitsvermittelnde Seitenketten bzw. -funktionalitäten tragen,

- wobei als redoxaktive Einheit N,N'-substituierte 4,4'-Bipyridine, Chinone, Anthrachinone, Verdazyl-Radikale, Bordipyrromethene, Nitroxylnitroxid-Radikale oder Nitroxid-Radikale, besonders bevorzugt das 2,2,6,6-Tetramethylpiperidine-1-oxyl-Radikal und N-Methyl-[4,4'-bipyridin]-1-iumchlorid zum Einsatz kommen und/oder
- wobei als Linker LI1, LI2, LI3, LI4 und/oder LI5 und die Reste L1 bis L26 gemäß Anspruch 1, insbesondere L3, L4, L5, L6, L8, L12 und L19 gemäß Anspruch 1 zum Einsatz kommen und/oder
- wobei als Gruppen PG1, PG2, PG3, PG4 und/oder PG5 die Reste M1 bis M59 gemäß Anspruch 3, insbesondere M1, M2, M6, M7, M8, M9, M11, M14, M21, M22, M23, M45 oder M46 zum Einsatz kommen und/oder
- wobei als Gruppen COM1 und/oder COM2 Reste CM1 bis CM9 oder CM15 bis CM27 gemäß Anspruch 4, insbesondere CM4, CM9, CM17 bis CM21 und CM 26 zum Einsatz kommen.

**10.** Redox-Flow-Zelle nach einem der Ansprüche 1 bis 9, **dadurch gekennzeichnet, dass** diese Kohlensäureester als Elektrolyt-Lösungsmittel in Verbindung mit Oligomeren oder Polymeren enthält, die mindestens eine Art einer redoxaktiven Einheit in der Seitenkette aufweisen und die löslichkeitsvermittelnde Seitenketten bzw. -funktionalitäten tragen,

- wobei als Anolyt folgende redoxaktiven Komponenten zum Einsatz kommen:

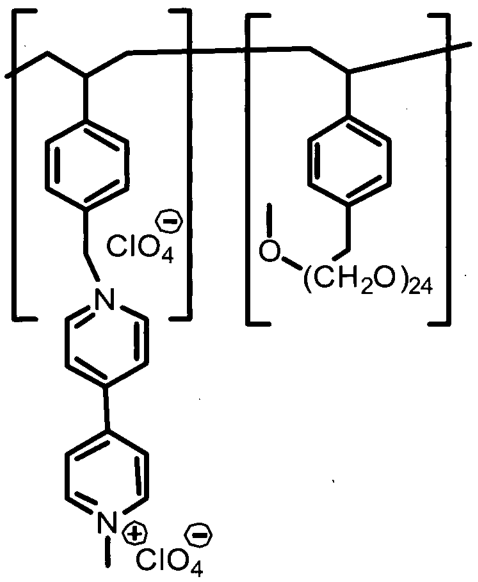

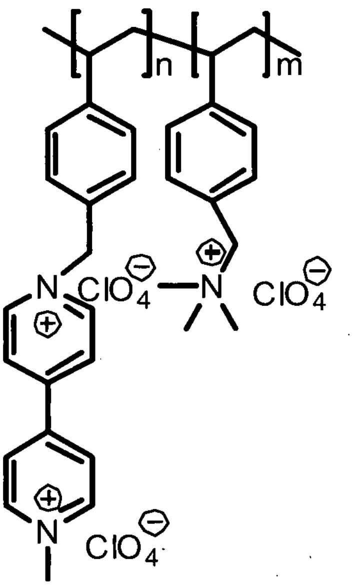

oder

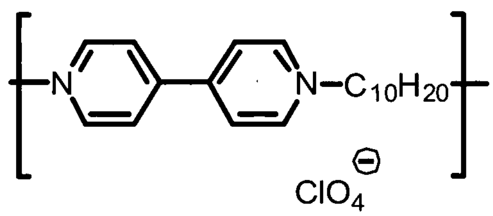

- und wobei als Katholyt folgende redoxaktiven Komponenten zum Einsatz kommen:

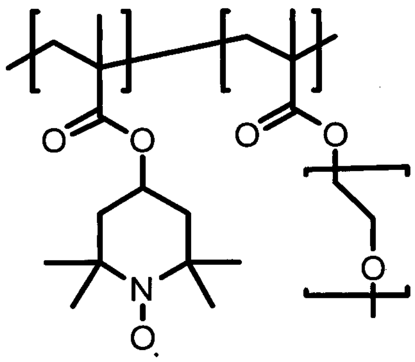

oder

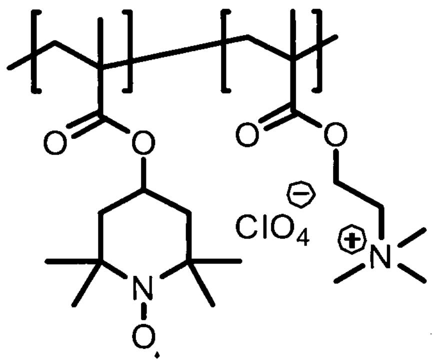

**11.** Redox-Flow-Zelle nach einem der Ansprüche 1 bis 10, **dadurch gekennzeichnet, dass** diese Wasser als Elektrolyt-Lösungsmittel enthält in Verbindung mit Oligomeren oder Polymeren, die mindestens eine Art einer redoxaktiven Einheit in der Seitenkette aufweisen und die löslichkeitsvermittelnde Seitenketten bzw. -funktionalitäten tragen,

- wobei als redoxaktive Einheit N,N'-substituierte 4,4'-Bipyridine, Chinone, Anthrachinone, Verdazyl-Radikale, Bordipyrromethene, Nitroxylnitroxid-Radikale oder Nitroxid-Radikale, besonders bevorzugt das 2,2,6,6-Tetramethylpiperidine-1-oxyl-Radikal, N-Methyl-[4,4'-bipyridin]-1-ium-chlorid, 1-(2-(trimethylammonio)-ethyl)-[4,4'-bipyridin]-1-iumchlorid zum Einsatz kommen und/oder
- wobei als Linker LI1, LI2, LI3, LI4 und/oder LI5 die Reste L1 bis L26 gemäß Anspruch 1, insbesondere L3, L4, L5, L6, L8, L12 und L19 zum Einsatz kommen und/oder
- wobei als Gruppen PG1, PG2, PG3, PG4 und/oder PG5 Reste M1 bis M59 gemäß Anspruch 3, insbesondere M1, M2, M6, M7, M8, M9, M11, M14, M21, M22, M23, M45 oder M46 zum Einsatz kommen und/oder
- wobei als Gruppen COM1 und/oder COM2 Reste CM1 bis CM9 oder CM15 bis CM27 gemäß Anspruch 4, insbesondere CM4, CM9, CM16 bis CM21 und CM 26 zum Einsatz kommen und/oder
- wobei als Anolyt folgende redoxaktiven Komponenten zum Einsatz kommen:

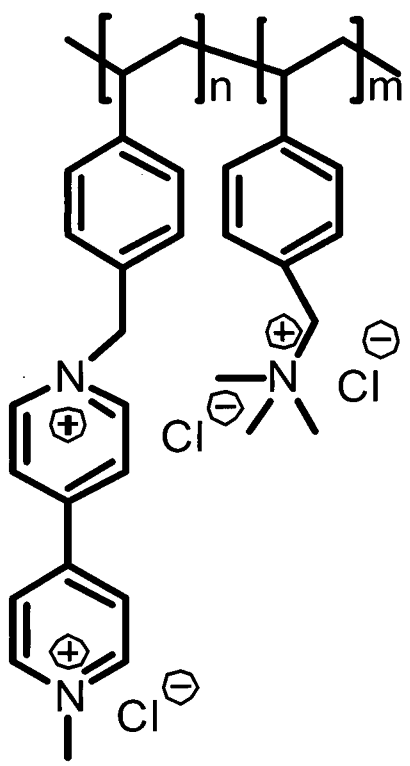

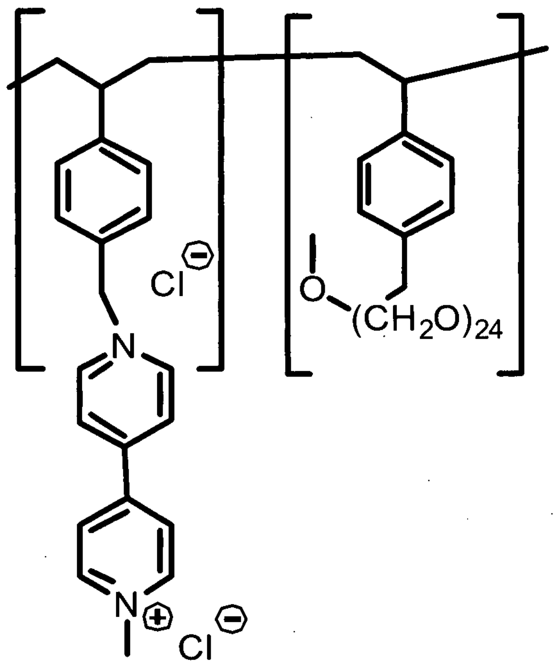

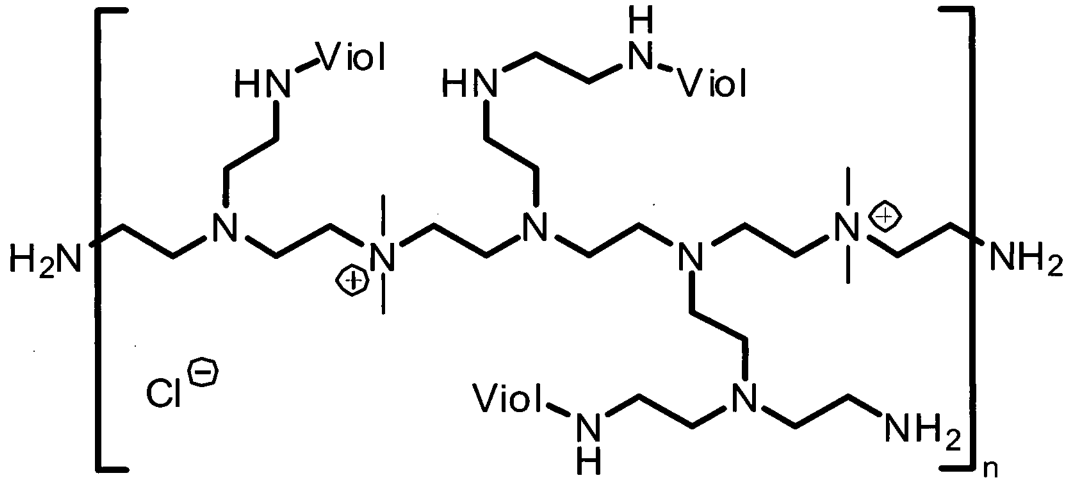

und/oder

• wobei als Katholyt folgende redoxaktiven Komponenten zum Einsatz kommen:

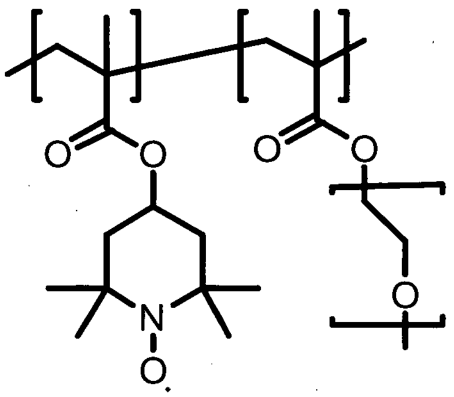

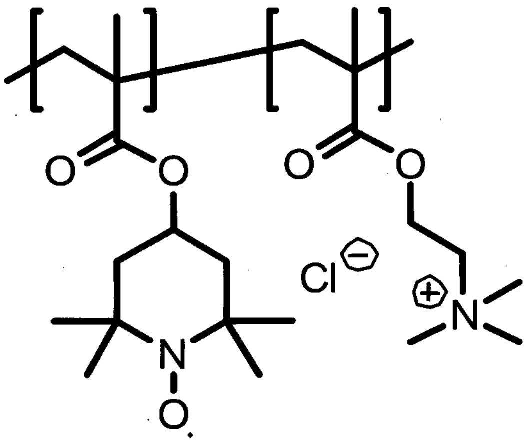

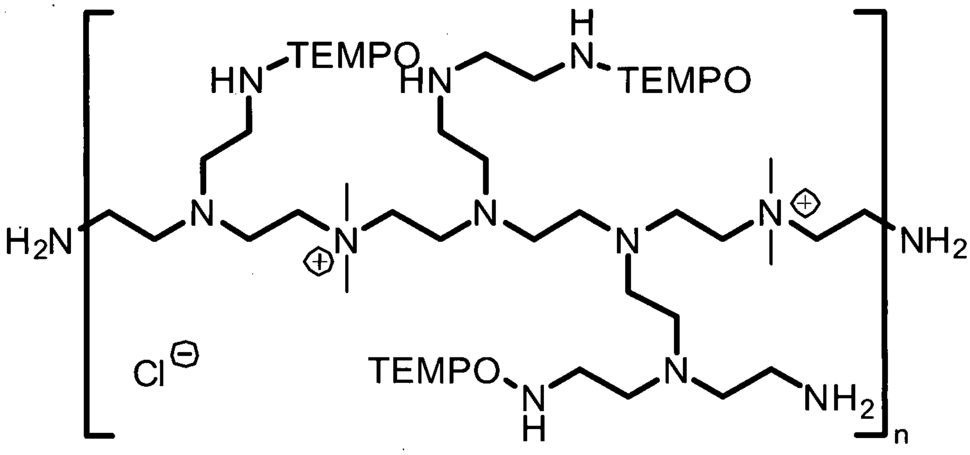

wobei Viol für und TEMPO für

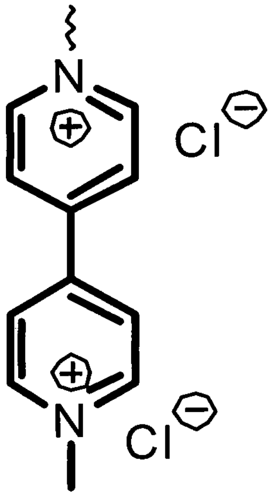

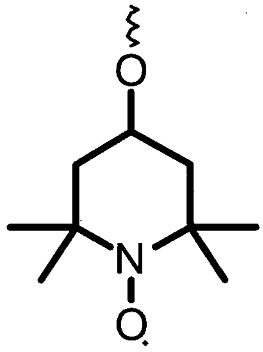

steht.

**12.** Verwendung der Redox-Flow-Zelle nach einem der Ansprüche 1 bis 11 zur Speicherung von elektrischer Energie für mobile und stationäre Anwendungen, insbesondere für Einsätze auf dem Gebiet der Elektromobilität, als Speicher in Land-, Luft- und Wasserfahrzeugen, als stationäre Speicher für die Notstromversorgung, den Spitzenlastausgleich, und für die Zwischenspeicherung elektrischer Energie aus erneuerbaren Energiequellen, insbesondere auf dem Sektor der Photovoltaik und der Windkraft, oder aus Gas-, Kohle-, Biomasse-, Gezeiten- und Meereskraftwerken.

## Claims

**1.** Redox flow cell for storage of electric energy, containing a reaction cell having two polarity-specific chambers (1, 2) for catholyte and anolyte, which are each connected to a store for liquid and are separated by a membrane for ion exchange and which are equipped with electrodes (10, 11), wherein the chambers (1, 2) are each filled with or are containing redox-active components present undiluted, dissolved, emulgated or dispersed in an electrolyte solvent, wherein the membrane is a size-exclusion membrane (3) having a selectivity of at least 400 g/mol and both redox-active components have a molar mass of at least 400 g/mol and contain a structural unit of formula I and of formula II or of formula I and of formula II and of formula III or of formula IV

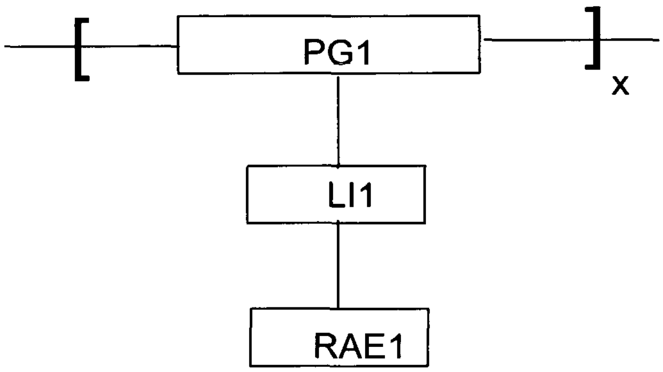

(I),

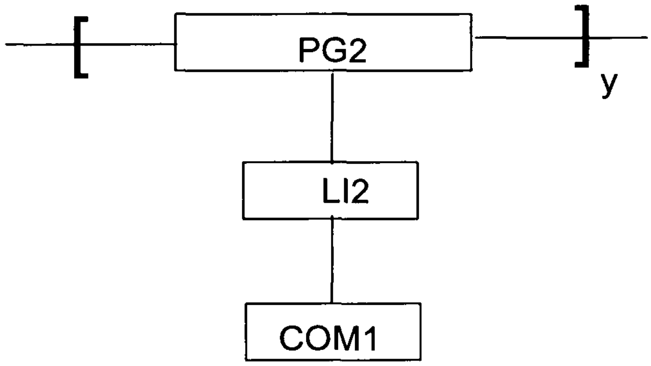


(II),

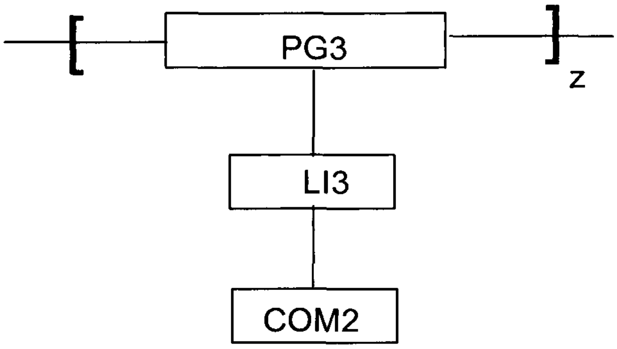


(III),

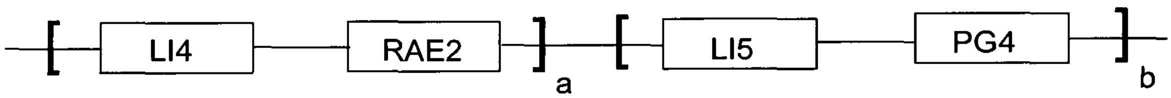


(IV),

wherein PG1, PG2, PG3 and PG4 independently of one another are backbones of organic polymers which are independently from each other derived from monomers for the ring-opening polymerization, for the oxidative coupling, for the polycondensation, for the die ring-opening metathesis-polymerization, for the radical polymerization or for the ionic polymerization selected from the group of monomers M1 to M59

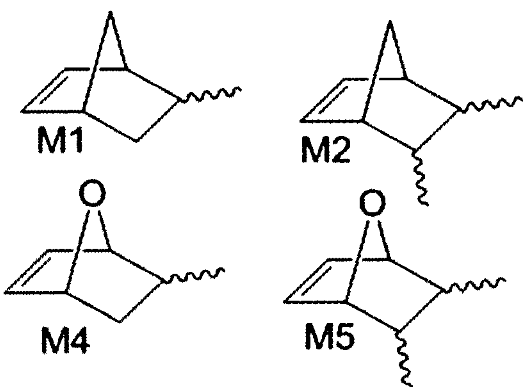
M1 M2 M4 M5

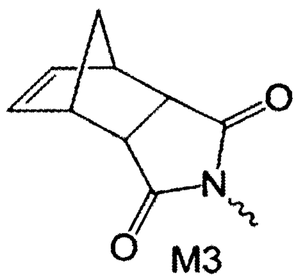
M3

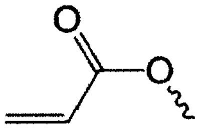
M6
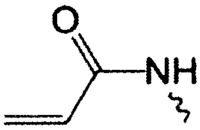
M8
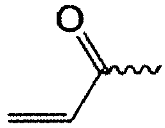
M10
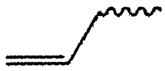
M12

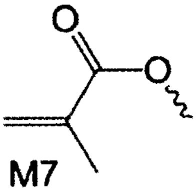
M7
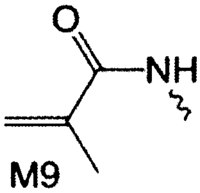
M9
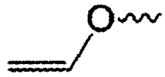
M11
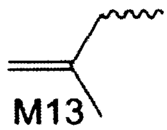
M13

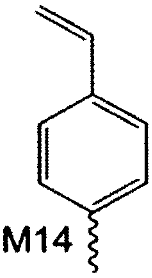
M14
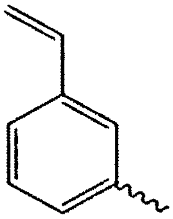
M15
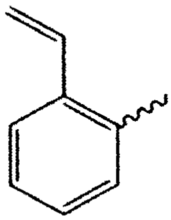
M16
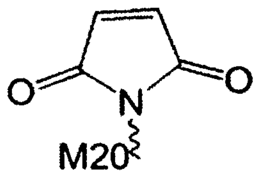
M20

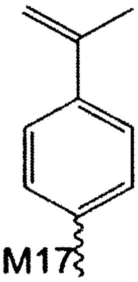
M17
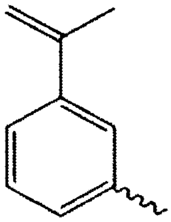
M18
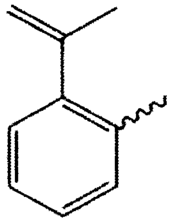
M19

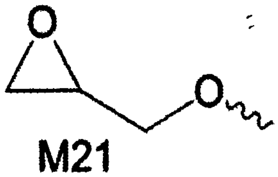
M21
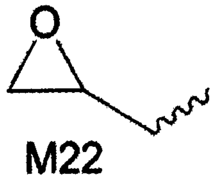
M22
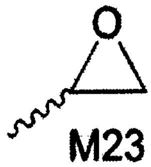
M23

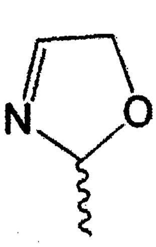
M24
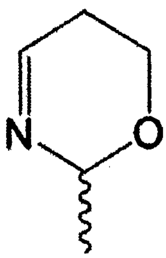
M25
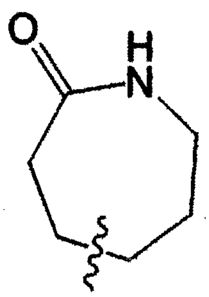
M26
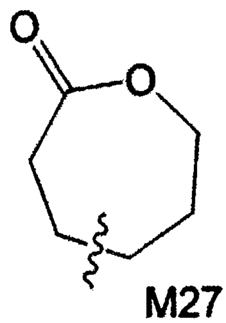
M27

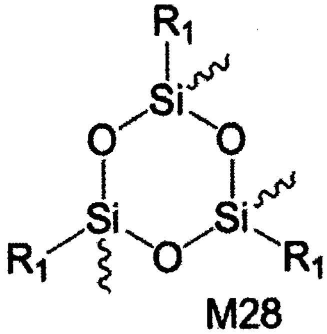

M28

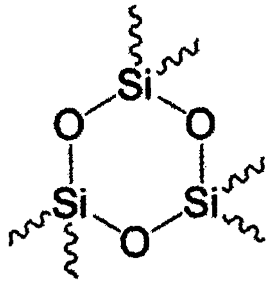

M29

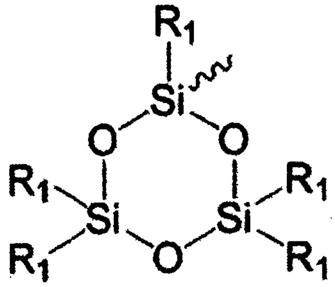

M30

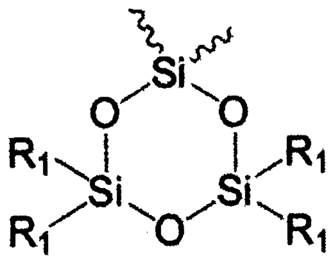

M31

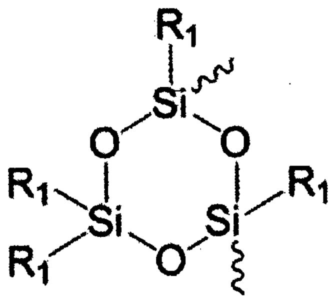

M32

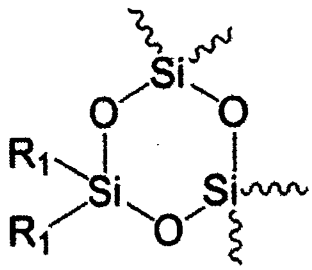

M33

R1 = methyl, ethyl, phenyl

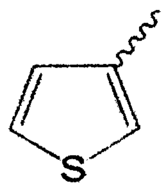

M34

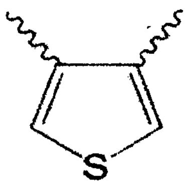

M35

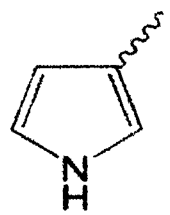

M36

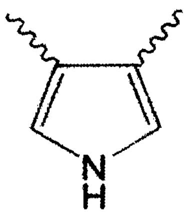

M37

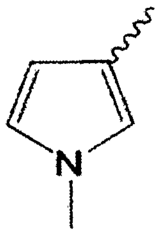
M38

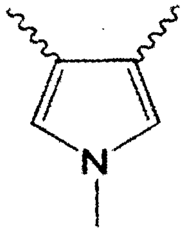
M39

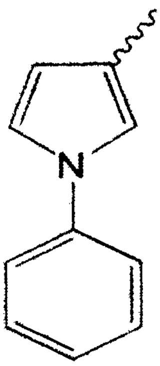
M42

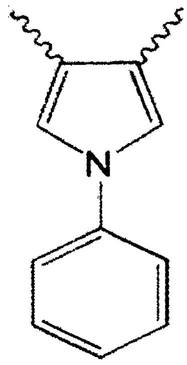
M43

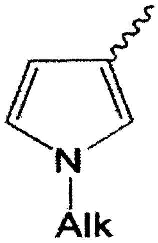

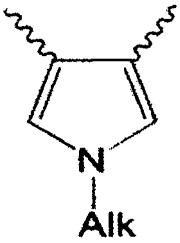

Alk: alkyl chains until $C_{10}$

M40

M41

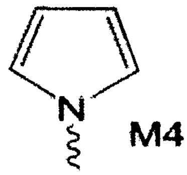
M44

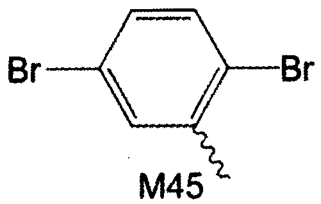
M45

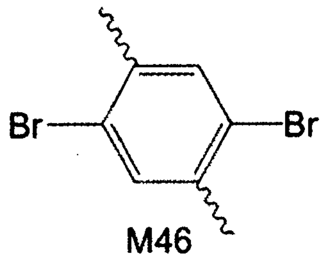
M46

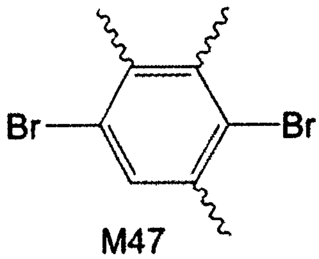
M47

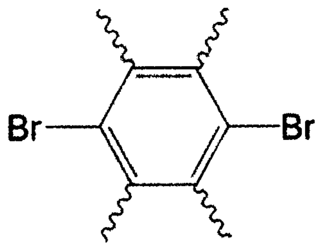
M48

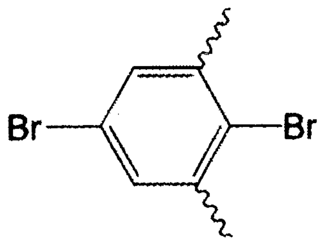
M49

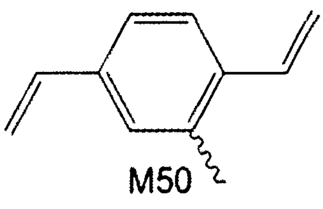
M50

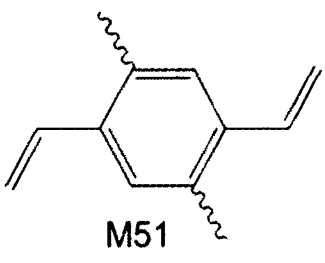
M51

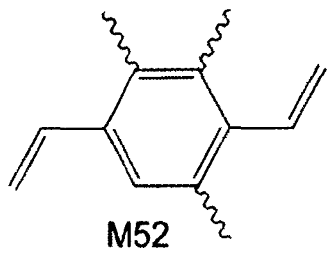
M52

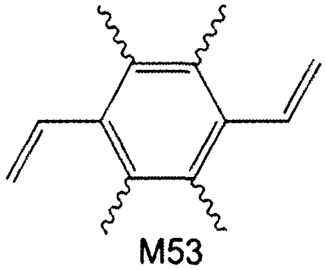
M53

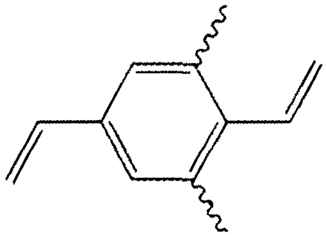
M54

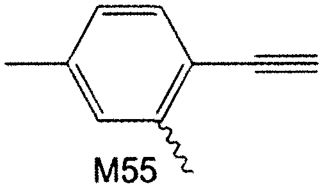
M55

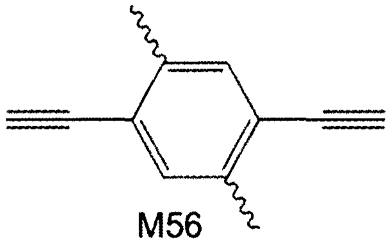
M56

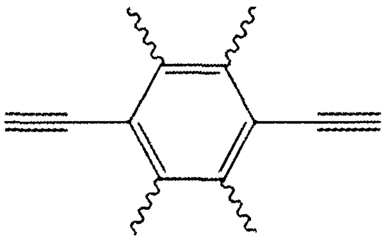
M57

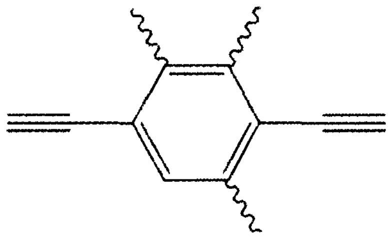
M58

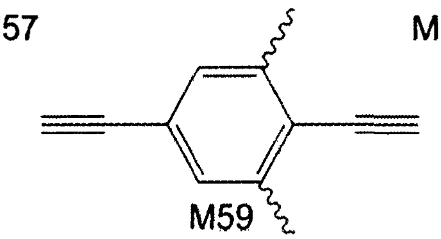
M59

wherein the corrugated bonds represent the covalent bonds LI1 to LI5 or the links to the bridging groups LI1 to LI5, or wherein PG1 is a framework of a hyper-branched organic polymer, that is derived from the structures P1 to P9 and that comprises groups LI1 with at least one of the structures L1 to L21 hereinafter defined or wherein LI1 represents a covalent bond, in which P1 is a hyper-branched polyethyleneimine of the following structure

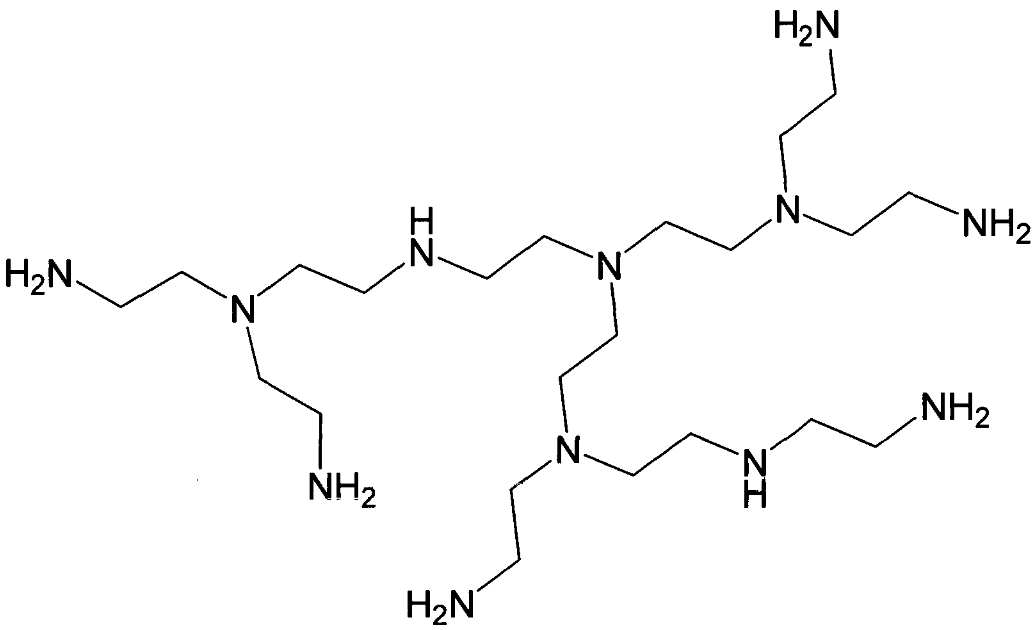

P2 is a hyper-branched polyglycerol of the following structure

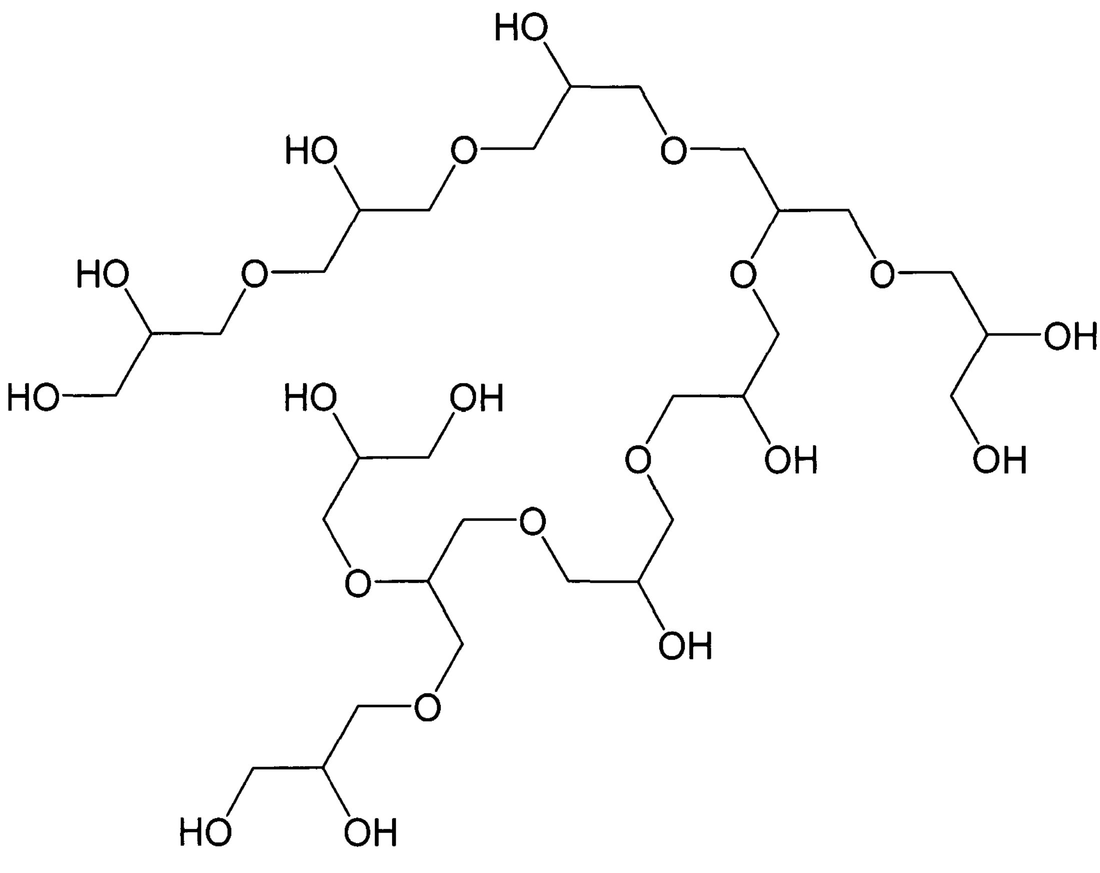

P3 to P7 are dendrimers of the following structures

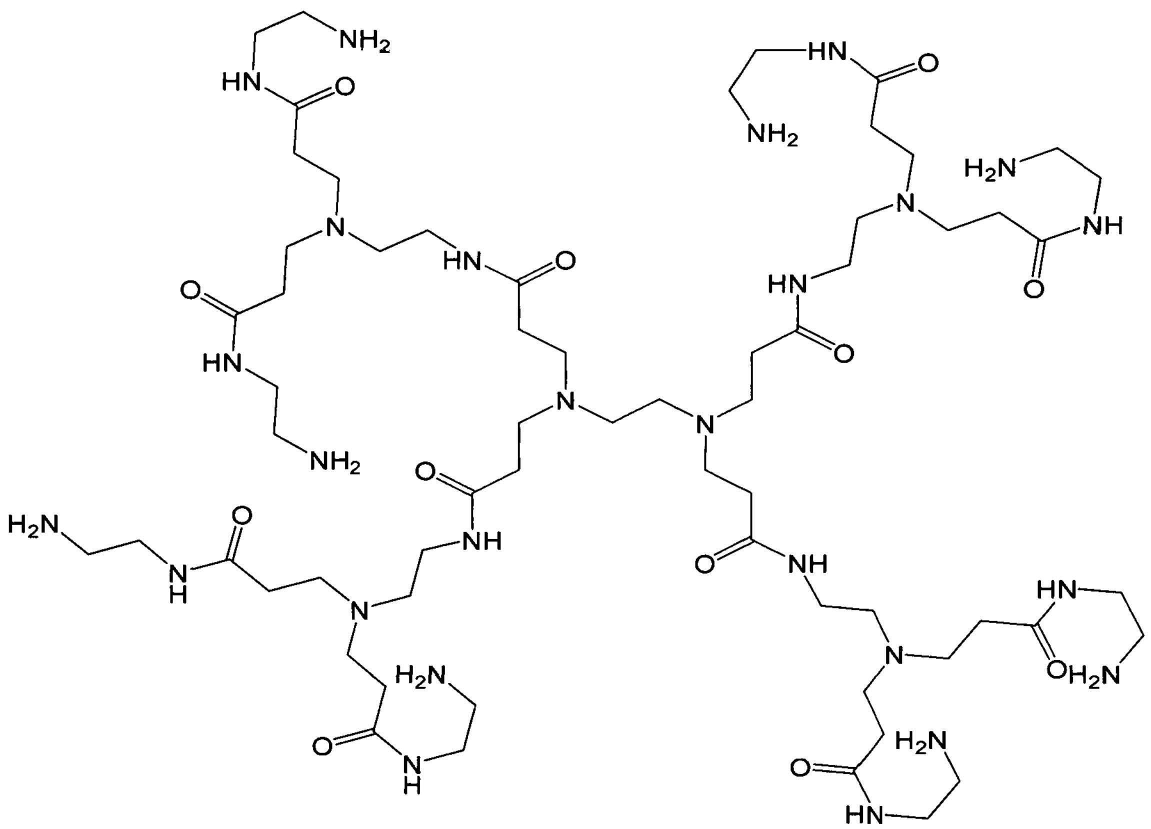

P3

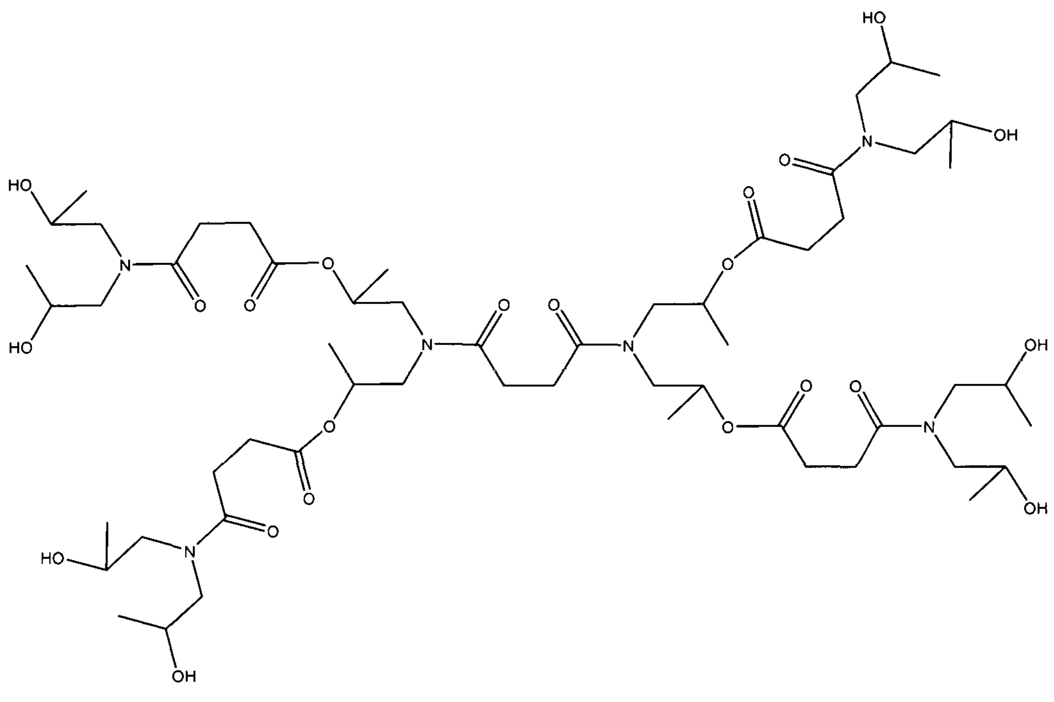

P4

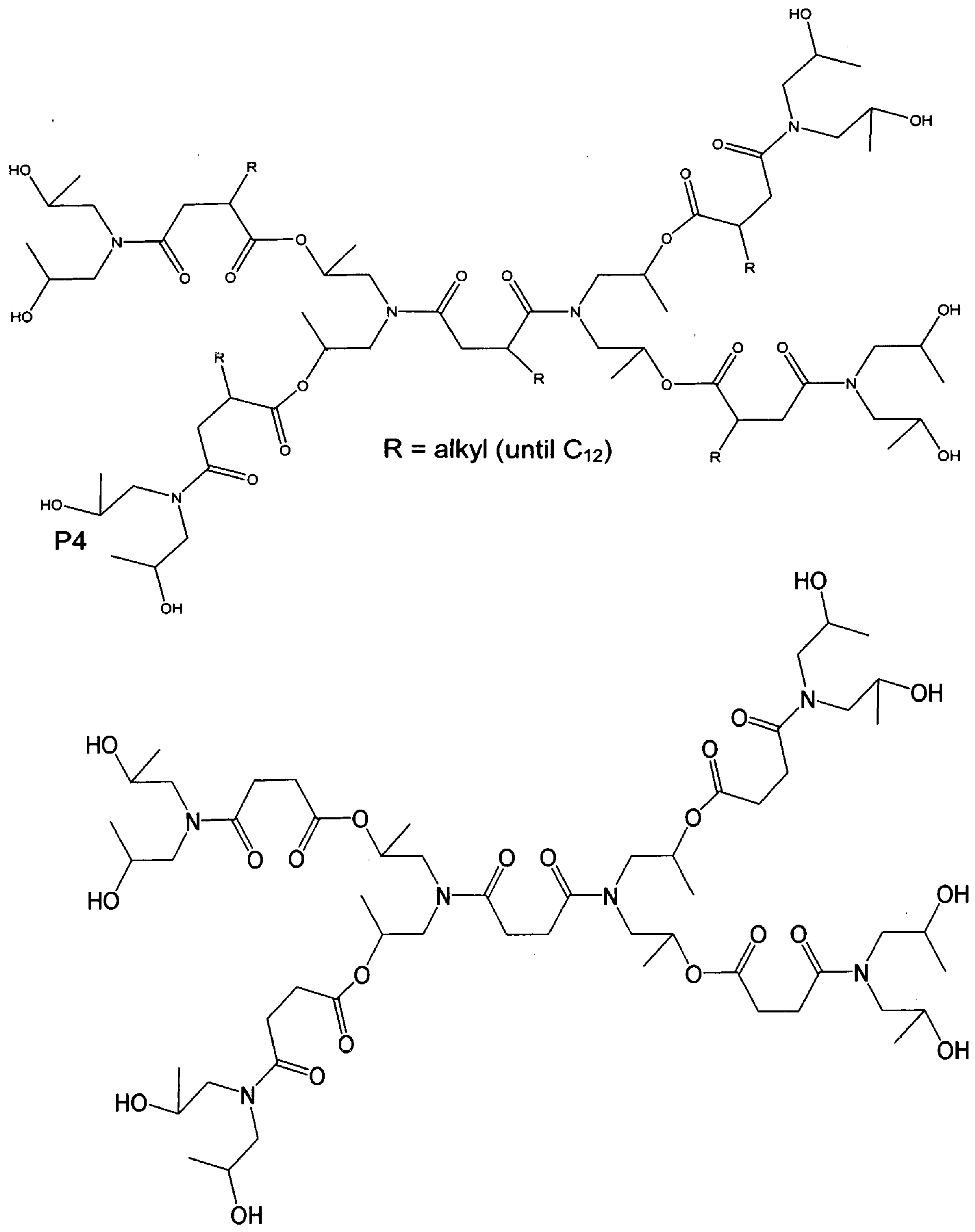

P4

R = alkyl (until $C_{12}$)

P5

P6 with a molar ratio of phthalic acid to succinic acid from 10:90 to 30:70, preferably preferred 20:80

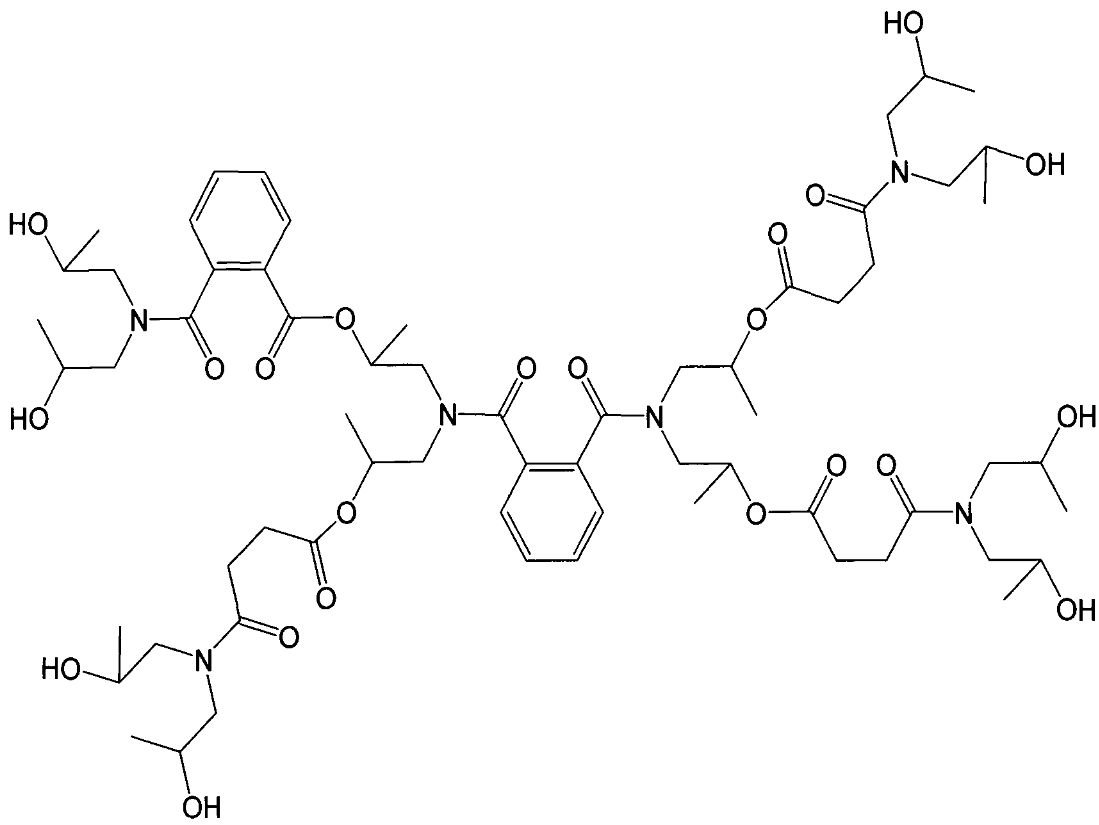

P7 is a hydrogentated P6-structure with a molar ratio of hexahydrophthalic acid to succinic acid from 10:90 to 30:70, preferably preferred 20:80

P8 is a hyper-branched polypropyleneimine- or polypropyleneiminedendrimer dendrimers of the following structure

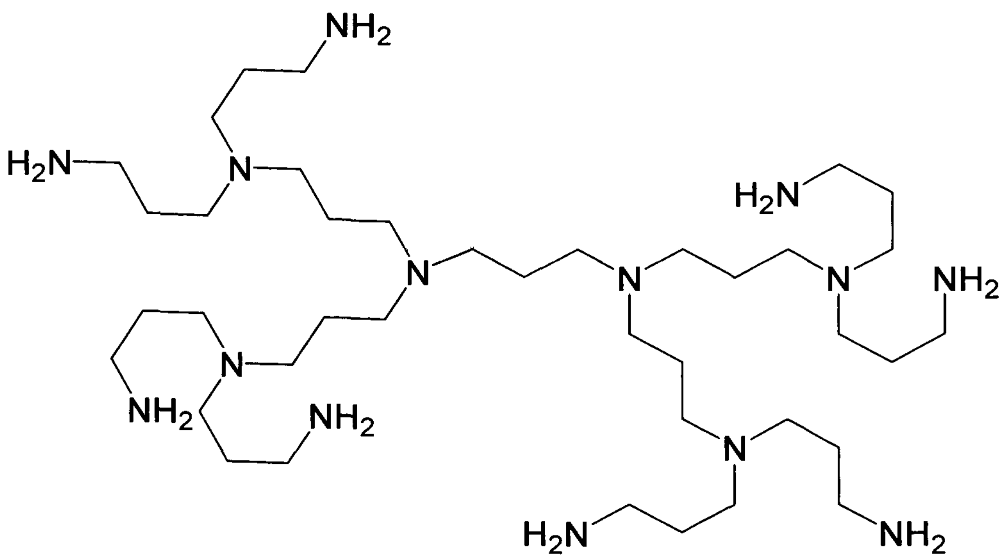

and P9 is a hyper-branched polyester of the following structure

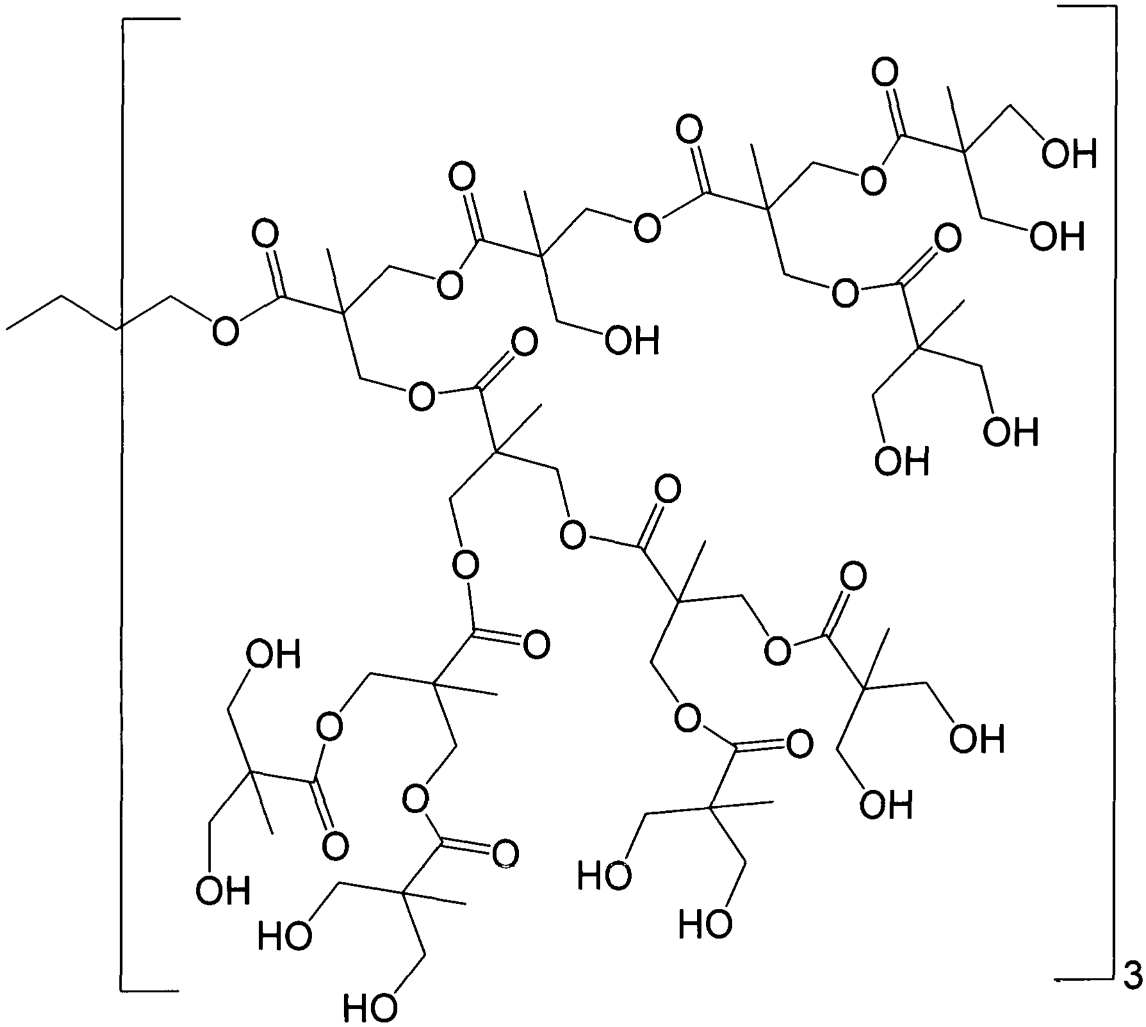

RAE1 represents a monovalent redox-active group,

LI1, LI2 and LI3 independently of one another are covalent bonds between atoms of PG1 and RAE1, PG2 and COM1 or PG3 and COM2 or are divalent organic bridge groups selected from the hereinafter defined residues L1 to L26, COM1 and COM2 independently of one another are hydrogen, hydroxyl, an amino group, a sulfonic acid group or different monovalent organic side groups which are selected from the residues of the alkyl group of up to 20 carbon atoms, the carboxyl group, the alkylamino group with up to 20 carbon atoms in the alkyl residue, the dialkylamino group with up to 20 carbon atoms in the alkyl residues, the carboxylic amide group, the N-alkylcarboxylic amide group with up to 20 carbon atoms in the alkyl residue, the N,N-dialkylcarboxylic amide group with up to 20 carbon atoms in the alkyl residues, or which derive from acrylic acid, methacrylic acid, alkyl acrylates, alkyl methacrylates, oligoethylene-glycol acrylates and -methacrylates, styrene, styrene sulfonate and its salts, (vinylbenzyl)trimethylammoniumchloride and comparable salts, butadiene, isoprene, ethyleneoxide, propyleneoxide, vinylmethylether, vinylethylether, thiophene, 3-hexylthiophene, 3,4-ethylenedioxythiophene and pyrrol,

RAE2 prepresents a divalent redox-active group,

LI4 represents a covalent bond between atoms of two RAE2 groups or between atoms of RAE2 and PG4 or is a divalent organic bridge group selected from the residues L1 to L26 defined hereinafter,

LI5 represents a covalent bond between atoms of two PG4 groups or between atoms of RAE2 and PG4 or a divalent organic bridge group chosen from residues L1 to L16 defined hereinafter,

the residues of formulae L1 to L26 have the following meaning

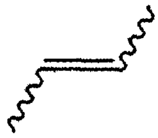

L1

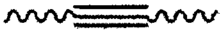

L2

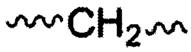

L3

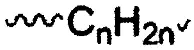

(alkyl chains until $C_{20}$) L4

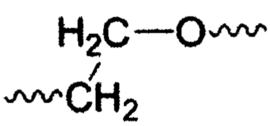

L5

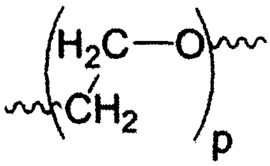

p = 2-10

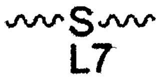

L7

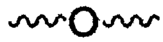

L8

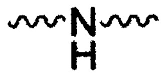

L9

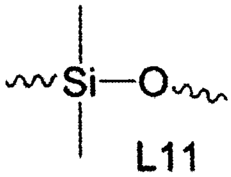

L11

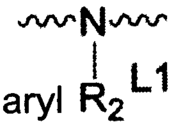

L10

$R_2$ = alkyl until $C_{10}$ and aryl

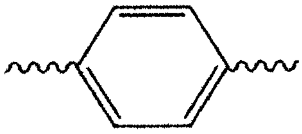

L12

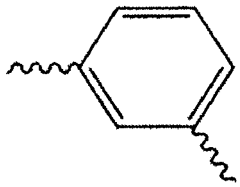

L13

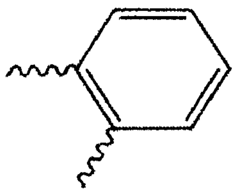

L14

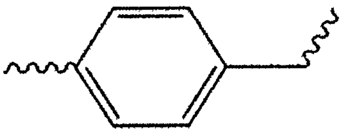

L15

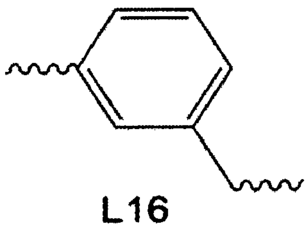

L16

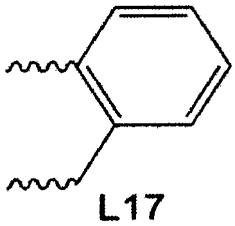

L17

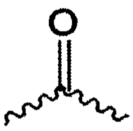

L18

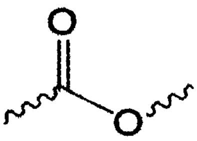

L19

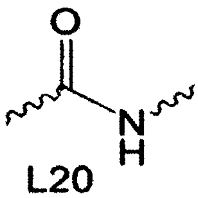

L20

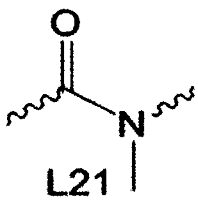

L21

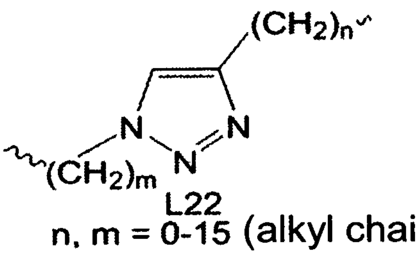

L22

n, m = 0-15 (alkyl chains)

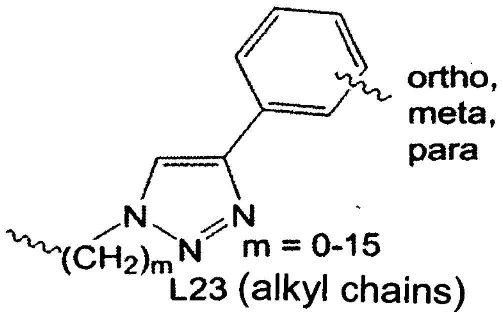

m = 0-15

L23 (alkyl chains)

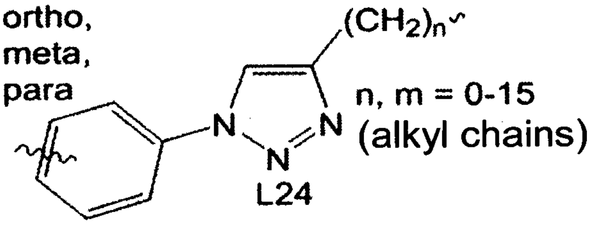

n, m = 0-15 (alkyl chains)

L24

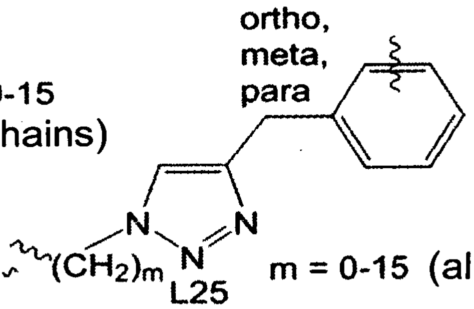

L25

m = 0-15 (alkyl chains)

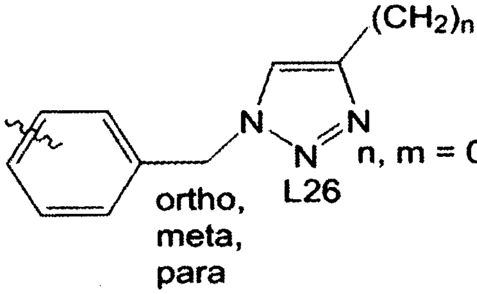

n, m = 0-15 (alkyl chains)

L26

wherein the corrugated bonds represent the connections to the groups PG1 and RAE1, PG2 and COM1, PG3 and COM2, PG4 and RAE2 and two RAE2 groups,
x represents an integer of >=1,
y represents an integer of >=0,
z represents an integer of >=0,
a represents an integer of >=1, and
b represents an integer of >= 0, and the potential difference between the redox reactions of the redox-active components taking place each in the anolyte and in the catholyte is between greater than 0 and 4.0 V, with the proviso that poly(4,4'-bipyridine-co-poly(ethyleneglycol) is excluded as redox-active component in the anolyte.

**2.** Redox flow cell according to claim 1, wherein this contains conducting salts and/or further additives dissolved in the electrolyte solvent.

**3.** Redox flow cell according to claim 1, wherein COM1 and COM2 independently of one another are constructed from monomers of the formulae CM1 to CM9 and/or CM15 to CM27

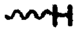
CM1

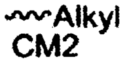
CM2
alkyl until $C_{20}$

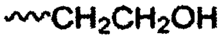
CM3

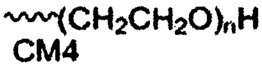
CM4
n = 2-20

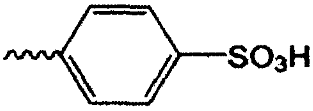
CM5

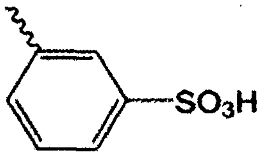
CM6

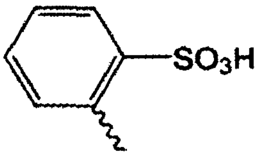
CM7

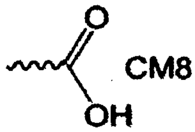
CM8

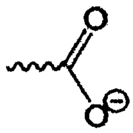
CM9

(with counter ion, such as $Na^+$, $K^+$, ammonium salts, alkylammonium salts)

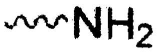
CM15

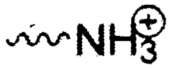
CM16

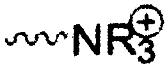
CM17

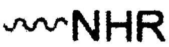
CM18

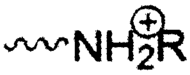
CM19

R = alkyl until $C_{20}$

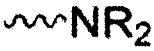
CM20

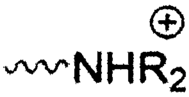
CM21

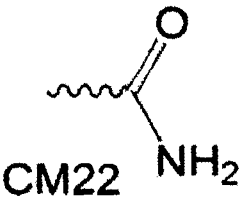
CM22

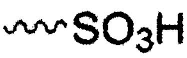
CM25

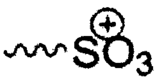
CM26

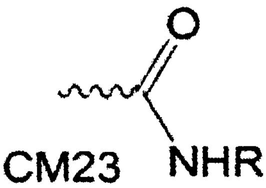
CM23

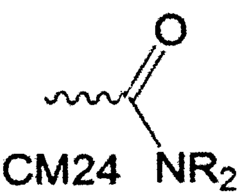
CM24

(with counter ion, such as $Na^+$, $K^+$, ammonium salts, alkylammonium salts)

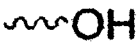
CM27

wherein the corrugated bonds represent the links to the groups LI1 or LI2.

**4.** Redox flow cell according to one of the claims 1 to 3, wherein RAE1 and RAE2 independently of one another are selected from the residues of formulae RE1 to RE6, wherein residues of formula RE1 correspond to substituted 4,4'-bipyridines or their derivatives according to following structure:

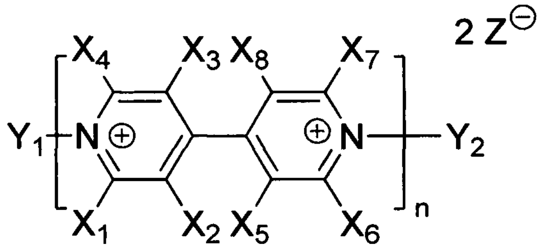

residues of formula RE2 correspond to quinones or their derivatives according to following structures

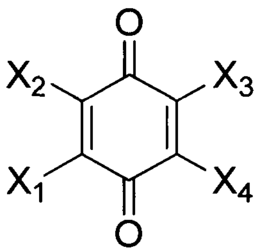

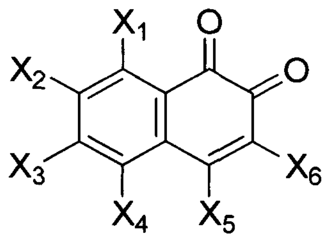

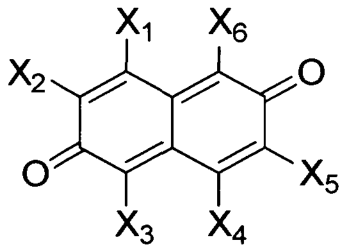

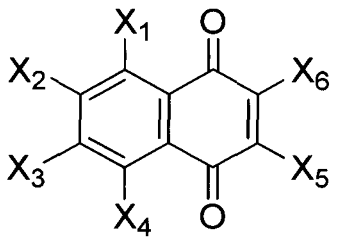

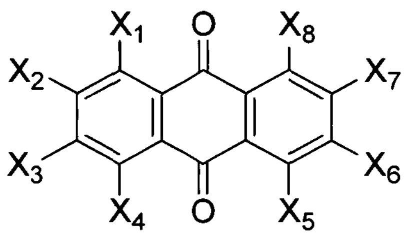

residues of formula RE3 correspond to verdazyl-radicals or their derivatives according to following structure:

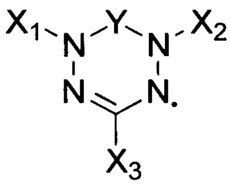

residues of formula RE4 correspond to nitroxylnitroxide-radicals or their derivatives according to following structure:

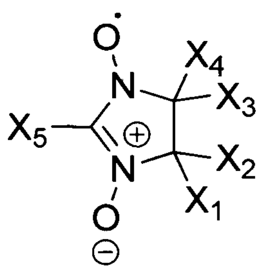

residues of formula RE5 correspond to nitroxide-radicals or their derivatives according to following structure:

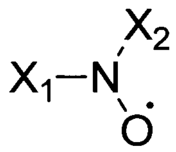

residues of formula RE6 correspond to borondipyrromethenes or their derivatives according to following structure:

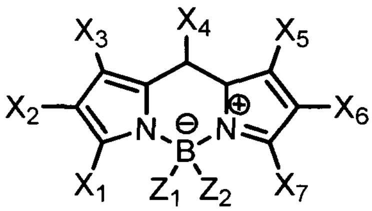

wherein in these residues RE1 to RE6
$X_1$, $X_2$, $X_3$, $X_4$, $X_5$, $X_6$, $X_7$ and $X_8$ in the residues RE1 and RE2 independently of one another are hydrogen atoms, alkyl groups, alkenyl groups, alkinyl groups, alkylthio groups, monoalkylamino groups, dialkylamino groups, haloalkyl groups, haloalkoxy groups, alkylcarbonyl groups, alkenylcarbonyl groups, alkinylcarbonyl groups, alkylcarboxylic ester groups, alkenylcarboxylic ester groups, alkinylcarboxylic ester groups, alkoxy groups, cycloalkyl groups, cycloalkoxy groups, aryl groups, heteroaryl groups, aryloxyl groups, aralkyl groups, halogen atoms, cyano groups and/or nitro groups, provided that one or two of the binding sites $X_1$, $X_2$, $X_3$, $X_4$, $X_5$, $X_6$, $X_7$ and $X_8$ are attached to one of the groups LI1, LI4, LI5 or PG1,
$X_1$, $X_2$ and $X_3$ in the residue RE3 adopts one of the meanings defined for $X_1$ to $X_8$ in the residue RE1 or RE2,
$X_1$, $X_2$, $X_3$, $X_4$ and $X_5$ in the residue RE4 adopts one of the meanings defined for $X_1$ to $X_8$ in the residue RE1 or RE2,
$X_1$ and $X_2$ in the residue RE5 independently of one another represent aliphatic groups, aromatic groups, hydroxy groups, alkoxy groups, aldehyde groups, carboxyl groups, alkoxycarbonyl groups, cyano groups, amino groups, nitro groups, nitroso groups, halogen atoms or hydrogen, in which $X_1$ and $X_2$ as aliphatic group is saturated and unsaturated, substituted or unsubstituted, straight, cyclic or branched, and these aliphatic groups may contain at least one oxygen-, nitrogen-, sulfur -, silicon-, phosphorous-, boron- or halogen-atom, in which $X_1$ and $X_2$ as aromatic group may be substituted or unsubstituted and this aromatic group may contain at least one oxygen-, nitrogen-, sulfur -, silicon-, phosphorous-, boron- or halogen-atom, in which $X_1$ and $X_2$ as hydroxy group can form a salt with a metal atom, in which $X_1$ and $X_2$ as alkoxy-, aldehyde-, carboxyl-, alkoxylcarbonyl-, cyano-, amino-, nitro- or nitroso-group these groups may by substituted or unsubstituted and these groups may contain at least one oxygen-, nitrogen-, silicon-, phosphorous-, boron- or halogen-atom, in which $X_1$ and $X_2$ may be identical or different and in which $X_1$ and $X_2$ together may form a ring,
$X_1$, $X_2$, $X_3$, $X_4$, $X_5$, $X_6$, $X_7$, Z1 and Z2 in the residue RE6 independently of one another are hydrogen atoms, alkyl groups, alkenyl groups, alkinyl groups, alkylthio groups, monoalkylamino groups, dialkylamino groups, haloalkyl groups, haloalkoxy groups, alkylcarbonyl groups, alkenylcarbonyl groups, alkinylcarbonyl groups, alkylcarboxylic ester groups, alkenylcarboxylic ester groups, alkinylcarboxylic ester groups, alkoxy groups, cycloalkyl groups, cycloalkoxy groups, aryl groups, heteroaryl groups, aryloxyl groups, aralkyl groups, halogen atoms, cyano groups, sulfonate groups and/or nitro groups, provided that one or two of the binding sites $X_1$, $X_2$, $X_3$, $X_4$, $X_5$, $X_6$ and $X_7$ are attached to one of the groups LI1, LI4, LI5 or PG1,
$Y_1$ and $Y_2$ can bridge several substituted 4,4'-bipyridine units, in which n takes values between one and one hundred thousand, preferably between one and hundred, most preferable between one and five, or the substituents $Y_1$ and $Y_2$ independently of one another are hydrogen, alkyl groups, alkenyl groups, alkinyl groups, alkylthio groups, monoalkylamino groups, dialkylamino groups, haloalkyl groups, haloalkoxy groups, alkylcarbonyl groups, alkenylcarbonyl groups, alkinylcarbonyl groups, alkylcarboxylic ester groups, alkenylcarboxylic ester groups, alkinylcarboxylic ester groups, alkoxy groups, cycloalkyl groups, cycloalkoxy groups, aryl groups, heteroaryl groups, aryloxyl groups and/or aralkyl groups, especially preferred alkyl groups, alkenyl groups, alkinyl groups, alkoxy groups, cycloalkoxy groups, aryl groups, heteroaryl groups, aryloxyl groups and/or aralkyl groups, and most especially preferred alkyl groups, alkoxy groups, cycloalkoxy groups, aryl groups, heteroaryl groups and/or aryloxyl groups, and
anions Z are negatively charged single or twofold and are anorganic or organic anions, which are present in an amount of 2n in case of of single negatively charged anions or in an amount of n in case of twofold negatively charged anions, and which are preferably selected from the group of halogenide ions, such as fluoride ions, chloride ions, bromide ions, iodide ion, or hydroxide ions, anions of inorganic acids, preferably phosphate ions, sulfate ions, nitrate ions, hexafluoro-phosphate ions, tetrafluoroborate ions, perchlorate ions, chlorate ions, hexafluoroantimonate

ions, hexafluoroarsenate ions or cyanide ions, or anions or organic acids, preferably acetate ions, formiate ions, trifluoroacetic acid ions, trifluormethanesulfonate ions, pentafluoroethanesulfonate ions, nonofluoro-butanesulfonate ions, butyrate ions, citrate ions, fumarate ions, glutarate ions, lactate ions, maleate ions, malonate ions, oxalate ions, pyruvate ions, tartrate ions, and especially preferred selected from the group of halogenide ions, hydroxide ions, phosphate ions, sulfate ions, perchlorate ions, hexafluorophosphate ions and tetrafluoroborate ions.

**5.** Redox flow cell according to claim 4, wherein RE5 is selected from the residues piperidinoxyl-ringstructure corresponding to following formula:

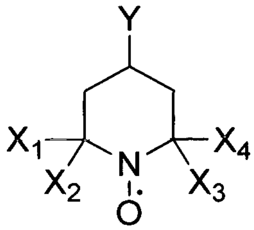

pyrrolidinoxyl-ringstructure corresponding to follwing formula:

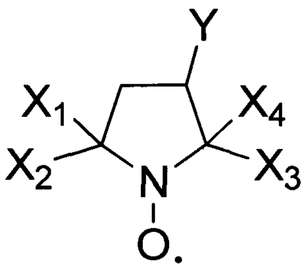

pyrrolinoxyl-ringstructure corresponding to following formula:

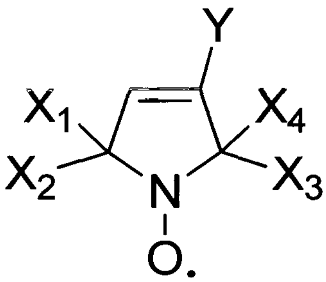

unsymmetrically substituted nitroxide-radical corresonding to following formula:

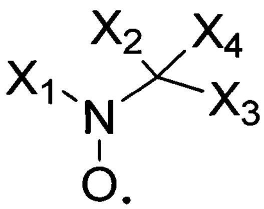

unsymmetrically substituierted nitroxide-radical corresponding to following formula:

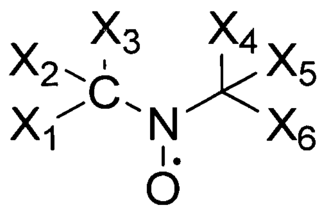

In which $X_1$, $X_2$, $X_3$ and $X_4$ and Y independently of one another are hydrogen atoms, alkyl groups, alkenyl groups, alkinyl groups, alkylthio groups, monoalkylamino groups, dialkylamino groups, haloalkyl groups, haloalkoxy groups, alkylcarbonyl groups, alkenylcarbonyl groups, alkinylcarbonyl groups, alkylcarboxylic ester groups, alkenylcarboxylic ester groups, alkinylcarboxylic ester groups, alkoxy groups, cycloalkyl groups, cycloalkoxy groups, aryl groups, heteroaryl groups, aryloxyl groups, aralkyl groups, halogen atoms, cyano groups and/or nitro groups, preferably hydrogen atoms, halogen atoms, alkyl groups, alkoxy groups, cyano groups and/or nitro groups, provided that one or two of the binding sites $X_1$, $X_2$, $X_3$, $X_4$ and Y are attached to one of the groups LI1, LI4, LI5 or PG1.

**6.** Redox flow cell according to one of the claims 1 to 5, wherein the redox-active component comprises the structural unit of formula I, which is derived from the following combinations of monomers:

PG1 is constructed from one of the monomer units M1, M2, M4 or M5 according to claim 1, LI1 is one of the groups L1 to L6, L8 or L11 to L26 according to claim 1 and RAE1 is one of the groups RE1 to RE6 according to claim 4; or
PG1 is constructed from the monomer unit M3 according to claim 1, LI1 is one of the groups L3 to L6, L12 to L17 or L22 to L26 according to claim 1 and RAE1 is one of the groups RE1 to RE6 according to claim 4; or
PG1 is constructed from one of the monomer units M6 or M7 according to claim 1, LI1 is one of the groups L3 to L6, L12 to L17 or L22 to L26 according to claim 1 and RAE1 is one of the groups RE1 to RE6 according to claim 4; or
PG1 is constructed from one of the monomer units M8 or M9 according to claim 1, LI1 Is one of the groups L3 to L6, L12 to L17 or L22 to L26 according to claim 1 and RAE1 is one of the groups RE1 to RE6 according to claim 4; or
PG1 is constructed from the monomer unit M10 according to claim 1, LI1 is one of the groups L3 to L6, L12 to L17 or L22 to L26 according to claim 1 and RAE1 is one of the groups RE1 to RE6 according to claim 4; or
PG1 is constructed from the monomer unit M11 according to claim 1, LI1 is one of the groups L3 to L6, L12 to L17 or L22 to L26 according to claim 1 and RAE1 is one of the groups RE1 to RE6 according to claim 4; or
PG1 is constructed from one of the monomer units M12 or M13 according to claim 1, LI1 is one of the groups L2 to L3, L12 to L17 or L22 to L26 according to claim 1 and RAE1 is one of the groups RE1 to RE6 according to claim 4; or
PG1 is constructed from one of the monomer units M14 to M19 according to claim 1, LI1 is one of the groups L1 to L26 according to claim 1 and RAE1 is one of the groups RE1 to RE6 according to claim 4; or
PG1 is constructed from the monomer unit M20 according to claim 1, LI1 is one of the groups L3 to L6, L12 to L17 or L22 to L26 according to claim 1 and RAE1 is one of the groups RE1 to RE6 according to claim 4; or
PG1 is constructed from the monomer unit M21 according to claim 1, LI1 is one of the groups L3 to L6, L11 to L17 or L22 to L26 according to claim 1 and RAE1 is one of the groups RE1 to RE6 according to claim 4; or
PG1 is constructed from the monomer unit M22 according to claim 1, LI1 is one of the groups L3 to L4, L12 to L17 or L22 to L26 according to claim 1 and RAE1 is one of the groups RE1 to RE6 according to claim 4; or
PG1 is constructed from the monomer unit M23 according to claim 1, LI1 is one of the groups L3 to L4, L12 to L17 or L22 to L26 according to claim 1 and RAE1 is one of the groups RE1 to RE5 according to claim 4; or
PG1 is constructed from one of the monomer units M24 or M25 according to claim 1, LI1 is one of the groups L3 to L4, L12 to L17 or L22 to L26 according to claim 1 and RAE1 is one of the groups RE1 to RE6 according to claim 4; or
PG1 is constructed from one of the monomer units M26 or M27 according to claim 1, LI1 is one of the groups L3 to L4 according to claim 1 and RAE1 is one of the groups RE1 to RE6 according to claim 4; or
PG1 is constructed from one of the monomer units M28 to M33 according to claim 1, LI1 is one of the groups L3 to L4 or L11 to L17 accordingto claim 1 and RAE1 is one of the groups RE1 to RE6 according to claim 4; or
PG1 is constructed from one of the monomer units M34 or M35 according to claim 1, LI1 is one of the groups L3 to L6, L8, L10 or L12 to L26 according to claim 1 and RAE1 is one of the groups RE1 to RE6 according to claim 4; or
PG1 is constructed from one of the monomer units M36 to M43 according to claim 1, LI1 is one of the groups

L3 to L6, L8, L10 or L12 to L26 according to claim 1 and RAE1 is one of the groups RE1 to RE6 according to claim 4; or
PG1 is constructed from the monomer unit M44 according to claim, LI1 is one of the groups L3 to L6, L12 to L17 or L22 to L26 according to claim 1 and RAE1 is one of the groups RE1 to RE6 according to claim 4; or
PG1 is constructed from one of the monomer units M45 to M49 according to claim 1, LI1 is one of the groups L1 to L6, L8, L10, L12 to L17 or L19 to L26 according to claim 1 and RAE1 is one of the groups RE1 to RE6 according to claim 4; or
PG1 is constructed from one of the monomer units M50 to M59 according to claim 1, LI1 is one of the groups L3 to L4, L8 to L10, L12 to L17 or L19 to L26 according to claim 1 and RAE1 is one of the groups RE1 to RE6 according to claim 4.

7. Redox flow cell according to one of the claims 1 to 6, wherein the redox-active component contains the structural units of formulae I and II, in which the structrual units of formula II are constructed from the following monomer combinations:

PG2 is constructed from one of the monomer units M1, M2, M3 or M5 according to claim 1, LI2 is a covalent bond or one of the groups L3 or L4 according to claim 1 and COM1 is one of the residues CM1 to CM4 according to claim 3; or
PG2 is constructed from one of the monomer units M1, M2, M3 or M5 according to claim 1, LI2 is one of the groups L19 to L21 according to claim 1 and COM1 is one of the residues CM1 to CM4 or CM15 to CM17 according to claim 3; or
PG2 is constructed from one of the monomer units M1, M2, M3 or M5 according to claim 1, LI2 is a covalent bond and COM1 is one of the residues CM8 to CM9 or CM22 to CM24 according to claim 3; or
PG2 is constructed from the monomer unit M3 according to claim 1, LI2 is a covalent bond or one of the groups L3 to L6 according to claim 1 and COM1 is one of the residues CM1 to CM9 or CM15 to CM24 according to claim 3; or
PG2 is constructed from the monomer unit M3 according to claim 1, LI2 is one of the groups L12 to L14 according to claim 1 and COM1 is one of the residues CM8 to CM9 or CM15 to CM24 according to claim 3; or
PG2 is constructed from one of the monomer units M6 or M7 according to claim 1, LI2 is a covalent bond and COM1 is one of the residues CM1 to CM4 according to claim 3; or
PG2 is constructed from one of the monomer units M6 or M7 according to claim 1, LI2 is one of the groups L3 or L4 according to claim 1 and COM1 is one of the residues CM1 to CM4, CM8 to CM9 or CM15 to CM24 according to claim 3; or
PG2 is constructed from one of the monomer units M8 or M9 according to claim 1, LI2 is a covalent bond and COM1 is one of the residues CM1 to CM4 according to claim 3; or
PG2 is constructed from one of the monomer units M8 or M9 according to claim 1, LI2 is one of the groups L3 or L4 according to claim 1 and COM1 is one of the residues CM1 to CM4, CM8 to CM9 or CM15 to CM24 according to claim 3; or
PG2 is constructed from one of the monomer units M6 to M9 according to claim 1, LI2 is one of the groups L22 to L26 according to claim 1 and COM1 is one of the residues CM1 to CM4, CM8 to CM9 or CM15 to CM27 according to claim 3; or
PG2 is constructed from the monomer unit M10 according to claim 1, LI2 is a covalent bond and COM1 is one of the residues CM1 to CM4 according to claim 3; or
PG2 is constructed from the monomer unit M10 according to claim 1, LI2 is one of the groups L3 or L4 according to claim 1 and COM1 is one of the residues CM1 to CM4 according to claim 3; or
PG2 is constructed from the monomer unit M11 according to claim 1, LI2 is one of the groups L3 or L4 according to claim 1 and COM1 is one of the residues CM1 to CM4 according to claim 3; or
PG2 is constructed from one of the monomer units M12 or M13 according to claim 1, LI2 is a covalent bond and COM1 is a residue CM1 according to claim 3; or
PG2 is constructed from one of the monomer units M12 or M13 according to claim 1, LI2 is one of the groups L3 or L4 according to claim 1 and COM1 is one of the residues CM1 to CM4 according to claim 3; or
PG2 is constructed from one of the monomer units M12 or M13 according to claim 1, LI2 is a covalent bond and COM1 is a residue CM1 according to claim 3; or
PG2 is constructed from one of the monomer units M14 or M17 according to claim 1, LI2 is a covalent bond and COM1 is a residue CM1 according to claim 3; or
PG2 is constructed from one of the monomer units M14 to M19 according to claim 1, LI2 is a covalent bond and COM1 is one of the residues CM8 to CM9 or CM15 to CM26 according to claim 3; or
PG2 is constructed from one of the monomer units M14 to M19 according to claim 1, LI2 is the group L3 according

to claim 1 and COM1 is one of the residues CM15 to CM21 or CM27 according to claim 3; or
PG2 is constructed from one of the monomer units M14 to M19 according to claim 1, LI2 is the group L22 according to claim 1 and COM1 is one of the residues CM1 to CM4, CM8 to CM9 or CM15 to CM27 according to claim 3; or
PG2 is constructed from the monomer unit M20 according to claim 1, LI2 is a covalent bond or one of the groups L3 to L4 according to claim 1 and COM1 is one of the residues CM1 to CM4 according to claim 3; or
PG2 is constructed from the monomer unit M20 according to claim 1, LI2 is one of the groups L12 to L14 according to claim 1 and COM1 is one of the residues CM1 to CM2, CM8 to CM9 or CM15 to CM27 according to claim 3; or
PG2 is constructed from the monomer unit M21 according to claim 1, LI2 is a covalent bond and COM1 is one of the residues CM1 to CM4 according to claim 3; or
PG2 is constructed from the monomer unit M21 according to claim 1, LI2 is the group L12 according to claim 1 and COM1 is a residue CM1 according to claim 3; or
PG2 is constructed from the monomer unit M22 according to claim 1, LI2 is a covalent bond and COM1 is one of the residues CM1 to CM4 according to claim 3; or
PG2 is constructed from the monomer unit M22 according to claim 1, LI2 is the groups L12 according to claim 1 and COM1 is a residue CM1 according to claim 3; or
PG2 is constructed from the monomer unit M23 according to claim 1, LI2 is a covalent bond and COM1 is a residue CM1 according to claim 3; or
PG2 is constructed from the monomer unit M23 according to claim 1, LI2 is one of the groups L12 to L17 according to claim 1 and COM1 is one of the residues CM1 to CM9 or CM15 to CM21 according to claim 3; or
PG2 is constructed from one of the monomer units M24 or M25 according to claim 1, LI2 is a covalent bond and COM1 is a residue CM2 according to claim 3; or
PG2 is constructed from one of the monomer units M24 or M25 according to claim 1, LI2 is one of the groups L12 or L15 to L17 according to claim 1 and COM1 is one of the residues CM1 to CM2 according to claim 3; or
PG2 is constructed from one of the monomer units M26 or M27 according to claim 1, LI2 is a covalent bond and COM1 is a residue CM1 according to claim 3; or
PG2 is constructed from one of the monomer units M28 to M33 according to claim 1, LI2 is a group L3 according to claim 1 and COM1 is a residue CM1 according to claim 3; or
PG2 is constructed from one of the monomer units M28 to M33 according to claim 1, LI2 is a group L12 according to claim 1 and COM1 is a residue CM1 according to claim 3; or
PG2 is constructed from the monomer unit M34 according to claim 1, LI2 is a covalent bond and COM1 is a residue CM1 according to claim 3; or
PG2 is constructed from one of the monomer units M34 to M44 according to claim 1, LI2 is a covalent bond and COM1 is a residue CM2 according to claim 3; or
PG2 is constructed from one of the monomer units M34 to M44 according to claim 1, LI2 is a covalent bond or one of the groups L3 to L4 according to claim 1 and COM1 is one of the residues CM15 to CM21 according to claim 3; or
PG2 is constructed from the monomer unit M44 according to claim 1, LI2 is a covalent bond and COM1 is one of the residues CM5 to CM7 according to claim 3; or
PG2 is constructed from one of the monomer units M45 to M49 according to claim 1, LI2 is a covalent bond and COM1 is a residue CM1 according to claim 3; or
PG2 is constructed from one of the monomer units M45 to M49 according to claim 1, LI2 is a covalent bond and COM1 is a residue CM2 according to claim 3; or
PG2 is constructed from one of the monomer units M50 to M59 according to claim 1, LI2 is a covalent bond and COM1 is a residue CM2 according to claim 3.

**8.** Redox flow cell according to one of the claims 1 to 7, wherein the redox-active component comprises at least one structural unit of formula I, which has been obtained by reaction of a functionalized polymer base structure with a functional unit comprising a functional residue LI1, being covalently connected to a residue RAE1, in which the polymer base structures possess the structures P10 to P21, wherein in polymer base structures P12 and P15 the sum of the indices n+m is 1 and the amount of the structural units designated as $-[]_n-$, referring to the structural units designated as $-[]_n-[]_m-$, is between 0 and 100% by weight

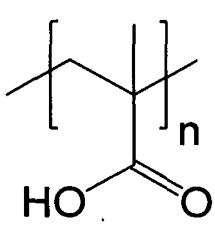
P10

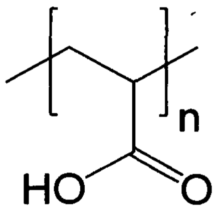
P11

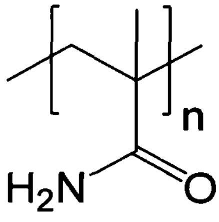
P13

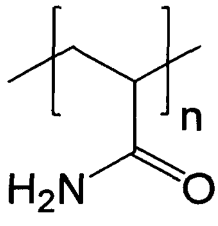
P14

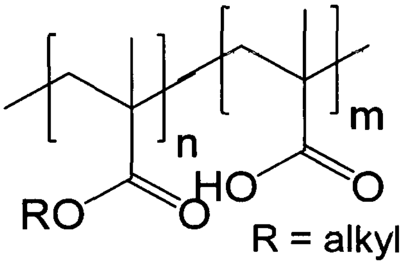
R = alkyl until $C_{20}$

P12

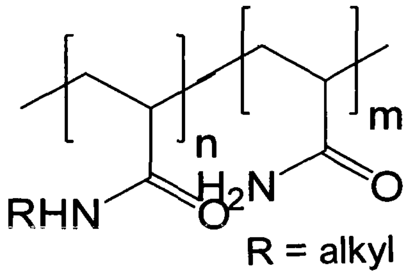
R = alkyl until $C_{20}$

P15

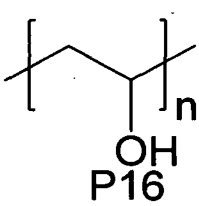
P16

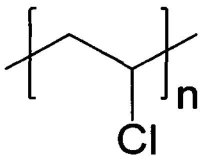
P17

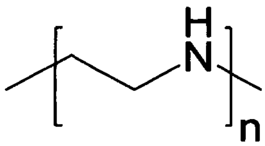
P18

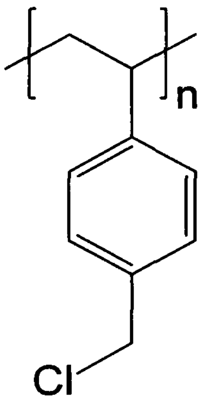
P19

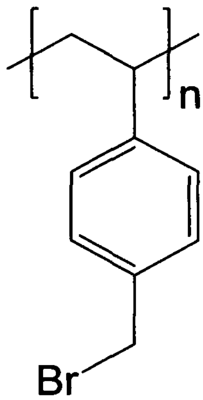
P20

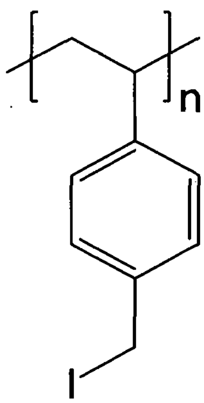
P21

and in which the structure of formula I contains residues LI1, which have been created by reaction of functionalized residues RG1 to RG12 with the polymer base structures P10 to P21

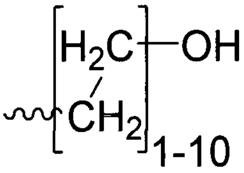
RG1

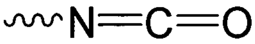
RG2

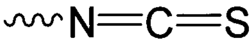
RG3

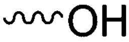
RG4

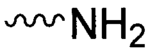
RG5

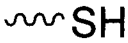
RG6

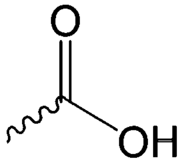
RG13

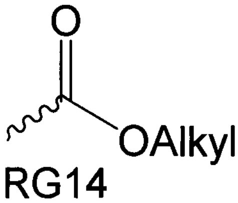
RG14

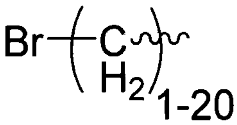
RG7

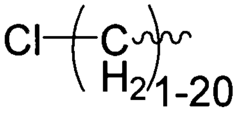
RG8

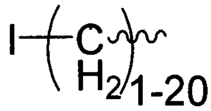
RG9

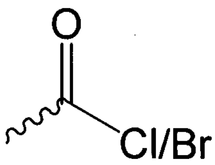
RG15

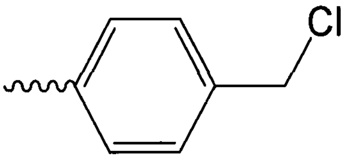
RG10 (p,m,o)

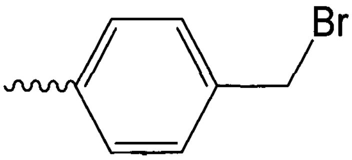
RG11 (p,m,o)

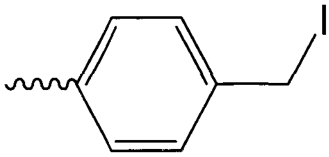
RG12 (p,m,o)

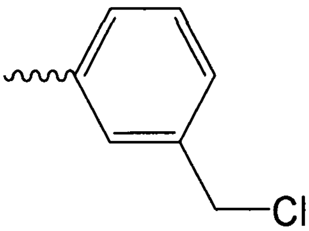

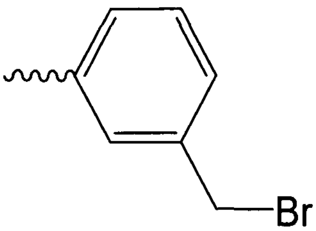

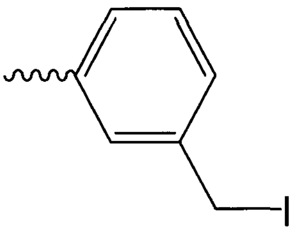

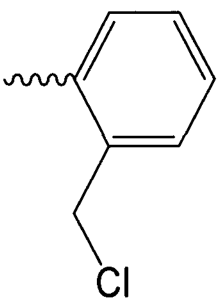

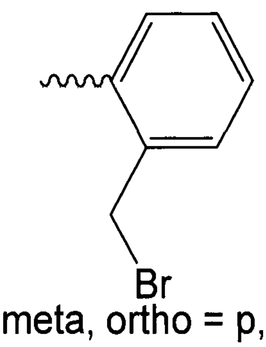

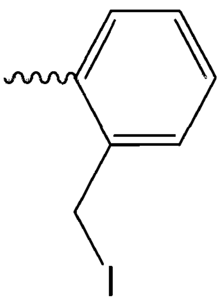

(para, meta, ortho = p,m,o)

in which the corrugated bonds represent the covalent bonds to residue RAE1.

**9.** Redox flow cell according to one of the claims 1 to 8, wherein this contains esters of carbonic acid as electrolyte

solvent in combination with oligomers or polymers which comprises at least one type of redox-active unit in the side chain and which carries solubility mediating side chains or -functionalities,

- wherein N,N'-substituted 4,4'-bipyridines, quinones, anthraquinones, verdazyl-radicals, borondipyrromethenes, nitroxylnitroxide-radicals or nitroxide-radicals, especially preferred the 2,2,6,6-tetramethylpiperidine-1-oxyl-radical and N-methyl-[4,4'-bipyridine]-1-iumchloride are employed as redox-active unit and/or
- wherein the residues L1 to L26 according to claim 1, preferably L3, L4, L5, L6, L8, L12 and L19 according to claim 1 are employed as linker LI1, LI2, LI3, LI4 and/or LI5 and/or
- wherein the residues M1 to M59 according to claim 3, preferably M1, M2, M6, M7, M8, M9, M11, M14, M21, M22, M23, M45 or M46 are employed as groups PG1, PG2, PG3, PG4 and/or PG5 and/or
- wherein residues CM1 to CM9 or CM15 to CM27 according to claim 4, preferably CM4, CM9, CM17 to CM21 and CM 26 are employed as groups COM1 and/or COM2.

**10.** Redox flow cell according to one of the claims 1 to 9, wherein this contains esters of carbonic acid as electrolyte solvent in combination with oligomers or polymers which comprise at least one type of redox-active unit in the side chain and which carry solubility mediating side chains or -functionalities,

- wherein following redox-active components are employed as anolyte:

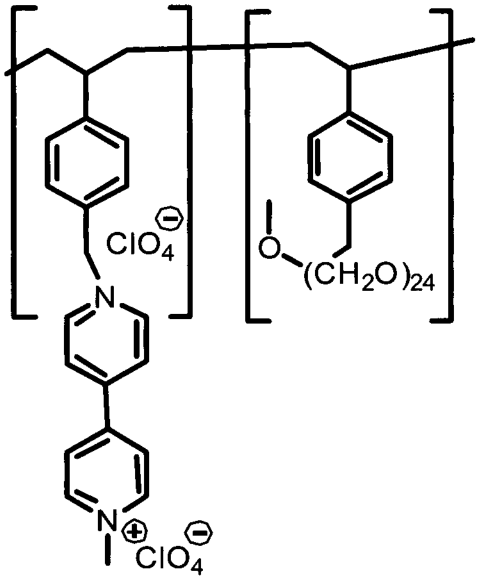

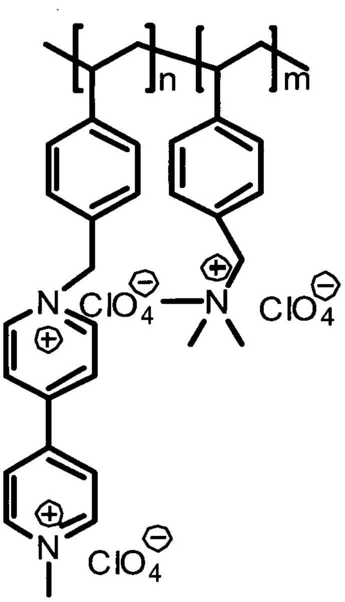

or

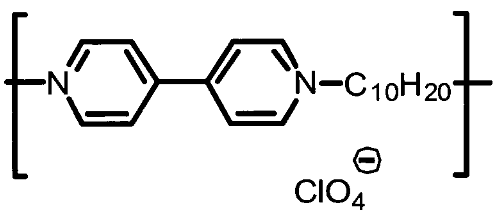

- and wherein following redox-active components are employed as catholyte:

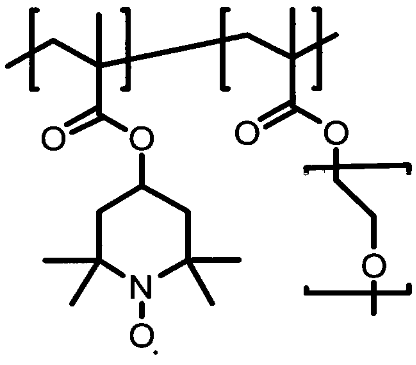

or

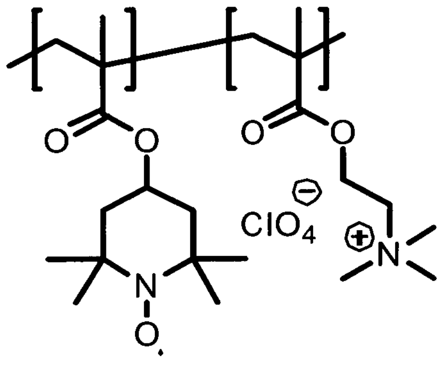

**11.** Redox flow cell according to one of the claims 1 to 10, wherein this contains water as electrolyte solvent in combination with oligomers or polymers, which comprises at least one type of redox-active unit in the side chain and which carries solubility mediating side chains or -functionalities,

- wherein N,N'-substituted 4,4'-bipyridines, quinones, anthraquinones, verdazyl-radicals, borondipyrromethenes, nitroxylnitroxide-radicals or nitroxide-radicals, especially preferred the 2,2,6,6-tetramethylpiperidine-1-oxyl-radical, N-methyl-[4,4'-bipyridine]-1-ium-chloride, 1-(2-(trimethyl-ammonio)-ethyl)-[4,4'-bipyridine]-1-iumchloride are employed as redox-active unit and/or
- wherein the residues L1 to L26 according to claim 1, preferably L3, L4, L5, L6, L8, L12 and L19 are employed as linker LI1, LI2, LI3, LI4 and/or LI5 and/or
- wherein residues M1 to M59 according to claim 3, preferably M1, M2, M6, M7, M8, M9, M11, M14, M21, M22, M23, M45 or M46 are employed as groups PG1, PG2, PG3, PG4 and/or PG5 and/or
- wherein residues CM1 to CM9 or CM15 to CM27 according to claim 4, preferably CM4, CM9, CM16 to CM21 and CM 26 are employed as groups COM1 and/or COM2 and/or
- wherein following redox-active components are employed as anolyte:

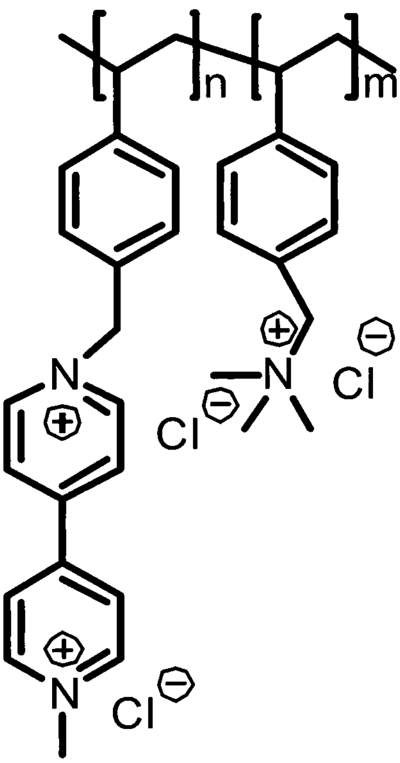

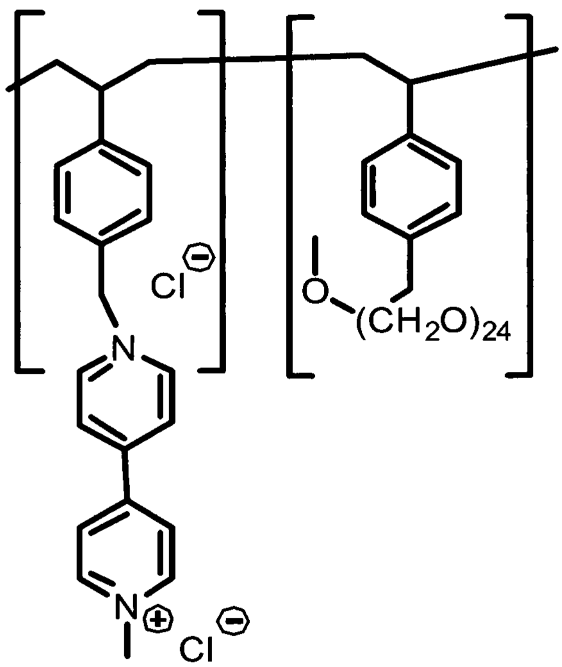

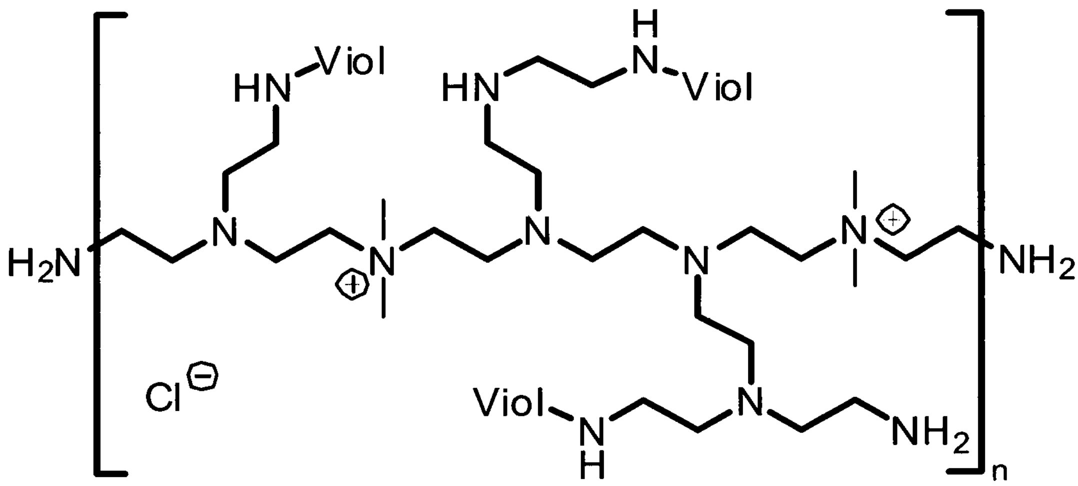

and/or

• wherein following redox-active components are employed as catholyte:

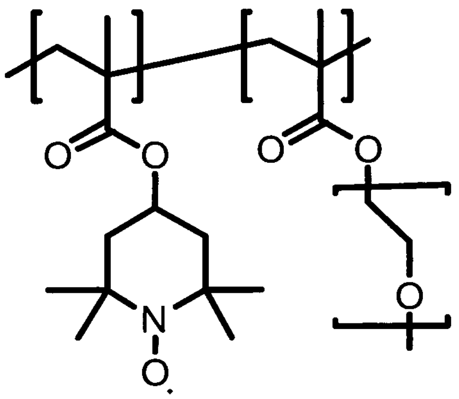

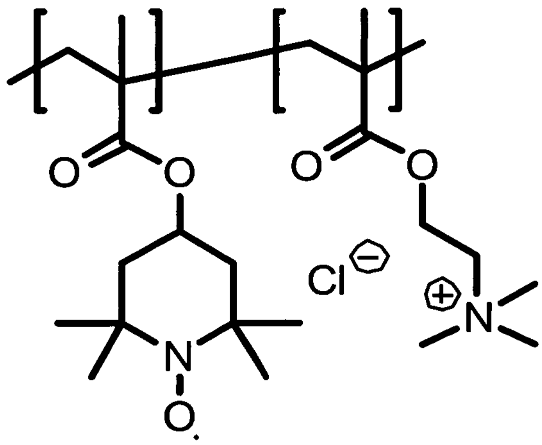

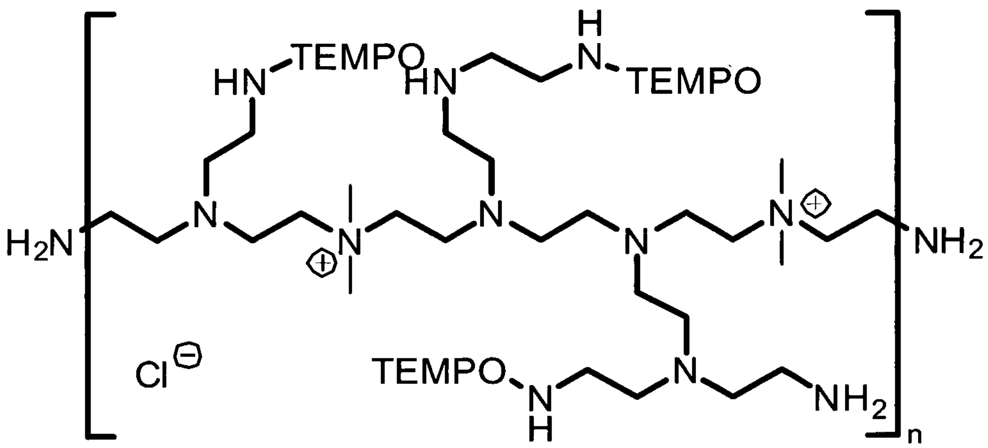

wherein Viol stands for and TEMPO stands for

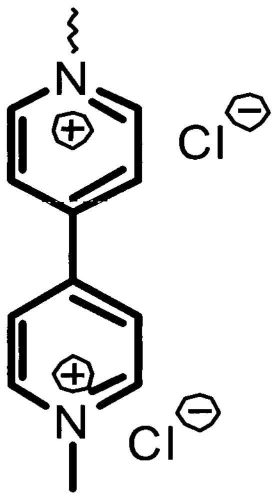

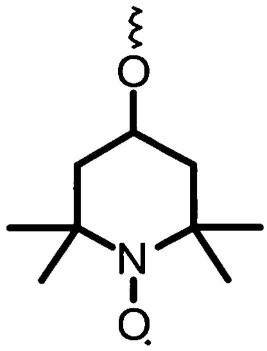

**12.** Use of the redox flow cell according to one of the claims 1 to 11 for storage of electrical energy for mobile and stationary applications, preferably for applications in the field of electromobility, as repository in land, air and water vehicles, as stationary repository for emergency power supply, for peak load adjustment, and for the intermediate storage of electrical energy from replenishable energy sources, especially in the sector of photovoltaik and wind power or from gas-fired-, coal-fired-, biomass-fired- tidal- or marine-power plants.

## Revendications

**1.** Pile à flux redox pour le stockage d'énergie électrique, contenant une cellule de réaction comportant deux chambres à électrodes (1, 2) destinées au catholyte et à l'anolyte, qui sont chacune raccordées avec au moins un réservoir de liquide, qui sont séparées par une membrane à échange d'ions et qui sont équipées d'électrodes (10, 11), lesdites chambres (1, 2) étant chacune remplies de composants à activité redox, ou contenant ceux-ci, qui se présentent en substance, sous forme dissoute, émulsifiée ou dispersée dans un solvant d'électrolyte, la membrane étant une membrane à exclusion stérique (3) qui présente une sélectivité d'au moins 400 g/mole, les deux composants à activité redox ayant une masse molaire d'au moins 400 g/mole et contenant une unité structurale de formule I et de formule II ou de formule I, de formule II et de formule III ou de formule IV

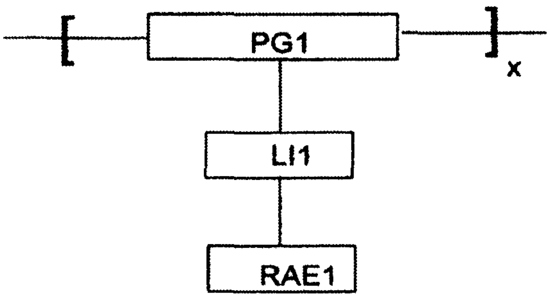

(I),

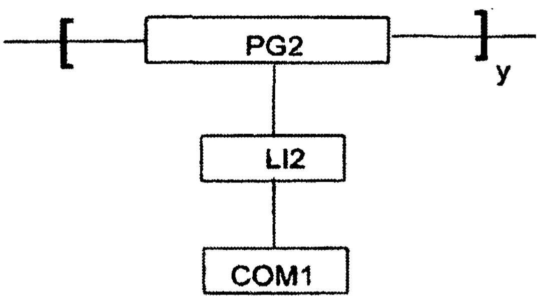

(II),

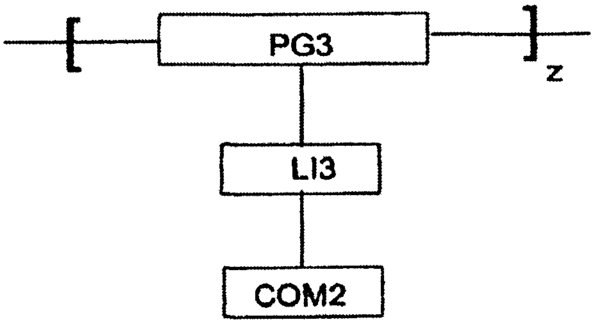


(III),

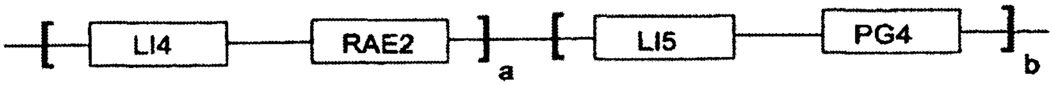


(IV),

dans lesquelles PG1, PG2, PG3 et PG4 représentent indépendamment les uns des autres des squelettes de polymères organiques, qui sont dérivés indépendamment les uns des autres de monomères pour la polymérisation par ouverture de cycle, pour le couplage oxydatif, pour la polycondensation, pour la polymérisation par métathèse par ouverture de cycle, pour la polymérisation radicalaire ou pour la polymérisation ionique, choisis dans le groupe des monomères M1 à M59

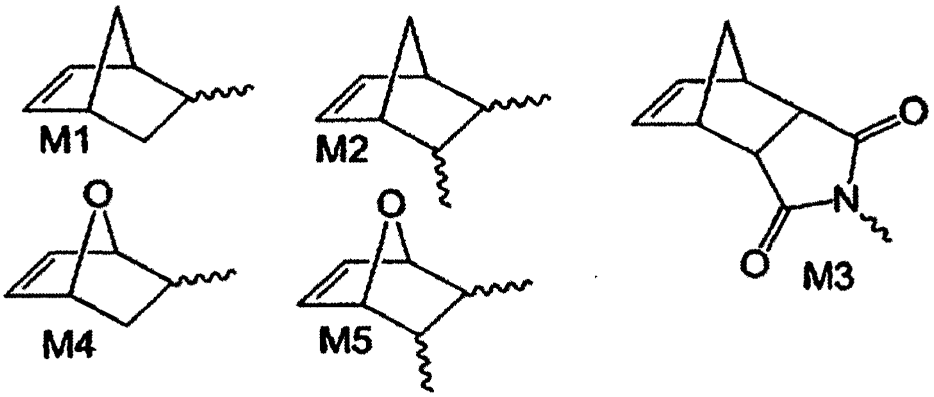

M1 M2 M3 M4 M5

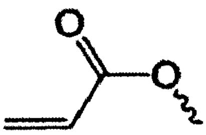

M6

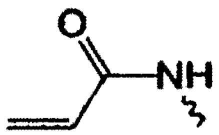

M8

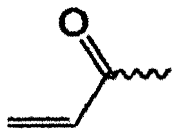

M10

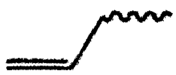

M12

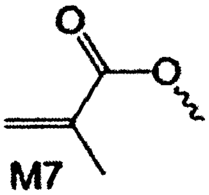

M7

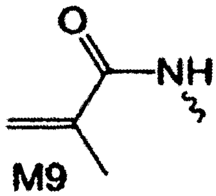

M9

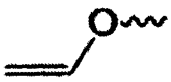

M11

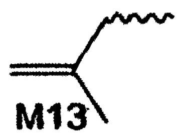

M13

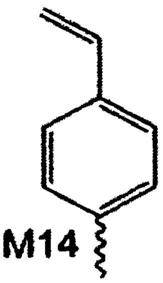
M14

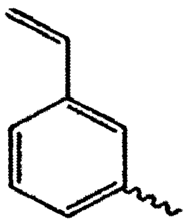
M15

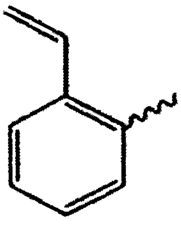
M16

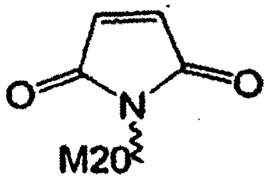
M20

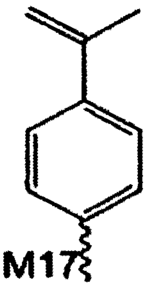
M17

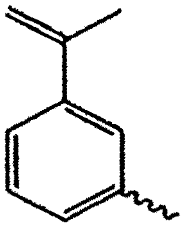
M18

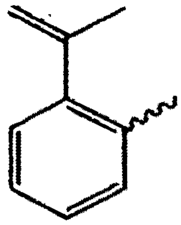
M19

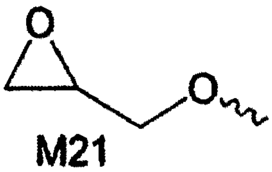
M21

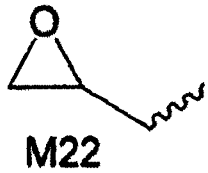
M22

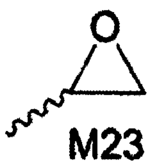
M23

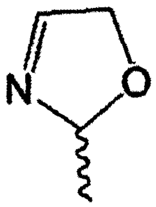
M24

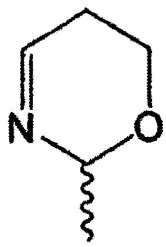
M25

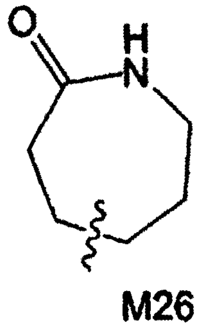
M26

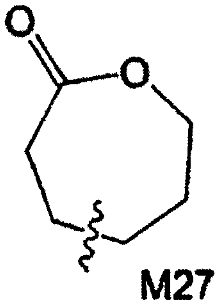
M27

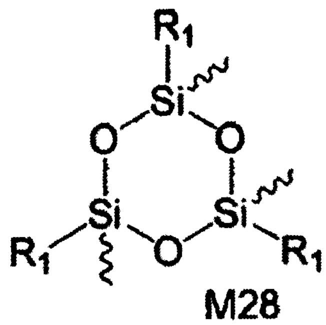
M28

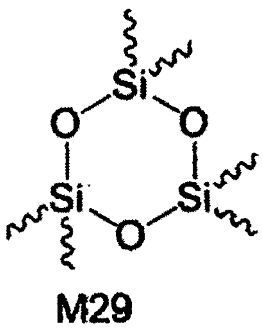
M29

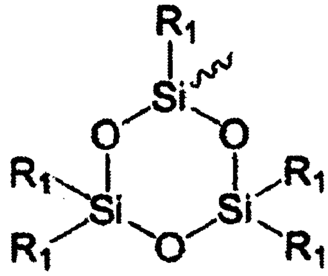
M30

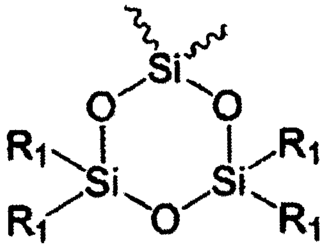
M31

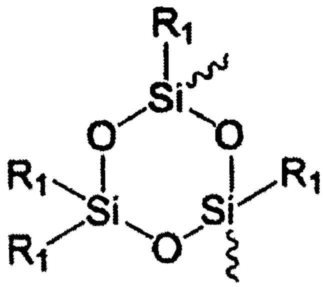
M32

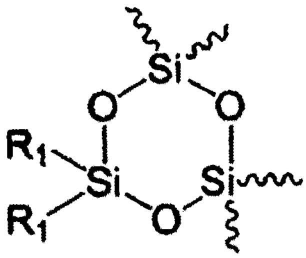
M33

R1 = méthyle, éthyle, phényle

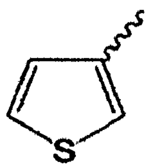
M34

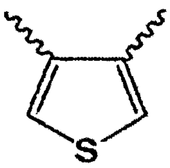
M35

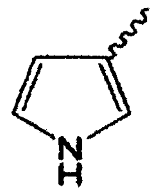
M36

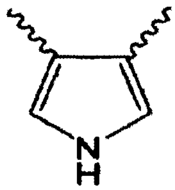
M37

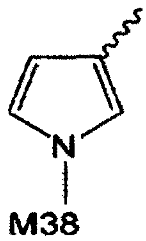
M38

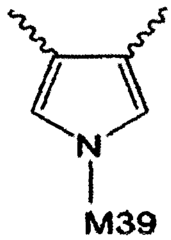
M39

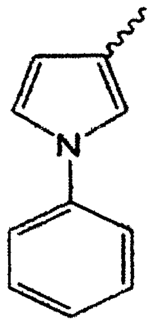
M42

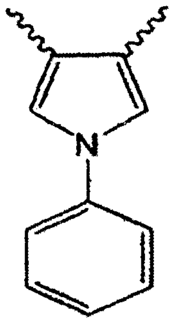
M43

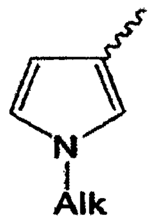

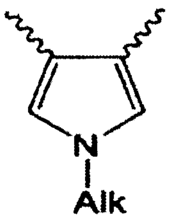

Alk : chaînes alkyle jusqu'à $C_{10}$

M40

M41

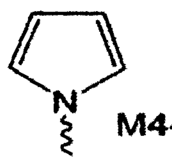
M44

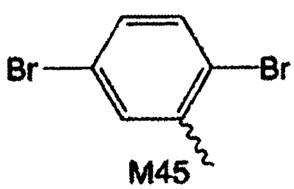
M45

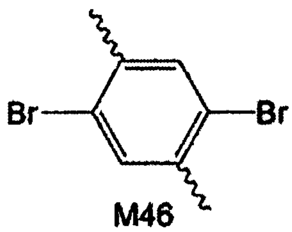
M46

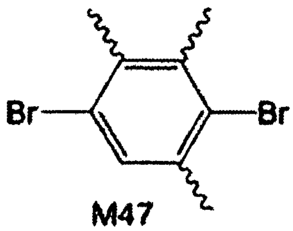
M47

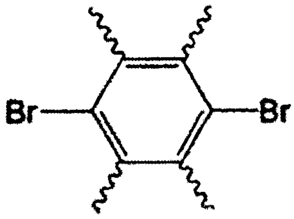
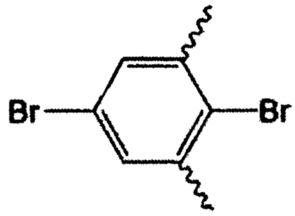

M48 M49

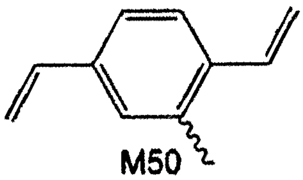
M50

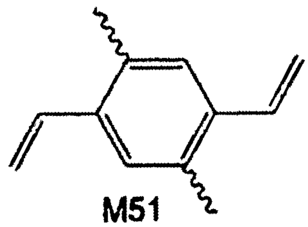
M51

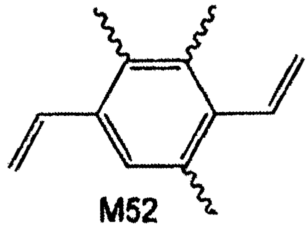
M52

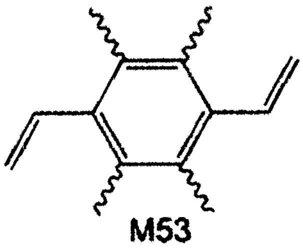
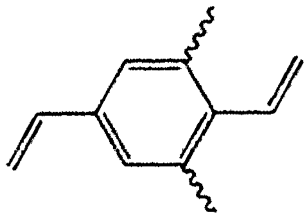

M53 M54

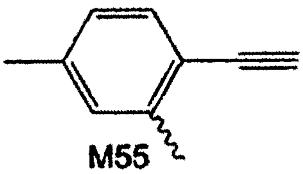
M55

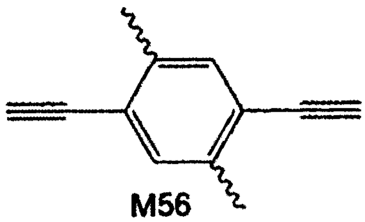
M56

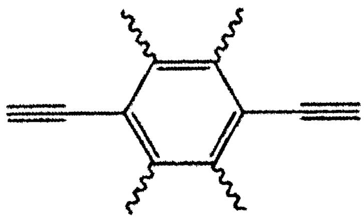
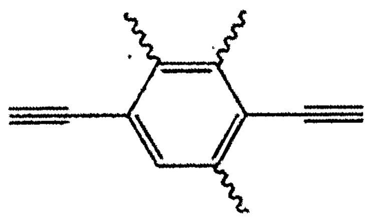

M57 M58

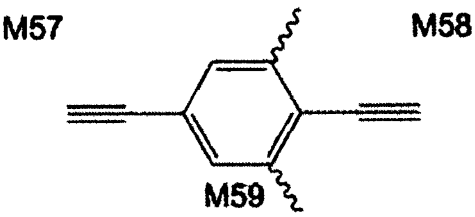
M59

les liaisons ondulées signifiant les liaisons covalentes LI1 à LI5 ou les liaisons vers les groupes de pontage LI1 à LI5, ou dans lesquelles PG1 représente un squelette d'un polymère organique hyper-ramifié, qui est dérivé des structures P1 à P9 et contient le radical LI1 ayant au moins une des structures L1 à L21 définies ci-après ou dans lequel LI1 signifie une liaison covalente, P1 étant une polyéthylène-imine hyper-ramifiée de la structure suivante :

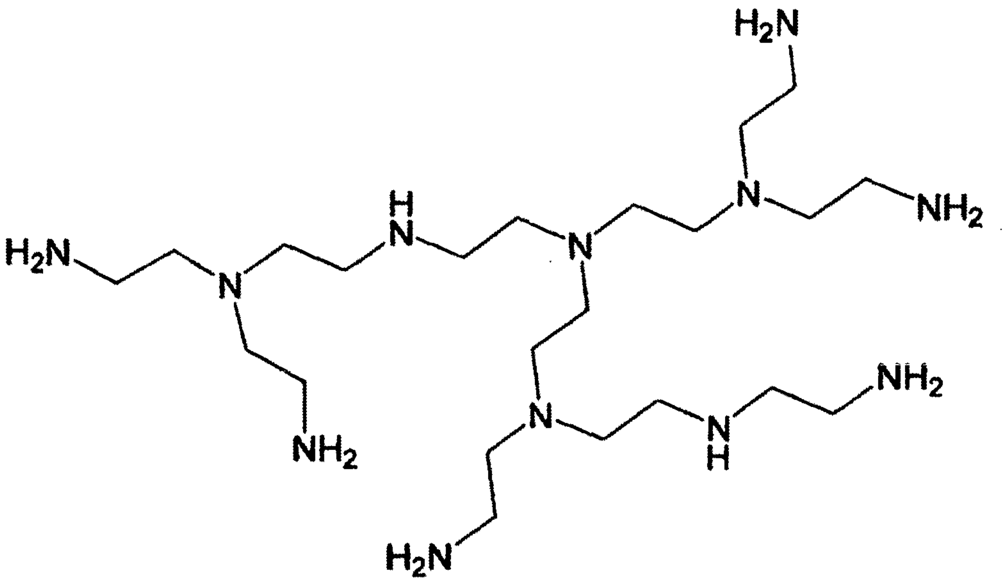

P2 étant un polyglycérol hyper-ramifié de la structure suivante :

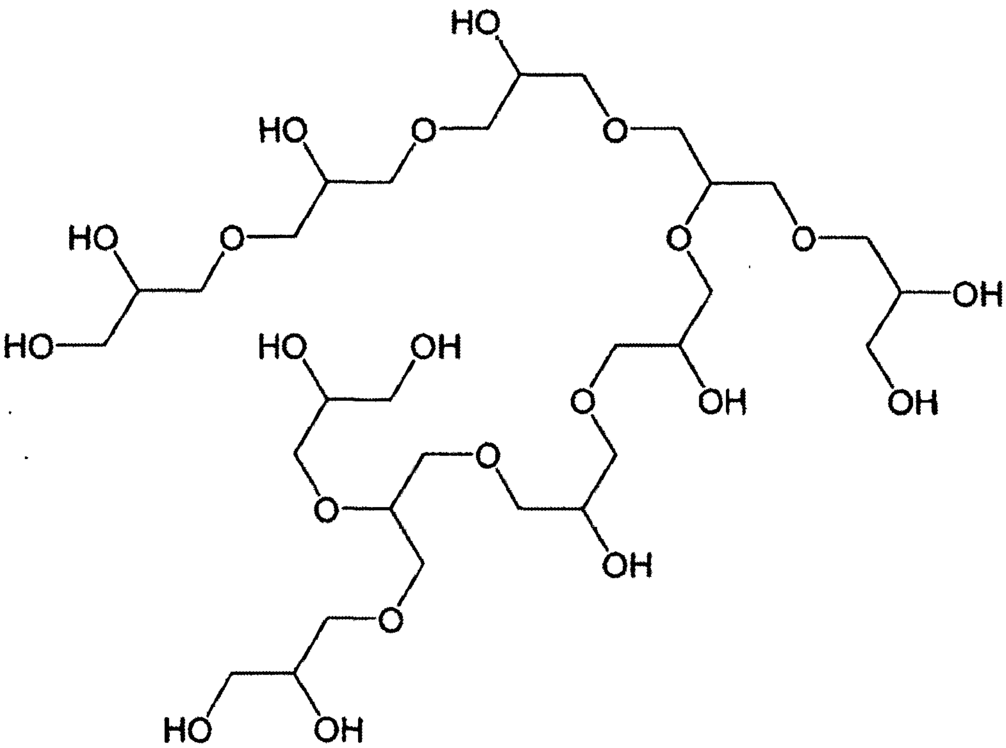

P3 à P7 étant des dendrimères des structures suivantes :

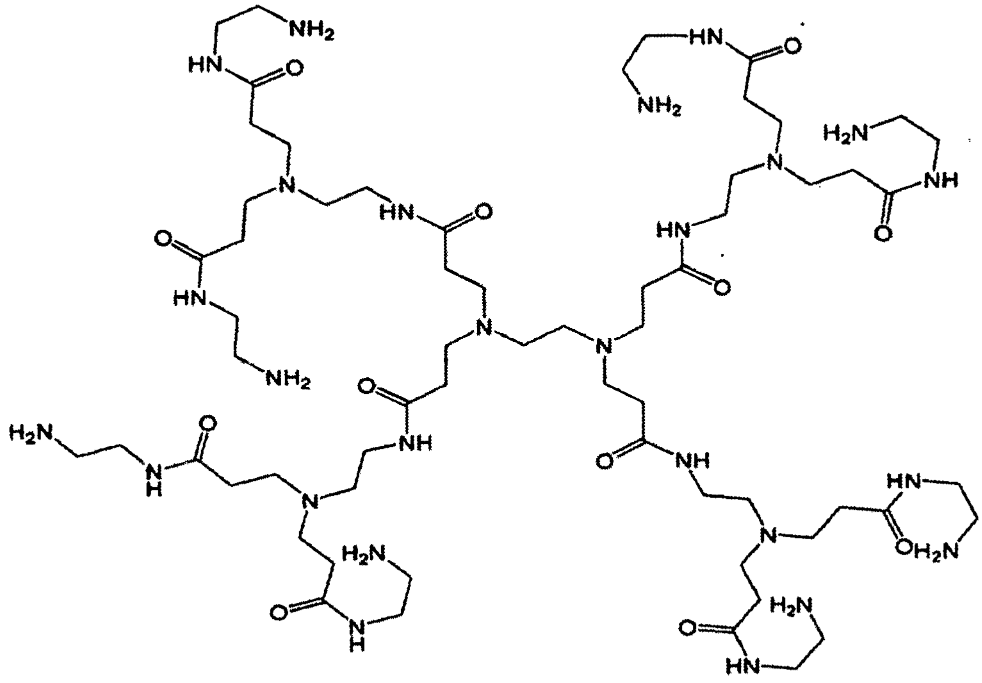

P3

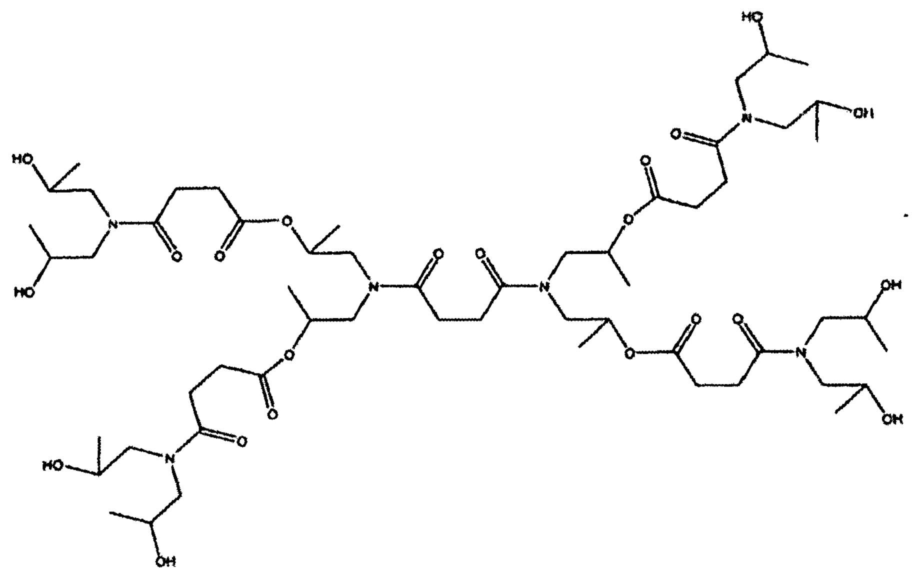

P4

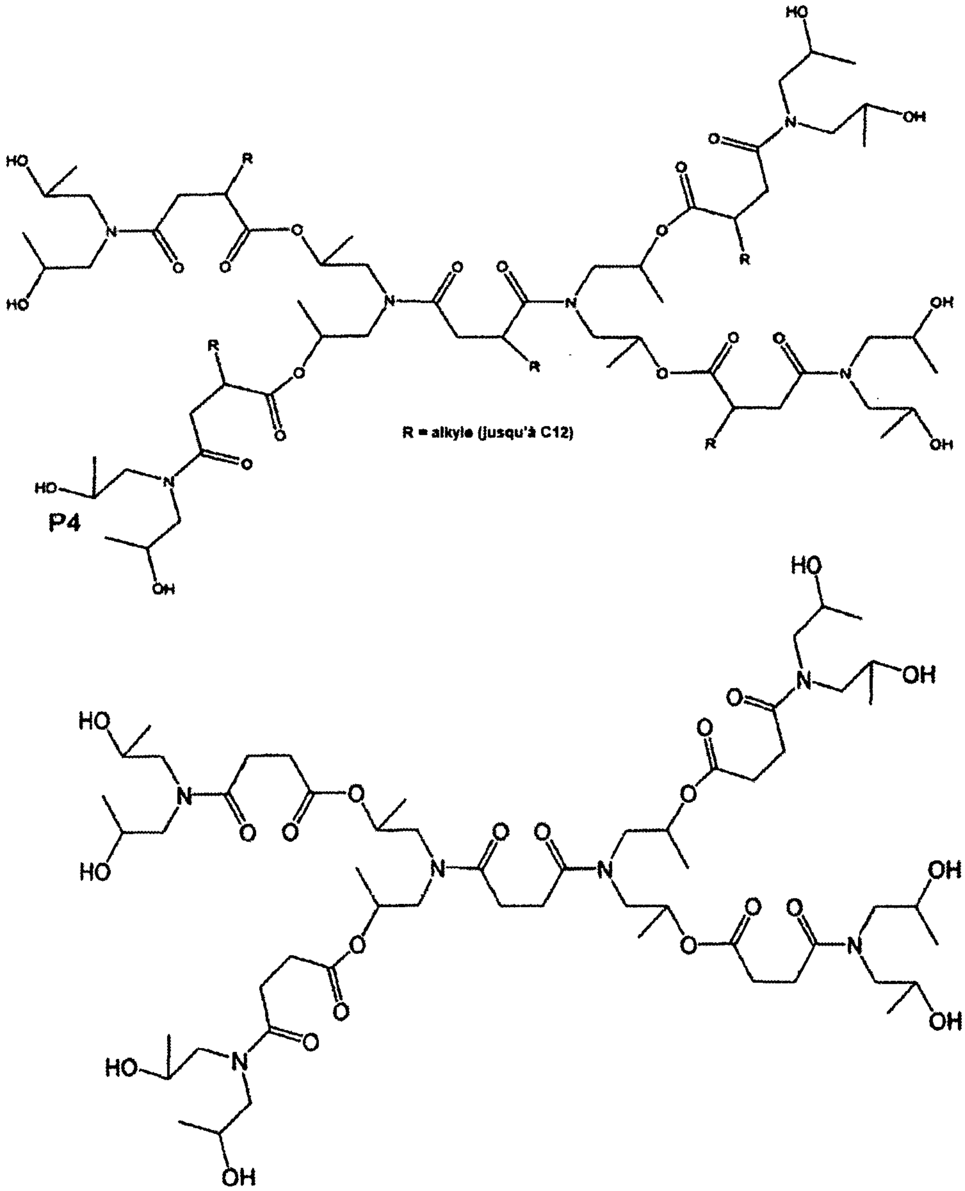


P4

P5

P6 ayant un rapport molaire entre l'acide phtalique et l'acide succinique de 10:90 à 30:70, de manière particulièrement préférée de 20:80,

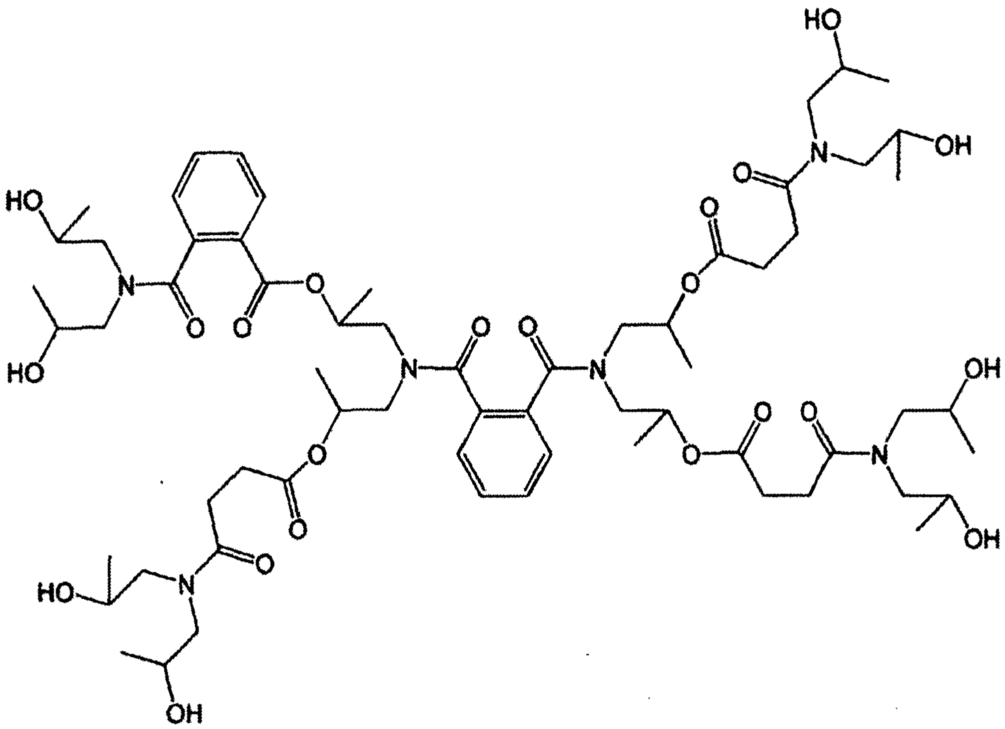

P7 étant une structure P6 hydrogénée ayant un rapport molaire entre l'acide hexahydrophtalique et l'acide succinique de 10:90 à 30:70, de manière particulièrement préférée de 20:80,
P8 étant une polypropylène-imine ou un dendrimère de polypropylène-imine hyper-ramifié ayant la structure suivante :

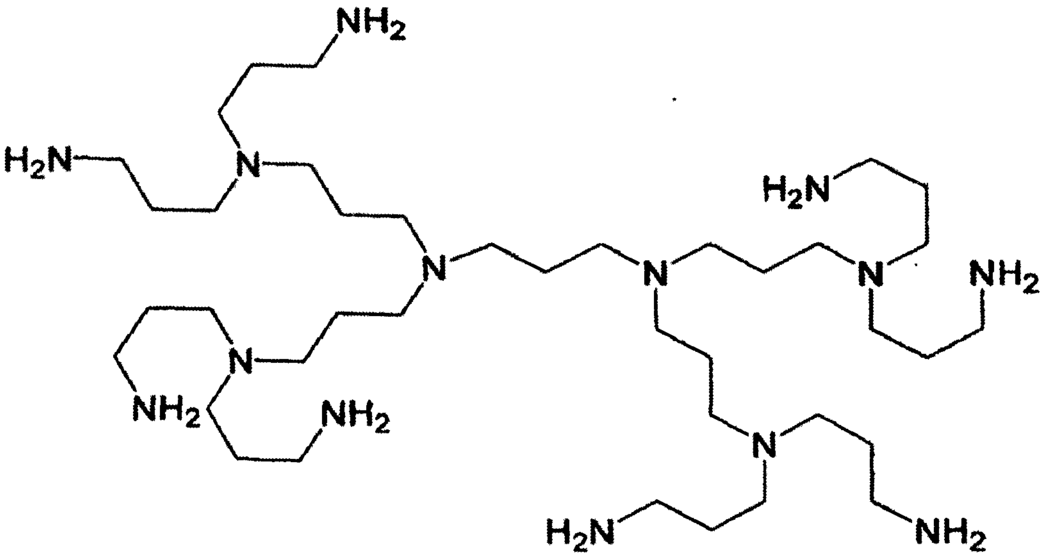

et P9 étant un polyester hyper-ramifié ayant la structure suivante :

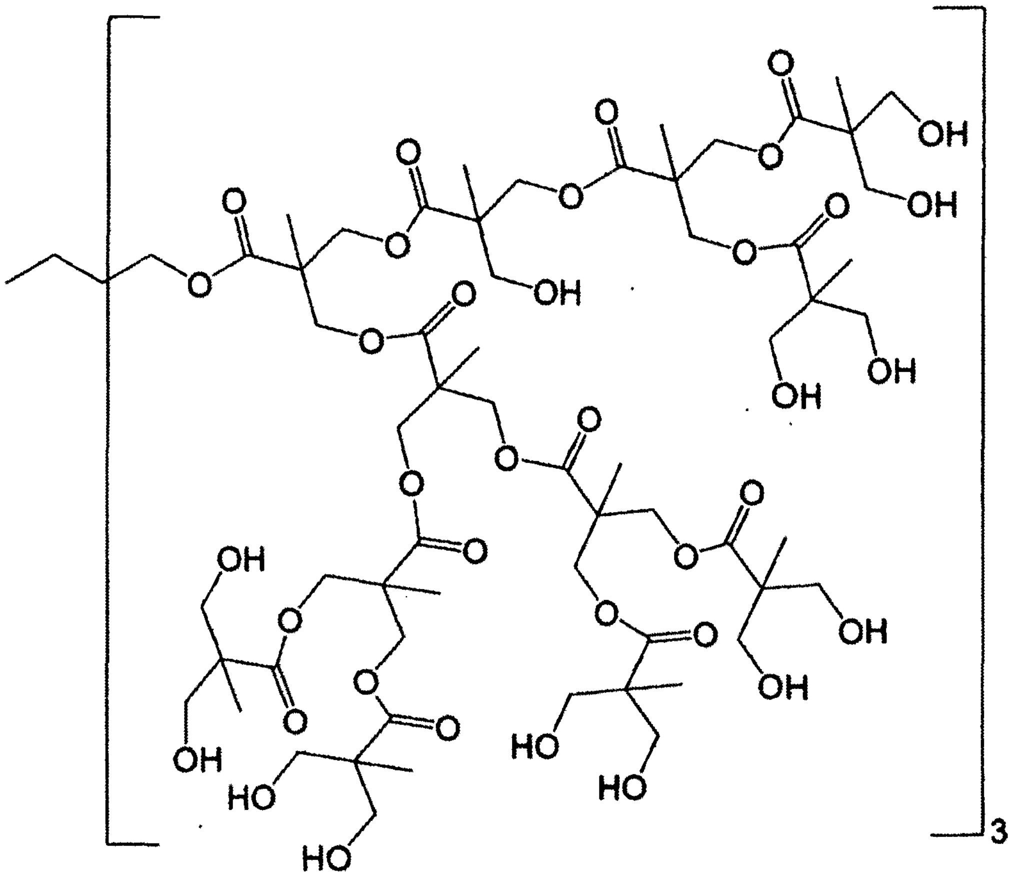

RAE1 signifie un groupe à activité redox monovalent, LI1, LI2 et LI3 signifient indépendamment les uns des autres des liaisons covalentes entre des atomes de PG1 et RAE1, PG2 et COM1 ou PG3 et COM2, ou sont des groupes de pontage organiques bivalents choisis parmi les radicaux L1 à L26 définis ci-après,
COM1 et COM2 sont indépendamment l'un de l'autre hydrogène, hydroxyle, un groupe amino, un groupe acide sulfonique ou différents groupes latéraux organiques monovalents, qui sont choisis parmi les radicaux d'un groupe alkyle de jusqu'à 20 atomes de carbone, d'un groupe carboxyle, d'un groupe alkylamino de jusqu'à 20 atomes de carbone dans le radical alkyle, d'un groupe dialkylamino de jusqu'à 20 atomes de carbone dans les radicaux alkyle, d'un groupe amide d'acide carboxylique, d'un groupe amide d'acide N-alkylcarboxylique de jusqu'à 20 atomes de carbone dans le radical alkyle, d'un groupe amide d'acide N,N-dialkylcarboxylique de jusqu'à 20 atomes de carbone dans les radicaux alkyle, ou dérivent d'acide acrylique, d'acide méthacrylique, d'acrylates d'alkyle, de méthacrylates d'alkyle, d'acrylates et de méthacrylates d'oligoéthylène glycol, de styrène, de sulfonate de styrène et ses sels, de chlorure de (vinylbenzyl)triméthylammonium et de sels comparables, de butadiène, d'isoprène, d'oxyde d'éthylène, d'oxyde de propylène, d'éther de vinyle et de méthyle, d'éther de vinyle et d'éthyle, de thiophène, de 3-hexylthiophène, de 3,4-éthylène-dioxythiophène et de pyrrole,
RAE2 signifie un groupe à activité redox bivalent,
LI4 signifie une liaison covalente entre des atomes de deux groupes RAE2 ou entre des atomes de RAE2 et PG4, ou est un groupe de pontage organique bivalent choisi parmi les radicaux L1 à L26 définis ci-après,
LI5 signifie une liaison covalente entre des atomes de deux groupes PG4 ou entre des atomes de RAE2 et PG4, ou est un groupe de pontage organique bivalent choisi parmi les radicaux L1 à L26 définis ci-après,
les radicaux des formules L1 à L26 ayant la signification suivante :

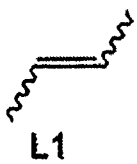
L1

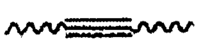
L2

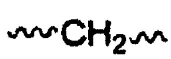
L3

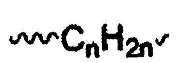
(chaînes alkyle jusqu'à C20) L4

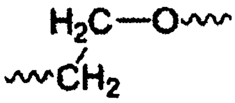

L5

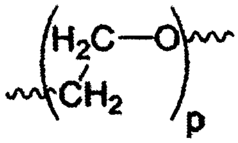

p = 2-10

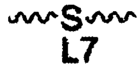

L7

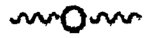

L8

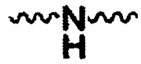

L9

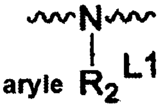

L10

R2 = alkyle jusqu'à C10 et aryle

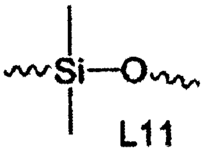

L11

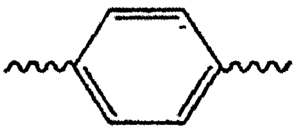

L12

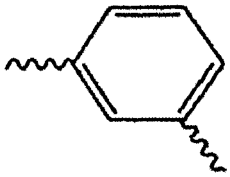

L13

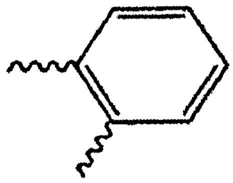

L14

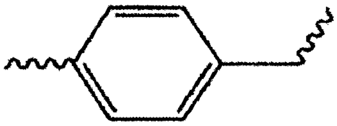

L15

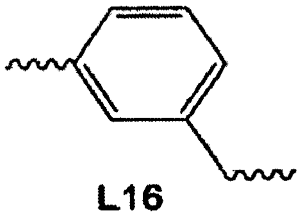

L16

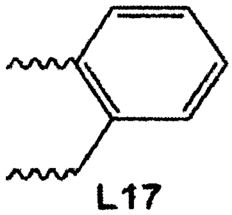

L17

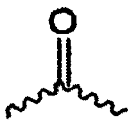

L18

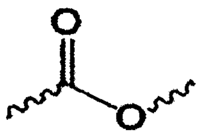

L19

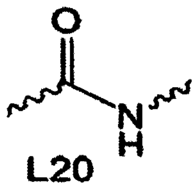

L20

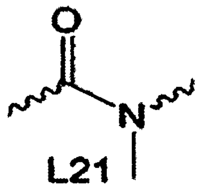

L21

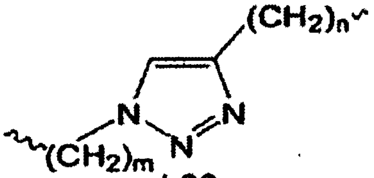

L22

n, m = 0-15 (chaînes alkyle)

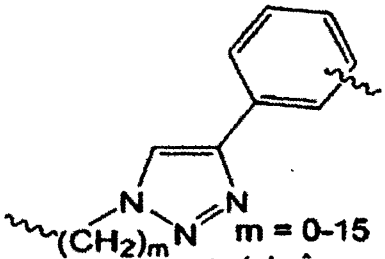

ortho, méta, para

m = 0-15

L23 (chaînes alkyle)

ortho, méta, para

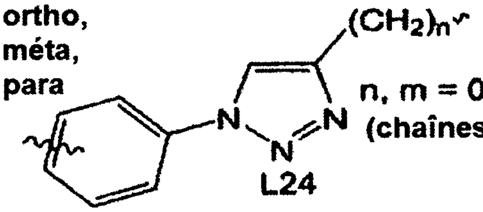

n, m = 0-15 (chaînes alkyle)

L24

ortho, méta, para

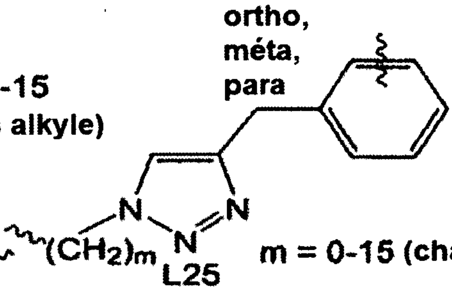

L25

m = 0-15 (chaînes alkyle)

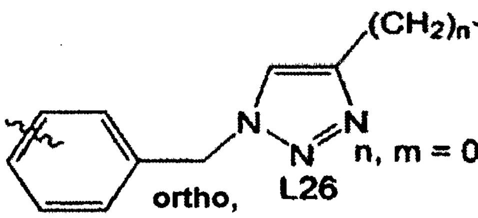

n, m = 0-15 (chaînes alkyle)

ortho, méta, para

L26

les liaisons ondulées signifiant les liaisons vers les groupes PG1 et RAE1, PG2 et COM1, PG3 et COM2, PG4 et RAE2 et deux RAE2,
x étant un nombre entier ≥ 1,
y étant un nombre entier ≥ 0,
z étant un nombre entier ≥ 0,
a étant un nombre entier ≥ 1 et
b étant un nombre entier ≥ 0, et la différence de potentiel entre les réactions redox des composants à activité redox se produisant respectivement dans l'anolyte et le catholyte étant comprise entre plus de 0 et 4,0 V, à la condition que le poly(4,4'-bipyridine-co-poly(éthylène glycol) soit exclu en tant que composant à activité redox dans l'anolyte.

2. Pile à flux redox selon la revendication 1, **caractérisée en ce que** celle-ci contient dans le solvant d'électrolyte des sels conducteurs et/ou d'autres additifs dissous dans celui-ci.

3. Pile à flux redox selon la revendication 1, **caractérisée en ce que** COM1 et COM2 sont formés indépendamment l'un de l'autre à partir de monomères des formules CM1 à CM9 et/ou CM15 à CM27

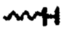
CM1

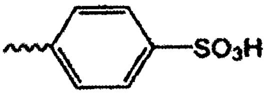
CM5

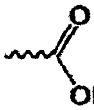
CM8

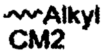
CM2
alkyle jusqu'à C20

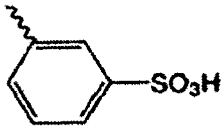
CM6

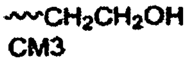
CM3

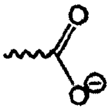
CM9

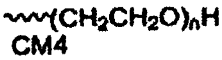
CM4
n = 2-20

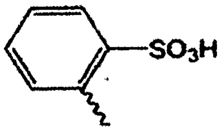
CM7

(avec un contre-ion, tel que p. ex. $Na^+$, $K^+$, des sels d'ammonium, des sels d'alkylammonium)

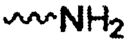
CM15

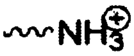
CM16

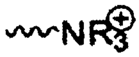
CM17

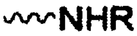
CM18

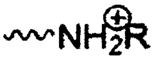
CM19

R = alkyle jusqu'à $C_{20}$

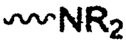
CM20

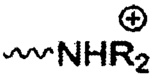
CM21

CM22
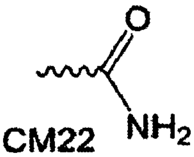

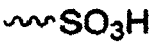
CM25

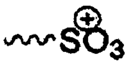
CM26

CM23
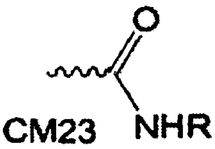

CM24
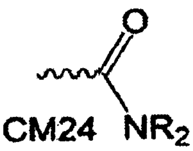

(avec des contre-ions, tels que p. ex. $Na^+$, $K^+$, des sels d'ammonium, des sels d'alkylammonium)

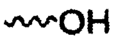
CM27

les liaisons ondulées signifiant les liaisons vers les groupes LI1 ou LI2.

4. Pile à flux redox selon l'une quelconque des revendications 1 à 3, **caractérisée en ce que** RAE1 et RAE2 sont choisis indépendamment l'un de l'autre parmi les radicaux des formules RE1 à RE6,
les radicaux de formule RE1 signifiant des 4,4'-bipyridines substituées ou leurs dérivés selon la structure suivante :

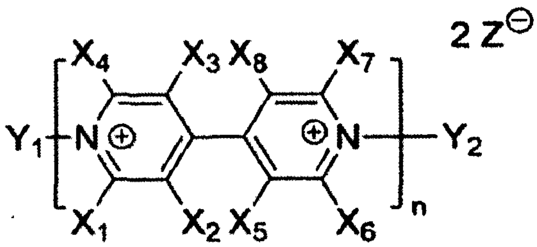

les radicaux de formule RE2 signifiant des quinones ou leurs dérivés selon les structures suivantes :

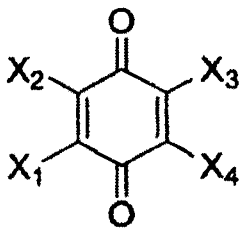

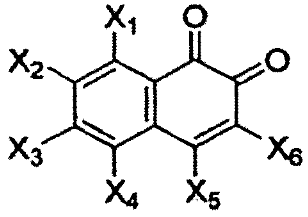

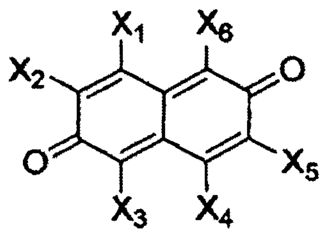

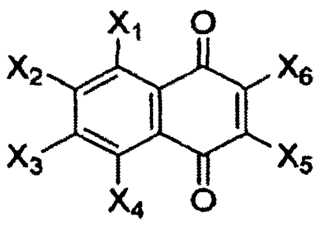

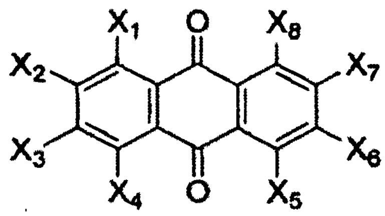

les radicaux de formule RE3 signifiant des radicaux verdazyle ou leurs dérivés selon la structure suivante :

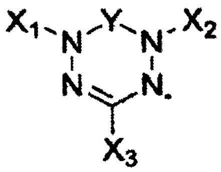

les radicaux de formule RE4 signifiant des radicaux nitroxylnitroxyde ou leurs dérivés selon la structure suivante :

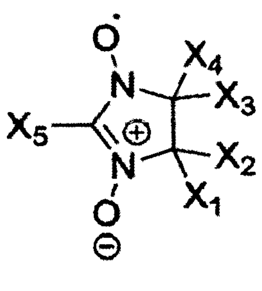

les radicaux de formule RE5 signifiant des radicaux nitroxyde ou leurs dérivés selon la structure suivante :

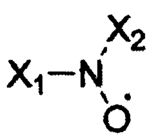

les radicaux de formule RE6 signifiant des borodipyrrométhènes ou leurs dérivés selon la structure suivante :

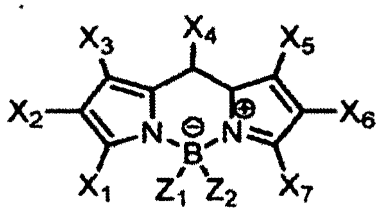

dans ces radicaux RE1 à RE6,

$X_1$, $X_2$, $X_3$, $X_4$, $X_5$, $X_6$, $X_7$ et $X_8$ dans les radicaux RE1 et RE2 étant indépendamment les uns des autres des atomes d'hydrogène, des groupes alkyle, des groupes alcényle, des groupes alcynyle, des groupes alkylthio, des groupes monoalkylamino, des groupes diakylamino, des groupes haloalkyle, des groupes haloalcoxy, des groupes alkylcarbonyle, des groupes alcénylcarbonyle, des groupes alcynylcarbonyle, des groupes ester d'acide alkylcarboxylique, des groupes ester d'acide alcénylcarboxylique, des groupes ester d'acide alcynylcarboxylique, des groupes alcoxy, des groupes cycloalkyle, des groupes cycloalcoxy, des groupes aryle, des groupes hétéroaryle, des groupes aryloxyle, des groupes aralkyle, des atomes d'halogène, des groupes cyano et/ou des groupes nitro, à condition qu'un ou deux des emplacements de liaison $X_1$, $X_2$, $X_3$, $X_4$, $X_5$, $X_6$, $X_7$ et $X_8$ soient reliés à un des groupes LI1, LI4, LI5 ou PG1,

$X_1$, $X_2$ et $X_3$ dans le radical RE3 ayant une des significations définies pour $X_1$ à $X_8$ dans le radical RE1 ou RE2,

$X_1$, $X_2$, $X_3$, $X_4$ et $X_5$ dans le radical RE4 ayant une des significations définies pour $X_1$ à $X_8$ dans le radical RE1 ou RE2,

$X_1$ et $X_2$ dans le radical RE5 étant indépendamment l'un de l'autre des groupes aliphatiques, des groupes aromatiques, des groupes hydroxy, des groupes alcoxy, des groupes aldéhyde, des groupes carboxyle, des groupes alcoxycarbonyle, des groupes cyano, des groupes amino, des groupes nitro, des groupes nitroso, des atomes d'halogène ou l'hydrogène, $X_1$ et $X_2$ en tant que groupes aliphatiques étant saturés et insaturés, substitués ou non substitués, linéaires, cycliques ou ramifiés, et ces groupes aliphatiques pouvant contenir au moins un atome d'oxygène, d'azote, de soufre, de silicium, de phosphore, de bore ou d'halogène, $X_1$ et $X_2$ en tant que groupes aromatiques pouvant être substitués ou non substitués, et ces groupes aromatiques pouvant contenir au moins un atome d'oxygène, d'azote, de soufre, de silicium, de phosphore, de bore ou d'halogène, $X_1$ et $X_2$ en tant que groupes hydroxyle pouvant former un sel avec un atome métallique, $X_1$ et $X_2$ en tant que groupes alcoxy, aldéhyde, carboxyle, alcoxycarbonyle, cyano, amino, nitro ou nitroso pouvant être substitués ou non substitués et ces groupes pouvant contenir au moins un atome d'oxygène, d'azote, de silicium, de phosphore, de bore ou d'halogène, $X_1$ et $X_2$ pouvant être identiques ou différents et $X_1$ et $X_2$ pouvant former ensemble un cycle,

$X_1$, $X_2$, $X_3$, $X_4$, $X_5$, $X_6$, $X_7$, Z1 et Z2 dans le radical RE6 étant indépendamment les uns des autres des atomes d'hydrogène, des groupes alkyle, des groupes alcényle, des groupes alcynyle, des groupes alkylthio, des groupes monoalkylamino, des groupes dialkylamino, des groupes haloalkyle, des groupes haloalcoxy, des groupes alkylcarbonyle, des groupes alcénylcarbonyle, des groupes alcynylcarbonyle, des groupes ester d'acide alkylcarboxylique, des groupes ester d'acide alcénylcarboxylique, des groupes ester d'acide alcynylcarboxylique, des groupes alcoxy, des groupes cycloalkyle, des groupes cycloalcoxy, des groupes aryle, des groupes hétéroaryle, des groupes aryloxyle, des groupes aralkyle, des atomes d'halogène, des groupes cyano, des groupes sulfonate et/ou des groupes nitro, à condition qu'un ou deux des emplacements de liaison $X_1$, $X_2$, $X_3$, $X_4$, $X_5$, $X_6$ et $X_7$ soient reliés à un des groupes LI1, LI4, LI5 ou PG1,

$Y_1$ et $Y_2$ pouvant relier plusieurs unités 4,4'-bipyridine substituées les unes avec les autres, n prenant des valeurs comprises entre un et cent mille, de préférence entre un et cent, de manière particulièrement préférée entre un et cinq, ou les substituants $Y_1$ et $Y_2$ étant indépendamment l'un de l'autre l'hydrogène, des groupes alkyle, des groupes alcényle, des groupes alcynyle, des groups alkylthio, des groupes monoalkylamino, des groupes dialkylamino, des groupes haloalkyle, des groupes haloalcoxy, des groupes alkylcarbonyle, des groupes alcénylcarbonyle, des groupes alcynylcarbonyle, des groupes ester d'acide alkylcarboxylique, des groupes ester d'acide alcénylcarboxylique, des groupes ester d'acide alcynylcarboxylique, des groupes alcoxy, des groupes cycloalkyle, des groupes cycloalcoxy, des groupes aryle, des groupes hétéroaryle, des groupes aryloxy et/ou des groupes aralkyle, de manière particulièrement préférée des groupes alkyle, des groupes alcényle, des groupes alcynyle, des groupes alcoxy, des groupes cycloalcoxy, des groupes aryle, des groupes hétéroaryle, des groupes aryloxy et/ou des groupes aralkyle, et de manière tout particulièrement préférée des groupes alkyle, des groupes alcoxy, des groupes cycloalcoxy, des groupes aryle, des groupes hétéroaryle et/ou des groupes aryloxy, et

les anions Z étant chargés négativement une ou deux fois, et étant des anions inorganiques ou organiques, qui sont présents en un nombre de 2n dans le cas d'anions chargés négativement une fois ou en un nombre de n dans le cas d'anions chargés négativement deux fois, et étant de préférence choisis dans le groupe constitué par les ions halogénure, tels que les ions fluorure, les ions chlorure, les ions bromure, les ions iodure, ou les ions hydroxyde, les anions d'acides inorganiques, notamment les ions phosphate, les ions sulfate, les ions nitrate, les ions hexafluorophosphate, les ions tétrafluoroborate, les ions perchlorate, les ions chlorate, les ions hexafluoroantimonate,

les ions hexafluoroarsénate ou les ions cyanure, ou les anions d'acides organiques, de préférence les ions acétate, les ions formiate, les ions de l'acide trifluoroacétique, les ions trifluorométhane-sulfonate, les ions pentafluoroéthane-sulfonate, les ions nonofluorobutane-sulfonate, les ions butyrate, les ions citrate, les ions fumarate, les ions glutarate, les ions lactate, les ions malate, les ions malonate, les ions oxalate, les ions pyruvate, les ions tartrate, et sont de manière particulièrement préférée choisis dans le groupe constitué par les ions halogénure, les ions hydroxyde, les ions phosphate, les ions sulfate, les ions perchlorate, les ions hexafluorophosphate et les ions tétrafluoroborate.

**5.** Pile à flux redox selon la revendication 4, **caractérisée en ce que** RE5 est choisi parmi les radicaux de structure cyclique pipéridinoxyle selon la formule suivante :

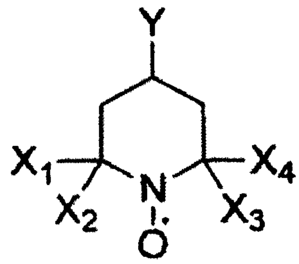

de structure pyrrolidinoxyle selon la formule suivante :

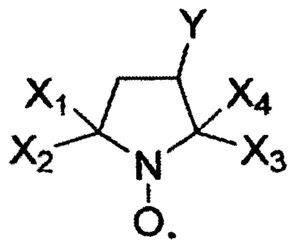

de structure pyrrolinoxyle selon la formule suivante :

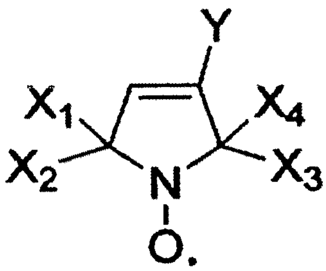

le radical nitroxyde asymétriquement substitué selon la formule suivante :

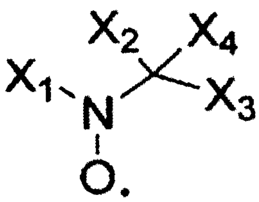

le radical nitroxyde asymétriquement substitué selon la formule suivante :

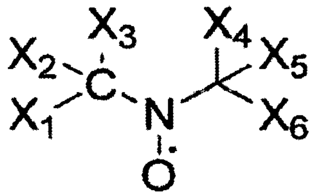

$X_1$, $X_2$, $X_3$ et $X_4$ et Y étant indépendamment les uns des autres des atomes d'hydrogène, des groupes alkyle, des groupes alcényle, des groupes alcynyle, des groupes alkylthio, des groupes monoalkylamino, des groupes dialkylamino, des groupes haloalkyle, des groupes haloalcoxy, des groupes alkylcarbonyle, des groupes alcénylcarbonyle, des groupes alcynylcarbonyle, des groupes ester d'acide alkylcarboxylique, des groupes ester d'acide alcénylcarboxylique, des groupes ester d'acide alcynylcarboxylique, des groupes alcoxy, des groupes cycloalkyle, des groupes cycloalcoxy, des groupes aryle, des groupes hétéroaryle, des groupes aryloxy, des groupes aralkyle, des atomes d'halogène, des groupes cyano et/ou des groupes nitro, de préférence des atomes d'hydrogène, des atomes d'halogène, des groupes alkyle, des groupes alcoxy, des groupes cyano et/ou des groupes nitro, à condition qu'un ou deux des emplacements de liaison $X_1$, $X_2$, $X_3$, $X_4$ et Y soient reliés à un des groupes LI1, LI4, LI5 ou PG1.

6. Pile à flux redox selon l'une quelconque des revendications 1 à 5, **caractérisée en ce que** le composant à activité redox contient l'unité structurale de formule I, qui dérive des combinaisons de monomères suivantes :

PG1 est formé par une des unités monomères M1, M2, M4 ou M5 selon la revendication 1, LI1 est un des groupes L1 à L6, L8 ou L11 à L26 selon la revendication 1 et RAE1 est un des groupes RE1 à RE6 selon la revendication 4 ; ou
PG1 est formé par l'unité monomère M3 selon la revendication 1, LI1 est un des groupes L3 à L6, L12 à L17 ou L22 à L26 selon la revendication 1 et RAE1 est un des groupes RE1 à RE6 selon la revendication 4 ; ou
PG1 est formé par une des unités monomères M6 ou M7 selon la revendication 1, LI1 est un des groupes L3 à L6, L12 à L17 ou L22 à L26 selon la revendication 1 et RAE1 est un des groupes RE1 à RE6 selon la revendication 4 ; ou
PG1 est formé par une des unités monomères M8 ou M9 selon la revendication 1, LI1 est un des groupes L3 à L6, L12 à L17 ou L22 à L26 selon la revendication 1 et RAE1 est un des groupes RE1 à RE6 selon la revendication 4 ; ou
PG1 est formé par l'unité monomère M10 selon la revendication 1, LI1 est un des groupes L3 à L6, L12 à L17 ou L22 à L26 selon la revendication 1 et RAE1 est un des groupes RE1 à RE6 selon la revendication 4 ; ou
PG1 est formé par l'unité monomère M11 selon la revendication 1, LI1 est un des groupes L3 à L6, L12 à L17 ou L22 à L26 selon la revendication 1 et RAE1 est un des groupes RE1 à RE6 selon la revendication 4 ; ou
PG1 est formé par une des unités monomères M12 ou M13 selon la revendication 1, LI1 est un des groupes L2 à L3, L12 à L17 ou L22 à L26 selon la revendication 1 et RAE1 est un des groupes RE1 à RE6 selon la revendication 4 ; ou
PG1 est formé par une des unités monomères M14 à M19 selon la revendication 1, LI1 est un des groupes L1 à L26 selon la revendication 1 et RAE1 est un des groupes RE1 à RE6 selon la revendication 4 ; ou
PG1 est formé par l'unité monomère M20 selon la revendication 1, LI1 est un des groupes L3 à L6, L12 à L17 ou L22 à L26 selon la revendication 1 et RAE1 est un des groupes RE1 à RE6 selon la revendication 4 ; ou
PG1 est formé par l'unité monomère M21 selon la revendication 1, LI1 est un des groupes L3 à L6, L11 à L17 ou L22 à L26 selon la revendication 1 et RAE1 est un des groupes RE1 à RE6 selon la revendication 4 ; ou
PG1 est formé par l'unité monomère M22 selon la revendication 1, LI1 est un des groupes L3 à L4, L12 à L17 ou L22 à L26 selon la revendication 1 et RAE1 est un des groupes RE1 à RE6 selon la revendication 4 ; ou
PG1 est formé par l'unité monomère M23 selon la revendication 1, LI1 est un des groupes L3 à L4, L12 à L17 ou L22 à L26 selon la revendication 1 et RAE1 est un des groupes RE1 à RE5 selon la revendication 4 ; ou
PG1 est formé par une des unités monomères M24 ou M25 selon la revendication 1, LI1 est un des groupes L3 à L4, L12 à L17 ou L22 à L26 selon la revendication 1 et RAE1 est un des groupes RE1 à RE6 selon la revendication 4 ; ou
PG1 est formé par une des unités monomères M26 ou M27 selon la revendication 1, LI1 est un des groupes L3 à L4 selon la revendication 1 et RAE1 est un des groupes RE1 à RE6 selon la revendication 4 ; ou
PG1 est formé par une des unités monomères M28 à M33 selon la revendication 1, LI1 est un des groupes L3 à L4 ou L11 à L17 selon la revendication 1 et RAE1 est un des groupes RE1 à RE6 selon la revendication 4 ; ou
PG1 est formé par une des unités monomères M34 ou M35 selon la revendication 1, LI1 est un des groupes L3 à L6, L8, L10 ou L12 à L26 selon la revendication 1 et RAE1 est un des groupes RE1 à RE6 selon la

revendication 4 ; ou
PG1 est formé par une des unités monomères M36 à M43 selon la revendication 1, LI1 est un des groupes L3 à L6, L8, L10 ou L12 à L26 selon la revendication 1 et RAE1 est un des groupes RE1 à RE6 selon la revendication 4 ; ou
PG1 est formé par l'unité monomère M44 selon la revendication 1, LI1 est un des groupes L3 à L6, L12 à L17 ou L22 à L26 selon la revendication 1 et RAE1 est un des groupes RE1 à RE6 selon la revendication 4 ; ou
PG1 est formé par une des unités monomères M45 à M49 selon la revendication 1, LI1 est un des groupes L1 à L6, L8, L10, L12 à L17 ou L19 à L26 selon la revendication 1 et RAE1 est un des groupes RE1 à RE6 selon la revendication 4 ; ou
PG1 est formé par une des unités monomères M50 à M59 selon la revendication 1, LI1 est un des groupes L3 à L4, L8 à L10, L12 à L17 ou L19 à L26 selon la revendication 1 et RAE1 est un des groupes RE1 à RE6 selon la revendication 4.

7. Pile à flux redox selon l'une quelconque des revendications 1 à 6, **caractérisée en ce que** le composant à activité redox contient les unités structurales de formule I et II, les unités structurales de formule II dérivant des combinaisons de monomères suivantes :

PG2 est formé par une des unités monomères M1, M2, M3 ou M5 selon la revendication 1, LI2 est une liaison covalente ou un des groupes L3 ou L4 selon la revendication 1 et COM1 est un des radicaux CM1 à CM4 selon la revendication 3 ; ou
PG2 est formé par une des unités monomères M1, M2, M3 ou M5 selon la revendication 1, LI2 est un des groupes L19 à L21 selon la revendication 1 et COM1 est un des radicaux CM1 à CM4 ou CM15 à CM17 selon la revendication 3 ; ou
PG2 est formé par une des unités monomères M1, M2, M3 ou M5 selon la revendication 1, LI2 est une liaison covalente et COM1 est un des radicaux CM8 à CM9 ou CM22 à CM24 selon la revendication 3 ; ou
PG2 est formé par l'unité monomère M3 selon la revendication 1, LI2 est une liaison covalente ou un des groupes L3 à L6 selon la revendication 1 et COM1 est un des radicaux CM1 à CM9 ou CM15 à CM24 selon la revendication 3 ; ou
PG2 est formé par l'unité monomère M3 selon la revendication 1, LI2 est un des groupes L12 à L14 selon la revendication 1 et COM1 est un des radicaux CM8 à CM9 ou CM15 à CM24 selon la revendication 3 ; ou
PG2 est formé par une des unités monomères M6 ou M7 selon la revendication 1, LI2 est une liaison covalente et COM1 est un des radicaux CM1 à CM4 selon la revendication 3 ; ou
PG2 est formé par une des unités monomères M6 ou M7 selon la revendication 1, LI2 est un des groupes L3 ou L4 selon la revendication 1 et COM1 est un des radicaux CM1 à CM4, CM8 à CM9 ou CM15 à CM24 selon la revendication 3 ; ou
PG2 est formé par une des unités monomères M8 ou M9 selon la revendication 1, LI2 est une liaison covalente et COM1 est un des radicaux CM1 à CM4 selon la revendication 3 ; ou
PG2 est formé par une des unités monomères M8 ou M9 selon la revendication 1, LI2 est un des groupes L3 ou L4 selon la revendication 1 et COM1 est un des radicaux CM1 à CM4, CM8 à CM9 ou CM15 à CM24 selon la revendication 3 ; ou
PG2 est formé par une des unités monomères M6 à M9 selon la revendication 1, LI2 est un des groupes L22 à L26 selon la revendication 1 et COM1 est un des radicaux CM1 à CM4, CM8 à CM9 ou CM15 à CM27 selon la revendication 3 ; ou
PG2 est formé par l'unité monomère M10 selon la revendication 1, LI2 est une liaison covalente et COM1 est un des radicaux CM1 à CM4 selon la revendication 3 ; ou
PG2 est formé par l'unité monomère M10 selon la revendication 1, LI2 est un des groupes L3 ou L4 selon la revendication 1 et COM1 est un des radicaux CM1 à CM4 selon la revendication 3 ; ou
PG2 est formé par l'unité monomère M11 selon la revendication 1, LI2 est un des groupes L3 ou L4 selon la revendication 1 et COM1 est un des radicaux CM1 à CM4 selon la revendication 3 ; ou
PG2 est formé par une des unités monomères M12 ou M13 selon la revendication 1, LI2 est une liaison covalente et COM1 est un radical CM1 selon la revendication 3 ; ou
PG2 est formé par une des unités monomères M12 ou M13 selon la revendication 1, LI2 est un des groupes L3 ou L4 selon la revendication 1 et COM1 est un des radicaux CM1 à CM4 selon la revendication 3 ; ou
PG2 est formé par une des unités monomères M12 ou M13 selon la revendication 1, LI2 est une liaison covalente et COM1 est un radical CM1 selon la revendication 3 ; ou
PG2 est formé par une des unités monomères M14 ou M17 selon la revendication 1, LI2 est une liaison covalente et COM1 est un radical CM1 selon la revendication 3 ; ou
PG2 est formé par une des unités monomères M14 à M19 selon la revendication 1, LI2 est une liaison covalente

et COM1 est un des radicaux CM8 à CM9 ou CM15 à CM26 selon la revendication 3 ; ou
PG2 est formé par une des unités monomères M14 à M19 selon la revendication 1, LI2 est le groupe L3 selon la revendication 1 et COM1 est un des radicaux CM15 à CM21 ou CM27 selon la revendication 3 ; ou
PG2 est formé par une des unités monomères M14 à M19 selon la revendication 1, LI2 est le groupe L22 selon la revendication 1 et COM1 est un des radicaux CM1 à CM4, CM8 à CM9 ou CM15 à CM27 selon la revendication 3 ; ou
PG2 est formé par l'unité monomère M20 selon la revendication 1, LI2 est une liaison covalente ou un des groupes L3 ou L4 selon la revendication 1 et COM1 est un des radicaux CM1 à CM4 selon la revendication 3 ; ou
PG2 est formé par l'unité monomère M20 selon la revendication 1, LI2 est un des groupes L12 à L14 selon la revendication 1 et COM1 est un des radicaux CM1 à CM2, CM8 à CM9 ou CM15 à CM27 selon la revendication 3 ; ou
PG2 est formé par l'unité monomère M21 selon la revendication 1, LI2 est une liaison covalente et COM1 est un des radicaux CM1 à CM4 selon la revendication 3 ; ou
PG2 est formé par l'unité monomère M21 selon la revendication 1, LI2 est le groupe L12 selon la revendication 1 et COM1 est un radical CM1 selon la revendication 3 ; ou
PG2 est formé par l'unité monomère M22 selon la revendication 1, LI2 est une liaison covalente et COM1 est un des radicaux CM1 à CM4 selon la revendication 3 ; ou
PG2 est formé par l'unité monomère M22 selon la revendication 1, LI2 est le groupe L12 selon la revendication 1 et COM1 est le radical CM1 selon la revendication 3 ; ou
PG2 est formé par l'unité monomère M23 selon la revendication 1, LI2 est une liaison covalente et COM1 est un radical CM1 selon la revendication 3 ; ou
PG2 est formé par l'unité monomère M23 selon la revendication 1, LI2 est un des groupes L12 à L17 selon la revendication 1 et COM1 est un des radicaux CM1 à CM9 ou CM15 à CM21 selon la revendication 3 ; ou
PG2 est formé par une des unités monomères M24 ou M25 selon la revendication 1, LI2 est une liaison covalente et COM1 est un radical CM2 selon la revendication 3 ; ou
PG2 est formé par une des unités monomères M24 ou M25 selon la revendication 1, LI2 est un des groupes L12 ou L15 à L17 selon la revendication 1 et COM1 est un des radicaux CM1 à CM2 selon la revendication 3 ; ou
PG2 est formé par une des unités monomères M26 ou M27 selon la revendication 1, LI2 est une liaison covalente et COM1 est un radical CM1 selon la revendication 3 ; ou
PG2 est formé par une des unités monomères M28 à M33 selon la revendication 1, LI2 est un groupe L3 selon la revendication 1 et COM1 est un radical CM1 selon la revendication 3 ; ou
PG2 est formé par une des unités monomères M28 à M33 selon la revendication 1, LI2 est un groupe L12 selon la revendication 1 et COM1 est un radical CM1 selon la revendication 3 ; ou
PG2 est formé par l'unité monomère M34 selon la revendication 1, LI2 est une liaison covalente et COM1 est un radical CM1 selon la revendication 3 ; ou
PG2 est formé par une des unités monomères M34 à M44 selon la revendication 1, LI2 est une liaison covalente et COM1 est un radical CM2 selon la revendication 3 ; ou
PG2 est formé par une des unités monomères M34 à M44 selon la revendication 1, LI2 est une liaison covalente ou un des groupes L3 à L4 selon la revendication 1 et COM1 est un des radicaux CM15 à CM21 selon la revendication 3 ; ou
PG2 est formé par l'unité monomère M44 selon la revendication 1, LI2 est une liaison covalente et COM1 est un des radicaux CM5 à CM7 selon la revendication 3 ; ou
PG2 est formé par une des unités monomères M45 à M49 selon la revendication 1, LI2 est une liaison covalente et COM1 est un radical CM1 selon la revendication 3 ; ou
PG2 est formé par une des unités monomères M45 à M49 selon la revendication 1, LI2 est une liaison covalente et COM1 est un radical CM2 selon la revendication 3 ; ou
PG2 est formé par une des unités monomères M50 à M59 selon la revendication 1, LI2 est une liaison covalente et COM1 est un radical CM2 selon la revendication 3.

**8.** Pile à flux redox selon l'une quelconque des revendications 1 à 7, **caractérisée en ce que** le composant à activité redox contient au moins une unité structurale de formule I, qui est obtenue par mise en réaction d'une structure de base polymère fonctionnalisée avec une unité fonctionnelle formée par un radical fonctionnalisé LI1, qui est relié par une liaison covalente avec un radical RAE1, les structures de base polymères comprenant les structures P10 à P21, dans les structures de base polymères P12 et P15, la somme des indice n+m étant de 1 et la proportion des unités structurales **caractérisées par** $-[]_n-$, par rapport aux unités structurales **caractérisées par** $-[]_n-[]_m-$, étant de 0 à 100 % en poids

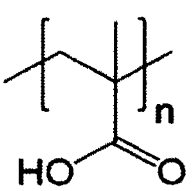
P10

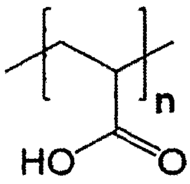
P11

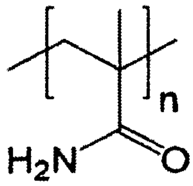
P13

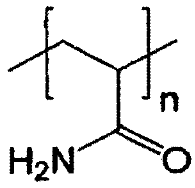
P14

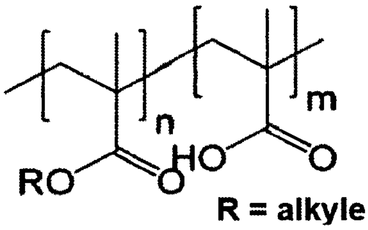
R = alkyle jusqu'à $C_{20}$

P12

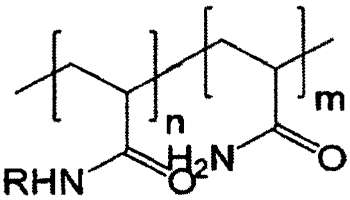
P15

R = alkyle jusqu'à $C_{20}$

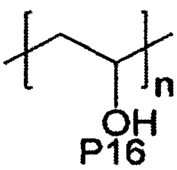
P16

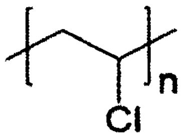
P17

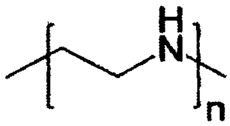
P18

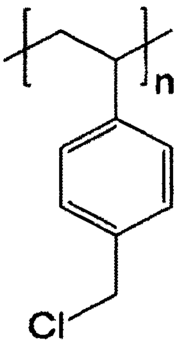
P19

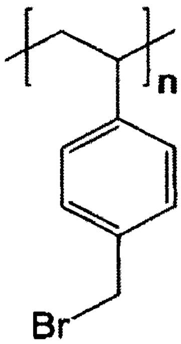
P20

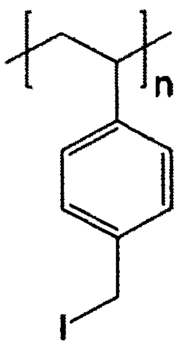
P21

et la structure de formule I comprenant des radicaux LI1, qui ont été formés par mise en réaction des radicaux fonctionnalisés RG1 à RG12 sur les structures de base polymères P10 à P21

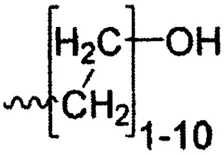
RG1

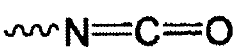
RG2

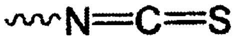
RG3

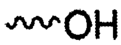
RG4

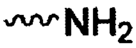
RG5

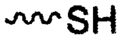
RG6

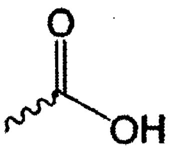
RG13

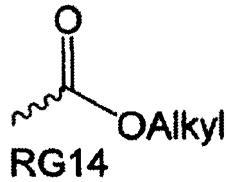
RG14

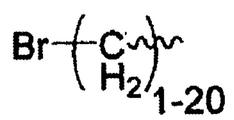
RG7

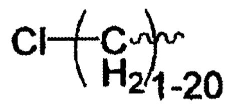
RG8

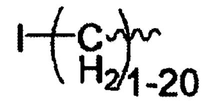
RG9

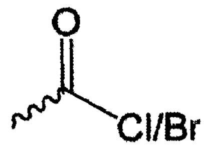
RG15

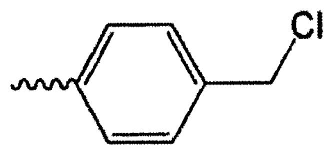
RG10 (p,m,o)

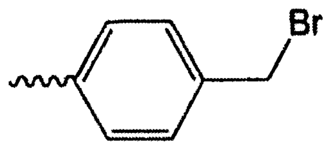
RG11 (p,m,o)

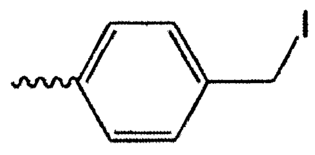
RG12 (p,m,o)

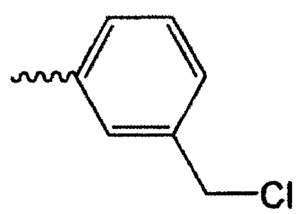

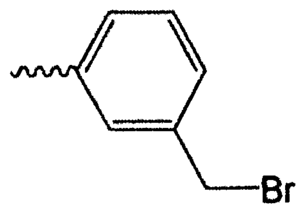

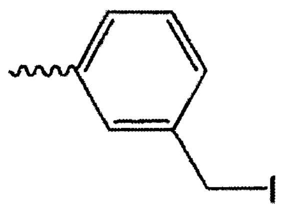

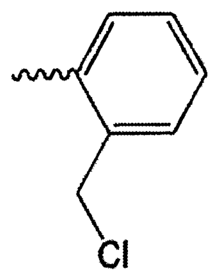

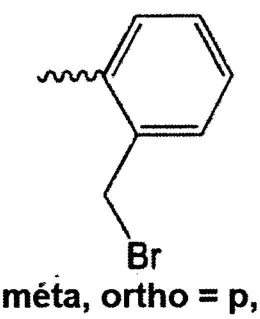

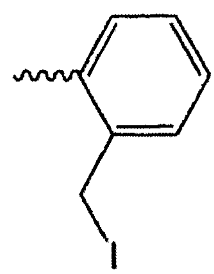

(para, méta, ortho = p, m, o)

les liaisons ondulées signifiant les liaisons covalentes au radical RAE1.

**9.** Pile à flux redox selon l'une quelconque des revendications 1 à 8, **caractérisée en ce que** celle-ci contient des esters d'acide carbonique en tant que solvant d'électrolyte conjointement avec des oligomères ou des polymères qui comprennent au moins un type d'une unité à activité redox dans la chaîne latérale et qui portent des chaînes latérales ou des fonctionnalités solubilisantes,

- en tant qu'unité à activité redox, des 4,4'-bipyridines N,N'-substituées, des quinones, des anthraquinones, des radicaux verdazyle, des borodipyrrométhènes, des radicaux nitroxylnitroxyde ou des radicaux nitroxyde, de manière particulièrement préféré le radical 2,2,6,6-tétraméthylpipéridine-1-oxyle et le chlorure de N-méthyl-[4,4'-bipyridin]-1-ium, étant utilisés, et/ou
- en tant que lieur LI1, LI2, LI3, LI4 et/ou LI5, les radicaux L1 à L26 selon la revendication 1, notamment L3, L4, L5, L6, L8, L12 et L19 selon la revendication 1, étant utilisés et/ou
- en tant que groupes PG1, PG2, PG3, PG4 et/ou PG5, les radicaux M1 à M59 selon la revendication 3, notamment M1, M2, M6, M7, M8, M9, M11, M14, M21, M22, M23, M45 ou M46 étant utilisés, et/ou
- en tant que groupes COM1 et/ou COM2, les radicaux CM1 à CM9 ou CM15 à CM27 selon la revendication 4, notamment CM4, CM9, CM17 à CM21 et CM26 étant utilisés.

**10.** Pile à flux redox selon l'une quelconque des revendications 1 à 9, **caractérisée en ce que** celle-ci contient des esters d'acide carbonique en tant que solvant d'électrolyte conjointement avec des oligomères ou des polymères qui comprennent au moins un type d'une unité à activité redox dans la chaîne latérale et qui portent des chaînes latérales ou des fonctionnalités solubilisantes,

- en tant qu'anolyte, les composants à activité redox suivants étant utilisés :

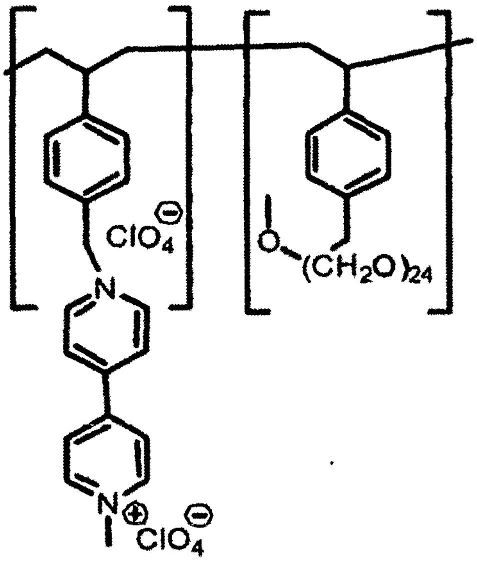

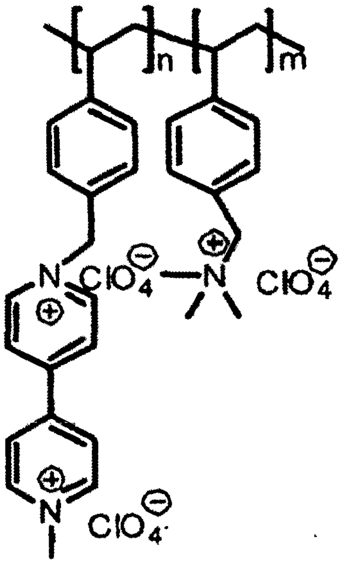

ou

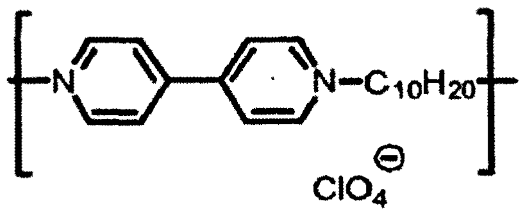

- et en tant que catholyte, les composants à activité redox suivants étant utilisés :

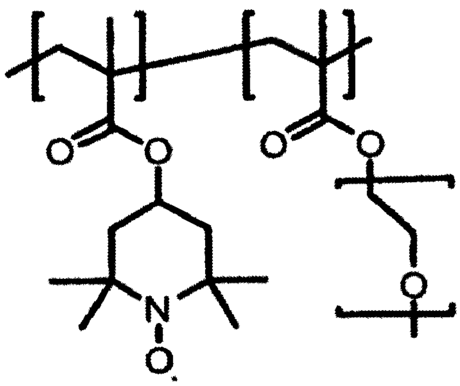

ou

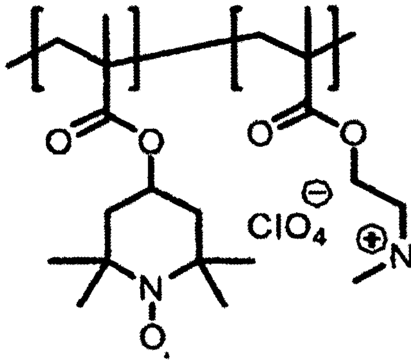

**11.** Pile à flux redox selon l'une quelconque des revendications 1 à 10, **caractérisée en ce que** celle-ci contient de l'eau en tant que solvant d'électrolyte conjointement avec des oligomères ou des polymères qui comprennent au moins un type d'une unité à activité redox dans la chaîne latérale et qui portent des chaînes latérales ou des fonctionnalités solubilisantes,

- en tant qu'unité à activité redox, des 4,4'-bipyridines N,N'-substituées, des quinones, des anthraquinones, des radicaux verdazyle, des borodipyrrométhènes, des radicaux nitroxylnitroxyde ou des radicaux nitroxyde, de manière particulièrement préféré le radical 2,2,6,6-tétraméthylpipéridine-1-oxyle, le chlorure de N-méthyl-[4,4'-bipyridin]-1-ium, le chlorure de 1-(2-(triméthylammonio)-éthyl)-[4,4'-bipyridin]-1-ium, étant utilisés, et/ou
- en tant que lieur LI1, LI2, LI3, LI4 et/ou LI5, les radicaux L1 à L26 selon la revendication 1, notamment L3, L4, L5, L6, L8, L12 et L19, étant utilisés et/ou
- en tant que groupes PG1, PG2, PG3, PG4 et/ou PG5, les radicaux M1 à M59 selon la revendication 3, notamment M1, M2, M6, M7, M8, M9, M11, M14, M21, M22, M23, M45 ou M46 étant utilisés, et/ou
- en tant que groupes COM1 et/ou COM2, les radicaux CM1 à CM9 ou CM15 à CM27 selon la revendication 4, notamment CM4, CM9, CM16 à CM21 et CM26 étant utilisés et/ou
- en tant qu'anolyte, les composants à activité redox suivants étant utilisés :

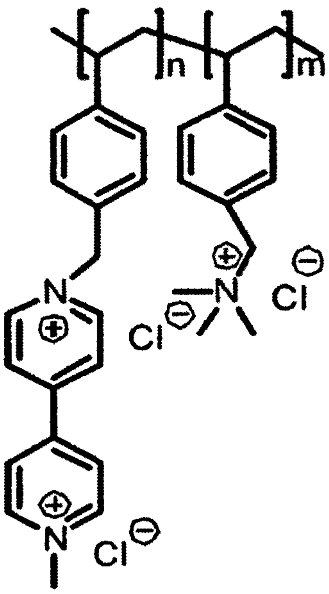

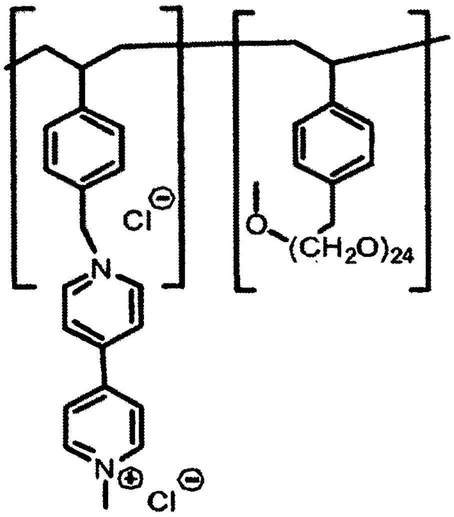

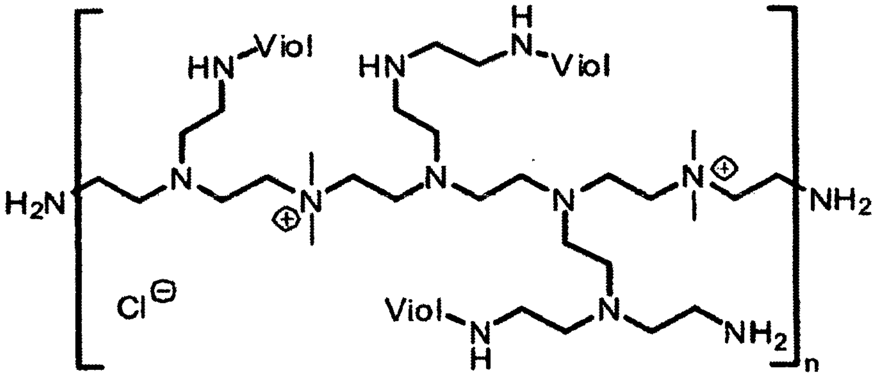

et/ou

- en tant que catholyte, les composants à activité redox suivants étant utilisés :

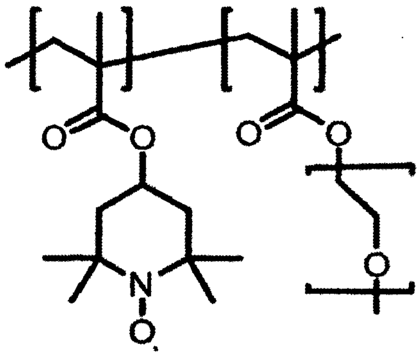

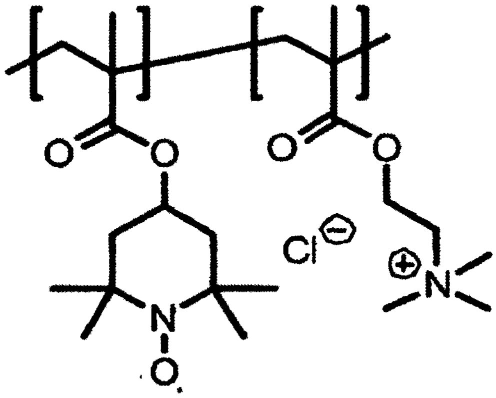

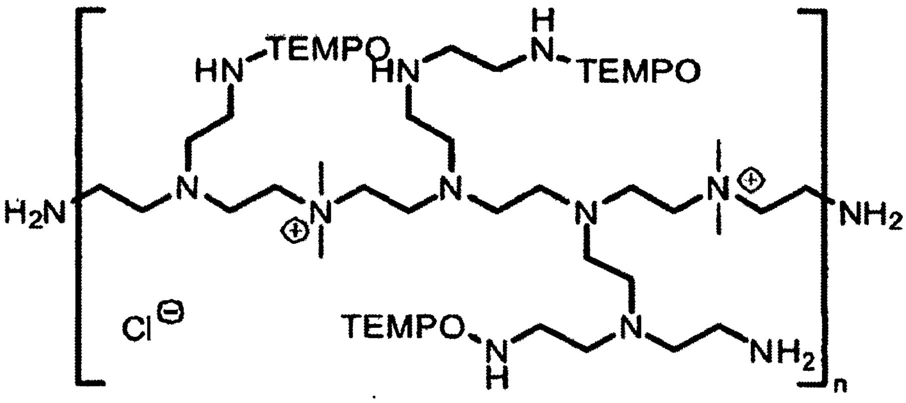

Viol représentant

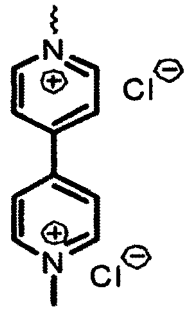

et TEMPO

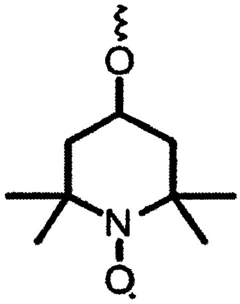

.

**12.** Utilisation de la pile à flux redox selon l'une quelconque des revendications 1 à 11 pour le stockage d'énergie électrique pour des applications mobiles et stationnaires, notamment pour des utilisations dans le domaine de l'électromobilité, en tant que réservoir dans des véhicules terrestres, aériens et aquatiques, en tant que réservoir stationnaire pour l'alimentation de secours en électricité, pour la compensation d'une charge de pointe, et pour le stockage intermédiaire d'énergie électrique à partir de sources d'énergie renouvelables, notamment dans le secteur de la photovoltaïque et de l'énergie éolienne, ou à partir de centrales à gaz, au charbon, à biomasse, marémotrices et marines.

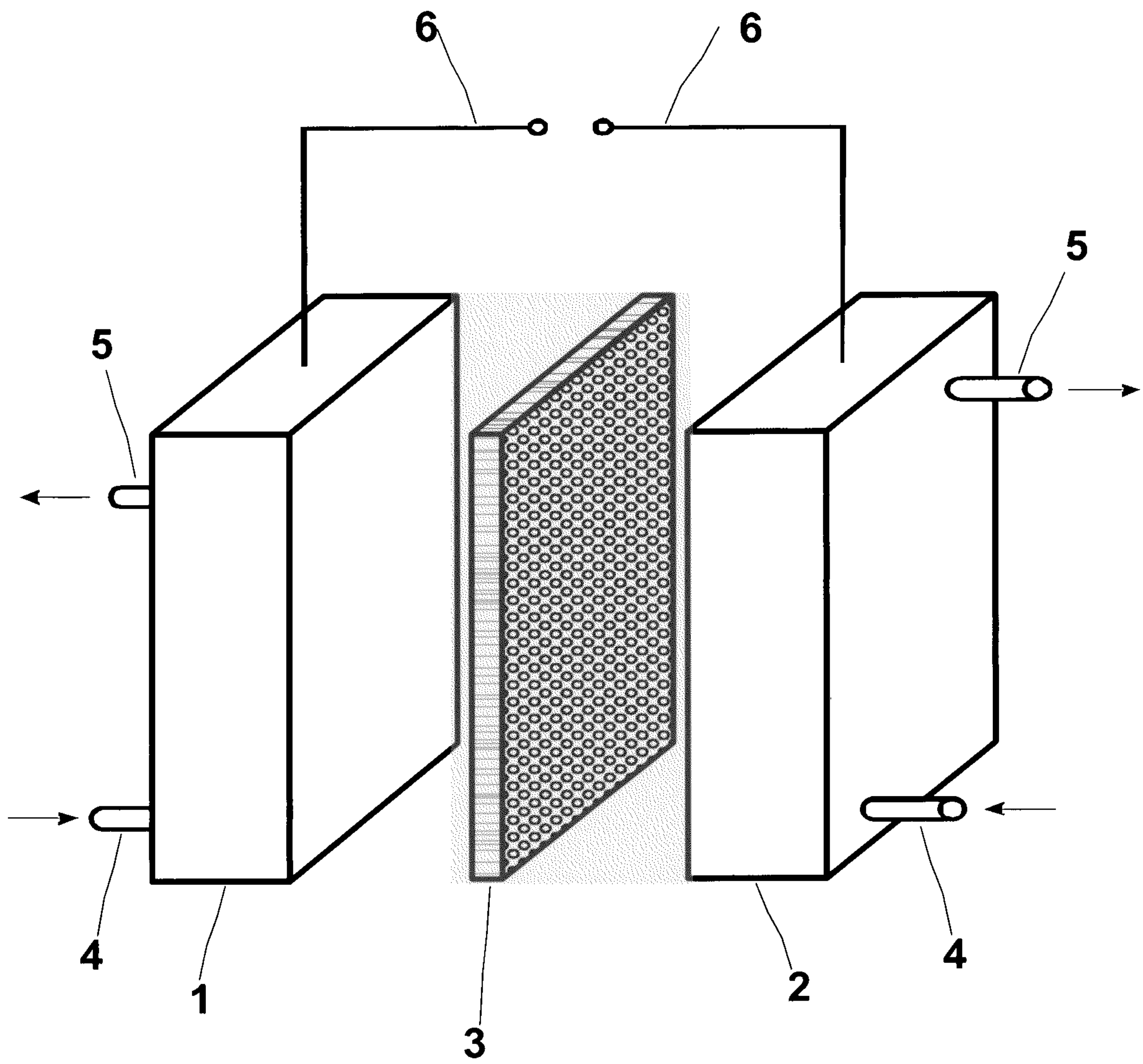


Figur 1

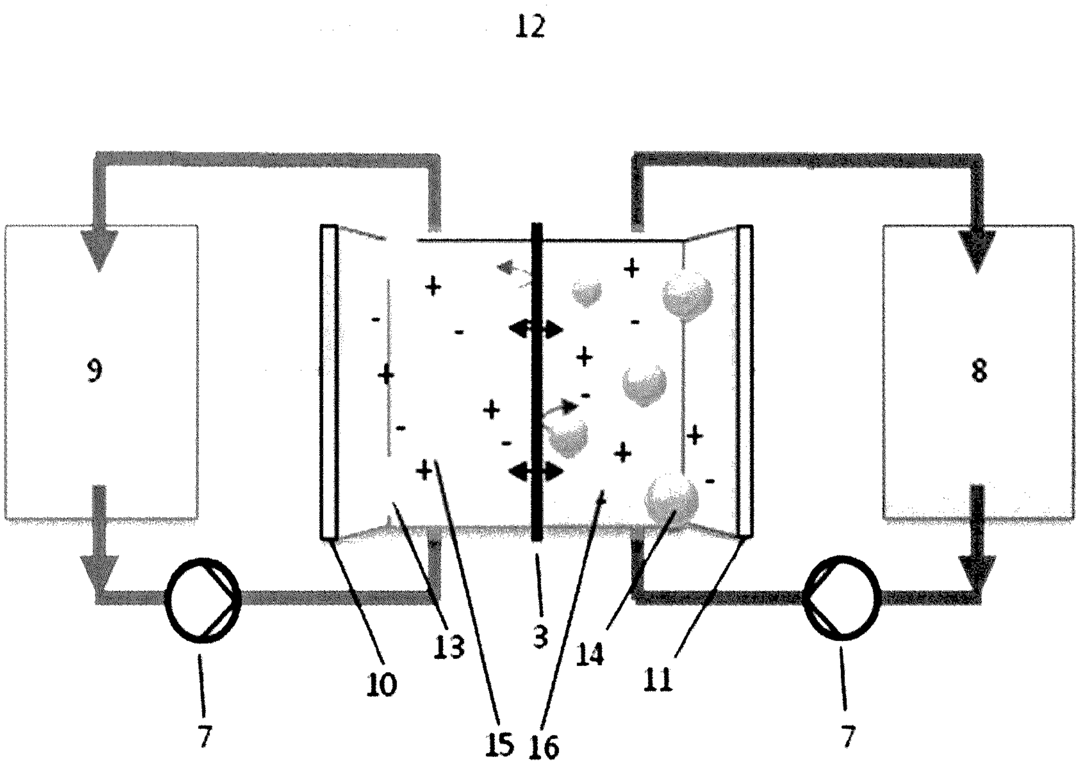


Figur 2

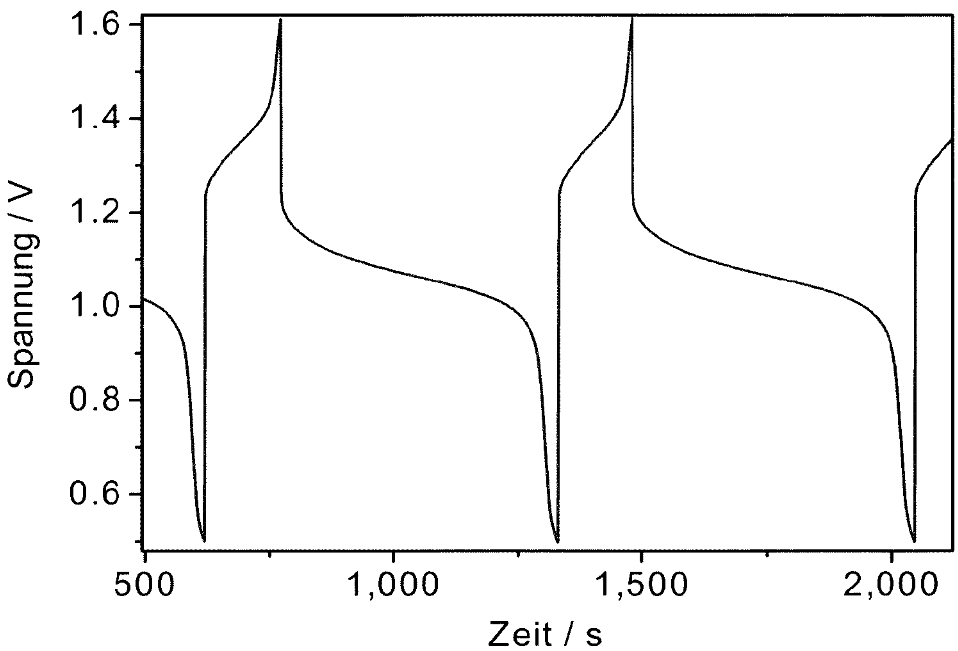


Figur 3

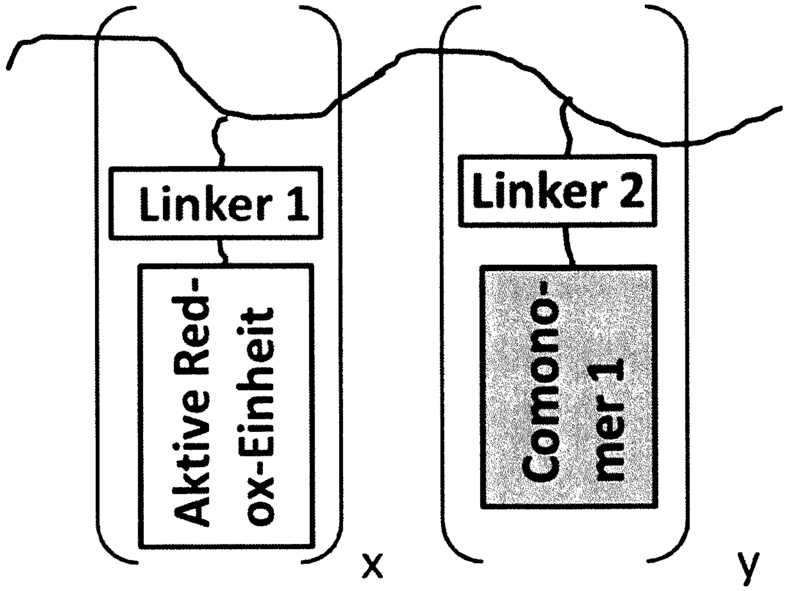


Figur 4

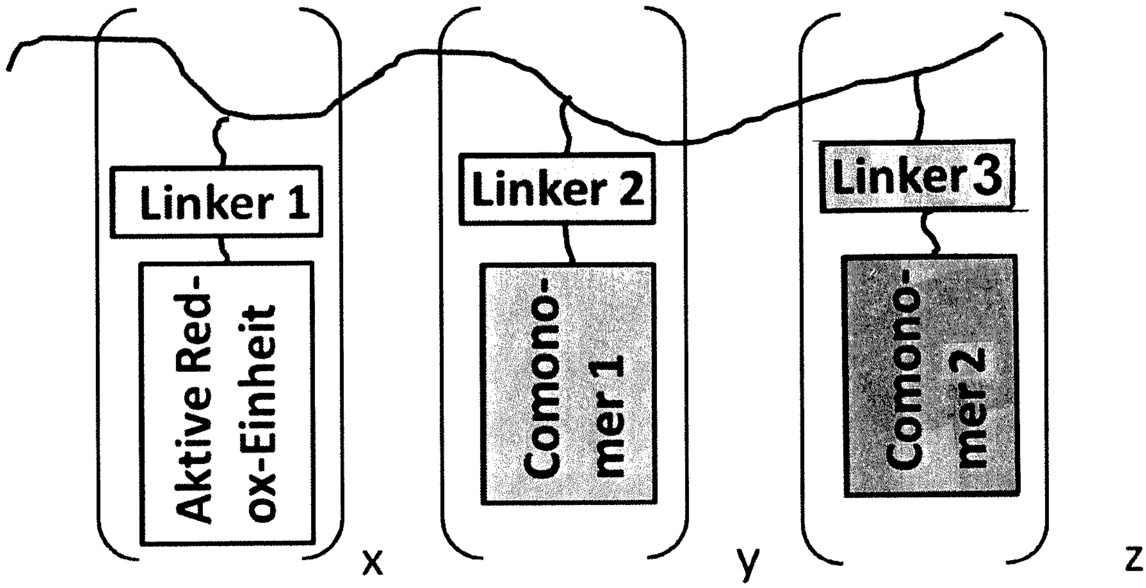


Figur 5

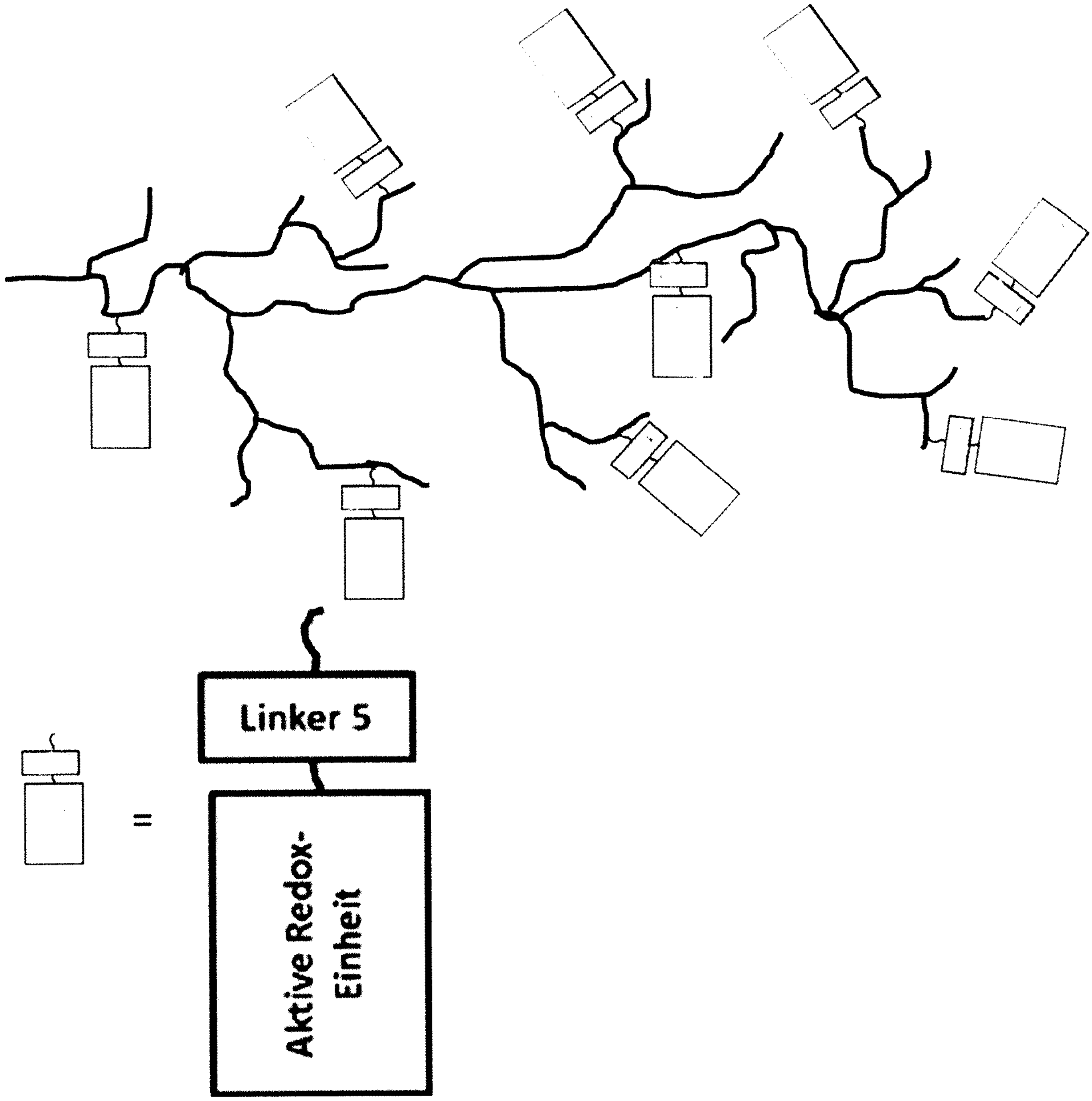


Figur 6

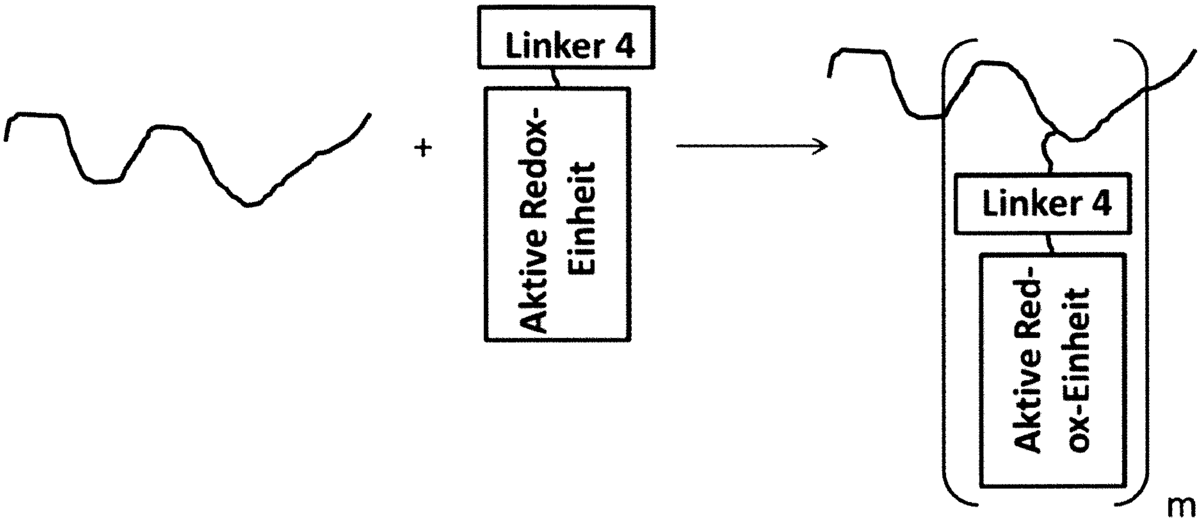


Figur 7

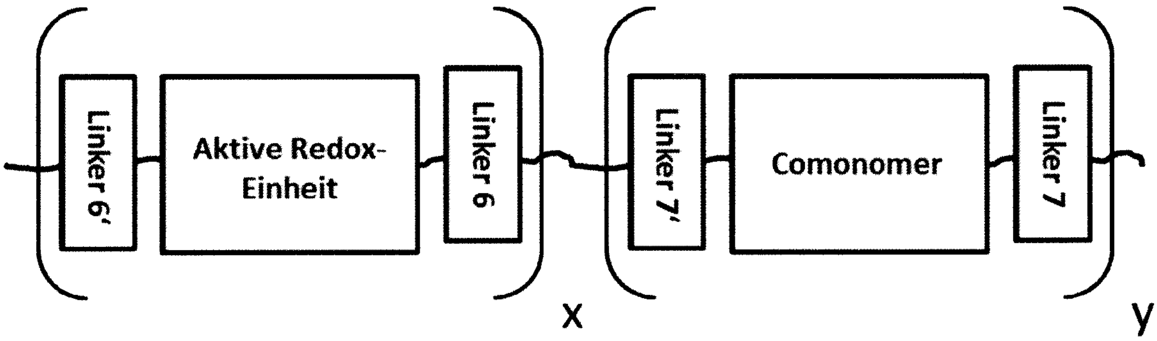


Figur 8

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- AU 575247 B
- US 8080327 B1
- US 20120171541 A1
- EP 2650947 A1
- EP 2013002206 W
- EP 2785442 A
- EP 451353 A
- DE 60212637
- DE 60123145 T2
- DE 102012015176
- EP 0042984 A
- EP 0191726 A2
- EP 0206133 A1


### In der Beschreibung aufgeführte Nicht-Patentliteratur


- **B. FANG ; S. IWASA ; Y. WEI ; T. ARAI ; M. KUMAGAI.** A study of the Ce(III)/Ce(IV) redox couple for redox flow battery application. *Electrochimica Acta,* 2002, vol. 47, 3971-3976
- **M. H. CHAKRABARTI ; E. PELHAM ; L. ROBERTS ; C. BAE ; M. SALEEM.** Ruthenium based redox flow battery for solar energy storage. *Energy Conv. Manag.,* 2011, vol. 52, 2501-2508
- **C-H. BAE ; E. P. L. ROBERTS ; R. A. W. DRYFE.** Chromium redox couples for application to redox flow batteries. *Electrochimica Acta,* 2002, vol. 48, 279-87
- **T. YAMAMURA ; Y. SHIOKAWA ; H. YAMANA ; H. MORIYAMA.** Electrochemical investigation of uranium β-diketonates for all-uranium redox flow battery. *Electrochimica Acta,* 2002, vol. 48, 43-50
- **F. XUE ; Y. WANG ; W. HONG WANG ; X. WANG.** Investigation on the electrode process of the Mn(II)/Mn(III) couple in redox flow battery. *Electrochimica Acta,* 2008, vol. 53, 6636-6642
- **Y. XU ; Y. WEN ; J. CHENG ; G. CAO ; Y. YANG.** A study of iron in aqueous solutions for redox flow battery application. *Electrochimica Acta,* 2010, vol. 55, 715-720
- **Q. LUO ; H. ZHANG ; J. CHEN ; D. YOU ; C. SUN ; Y. ZHANG.** Nafion/SPEEK composite: Preparation and characterization of Nafion/SPEEK layered composite membrane and its application in vanadium redox flow battery. *J. Memb. Sci.,* 2008, vol. 325, 553-558
- **J. QIU ; J. ZHANG ; J. CHEN ; J. PENG ; L. XU ; M. ZHAI ; J. LI ; G. WEI.** Amphoteric ion exchange membrane synthesized by radiation-induced graft copolymerization of styrene and dimethylaminoethyl methacrylate into PVDF film for vanadium redox flow battery applications. *J. Memb. Sci.,* 2009, vol. 334, 9-15
- **S. ZHANG ; C. YIN ; D. XING ; D. YANG ; X. JIAN.** Preparation of chloromethylated/ quaternized poly(phthalazinone ether ketone) anion exchange membrane materials for vanadium redox flow battery applications. *J. Memb. Sci.,* 2010, vol. 363, 243-249
- **D. CHEN ; S. WANG ; M. XIAO ; Y. MENG.** Synthesis and properties of novel sulfonated poly(arylene ether sulfone) ionomers for vanadium redox flow battery. *Energy Conv. Manag.,* 2010, vol. 51, 2816-2824
- **J. XI ; Z. WU ; X. QIU ; L. CHEN.** Nafion/SiO2 hybrid membrane for vanadium redox flow battery. *J. Pow. Sour.,* 2007, vol. 166, 531-536
- **HONGZHANG ZHANG ; HUAMIN ZHANG ; XIANFENG LI ; ZHENSHENG MAI ; JIANLU ZHANG.** Nanofiltration (NF) membranes: the next generation separators for all vanadium redox flow batteries (VRBs). *Energy & Environmental Science,* 2011, vol. 4, 1676-1679
- **Z. LI ; S. LI ; S. Q. LIU ; K. L. HUANG ; D. FANG ; F. C. WANG ; S. PENG.** Electrochemical properties of an all-organic redox flow battery using 2,2,6,6-tetramethyl-1-piperidinyloxy and N-methyl-phthalimide. *Electrochem. Solid State Lett.,* 2011, vol. 14, A171-A173
- **VERGL. H. CHARKRABARTHI ; R. A. W. DRYFE ; E. P. L. ROBERTS.** Organic Electrolytes for Redox Flow Batteries. *Jour. Chem. Soc. Pak.,* 2007, vol. 29, 294-300
- **B. HUSKINSON ; M. P. MARSHAK ; C. SUH ; S. ER ; M. R. GERHARDT ; C. J. GALVIN ; X. CHEN ; A. ASPURU-GUZIK ; R. G. GORDON ; M. J. AZIZ.** A metal-free organic-inorganic aqueous flow battery. *Nature,* 2013, vol. 505, 195-198

- **F. R. BRUSHETT ; J. T. VAUGHEY ; A. N. JANSEN.** An All-Organic Non-aqueous Lithium-Ion Redox Flow Battery. *Adv. Energy Mater.,* 2012, vol. 2, 1390-1396
- **M.H. CHAKRABARTIA ; R.A.W. DRYFE ; E.P.L. ROBERTS.** Evaluation of electrolytes for redox flow battery applications. *Electrochimica Acta,* 2007, vol. 52, 2189-2195
- **Y. MATSUDA ; K. TANAKA ; M. OKADA ; Y. TAKASU ; M. MORITA ; T. MATSUMURA-INOUE.** A rechargeable redox battery utilizing ruthenium complexes with non-aqueous organic electrolyte. *J. Applied Electrochem.,* 1988, vol. 18, 909-914
- **S. SEIFFERT.** Functional Microgels Tailored by Droplet-Based Microfluidics. *Macromol. Rapid Commun.,* 2011, vol. 32, 1600-1609
- **ALLEN J. BARD ; LARRY R. FAULKNER.** Electrochemical Methods: Fundamentals and Applications. John Wiley & Sons, 2001
- **RICHARD G. COMPTON ; CRAIG E. BANKS.** Understanding Voltammetry. Imperial College Press, 2010
- **LOTHAR DUNSCH.** *Elektrochemische Reaktionen an Glaskohlenstoff, Zeitschrift für Chemie,* Dezember 1974, vol. 14 (12), 463-468